(19) Europäisches Patentamt / European Patent Office / Office européen des brevets

(11) **EP 4 321 999 A1**

(12) **EUROPEAN PATENT APPLICATION**
published in accordance with Art. 153(4) EPC

(43) Date of publication:
**14.02.2024 Bulletin 2024/07**

(21) Application number: **22810420.4**

(22) Date of filing: **17.05.2022**

(51) International Patent Classification (IPC):
**G06F 9/48** $^{(2006.01)}$        **G06F 9/54** $^{(2006.01)}$

(52) Cooperative Patent Classification (CPC):
**G06F 9/451; G06F 9/48; G06F 9/54; Y02D 10/00**

(86) International application number:
**PCT/CN2022/093367**

(87) International publication number:
**WO 2022/247693 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 27.05.2021  CN 202110583391
01.06.2021  CN 202110611184
02.06.2021  CN 202110615954
02.06.2021  CN 202110616969
02.06.2021  CN 202110614232
09.09.2021  CN 202111057294
23.11.2021  CN 202111396815

(71) Applicant: **Huawei Technologies Co., Ltd.**
**Shenzhen, Guangdong 518129 (CN)**

(72) Inventors:
• **CHEN, Kang**
**Shenzhen, Guangdong 518129 (CN)**
• **SONG, Yuhang**
**Shenzhen, Guangdong 518129 (CN)**

• **HUANG, Hao**
**Shenzhen, Guangdong 518129 (CN)**
• **HUANG, Wenjie**
**Shenzhen, Guangdong 518129 (CN)**
• **JIA, Can**
**Shenzhen, Guangdong 518129 (CN)**
• **ZHU, Jianhua**
**Shenzhen, Guangdong 518129 (CN)**
• **ZHANG, Mingxiang**
**Shenzhen, Guangdong 518129 (CN)**
• **CAO, Chao**
**Shenzhen, Guangdong 518129 (CN)**
• **ZHANG, Yanan**
**Shenzhen, Guangdong 518129 (CN)**
• **WANG, Hongjun**
**Shenzhen, Guangdong 518129 (CN)**
• **YANG, Zhiyan**
**Shenzhen, Guangdong 518129 (CN)**
• **XU, Chao**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **TASK TRANSFER SYSTEM AND METHOD**

(57) This application provides a task migration system and method. The system includes a first terminal and a second terminal. The second terminal runs a first application. The first terminal opens a recent task interface after receiving an operation performed by a user, where the recent task interface includes an identifier of the second terminal; after receiving an operation performed by the user on the identifier of the second terminal, displays, in the recent task interface, at least one task card corresponding to an application run by the second terminal in the background; and after receiving an operation performed by the user on a first task card corresponding to the first application, runs the first application, and displays a first user interface of the first application. After displaying the first user interface and receiving an operation performed by the user in the first user interface, the first terminal displays a parent interface or a sub-interface of the first user interface, instead of displaying a home screen of the first terminal device. This conforms to a use habit of the user, is friendly to the user, helps the user perform a subsequent operation, and improves user experience.

**(Cont. next page)**

S3201: A first terminal receives task information from a second terminal, where the task information includes information about an application run by the second terminal in the background

↓

S3202: The first terminal receives a first operation from a user

↓

S3203: The first terminal opens a recent task interface based on the first operation, where the recent task interface includes a control, and the control includes an identifier of the second terminal

↓

S3204: The first terminal displays, in a recent task interface in response to a second operation performed by the user on the identifier of the second terminal, at least one task card corresponding to the application run by the second terminal in the background, where the at least one task card includes a first task card corresponding to a first application run by the second terminal in the background

↓

S3205: In response to a third operation performed by the user on the first task card, the first terminal runs the first application, and displays a first user interface of the first application

↓

S3206: The first terminal displays a second user interface in response to a fourth operation performed by the user in the first user interface, where the fourth operation is a back operation, and the second user interface is a parent user interface of the first user interface

FIG. 32

## Description

This application claims priorities to Chinese Patent Application No. 202111396815.2, filed with the China National Intellectual Property Administration on November 23, 2021 and entitled "TASK MIGRATION SYSTEM AND METHOD", to Chinese Patent Application No. 202110614232.6, filed with the China National Intellectual Property Administration on June 2, 2021 and entitled "REMOTE DEVICE TASK INFORMATION TRANSMISSION METHOD AND APPARATUS", to Chinese Patent Application No. 202110583391.4, filed with the China National Intellectual Property Administration on May 27, 2021 and entitled "REMOTE DEVICE TASK INFORMATION SYNCHRONIZATION METHOD AND APPARATUS", to Chinese Patent Application No. 202111057294.8, filed with the China National Intellectual Property Administration on September 9, 2021 and entitled "REMOTE DEVICE TASK DISPLAY AND CONTROL SYSTEM AND METHOD", to Chinese Patent Application No. 202110611184.5, filed with the China National Intellectual Property Administration on June 1, 2021 and entitled "APPLICATION DATA STREAM TRANSMISSION METHOD AND ELECTRONIC DEVICE", to Chinese Patent Application No. 202110616969.1, filed with the China National Intellectual Property Administration on June 2, 2021 and entitled "TASK MIGRATION METHOD AND RELATED DEVICE", and to Chinese Patent Application No. 202110615954.3, filed with the China National Intellectual Property Administration on June 2, 2021 and entitled "LOCAL LOCK-BASED CROSS-DEVICE TASK EXECUTION SYSTEM AND METHOD", all of which are incorporated herein by reference in their entireties.

## TECHNICAL FIELD

This application relates to the field of terminal technologies, and in particular, to a task migration system and method.

## BACKGROUND

For a terminal such as a mobile phone or a tablet computer that is currently used by a user, the user usually may slide up from a bottom of a touchscreen of the terminal or tap a "multi-task" button, to enter a recent task (recent task) interface of the terminal. In the recent task interface, the user may query and manage a recently used application on the terminal and another device.

However, in a current technical solution, in a process in which a user views a task card of a remote device and migrates a task between different devices, operations are complex, and are not friendly enough to the user. Consequently, user experience is reduced.

## SUMMARY

This application provides a task migration system and method, so that a user can view and manage a historical task of another device on a device. This may be applied to almost all applications, without requiring an application to be adapted, meets a requirement of the user for managing and controlling a multi-device task, conforms to a use habit of the user, is friendly to the user, helps the user perform a subsequent operation, and improves user experience.

According to a first aspect, a task migration system is provided. The system includes a first terminal and a second terminal; the second terminal is configured to: run a first application; and when a first user interface of the first application is displayed, switch the first application to run in the background; and the first terminal is configured to: receive task information from the second terminal, where the task information includes information about an application run by the second terminal in the background; receive a first operation from a user; open a recent task interface based on the first operation, where the recent task interface includes a control, and the control includes an identifier of the second terminal; display, in the recent task interface in response to a second operation performed by the user on the identifier of the second terminal, at least one task card corresponding to the application run by the second terminal in the background, where the at least one task card includes a first task card corresponding to the first application; in response to a third operation performed by the user on the first task card, run the first application, and display the first user interface; and display a second user interface in response to a fourth operation performed by the user in the first user interface, where the fourth operation is a back operation, and the second user interface is a parent user interface of the first user interface.

According to the task migration system provided in the first aspect, when the first application of the second terminal is migrated to the first terminal, after the first terminal displays the first user interface of the first application and receives an operation performed by the user in the first user interface, the first terminal displays a parent interface or a sub-interface of the first user interface, instead of displaying a home screen of the first terminal device. This conforms to a use habit of the user, is friendly to the user, helps the user perform a subsequent operation, and improves user experience.

In a possible implementation of the first aspect, the first terminal is further configured to: display, in the recent task interface, a second task card corresponding to a recently run application of the first terminal; and in response to the second operation, stop displaying the second task card.

In a possible implementation of the first aspect, the second terminal is further configured to: segment an application data stream of the first application into a plurality of pieces of segment data, and determine an index table corresponding to the plurality of pieces of segment data, where the index table indicates storage paths and a sequence relationship of the plurality of pieces of segment data in a distributed file system of the second terminal; send the plurality of pieces of segment data to the first terminal in a multi-thread parallel transmission manner; and send the index table to the first terminal; and the first terminal is further configured to: restore the application data stream of the first application based on the plurality of pieces of segment data and the index table that are received; and after receiving the third operation, run the first application based on the third operation and the application data stream of the first application. In this implementation, in a process of migrating data of an application between terminals, an application data stream is segmented, an index table of segment data is established, the segment data is transmitted in parallel through a plurality of threads in the distributed file system, and an index table is transmitted to a peer terminal. The peer terminal restores application data based on the segment data and the index table that are received. In this way, a migration of an application data stream that is at least 200 KB can be supported, application data stream migration efficiency is improved, and user experience is improved.

In a possible implementation of the first aspect, the at least one task card further includes a third task card corresponding to a first-screen snapshot of a home screen of the second terminal, and at least one of a feature ability FA card, a floating window, and a floating bubble exists on the third task card; and the first terminal is further configured to display a task card of the second terminal in a single row or a plurality of rows in the recent task interface of the first terminal based on any one of landscape-mode use, portrait-mode use, unfolded-state portrait-mode use of a foldable screen, unfolded-state landscape-mode use of the foldable screen, folded-state landscape-mode use of the foldable screen, and folded-state portrait-mode use of the foldable screen of the second terminal. In this implementation, the at least one task card is displayed in a single row or a plurality of rows in the recent task interface of the first terminal based on a state of using the second terminal by the user, a state of using the first terminal by the user, and a screen size of the first terminal. This can improve task card display efficiency of the second terminal, help the user view and manage a historical task of another device on a device, and improve user experience.

In a possible implementation of the first aspect, the first terminal is further configured to: run the first application based on a hardware capability of the first terminal; or run the first application based on a hardware capability of the second terminal; or run the first application based on a hardware capability of the first terminal and a hardware capability of the second terminal. In this implementation, flexibility in using the hardware capability when the first terminal runs the first application may be improved, to ensure efficiency of running the first application by the first terminal.

According to a second aspect, a task migration method is provided. The method is applied to a first terminal, and the method includes: receiving task information from a second terminal, where the task information includes information about an application run by the second terminal in the background; receiving a first operation from a user; opening a recent task interface based on the first operation, where the recent task interface includes a control, and the control includes an identifier of the second terminal; displaying, in the recent task interface in response to a second operation performed by the user on the identifier of the second terminal, at least one task card corresponding to the application run by the second terminal in the background, where the at least one task card includes a first task card corresponding to a first application run by the second terminal in the background; in response to a third operation performed by the user on the first task card, running the first application, and displaying a first user interface of the first application; and displaying a second user interface in response to a fourth operation performed by the user in the first user interface, where the fourth operation is a back operation, and the second user interface is a parent user interface of the first user interface.

According to the task migration method provided in the second aspect, when the first application of the second terminal is migrated to the first terminal, after the first terminal displays the first user interface of the first application and receives an operation performed by the user in the first user interface, the first terminal displays a parent interface or a sub-interface of the first user interface, instead of displaying a home screen of the first terminal device. This conforms to a use habit of the user, is friendly to the user, helps the user perform a subsequent operation, and improves user experience.

In a possible implementation of the second aspect, the method further includes: displaying, in the recent task interface, a second task card corresponding to a recently run application of the first terminal.

In a possible implementation of the second aspect, the control further includes an identifier of the first terminal, and the method further includes: Before displaying the second task card in the recent task interface, the first terminal receives an operation performed by the user on the identifier of the first terminal.

In a possible implementation of the second aspect, the method further includes: Before the second operation, the first terminal displays the second task card in the recent task interface; and after the second operation, the first terminal stops displaying the second task card.

In a possible implementation of the second aspect, the method further includes: After the second operation, the first terminal continues to display the second task card in the recent task interface.

In a possible implementation of the second aspect, before the first terminal device displays the first user interface, the method further includes: receiving a task stack sent by the second terminal device, where the task stack includes a first activity record and a second activity record, where the first activity record includes interface data of the first user interface and user data of the first user interface, and the second activity record includes interface data of the second user interface and user data of the second user interface. In this implementation, the first terminal device may restore and display a once-opened user interface on the second terminal device based on the task stack.

In a possible implementation of the second aspect, the first activity record and the second activity record are stored next to each other in the task stack, the first activity record is read by the first terminal device before the second activity record, and before the first terminal device displays the first user interface, the method further includes: generating the first user interface based on the interface data of the first user interface, and storing a state of the first user interface based on the user data of the first user interface; and before the first terminal device displays the second user interface, the method further includes: generating the second user interface based on the interface data of the second user interface, and storing a state of the second user interface based on the user data of the second user interface. In this way, the first terminal device may first restore the first user interface based on information carried in the task stack, and may further store a state of using the first user interface by the user; and when the user performs a back operation, may restore the second user interface, and may further store a state of using the second user interface by the user.

In a possible implementation of the second aspect, the method further includes: receiving, in a multi-thread parallel receiving manner, a plurality of pieces of segment data sent by the second terminal, where the plurality of pieces of segment data are obtained by segmenting an application data stream of the first application; receiving an index table sent by the second terminal, where the index table indicates storage paths and a sequence relationship of the plurality of pieces of segment data in a distributed file system of the second terminal; restoring the application data stream of the first application based on the plurality of pieces of segment data and the index table that are received; and after the third operation is detected, running the first application based on the third operation and the application data stream of the first application. In this implementation, in a process of migrating data of an application between terminals, an application data stream is segmented, an index table of segment data is established, the segment data is transmitted in parallel through a plurality of threads in the distributed file system, and an index table is transmitted to a peer terminal. The peer terminal restores application data based on the segment data and the index table that are received. In this way, a migration of an application data stream that is at least 200 KB can be supported, application data stream migration efficiency is improved, and user experience is improved.

In a possible implementation of the second aspect, a data amount of each of the plurality of pieces of segment data is fixed, and/or the index table includes message header information corresponding to each of the plurality of pieces of segment data; and the message header information corresponding to each piece of segment data includes a correspondence between a segment number and a segment data path of each piece of segment data, and length information, start identifier information, and end identifier information that are of each piece of segment data.

In a possible implementation of the second aspect, the method further includes: receiving a fifth operation performed by the user, where the fifth operation is used to trigger sending of a first task instruction to the second terminal, and the first task instruction instructs the second terminal to clear the first application; sending first information to the second terminal, where the first information includes information about the first task instruction; and trying to hold a second local lock based on the first task instruction, where the second local lock is used to ensure that the first application on the second terminal executes a task instruction from only one device at a same time point, and the second local lock can be held by only one device at a same time point. In this implementation, it is ensured that a target device (the second terminal) executes only a task instruction from one device at a same time point, to avoid a conflict between a plurality of cross-device tasks, resolve a problem of instability in a cross-device task scenario, and improve user experience.

In a possible implementation of the second aspect, the method further includes: trying to hold a first local lock of the first terminal based on the first task instruction, where the first local lock is used to ensure that the first terminal can send one task instruction to only one device at a same time point, the first local lock can be held by only one device at a same time point, and the first terminal successfully holds the first local lock. In this implementation, because the first terminal successfully holds the first local lock corresponding to the task instruction, it is proved that the first terminal does not currently send another cross-device task instruction to the second terminal, that is, the task instruction may occupy the first local lock, to ensure that task instructions sent by the first terminal to the second terminal do not conflict, and improve efficiency and a success rate of sending the task instruction.

In a possible implementation of the second aspect, the at least one task card further includes a third task card corresponding to a first-screen snapshot of a home screen of the second terminal, at least one of a feature ability FA card, a floating window, and a floating bubble exists on the third task card, and the method further includes: When the task card of the second terminal is displayed in the recent task interface of the first terminal, the first terminal displays the task card of the second terminal in a single row or a plurality of rows in the recent task interface of the first terminal based on any one of landscape-mode use, portrait-mode use, unfolded-state portrait-mode use of a foldable screen, unfolded-state landscape-mode use of the foldable screen, folded-state landscape-mode use of the foldable screen, and folded-state portrait-mode use of the foldable screen of the second terminal. In this implementation, the at least one task card is displayed in a single row or a plurality of rows in the recent task interface of the first terminal based on a state of using the second terminal by the user, a state of using the first terminal by the user, and a screen size of the first terminal. This can improve task card display efficiency of the second terminal, help the user view and manage a historical task of another device on a device, and improve user experience.

In a possible implementation of the second aspect, the method further includes: running the first application based on a hardware capability of the first terminal; or running the first application based on a hardware capability of the second terminal; or running the first application based on a hardware capability of the first terminal and a hardware capability of the second terminal. In this implementation, flexibility of running the first application by the first terminal may be improved, and efficiency of running the first application by the first terminal is ensured.

According to a third aspect, a task migration system is provided. The system includes a first terminal and a second terminal; the second terminal is configured to run a first application; and the first terminal is configured to: receive a sixth operation from a user; display a third user interface based on the sixth operation, where the third user interface includes a control, and the control includes an identifier of the second terminal; display a fourth user interface in response to a seventh operation performed by the user on the identifier of the second terminal, where the fourth user interface includes a home screen application identifier of the second terminal; and run the first application in response to an eighth operation performed by the user on an identifier of the first application in the home screen application identifier of the second terminal.

According to the task migration system provided in the third aspect, a home screen application of another device may be displayed on the first terminal, and a super home screen function may be implemented on the first terminal, so that the user operates and manages a home screen application of another terminal on the first terminal. This is friendly to the user, and improves user experience.

In a possible implementation of the third aspect, the first terminal is further configured to: receive a ninth operation performed by the user on the home screen application identifier of the second terminal, where the ninth operation includes at least one of sorting a home screen application, creating a folder, and deleting the home screen application; and display the home screen application identifier of the second terminal after the ninth operation; and the second terminal is further configured to display the home screen application identifier of the second terminal after the ninth operation. In this implementation, the user can manage a home screen application of the second terminal on the first terminal. This facilitates an operation of the user, is friendly to the user, and improves user experience.

In a possible implementation of the third aspect, the first terminal is further configured to display the first application in a floating window, in split screen, or in full screen. In this implementation, flexibility of displaying the second application by the first terminal is improved, and user experience is improved.

According to a fourth aspect, a task migration method is provided. The method is applied to a first terminal, and the method includes: receiving a sixth operation from a user; displaying a third user interface based on the sixth operation, where the third user interface includes a control, and the control includes an identifier of a second terminal; displaying a fourth user interface in response to a seventh operation performed by the user on the identifier of the second terminal, where the fourth user interface includes a home screen application identifier of the second terminal; and running a first application in response to an eighth operation performed by the user on an identifier of the first application in the home screen application identifier of the second terminal.

According to the task migration system provided in the fourth aspect, the home screen application of another device may be displayed on the first terminal, and a super home screen function may be implemented on the first terminal, so that the user operates and manages a home screen application of another terminal on the first terminal. This is friendly to the user, and improves user experience.

In a possible implementation of the fourth aspect, the method further includes: receiving a ninth operation performed by the user on the home screen application identifier of the second terminal, where the ninth operation includes at least one of sorting a home screen application, creating a folder, and deleting the home screen application; and displaying the home screen application identifier of the second terminal after the ninth operation.

In a possible implementation of the fourth aspect, the method further includes: displaying the second application in a floating window, in split screen, or in full screen.

In a possible implementation of the fourth aspect, the method further includes: displaying the home screen application identifier of the second terminal in a home screen application layout form of the second terminal; or displaying the home screen application identifier of the second terminal in a home screen application layout form of the first terminal. In this implementation, flexibility of displaying a home screen application of another terminal by the first terminal is improved, and user experience is improved.

According to a fifth aspect, a task migration system is provided. The system includes a first terminal and a second terminal, and the method includes: The first terminal displays a recent task interface. An icon and at least one task card of the second terminal are displayed in the recent task interface. When the task card of the second terminal is displayed in the recent task interface of the first terminal, the task card of the second terminal is laid out in the recent task interface of the first terminal based on a state of using the second terminal by a user. The state of using the second terminal by the user includes any one of a landscape-mode use state, a portrait-mode use state, an unfolded-state portrait-mode use state of a foldable screen, an unfolded-state landscape-mode use state of the foldable screen, a folded-state landscape-mode use state of the foldable screen, and a folded-state portrait-mode use state of the foldable screen.

According to the task migration system provided in the fifth aspect, the task card of the second terminal is displayed in a single row or a plurality of rows in the recent task interface of the first terminal based on the state of using the second terminal by the user, a state of using the first terminal by the user, and a screen size of the first terminal. This can improve task card display efficiency of the second terminal, help the user view and manage a historical task of another device on a device, and improve user experience.

For example, the first terminal or the second terminal may include a mobile phone, a large-screen device, a tablet computer, a PC, an in-vehicle infotainment system, a foldable-screen device, and the like.

In a possible implementation of the fifth aspect, when the task card of the second terminal is displayed in the recent task interface of the first terminal, the task card of the second terminal includes a task card of a first-screen snapshot of a home screen of the second terminal. In this implementation, a home screen snapshot of the second terminal may be displayed in the recent task interface of the first terminal, to facilitate viewing by the user, and improve user experience.

In a possible implementation of the fifth aspect, at least one of an FA card, a floating window, and a floating bubble exists on the task card of the first-screen snapshot of the home screen of the second terminal and/or a task card of a second-screen snapshot of the home screen of the second terminal. In this implementation, the home screen snapshot of the second terminal may display the FA card, the floating window, or the floating bubble, to flexibly display the task card of the second terminal in the recent task interface of the first terminal in different manners, and improve user experience.

In a possible implementation of the fifth aspect, the first terminal is further configured to: receive a third operation performed by the user on the FA card, the floating window, or the floating bubble; and display a first-screen interface of the home screen of the second terminal or a first-screen interface of the home screen of the second terminal on the first terminal based on the third operation, or run the FA card, the floating window, or an application corresponding to the floating bubble on the first terminal. In this implementation, the user may perform an operation on the FA card, the floating window, or the floating bubble on the home screen snapshot of the second terminal, to quickly display or open the application on the second terminal. In this way, an operation is simple, and user experience is improved.

In a possible implementation of the fifth aspect, when the task card of the second terminal is displayed in the recent task interface of the first terminal, the task card of the second terminal includes a snapshot of a control device configured to control the second terminal. In this implementation, a task card related to the second terminal may be flexibly displayed in the recent task interface of the first terminal, to improve user experience.

In a possible implementation of the fifth aspect, the first terminal is further configured to: receive a fourth operation performed by the user on the snapshot of the control device; and display a detail interface of the control device on the first terminal based on the fourth operation, or remotely control the second terminal. In this implementation, the user may view, on the first terminal, a task card of the control device that controls the second device, and may perform an operation on the task card, to quickly control the second terminal device on the first terminal. In this way, an operation is simple, and user experience is improved.

For example, the second terminal is a large-screen device, and the control device is a remote control.

In a possible implementation of the fifth aspect, when the task card of the second terminal is displayed in the recent task interface of the first terminal, the task card of the second terminal includes a task card of a home screen application of the second terminal.

In a possible implementation of the fifth aspect, the first terminal is further configured to: receive a fifth operation performed by the user on an application on the task card of the home screen application of the second terminal; and manage the home screen application of the second terminal on the first terminal based on the fifth operation. In this implementation, the user may view a home screen application icon of the second terminal on the first terminal, and may perform an operation on the home screen application icon, to help the second terminal manage the application (sort the application, create a folder, delete the application, or the like), and quickly help, on the first terminal, the second terminal manage the application. In this way, an operation is simple, and user experience is improved.

In a possible implementation of the fifth aspect, the system further includes a lightweight device, the lightweight device includes a wearable device and a smart home device that are used by the user, and when a task card of the lightweight device is displayed in the recent task interface of the first terminal, the task card of the lightweight device includes task cards respectively corresponding to ongoing tasks of different lightweight devices. In this implementation, the task card of the lightweight device may be displayed in the recent task interface of the first terminal, to enrich types of task cards displayed in the recent task interface of the first terminal. This is friendly to the user.

For example, the lightweight device is a general term of devices such as an IOT device, the wearable device, and the smart home device. For example, the lightweight device may include a smart refrigerator, a smart air conditioner, a smart wok, a smart kitchen hood, a smart sound box, a smartwatch, and the like.

In a possible implementation of the fifth aspect, the first terminal is further configured to: receive a sixth operation performed by the user on the task card of the device; and display a detail interface of the ongoing task of the lightweight device on the first terminal based on the sixth operation, or remotely control the ongoing task of the lightweight device. In this implementation, the user may view, on the first terminal, a task card corresponding to an ongoing task of an associated lightweight device, and may perform an operation on the card corresponding to the ongoing task of the lightweight device, to remotely control the ongoing task of the lightweight device. In this way, an operation is simple, and user experience is improved.

In a possible implementation of the fifth aspect, the system further includes a third terminal, and the first terminal is further configured to: receive a seventh operation performed by the user on the task card of the lightweight device; and share the task card of the lightweight device with the third terminal based on the seventh operation; and the third terminal displays the task card of the lightweight device in a recent task interface. In this implementation, the task card of the lightweight device may be pushed to the third terminal for display, so that the user controls the ongoing task of the lightweight device on the third terminal, to improve user experience.

In a possible implementation of the fifth aspect, a first lightweight device is further configured to: display, in a display interface of the first lightweight device, a task card corresponding to an ongoing task of a second lightweight device; receive an eighth operation performed by the user on the task card corresponding to the ongoing task of the second lightweight device; and remotely control the ongoing task of the second lightweight device based on the eighth operation. In this implementation, the user may remotely control an ongoing task of another lightweight device on a lightweight device. In this way, an operation is simple, and user experience is improved.

In a possible implementation of the fifth aspect, the first lightweight device is further configured to: authenticate an identity of the user by using the first lightweight device and/or a device associated with the first lightweight device; and after authentication of the identity of the user succeeds, display a task card of the first terminal and/or the second terminal in the display interface of the first lightweight device.

According to a sixth aspect, a task migration method is provided. The method is applied to a first terminal, and the method includes: The first terminal displays a recent task interface. An icon and at least one task card of a second terminal are displayed in the recent task interface, and N devices include the first terminal and the second terminal. When the task card of the second terminal is displayed in the recent task interface of the first terminal, the task card of the second terminal is displayed in a single row or a plurality of rows in the recent task interface of the first terminal based on any one of landscape-mode use, portrait-mode use, unfolded-state portrait-mode use of a foldable screen, unfolded-state landscape-mode use of the foldable screen, folded-state landscape-mode use of the foldable screen, and folded-state portrait-mode use of the foldable screen of the second terminal.

According to the task migration method provided in the sixth aspect, the task card of the second terminal is displayed in a single row or a plurality of rows in the recent task interface of the first terminal based on a state of using the second terminal by a user, a state of using the first terminal by the user, and a screen size of the first terminal. This can improve task card display efficiency of the second terminal, help the user view and manage a historical task of another device on a device, and improve user experience.

In a possible implementation of the sixth aspect, the task card of the second terminal includes a task card of a first-screen snapshot of a home screen of the second terminal and a task card of a second-screen snapshot of the home screen of the second terminal.

In a possible implementation of the sixth aspect, at least one of a feature ability FA card, a floating window, and a floating bubble exists on the task card of the first-screen snapshot of the home screen of the second terminal and/or the task card of the second-screen snapshot of the home screen of the second terminal.

In a possible implementation of the sixth aspect, the method further includes: A task card of a lightweight device is displayed in the recent task interface of the first terminal, the task card of the lightweight device includes task cards respectively corresponding to ongoing tasks of different lightweight devices. The lightweight device includes a wearable device and a smart home device that are used by the user.

In a possible implementation of the sixth aspect, a source device corresponding to a first application is the second terminal, and in a process in which the first application is migrated to the first terminal for running, the method further includes: The first terminal determines a running state of the first application based on different modes in which the first application is migrated to the first terminal. Different modes in which the first application is migrated to the first terminal include a replication mode, a migration mode based on a window projection technology, and a migration mode based on a feature ability FA technology.

In a possible implementation of the sixth aspect, a source device corresponding to a second application is the first terminal, and in a process in which the second application is migrated to the second terminal for running, the method further includes: The first terminal releases a hardware capability that is of the first terminal and that is occupied by the second application; or the first terminal does not release a hardware capability that is of the first terminal and that is occupied by the second application.

According to a seventh aspect, a task migration method is provided. The method is applied to a first terminal, and the method includes: opening a recent task interface, where the task interface includes a first task card corresponding to a first application, and the first application is an application run by a second terminal in the background; and receiving a first operation performed by a user on the first task card, and indicating the second terminal to perform a second operation corresponding to the first operation on the first application.

According to the task migration method provided in the seventh aspect, the user of the first terminal may perform the first operation on a task card in the recent task interface, to indicate the second terminal to perform a corresponding second operation on an application corresponding to the task card, so that the user can control a recently used application of the second terminal, to improve user experience.

In a possible implementation of the seventh aspect, the receiving a first operation performed by a user on the first task card, and indicating the second terminal to perform a second operation corresponding to the first operation on the first application specifically includes: receiving a slide-up operation performed by the user on the first task card, and indicating the second terminal to clear the first application. After the second terminal clears the first application, the first terminal stops displaying the first task card in the recent task interface.

In a possible implementation of the seventh aspect, the recent task interface further includes a first control indicating the first terminal and a second control indicating the second terminal; and the receiving a first operation performed by a user on the first task card, and indicating the second terminal to perform a second operation corresponding to the first operation on the first application specifically includes: receiving an operation that the user drags the first task card to the first control, and indicating the second terminal to migrate the first application to the first terminal. In this case, the first terminal runs the first application.

In a possible implementation of the seventh aspect, the first terminal recently runs a second application. In the recent task interface, the user of the first terminal drags a task card of the second application to the second control, to migrate the second application to the second terminal.

In a possible implementation of the seventh aspect, the receiving a first operation performed by a user on the first task card, and indicating the second terminal to perform a second operation corresponding to the first operation on the first application includes: receiving an operation that the user drags the first task card to the second control, and indicating the second terminal to run the first application in the foreground.

According to an eighth aspect, a task migration method is provided. The method includes: A first terminal obtains a to-be-transmitted application data stream; the first terminal segments the application data stream into a plurality of pieces of segment data, and determines an index table corresponding to the plurality of pieces of segment data, where the index table indicates storage paths and a sequence relationship of the plurality of pieces of segment data in a distributed file system of the first terminal; the first terminal sends the plurality of pieces of segment data to a second terminal in a multi-thread parallel transmission manner; and the first terminal sends the index table to the second terminal.

According to the task migration method provided in the eighth aspect, in a process of migrating data of an application between terminals, an application data stream is segmented, an index table of segment data is established, the segment data is transmitted in parallel through a plurality of threads in the distributed file system, and an index table is transmitted to a peer terminal. The peer terminal restores application data based on the segment data and the index table that are received. In this way, a migration of an application data stream that is at least 200 KB can be supported, application data stream migration efficiency is improved, and user experience is improved.

In a possible implementation of the eighth aspect, that the first terminal segments the application data stream into a plurality of pieces of segment data includes: The first terminal determines a quantity of segments based on a total quantity of threads included in a thread pool of the first terminal; and the first terminal segments the application data stream into the plurality of pieces of segment data based on the quantity of segments.

For example, it may be determined that the total quantity of threads included in the thread pool of the first terminal is the quantity of segments. In other words, the quantity of segments may be the same as the total quantity of threads included in the thread pool. Alternatively, the quantity of segments may be determined based on the total quantity of threads included in the thread pool. In other words, the quantity of segments may be different from the total quantity of threads included in the thread pool.

For example, if the total quantity of threads included in the thread pool may be two times of a core quantity of a CPU of the first terminal, the quantity of segments is also two times of the core quantity of the CPU of the first terminal.

In a possible implementation of the eighth aspect, if a value of a byte stream is greater than or equal to 200 KB, the first terminal segments the application data stream into the plurality of pieces of data. If a size of a byte stream is less than 200 KB, the first terminal sends the byte stream to the second terminal by writing the byte stream into a parcel for RPC transmission.

In a possible implementation of the eighth aspect, a data amount of each of the plurality of pieces of segment data is fixed. In this solution, the plurality of pieces of segment data are sent in parallel through a plurality of threads, instead of being sent in series. The plurality of pieces of segment data may be separately sent, instead of sending the plurality of pieces of segment data as a whole. A peer device may restore data based on only received partial segment data, or a peer device may restore data based on all received segment data. In other words, the segment data is sent in a parallel stream transmission manner. In this way, data transmission efficiency can be greatly improved.

In a possible implementation of the eighth aspect, the index table includes message header information corresponding to each of the plurality of pieces of segment data. In this solution, the message header information corresponding to each piece of segment data includes a correspondence between a segment number and a segment data path of each piece of segment data, and length information, start identifier information, and end identifier information that are of each piece of segment data. Information or content indicated by the message header field of the segment data is located in the index table instead of the segment data.

In a possible implementation of the eighth aspect, that the first terminal sends the index table to the second terminal includes: The first terminal sends the index table to the second terminal by writing the index table into a parcel for an RPC. In other words, the index table is transmitted in an RPC manner. The first terminal stores data of the index table by using an intent, and then writes the intent into the parcel for transmission.

In a possible implementation of the eighth aspect, the index table may also be transmitted in a same manner as the segment data. For example, the index table may be segmented based on the quantity of segments, to obtain segment index table data, the segment index table data is stored in the distributed file system, a segment number of each piece of segment index table data and an index of a segment index table data path may be established, and the index table is sent to the second terminal by transmitting segment index data in parallel through a plurality of threads.

In a possible implementation of the eighth aspect, a data amount of the to-be-transmitted application data stream is greater than or equal to 200 KB.

In a possible implementation of the eighth aspect, the application data stream includes at least one of a data stream of a document editing application, a data stream of an audio application, a data stream of a video application, or a data stream of a recently run application of the first terminal.

For example, the data stream of the recently run application of the first terminal (that is, an application run by the first terminal in the background) may be recent task information of the first terminal.

For example, a recent task interface may be displayed on the first terminal, and the recent task interface is an interface that is in a system UI and that displays a recently run task of the terminal. When the first terminal is triggered to open the recent task interface, a display of the first terminal may display the recently run task of the terminal, or a recently run application (recent task information). The first terminal may send the data stream of the recently run application (a data stream of the recent task information) of the first terminal to the second terminal, and the user may view a recently used application of the first terminal on the second terminal, or further clear a recently used application of the second terminal of the user.

According to a ninth aspect, a task migration method is provided. The method includes: A second terminal receives, in a multi-thread parallel receiving manner, a plurality of pieces of segment data sent by a first terminal, where the plurality of pieces of segment data are obtained by segmenting a to-be-transmitted application data stream; the second terminal receives an index table sent by the first terminal, where the index table indicates storage paths and a sequence relationship of the plurality of pieces of segment data in a distributed file system of the second terminal; and the second terminal restores the application data stream based on the plurality of pieces of segment data and the index table.

According to the task migration method provided in the ninth aspect, in a process of migrating data of an application between terminals, an application data stream is segmented, an index table of segment data is established, the segment data is transmitted in parallel through a plurality of threads in the distributed file system, and an index table is transmitted to a peer terminal. The peer terminal restores application data based on the segment data and the index table that are received. In this way, a migration of an application data stream that is at least 200 KB can be supported, application data stream migration efficiency is improved, and user experience is improved.

In a possible implementation of the ninth aspect, a data amount of each of the plurality of pieces of segment data is fixed.

In a possible implementation of the ninth aspect, the index table includes message header information corresponding to each of the plurality of pieces of segment data.

In a possible implementation of the ninth aspect, the message header information corresponding to each piece of segment data includes a correspondence between a segment number and a segment data path of each piece of segment data, and length information, start identifier information, and end identifier information that are of each piece of segment data.

In a possible implementation of the ninth aspect, when the application data stream is a data stream of a document editing application, that the second terminal restores the application data stream based on the plurality of pieces of segment data and the index table includes: After receiving all the segment data, the second terminal restores the data stream of the document editing application based on the index table. In this solution, the second terminal can restore document data only after all pieces of segment data are received.

In a possible implementation of the ninth aspect, when the application data stream is a data stream of an audio application or a data stream of a video application, that the second terminal restores the application data stream based on the plurality of pieces of segment data and the index table includes: After receiving partial segment data, the second terminal restores the data stream of the audio application or the data stream of the video application based on the index table. In this solution, the second terminal can restore data before all the segment data is received, and can start to restore data of the audio or video application after receiving the partial segment data. In other words, the second electronics may simultaneously receive the segment data and restore the received segment data. After restoring the data of the audio or video application, the user may obtain a current audio or video playing progress on the second terminal, and start to continue to play.

In a possible implementation of the ninth aspect, the application data stream includes at least one of a data stream of a document editing application, a data stream of an audio application, a data stream of a video application, or a data stream of a recently run application of the first terminal.

According to a tenth aspect, a task migration system is provided. The system includes a first terminal and a second terminal, and the first terminal and the second terminal are connected through a network. The first terminal is configured to: segment a to-be-transmitted application data stream into a plurality of pieces of data, and determine an index table corresponding to the plurality of pieces of data, where the index table indicates storage paths and a sequence relationship of the plurality of pieces of segment data in a distributed file system of the first terminal; send the plurality of pieces of segment data to the second terminal in a multi-thread parallel transmission manner; and send the index table to the second terminal. The second terminal is configured to: restore the application data stream based on the plurality of pieces of segment data and the index table that are received.

According to the task migration system provided in the tenth aspect, in a process of migrating data of an application between terminals, an application data stream is segmented, an index table of segment data is established, the segment data is transmitted in parallel through a plurality of threads in the distributed file system, and an index table is transmitted to a peer terminal. The peer terminal restores application data based on the segment data and the index table that are received. In this way, a migration of an application data stream that is at least 200 KB can be supported, application data stream migration efficiency is improved, and user experience is improved.

In a possible implementation of the tenth aspect, a data amount of each of the plurality of pieces of segment data is fixed.

In a possible implementation of the tenth aspect, if a value of a byte stream is greater than or equal to 200 KB, the first terminal segments the application data stream into the plurality of pieces of data. If a size of a byte stream is less than 200 KB, the first terminal sends the byte stream to the second terminal by writing the byte stream into a parcel for RPC transmission.

In a possible implementation of the tenth aspect, the index table includes message header information corresponding to each of the plurality of pieces of segment data; and the message header information corresponding to each piece of segment data includes a correspondence between a segment number and a segment data path of each piece of segment data, and length information, start identifier information, and end identifier information that are of each piece of segment data.

In a possible implementation of the tenth aspect, the first terminal is further configured to send the index table to the second terminal by writing the index table into a parcel for a remote procedure call RPC.

In a possible implementation of the tenth aspect, the application data stream includes at least one of a data stream of a document editing application, a data stream of an audio application, a data stream of a video application, or a data stream of a recently run application (that is, an application run in the background) of the first terminal.

According to an eleventh aspect, a task migration system is provided. The system includes a first terminal and a second terminal, and a communication connection is established between the first terminal and the second terminal. The second terminal is configured to run a first application. The first terminal is configured to: receive a user interface option that is of a first user interface and that is sent by the second terminal, where the first user interface is a user interface of the first application; detect a first operation performed by a user on the user interface option of the first user interface; display the first user interface; detect a second operation performed by the user in the first user interface; and display a second user interface, where the second user interface is a user interface of the first application, and is different from the first user interface.

According to the task migration system provided in the eleventh aspect, a task migration may be performed between the first terminal and the second terminal, so that the user can execute, on the first terminal, a task on the second terminal, to improve user experience.

In a possible implementation of the eleventh aspect, the second operation is a back operation, and the second user interface is a parent user interface of the first user interface. In this way, the user may perform a same operation on the first terminal, to implement a same user interface display sequence as that on the second terminal.

In a possible implementation of the eleventh aspect, before the first terminal displays the first user interface, the first terminal is further configured to receive a task stack sent by the second terminal. The task stack includes a first activity record and a second activity record, the first activity record includes interface data of the first user interface and user data of the first user interface, and the second activity record includes interface data of the second user interface and user data of the second user interface. In this way, the first terminal may restore and display a once-opened user interface on the second terminal based on the task stack.

In a possible implementation of the eleventh aspect, the first activity record and the second activity record are stored next to each other in the task stack, the first activity record is read by the first terminal before the second activity record, and before the first terminal displays the first user interface, the first terminal is further configured to: generate the first user interface based on the interface data of the first user interface, and store a state of the first user interface based on the user data of the first user interface; and before the first terminal displays the second user interface, the first terminal is further configured to: generate the second user interface based on the interface data of the second user interface, and store a state of the second user interface based on the user data of the second user interface. In this way, the first terminal may first restore the first user interface based on information carried in the task stack, and may further store a state of using the first user interface by the user; and when the user performs a back operation, may restore the second user interface, and may further store a state of using the second user interface by the user.

In a possible implementation of the eleventh aspect, before the first terminal detects the first operation performed by the user on the user interface option of the first user interface, the first terminal is further configured to display a third user interface. The third user interface includes a control and a user interface option of a recently run application of the second terminal, the control includes an identifier of the first terminal and an identifier of the second terminal, and the user interface option of the recently run application of the second terminal includes the user interface option of the first user interface. In this way, the user can view a recently run application of the first terminal and the recently run application of the second terminal, and may tap the user interface option of the recently run application of the second terminal to display the first user interface on the first terminal.

In a possible implementation of the eleventh aspect, before the first terminal displays the third user interface, the first terminal is further configured to: detect a third operation performed by the user, where the third operation indicates the first terminal to display the third user interface; and send a second request to the second terminal, where the second request indicates the second terminal to send, to the first terminal, a user interface snapshot captured by the system when the recently run application runs in the background. In this way, consumption of traffic or power generated by synchronizing recent task information can be reduced when user experience is ensured.

In a possible implementation of the eleventh aspect, before receiving the task stack sent by the second terminal, the first terminal is further configured to send a first request to the second terminal. The first request indicates the second terminal to send the task stack to the first terminal. In this way, consumption of traffic or power generated by synchronizing recent task information can be reduced when user experience is ensured.

In a possible implementation of the eleventh aspect, before the first terminal receives the user interface option that is of the first user interface and that is sent by the second terminal, the first terminal is further configured to establish a trusted relationship with the second terminal. In this way, privacy of the user is protected, and security of this solution is increased.

In a possible implementation of the eleventh aspect, the system further includes a third terminal, and the third terminal establishes a communication connection to the first terminal. The third terminal is configured to: receive a user interface option that is of a first user interface and that is sent by the first terminal, where the first user interface is a user interface of the first application; detect the first operation performed by the user on the user interface option of the first user interface; display the first user interface; detect the second operation performed by the user in the first user interface; and display the second user interface, where the second user interface is a user interface of the first application, and is different from the first user interface. In this way, the first terminal may also perform a task migration to the third terminal in a same manner.

According to a twelfth aspect, a task migration method is provided. The method is applied to a first terminal, and the method includes: The first terminal receives a user interface option that is of a first user interface and that is sent by a second terminal. The first user interface is a user interface of a first application, and the first application is a recently run application of the second terminal. The first terminal detects a first operation performed by a user on the user interface option of the first user interface. The first terminal displays the first user interface. The first terminal detects a second operation performed by the user in the first user interface. The first terminal displays a second user interface. The second user interface is a user interface of the first application, and is different from the first user interface.

In a possible implementation of the twelfth aspect, the first operation is a back operation, and the second user interface is a parent user interface of the first user interface.

In a possible implementation of the twelfth aspect, before the first terminal displays the first user interface, the method further includes: The first terminal receives a task stack sent by the second terminal. The task stack includes a first activity record and a second activity record, the first activity record includes interface data of the first user interface and user data of the first user interface, and the second activity record includes interface data of the second user interface and user data of the second user interface.

In a possible implementation of the twelfth aspect, the first activity record and the second activity record are stored next to each other in the task stack, the first activity record is read by the first terminal before the second activity record, and before the first terminal displays the first user interface, the method further includes: The first terminal generates the first user interface based on the interface data of the first user interface, and stores a state of the first user interface based on the user data of the first user interface; and before the first terminal displays the second user interface, the method further includes: The first terminal generates the second user interface based on the interface data of the second user interface, and stores a state of the second user interface based on the user data of the second user interface.

In a possible implementation of the twelfth aspect, before the first terminal detects the first operation performed by the user on the user interface option of the first user interface, the method further includes: The first terminal displays a third user interface. The third user interface includes a control and a user interface option of the recently run application of the second terminal, the control includes an identifier of the first terminal and an identifier of the second terminal, and the user interface option of the recently run application of the second terminal includes the user interface option of the first user interface.

In a possible implementation of the twelfth aspect, before the first terminal displays the third user interface, the method further includes: The first terminal detects a third operation performed by the user. The third operation indicates the first terminal to display the third user interface. The first terminal sends a second request to the second terminal. The second request indicates the second terminal to send, to the first terminal, a user interface snapshot captured by the system when the recently run application runs in the background.

In a possible implementation of the twelfth aspect, before the task stack sent by the second terminal is received, the method further includes: The first terminal sends a first request to the second terminal. The first request indicates the second terminal to send the task stack to the first terminal.

In a possible implementation of the twelfth aspect, before the first terminal displays the first user interface, the method further includes: The first terminal establishes a trusted relationship with the second terminal.

According to a thirteenth aspect, a task migration method is provided. The method is applied to a second terminal, and the method includes: The second terminal receives a second request sent by a first terminal. The second request indicates the second terminal to send, to the first terminal, a user interface snapshot captured by the system when a recently run application runs in the background. The second terminal sends, to the first terminal, the user interface snapshot captured by the system when the recently run application runs in the background.

In a possible implementation of the thirteenth aspect, the method further includes: The second terminal receives a first request sent by the first terminal. The first request indicates the second terminal to send a task stack to the first terminal. The second terminal sends the task stack to the first terminal.

According to a fourteenth aspect, a task migration system is provided. The system includes a first terminal, a second terminal, and a third terminal, and the first terminal, the second terminal, and the third terminal are connected through a network. The first terminal is configured to: receive a first operation performed by a user, where the first operation is used to trigger sending of a first task instruction to the second terminal; send first information to the second terminal, where the first information includes information about the first task instruction; and try to hold a second local lock based on the first task instruction, where the second local lock is used to ensure that a first application on the second terminal executes only a task instruction from one device at a same time point, and the second local lock can be held by only one device at a same time point. The third terminal is configured to: receive a second operation performed by the user, where the second operation is used to trigger sending of a second task instruction to the second terminal; and send second information to the second terminal, where the second information includes information about the second task instruction; try to hold the second local lock based on the second task instruction. The second terminal is configured to execute a task instruction sent by a terminal that holds the second local lock. The first terminal or the second terminal holds the second local lock.

According to the task migration system provided in the fourteenth aspect, a local lock is created on an application of a target device, and the local lock can be held by only one another device at a same time point. If a specific device successfully holds the local lock, the application on the target device may execute a task from the device. In a period in which the device holds the local lock, the target device does not execute a task instruction sent by another device, to ensure that the target device executes only a task instruction from one device at a same time point, avoid a conflict between a plurality of cross-device tasks, resolve a problem of instability in a cross-device task scenario, and improve user experience.

In a possible implementation of the fourteenth aspect, the second local lock is used to ensure that the first application executes only a task instruction from one device at a same time point, and the second local lock can be held by only one device at a same time point. In other words, the second local lock is at an application level. A same application on the second terminal can execute only a task instruction from one device at a same time point, and cannot execute task instructions from different devices at a same time point.

In a possible implementation of the fourteenth aspect, the second local lock is used to ensure that in a second application and the first application on the second terminal, only one application executes a task instruction from a same device at a same time point. In other words, the second local lock is at a device level. The second local lock is used to ensure that the second terminal executes only a task instruction from one device at a time point or in a time period. If a device successfully holds the second local lock, it means that the second terminal may execute a task instruction sent by the device. Another device that does not hold the second local lock does not send a task instruction to the second terminal, or even if the device sends a task instruction to the second terminal, the second terminal does not execute the task instruction. In other words, the second local lock can be held by only one device at a same time point in addition to the second terminal.

In a possible implementation of the fourteenth aspect, the first terminal is further configured to try to hold a first local lock of the first terminal based on the first task instruction. The first local lock is used to ensure that the first terminal can send one task instruction to only one device at a same time point, and the first local lock can be held by only one device at a same time point. In this solution, the first local lock is used to ensure that the first terminal can send one task instruction to only one device (for example, the second terminal) at a same time point, and the first local lock may be a preemptive cross-device task lock. If the first terminal needs to send a plurality of task instructions (a multi-process or multi-thread task) to the second terminal at a same time point, when a task instruction successfully holds or preempts the first local lock, the first terminal may send the task instruction to the second terminal. If the first terminal needs to send only one task instruction to the second terminal at a same time point, the task instruction holds the first local lock. In other words, the first local lock can be held by only one cross-device task instruction on the first terminal at a same time point.

For example, when the user performs a slide-up operation in a region corresponding to a task card of a video application on the second terminal, a task instruction for clearing the video application on the second terminal is triggered. In addition, an application manager in the background of the first terminal also sends a task instruction to the second terminal. The task instruction is used to clear a music application on the second terminal or is used to run the video application on the second terminal. In this case, the two task instructions preempt the first local lock, and when a task instruction preempts the first local lock, the first terminal may send the task instruction to the second terminal.

In a possible implementation of the fourteenth aspect, the system further includes a fourth terminal. The fourth terminal is configured to: receive a third operation performed by the user, where the third operation is used to trigger sending of a third task instruction to the first terminal; send third information to the first terminal, where the third information includes information about the third task instruction; and try to hold the first local lock, where the first local lock is further used to ensure that in a process in which the first terminal and the second terminal device cooperate to execute a cross-device task instruction, the first terminal does not execute a task instruction sent by the another device, or the first terminal does not send a task instruction to another device, and the first local lock can be held by only one device at a same time point. The first terminal is further configured to not execute the third task instruction when the fourth terminal unsuccessfully holds the first local lock.

In this solution, a device lock is further set on a device that cooperates with a target device to execute a cross-device task. The device lock can be held by only one device at a same time point. In a period in which the device and the target device cooperate to execute a cross-device task, the device holds the device lock, to ensure that the device does not participate in or does not execute a cross-device task between the device and another device, that is, ensure that the device participates in only a cross-device task between the device and one device at a same time point, avoid a conflict between a plurality of cross-device tasks, resolve a problem of instability in a cross-device task scenario, and improve user experience.

In a possible implementation of the fourteenth aspect, the first terminal is further configured to: receive a fourth operation performed by the user, where the fourth operation is used to trigger sending of a fourth task instruction to the second terminal; and generate a task queue based on the first task instruction and the fourth task instruction, where a sequence of the first task instruction and the fourth task instruction in the task queue is a sequence of corresponding operations, and the first information includes information about a task instruction included in the task queue. In this solution, a local lock is created on the target device, and the local lock can be held by only one device at a same time point. When a device successfully holds a distributed task lock, the target device may receive a task queue from the device, and sequentially execute a plurality of task instructions in a sequence of the plurality of task instructions included in the task queue, to ensure that a plurality of task instructions from a same device are executed in sequence, resolve a problem of instability in a cross-device task scenario, and improve user experience.

In a possible implementation of the fourteenth aspect, the first information further includes a lock holding timeout time period of the second local lock; and the first terminal is further configured to release the second local lock after a time length of holding the second local lock by the first terminal is greater than or equal to the lock holding timeout time period.

In a possible implementation of the fourteenth aspect, after the second terminal completes execution of a task instruction included in the first information or the second information, the second terminal is further configured to send feedback information to the first terminal or the third terminal. The feedback information indicates that the second terminal has completed execution of the task instruction. The first terminal or the third terminal is further configured to release the second local lock based on the feedback information.

For example, if the task instruction in the first information is clearing a video application that is run by the second terminal in the background, after receiving the feedback information, the first terminal may send a notification to a global task center of the first terminal, to indicate the global task center to refresh a recent task interface, and the video application is not displayed in the refreshed recent task interface, or is not displayed in a recent task list corresponding to the second terminal in the recent task interface.

In a possible implementation of the fourteenth aspect, the first terminal is further configured to display, in a recent task interface of the first terminal, an identifier of an application run by the second terminal in the background. The third terminal is further configured to display, in a recent task interface of the third terminal, an identifier of an application run by the second terminal in the background. The first task instruction instructs the second terminal to clear the first application run in the background. The second task instruction instructs the second terminal to run the first application.

For example, when the user performs a slide-up operation in a region corresponding to a task card of a video application on the second terminal, a task instruction for clearing the video application on the second terminal is triggered. When a user of the third terminal makes a tap gesture in the region corresponding to the task card of the video application on the second terminal, a task instruction for running the video application on the second terminal is triggered.

In a possible implementation of the fourteenth aspect, the first terminal is further configured to display a notification message to the user in an interface of the first terminal when the first terminal unsuccessfully holds the second local lock. The notification message is used to notify the user that execution of the first task instruction fails.

In a possible implementation of the fourteenth aspect, the first task instruction instructs to send a data stream of the first application on the first terminal to the second terminal, and the third task instruction instructs the first terminal to stop running the first application. For example, a task instruction sent by the first terminal to the second terminal is: migrating a data stream of a video application on the first terminal to the second terminal. In addition, a task instruction that needs to be sent by the fourth terminal to the first terminal device is stopping running the video application on the first terminal. In this case, because the fourth terminal unsuccessfully tries to hold a device lock of the first terminal, the fourth terminal does not send a task instruction to the first terminal, or even if the fourth terminal sends a task instruction to the first terminal, the first terminal finds that the fourth terminal does not hold the device lock of the first terminal, and does not execute the task instruction.

According to a fifteenth aspect, a task migration method is provided. The method is applied to a first terminal, and the method includes: receiving a first operation performed by a user, where the first operation is used to trigger sending of a first task instruction to a second terminal; sending first information to the second terminal, where the first information includes information about the first task instruction; trying to hold a second local lock based on the first task instruction, where the second local lock is used to ensure that a first application on the second terminal executes only a task instruction from one device at a same time point, and the second local lock can be held by only one device at a same time point; and displaying a notification message to the user in a display interface, where the notification message is used to notify the user that execution of the first task instruction fails or succeeds.

According to the method provided in the fifteenth aspect, a local lock is created on an application on a target device, and the local lock can be held by only one another device at a same time point. If a specific device successfully holds the local lock, the application on the target device may execute a task from the device. In a period in which the device holds the local lock, the target device does not execute a task instruction sent by another device, to ensure that the target device executes only a task instruction from one device at a same time point, avoid a conflict between a plurality of cross-device tasks, resolve a problem of instability in a cross-device task scenario, and improve user experience.

In a possible implementation of the fifteenth aspect, the second local lock is used to ensure that the first application executes only a task instruction from one device at a same time point, and the second local lock can be held by only one device at a same time point. In other words, the second local lock is at an application level. A same application on the second terminal can execute only a task instruction from one device at a same time point, and cannot execute task instructions from different devices at a same time point.

In a possible implementation of the fifteenth aspect, the second local lock is used to ensure that in a second application and the first application on the second terminal, only one application executes a task instruction from a same device at a same time point. In other words, the second local lock is at a device level. The second local lock is used to ensure that the second terminal executes only a task instruction from one device at a time point or in a time period. If a device successfully holds the second local lock, it means that the second terminal may execute a task instruction sent by the device. Another device that does not hold the second local lock does not send a task instruction to the second terminal, or even if the device sends a task instruction to the second terminal, the second terminal does not execute the task instruction. In other words, the second local lock can be held by only one device at a same time point in addition to the second terminal.

In a possible implementation of the fifteenth aspect, the method includes: trying to hold a first local lock of the first terminal based on the first task instruction. The first local lock is used to ensure that the first terminal can send one task instruction to only one device at a same time point, and the first local lock can be held by only one device at a same time point.

In a possible implementation of the fifteenth aspect, the method further includes: receiving third information sent by a fourth terminal. The third information includes information about a third task instruction; when the first terminal holds the first local lock of the first terminal, the first terminal does not execute the third task instruction; the first local lock is used to ensure that in a process in which the first terminal and the second terminal device cooperate to execute a cross-device task instruction, the first terminal does not execute a task instruction sent by the another device, or the first terminal does not send a task instruction to another device; and the first local lock can be held by only one device at a same time point.

In a possible implementation of the fifteenth aspect, when the first terminal holds the second local lock, the first information further includes a lock holding timeout time period of the second local lock, and the method further includes: releasing the second local lock after a time length of holding the second local lock by the first terminal is greater than or equal to the lock holding timeout time period.

In a possible implementation of the fifteenth aspect, when the first terminal holds the second local lock, the method further includes: receiving feedback information sent by the second terminal, where the feedback information indicates that the second terminal has completed execution of a task instruction; and releasing the second local lock based on the feedback information.

In a possible implementation of the fifteenth aspect, the method further includes: displaying, in a recent task interface of the first terminal, an identifier of an application run by the second terminal in the background. The first task instruction instructs the second terminal to clear the first application run in the background.

In a possible implementation of the fifteenth aspect, the first task instruction instructs to send a data stream of the first application on the first terminal to the second terminal, and the third task instruction instructs the first terminal to stop running the first application. When the first terminal does not hold the second local lock, the notification message is used to notify the user that execution of the first task instruction fails.

According to a sixteenth aspect, a communication apparatus is provided. The communication apparatus includes units configured to perform steps performed by a terminal device in any one of the aspects or the possible implementations of the aspects.

According to a seventeenth aspect, a communication apparatus is provided. The communication apparatus includes at least one processor and a memory, the processor and the memory are coupled, the memory stores program instructions, and when the program instructions stored in the memory are executed by the processor, steps performed by a terminal device in any one of the aspects or the possible implementations of the aspects are performed.

According to an eighteenth aspect, a communication apparatus is provided. The communication apparatus includes at least one processor and an interface circuit, and the at least one processor is configured to perform steps performed by a terminal device in any one of the aspects or the possible implementations of the aspects.

According to a nineteenth aspect, a terminal device is provided. The terminal device includes any communication apparatus provided in the sixteenth aspect, the seventeenth aspect, or the eighteenth aspect.

According to a twentieth aspect, a computer program product is provided. The computer program product includes a computer program, and when the computer program is executed by a processor, steps performed by a terminal device in any one of the aspects or the possible implementations of the aspects are performed.

According to a twenty-first aspect, a computer-readable storage medium is provided. The computer-readable storage medium stores a computer program, and when the computer program is executed, steps performed by a terminal device in any one of the aspects or the possible implementations of the aspects are performed.

According to a twenty-second aspect, a chip is provided. The chip includes a processor, configured to invoke and run a computer program from a memory, so that a communication device in which a chip is installed performs steps performed by a terminal device in any one of the aspects or the possible implementations of the aspects.

**BRIEF DESCRIPTION OF DRAWINGS**

FIG. 1 is a schematic diagram of a communication system applicable to embodiments of this application;

FIG. 2(a) to FIG. 2(c) are schematic diagrams of interfaces in which a recent task interface is displayed and a slide operation is performed in the recent task interface according to this application;

FIG. 3(a) and FIG. 3(b) each are a schematic diagram of an interface in which a touch operation is performed in a recent task interface according to this application;

FIG. 3(c) to FIG. 3(e) each are a schematic diagram of an interface in which an implementation of a recent task list of a current terminal and another terminal is displayed;

FIG. 3(f) is a schematic diagram of an interface in which an implementation of a recent task list of a current terminal and another terminal is displayed;

FIG. 3(g) to FIG. 3(i) are schematic diagrams of a manner of transmitting recent task information through a software module;

FIG. 3(j) to FIG. 3(u) are schematic diagrams of interfaces in which a first terminal initiates establishment of a trusted request to a second terminal;

FIG. 3(v) to FIG. 3(z) are schematic diagrams of interfaces in which a second terminal receives a trusted request from a first terminal;

FIG. 4(a) and FIG. 4(b) are schematic diagrams of interfaces in which a recently used application of another terminal is cleared;

FIG. 4(c) to FIG. 4(e) each are a schematic diagram of an interface in which an application is migrated between terminals;

FIG. 4(f) to FIG. 4(h) each are a schematic diagram of an interface in which usage time of an application on another terminal is displayed;

FIG. 4(i) is a schematic flowchart according to an embodiment of this application;

FIG. 4(j) is another schematic flowchart according to an embodiment of this application;

FIG. 4(k) and FIG. 4(l) each are a schematic flowchart of determining a layout in which a task card of another terminal is displayed in a recent task interface of a first terminal according to this application;

FIG. 5(a) to FIG. 6(e) are schematic diagrams of interfaces of different layouts in which task cards of other different terminals are displayed in a recent task interface of a first terminal according to this application;

FIG. 7(a) to FIG. 7(q) are schematic diagrams of interfaces of different content displayed on a last task card in a recent task interface of a first terminal according to this application;

FIG. 7(r) and FIG. 7(s) each are a schematic diagram of an interface in which a lightweight device displays a task card of another device according to this application;

FIG. 8(a)-1 and FIG. 8(a)-2 are a schematic flowchart of determining a display state and an application running state based on different migration modes when a task card of a remote device is started in a recent task interface of a first terminal according to this application;

FIG. 8(b)-1 and FIG. 8(b)-2 to FIG. 8(n) are schematic diagram of interfaces of running states of a first application on different devices based on different migration modes according to this application;

FIG. 8(o)-1 and FIG. 8(o)-2 to FIG. 8(p)-1 and FIG. 8(p)-2 are schematic diagrams of interfaces in which a task card is operated in a recent task interface of a first terminal to help install an application on another device according to this application;

FIG. 8(q)-1 to FIG. 8(q)-3 to FIG. 8(u)-1 to FIG. 8(u)-4 are schematic diagrams of interfaces in which different task cards are operated in a recent task interface of a first terminal to establish different display forms of a plurality of task cards according to this application;

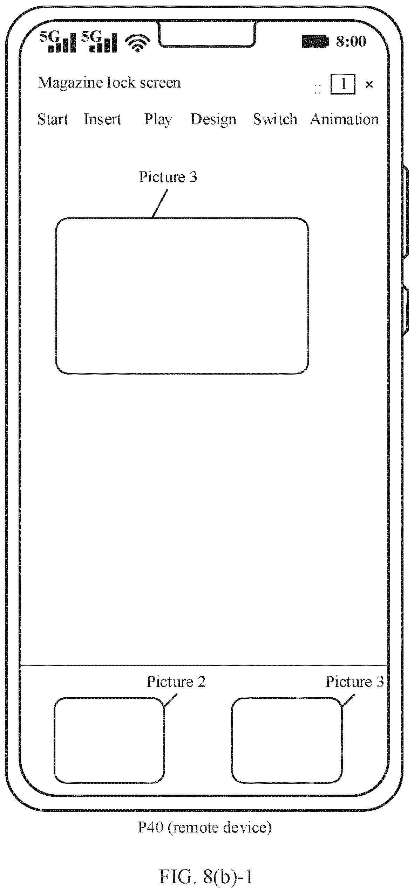

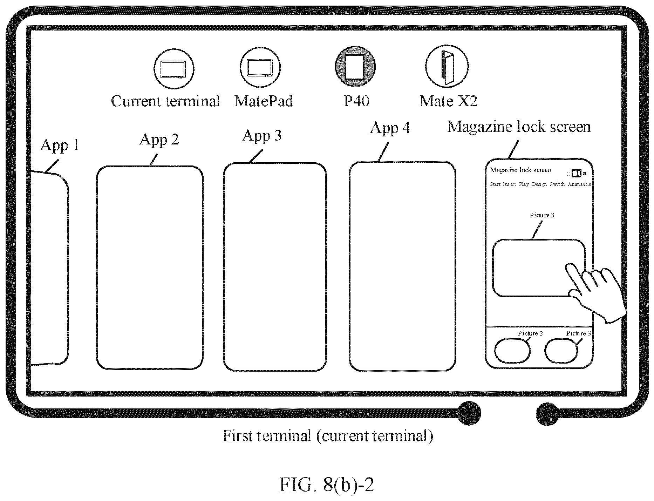

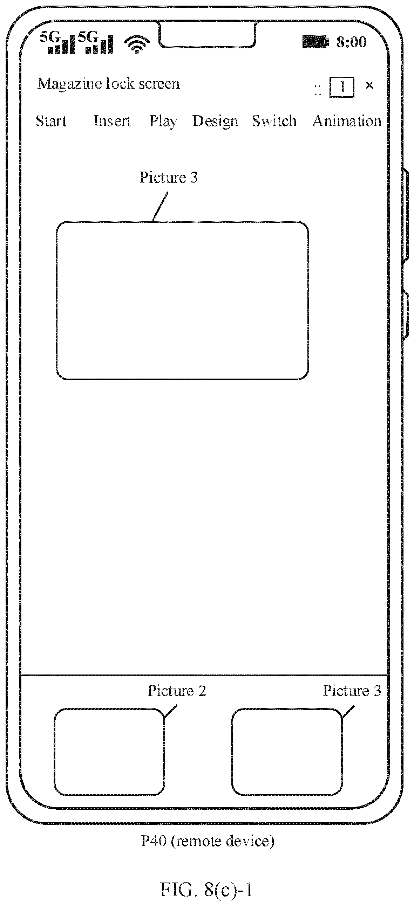

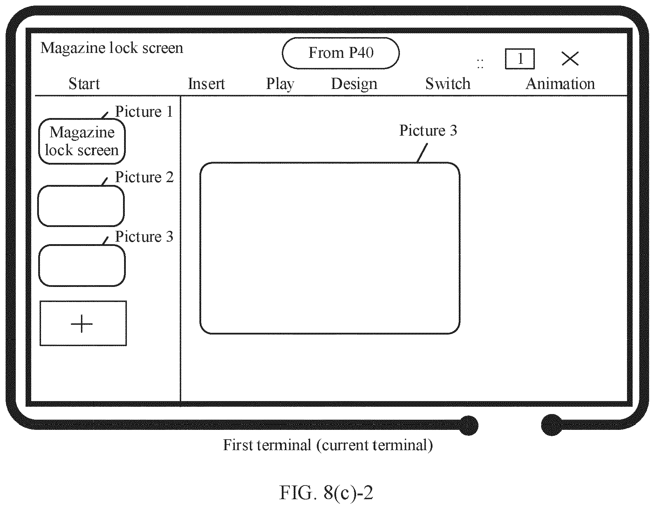

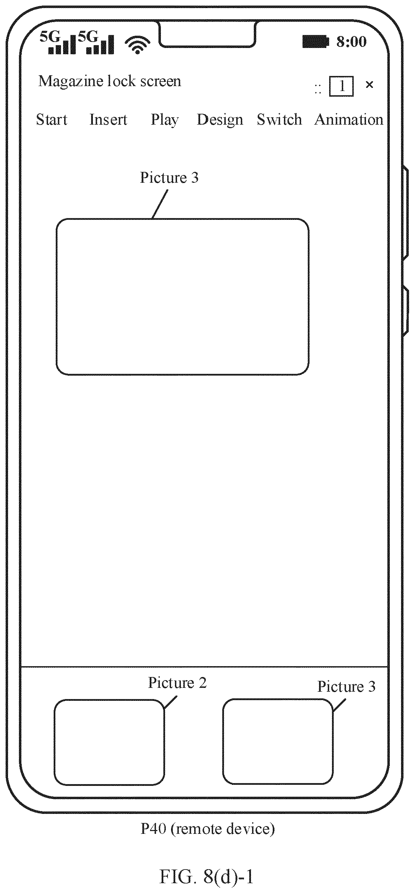

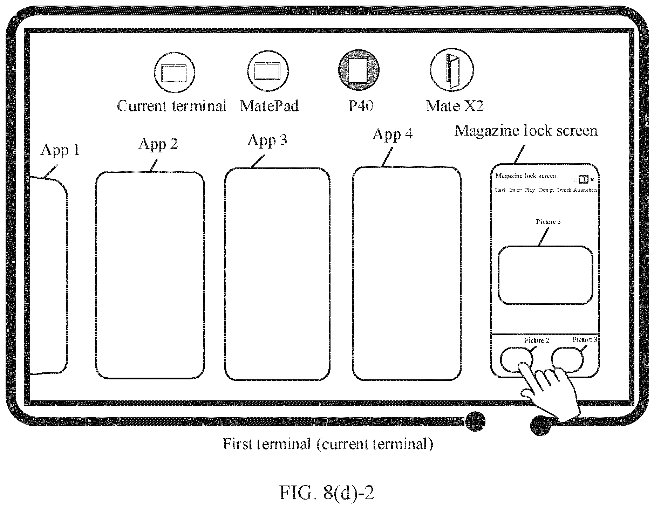

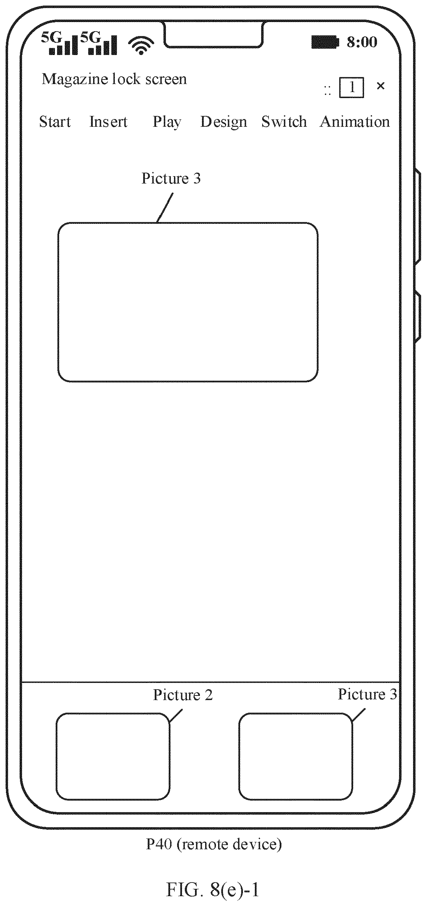

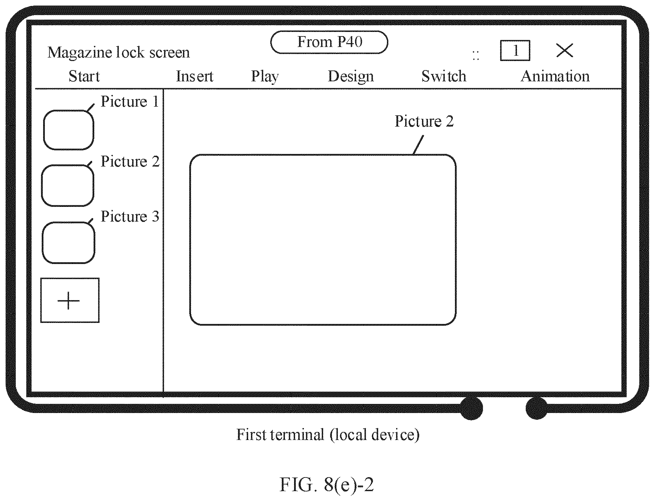

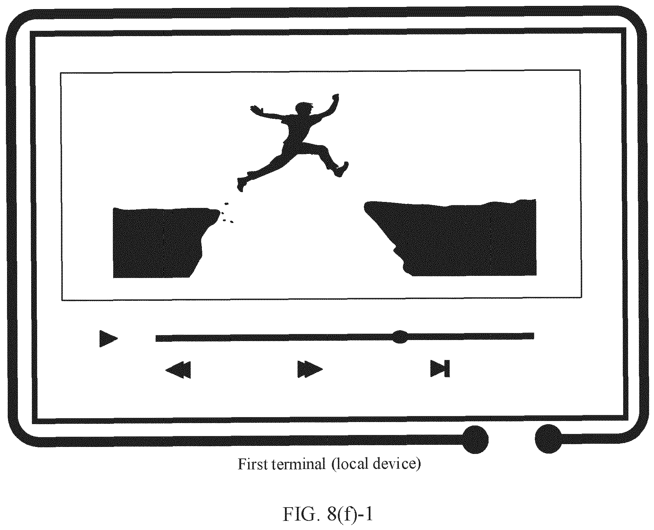

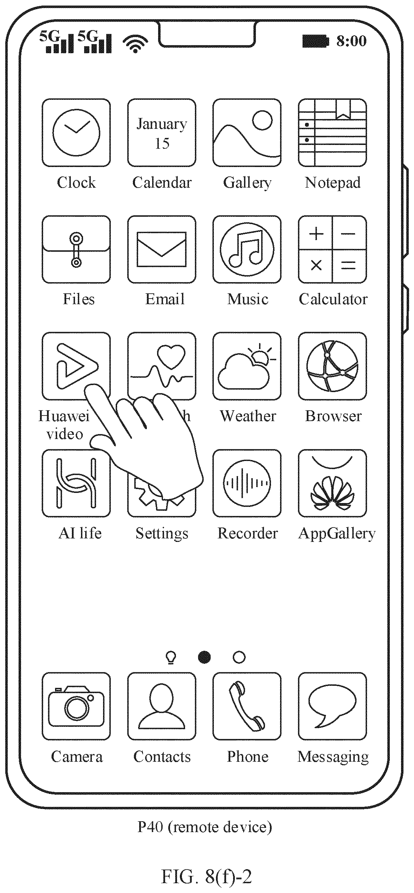

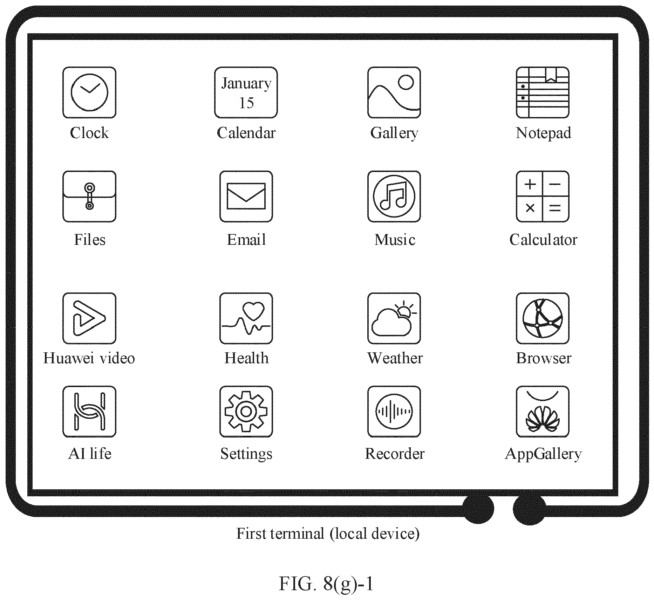

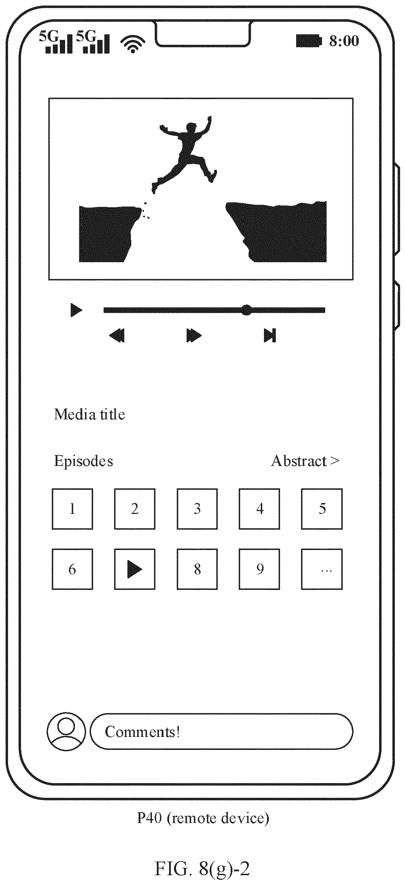

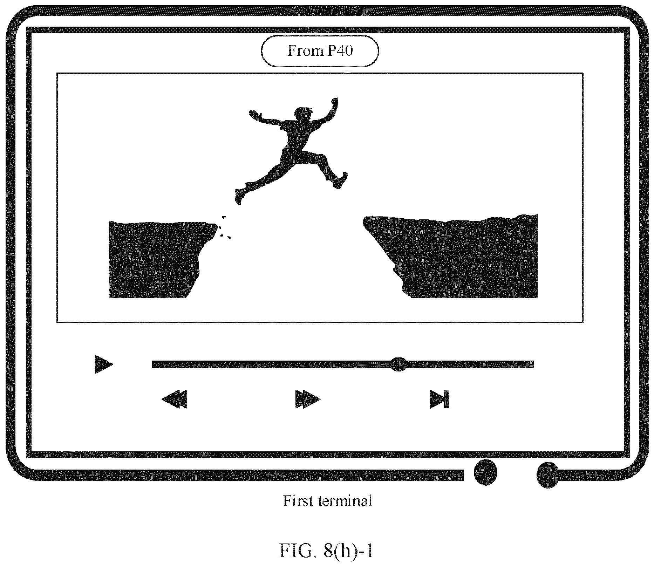

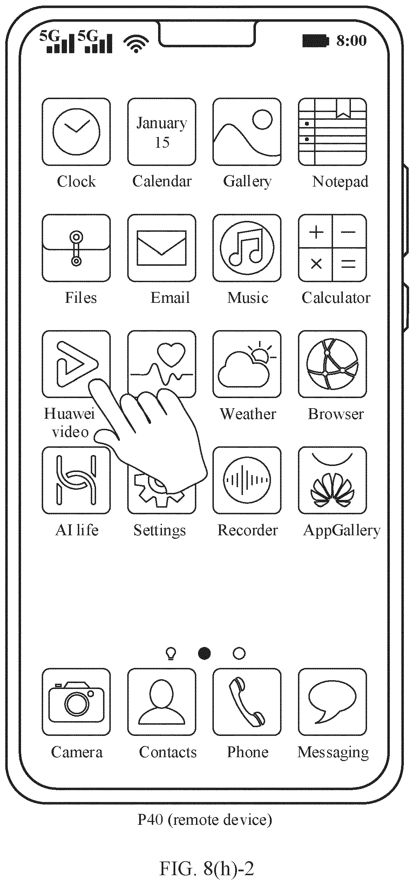

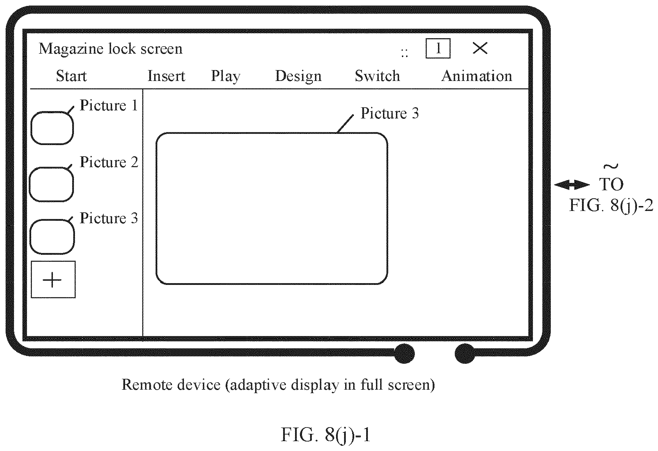

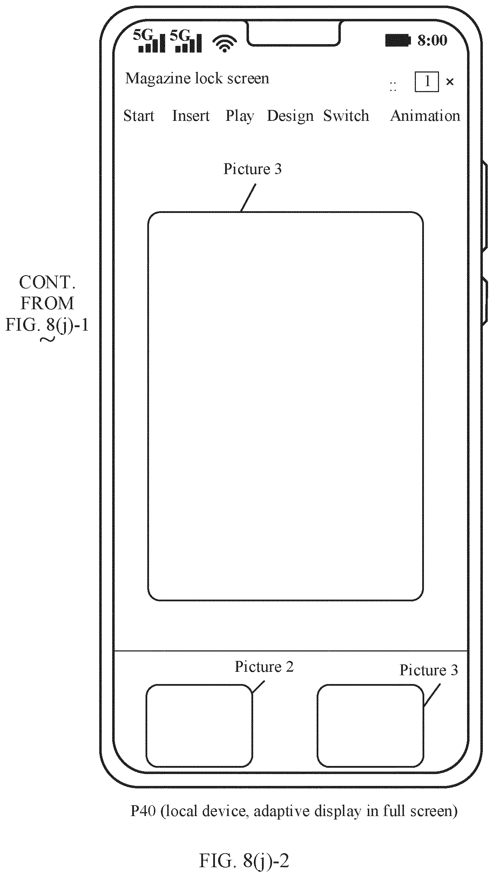

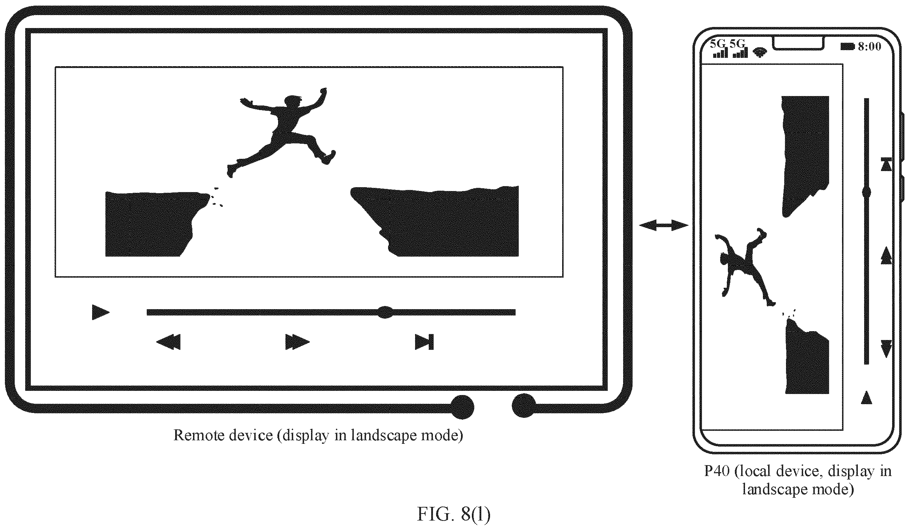

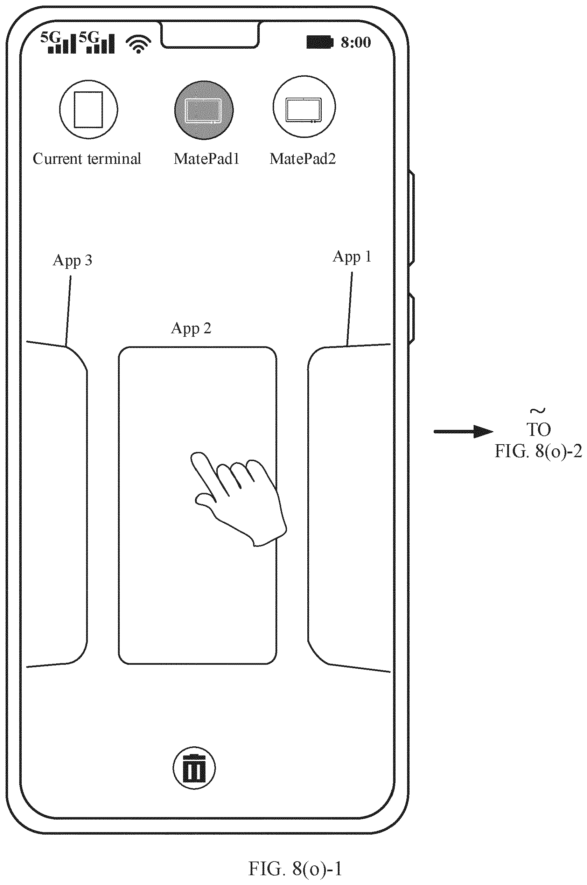

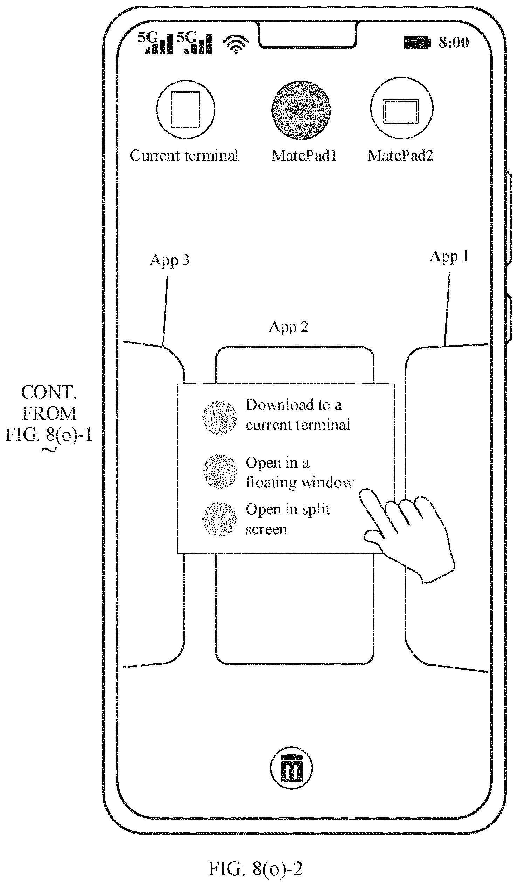

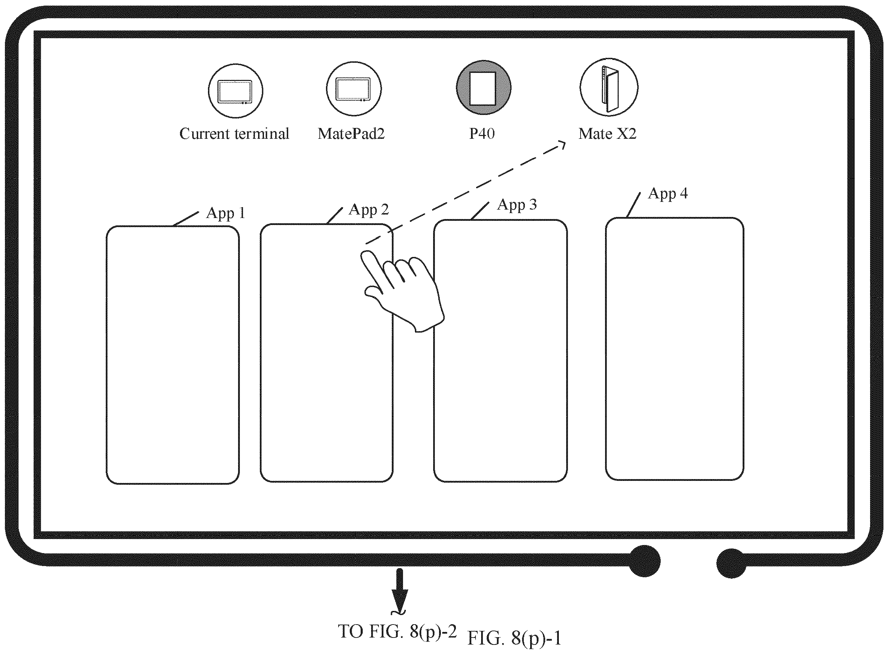

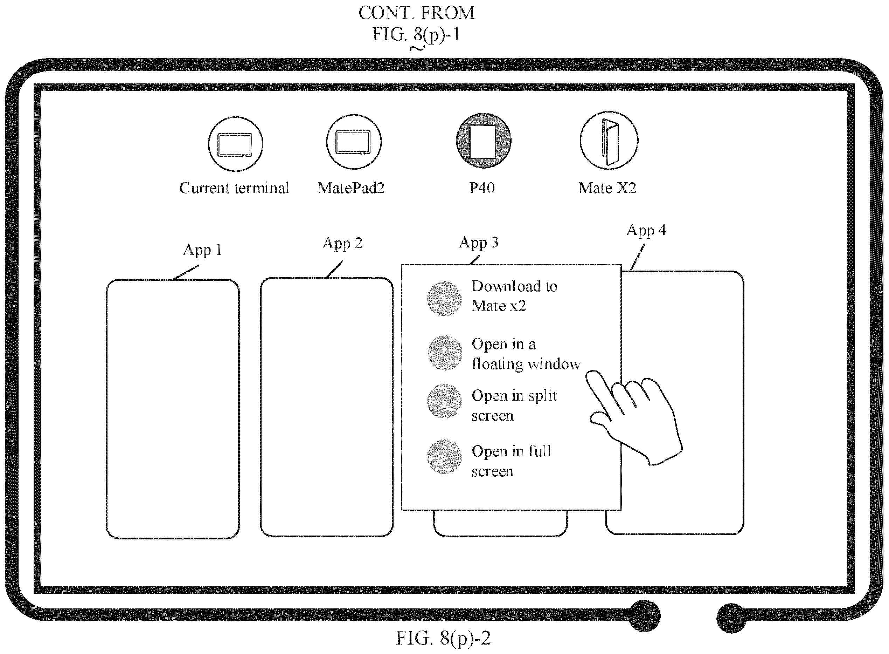

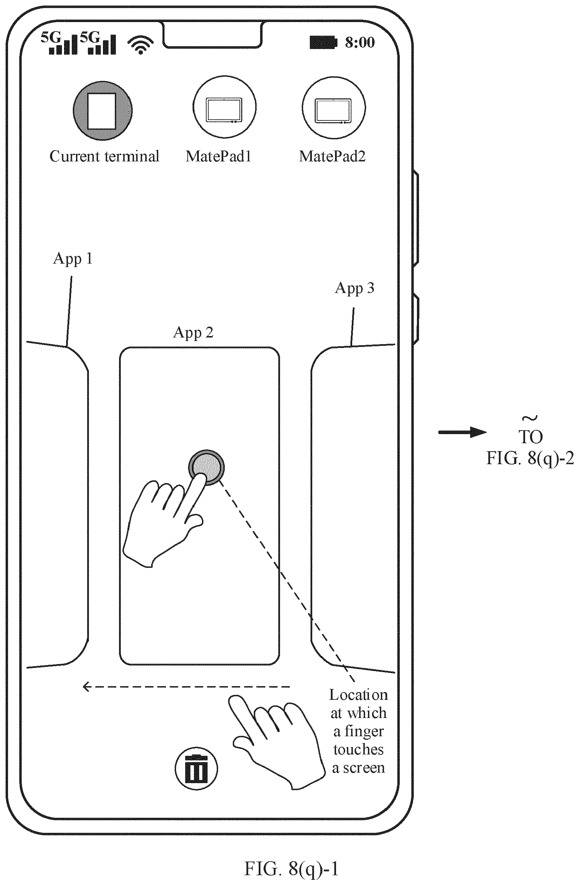

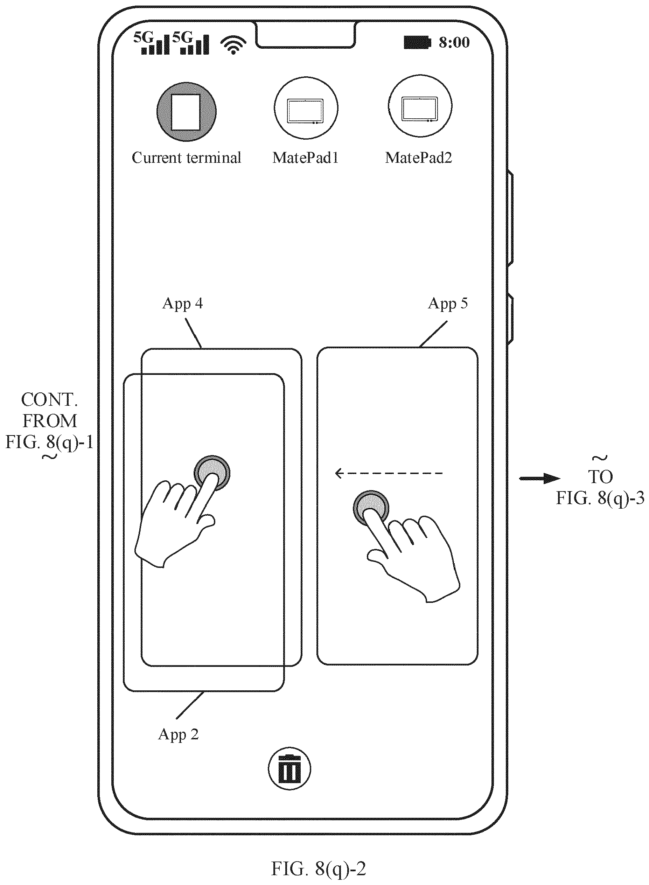

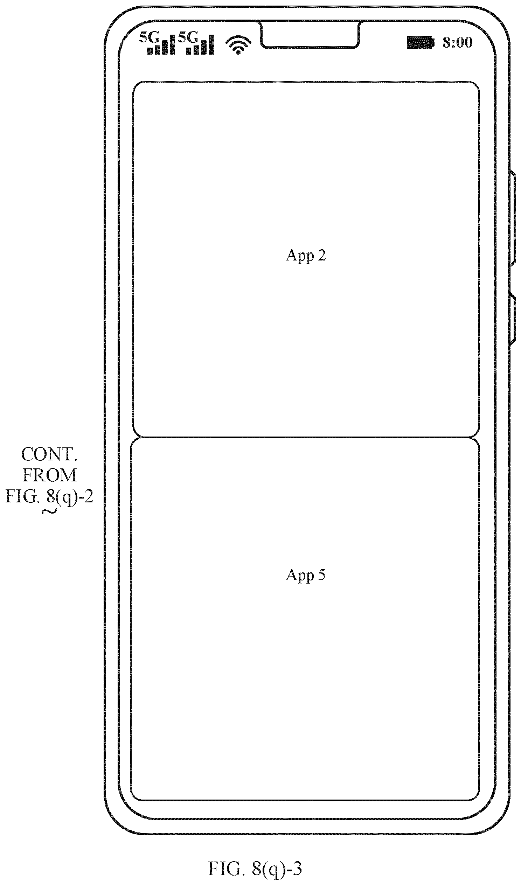

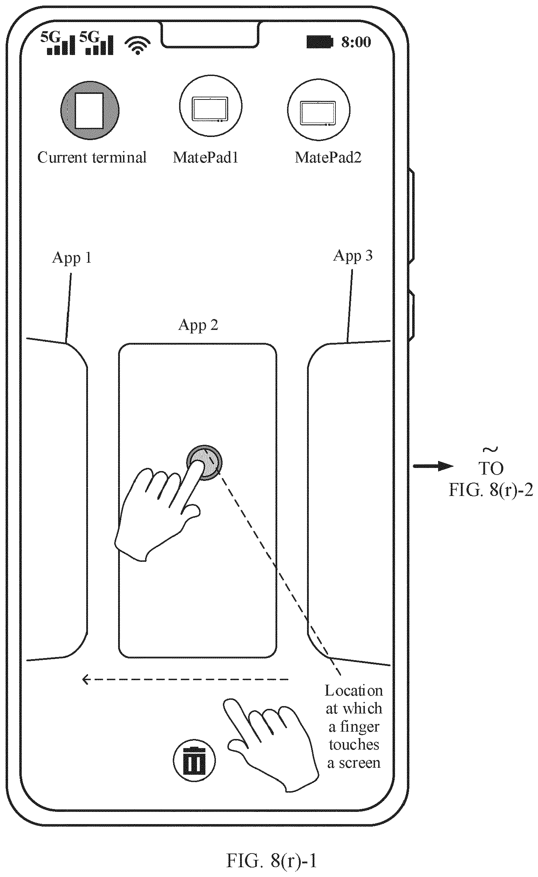

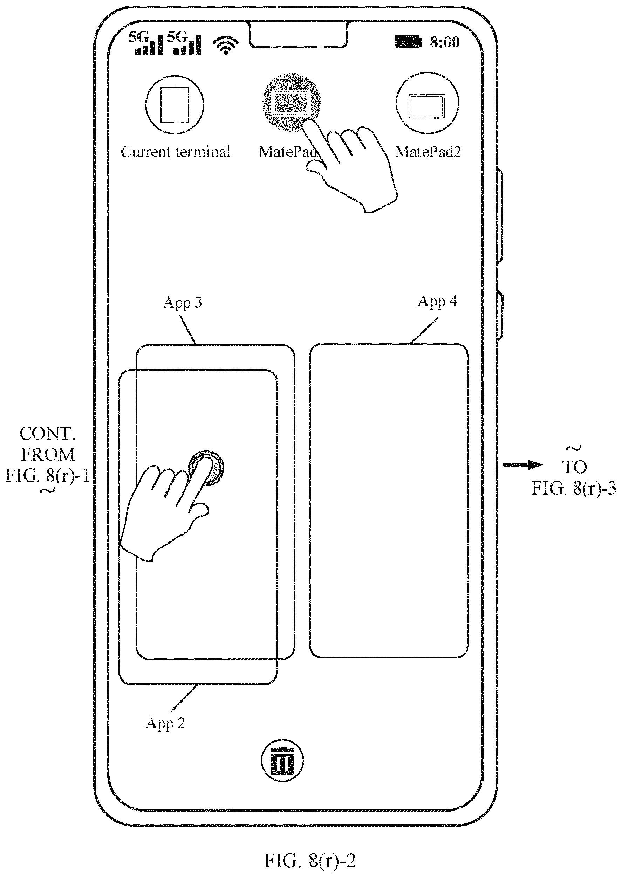

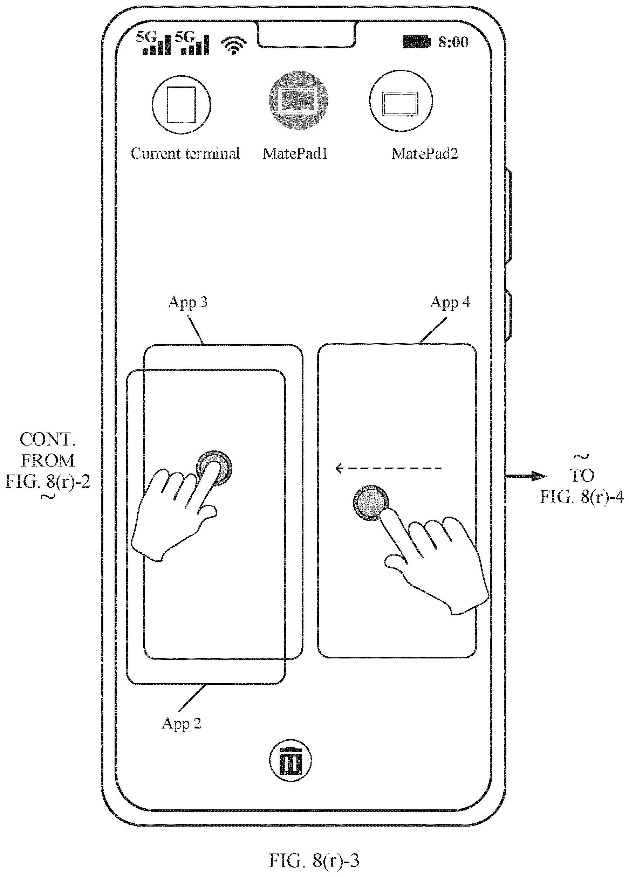

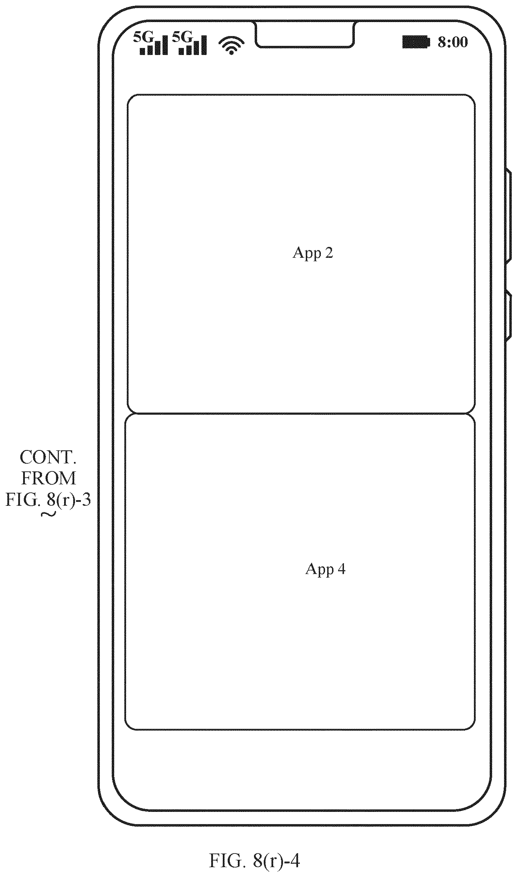

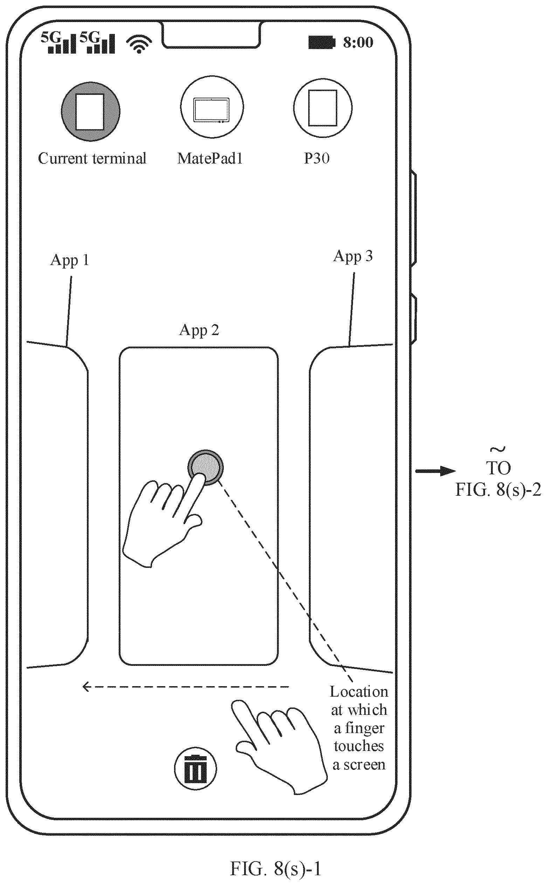

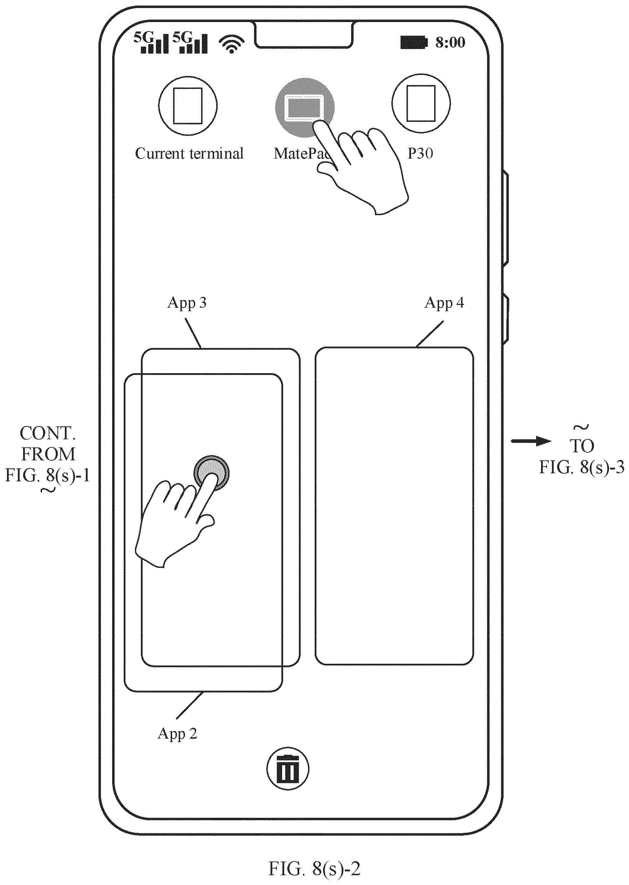

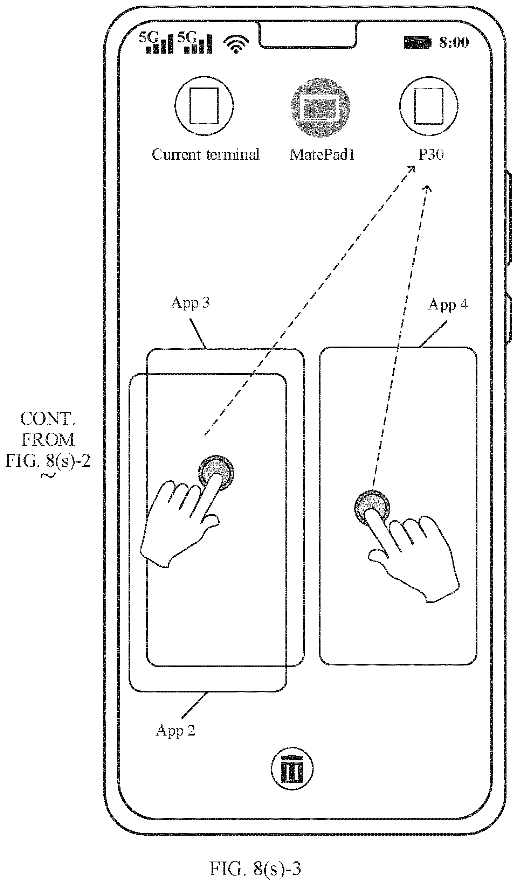

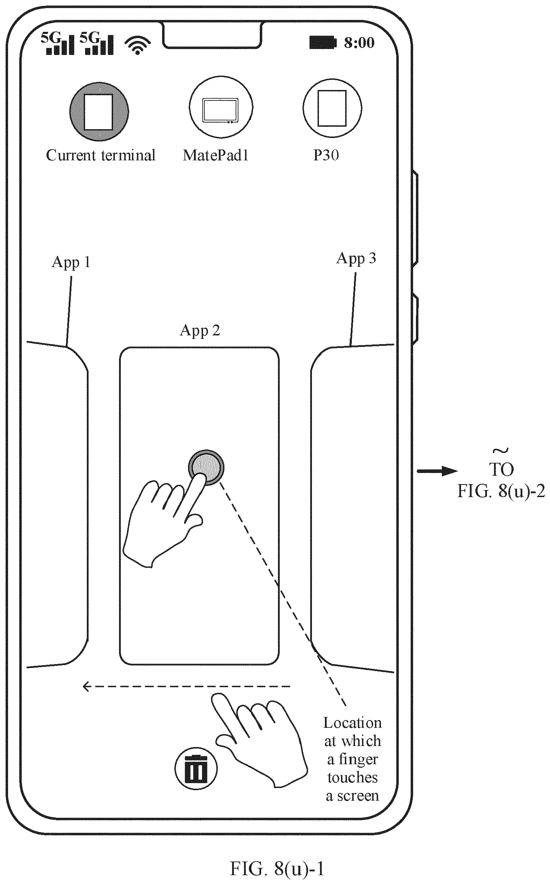

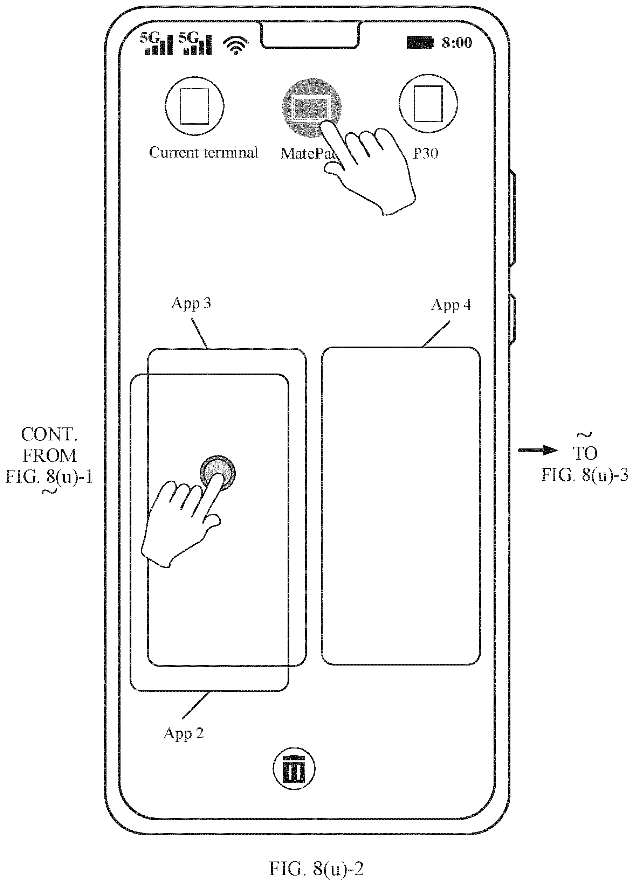

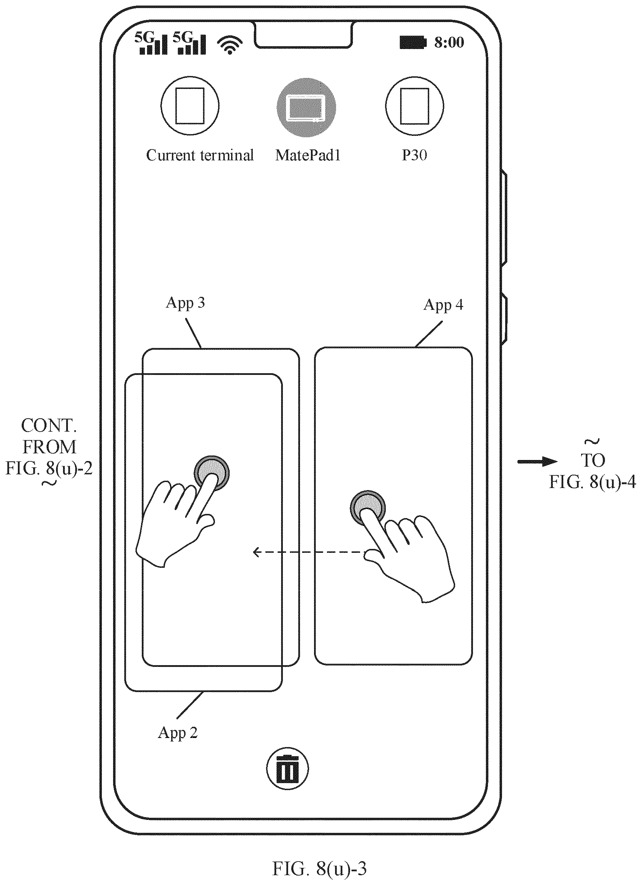

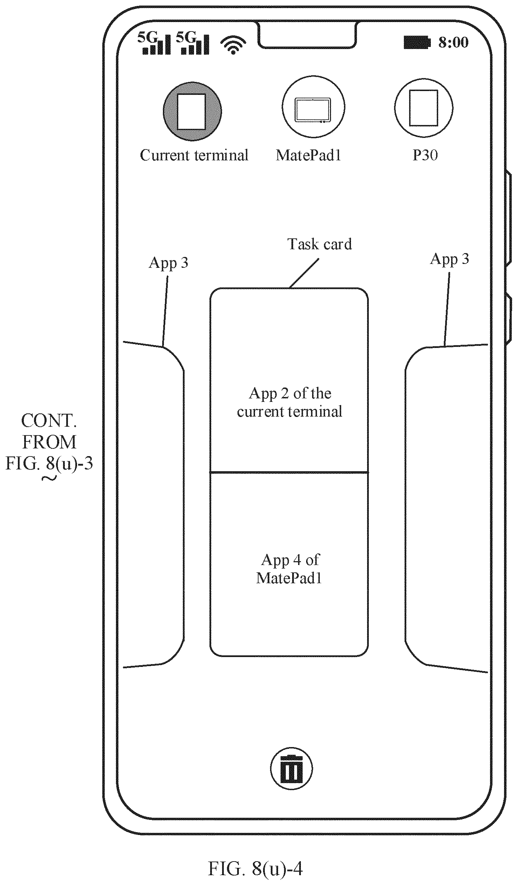

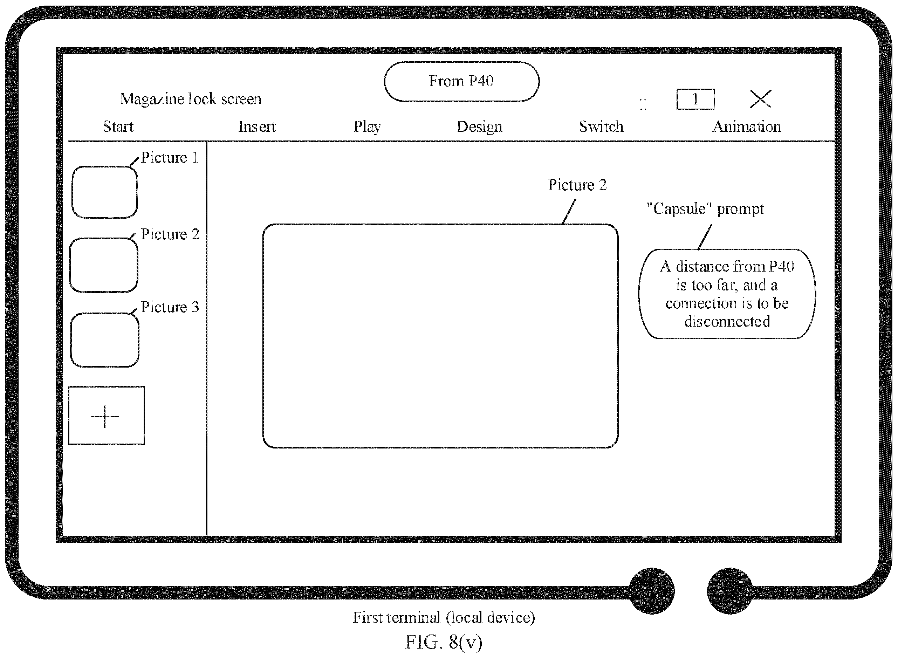

FIG. 8(v) to FIG. 8(w) are schematic diagrams of interfaces displayed after a connection between a source device and a target device is interrupted after a task is migrated according to this application;

FIG. 9(a)-1 and FIG. 9(a)-2 to FIG. 9(v) are schematic diagrams of interfaces in which a task card is operated in a recent task interface of a first terminal to migrate the task card according to this application;

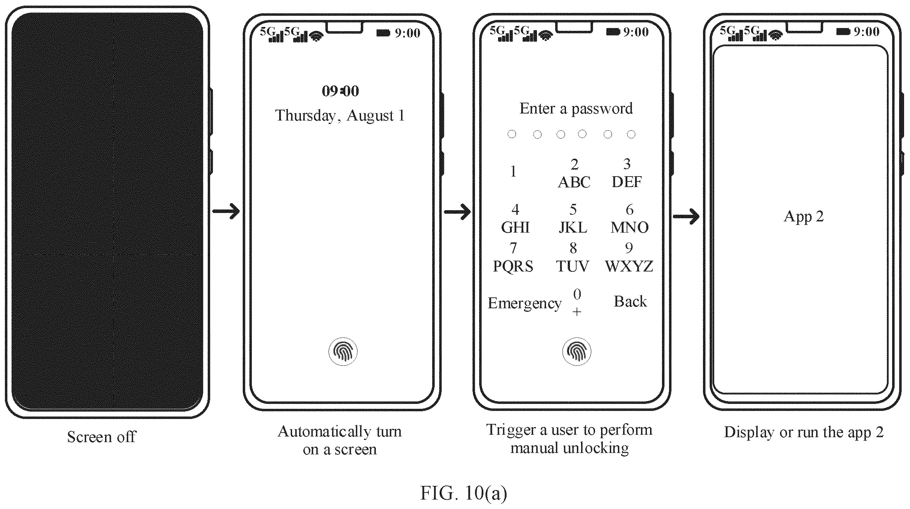

FIG. 10(a) to FIG. 10(c) are schematic diagrams of interfaces in which a target device changes from a screen-off state to display of an application after an application is migrated to the target device according to this application;

FIG. 11(a)-1 and FIG. 11(a)-2 to FIG. 11(k)-1 to FIG. 11(k)-4 are schematic diagrams of interfaces in which an application runs based on different allocation situations of a hardware capability used by the application after the application is migrated from a source device to a target device according to this application;

FIG. 12(a)-1 and FIG. 12(a)-2 are a schematic diagram of an interface in which a task card of a mobile phone is displayed in a recent task interface of an in-vehicle infotainment system according to this application;

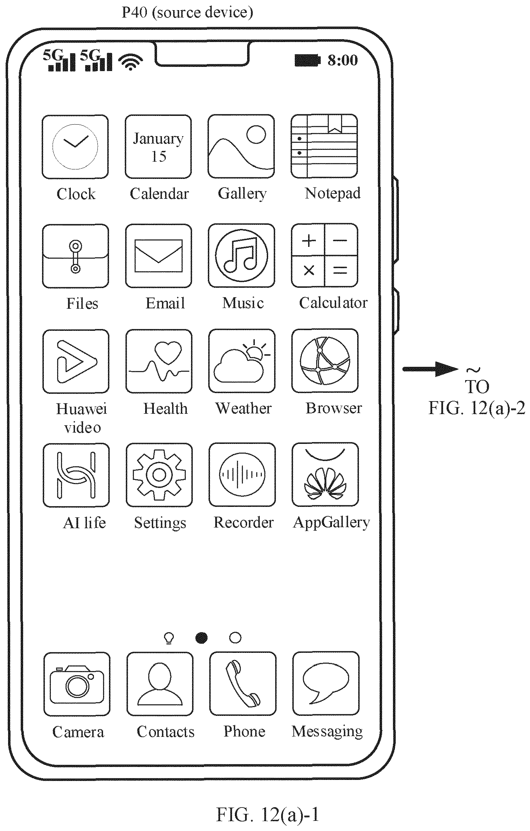

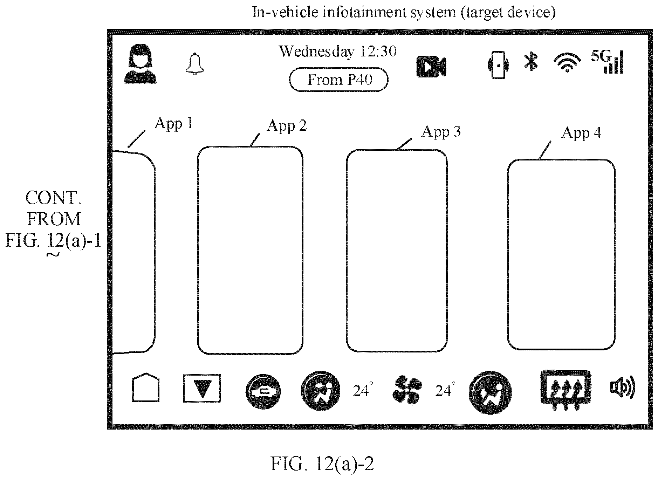

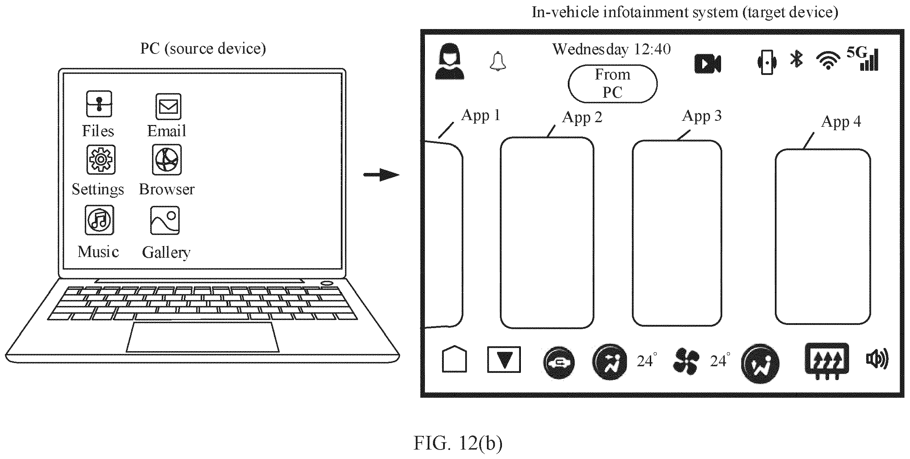

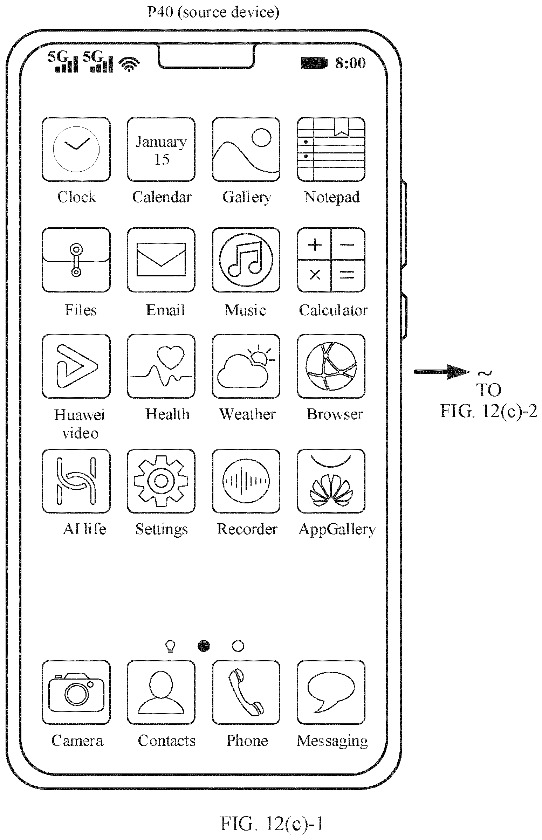

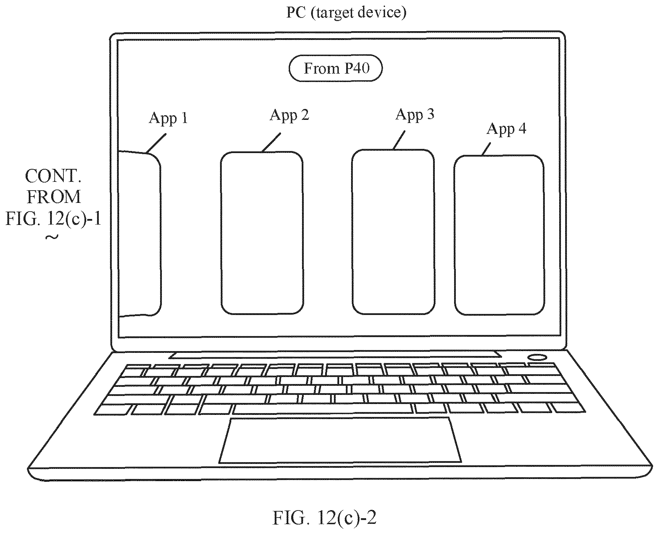

FIG. 12(b) is a schematic diagram of an interface in which a task card of a PC device is displayed in a recent task interface of an in-vehicle infotainment system according to this application;

FIG. 12(c)-1 and FIG. 12(c)-2 are a schematic diagram of an interface in which a task card of a mobile phone is displayed in a recent task interface of a PC device according to this application;

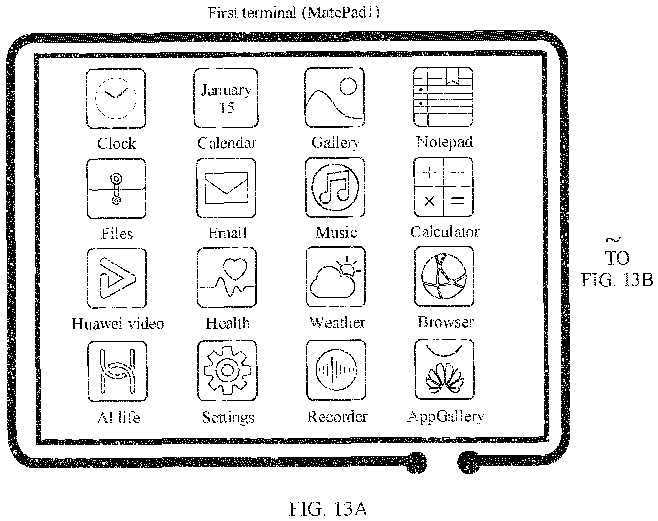

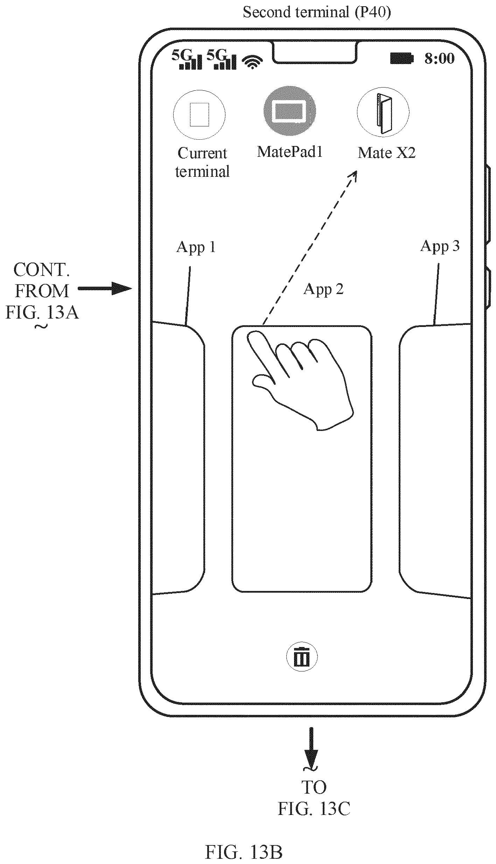

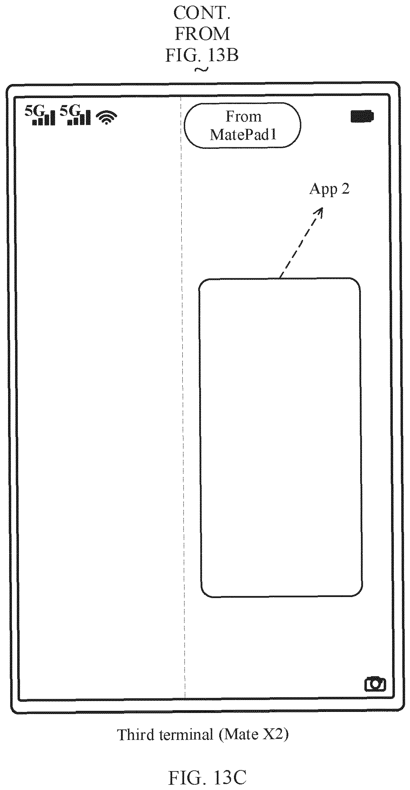

FIG. 13A to FIG. 13C are a schematic diagram of an interface in which a task card of a first terminal is migrated to a third terminal in a recent task interface of a second terminal according to this application;

FIG. 14(a)-1 to FIG. 14(a)-3 to FIG. 14(s) are schematic diagrams of interfaces in which a super home screen is displayed on different devices according to this application;

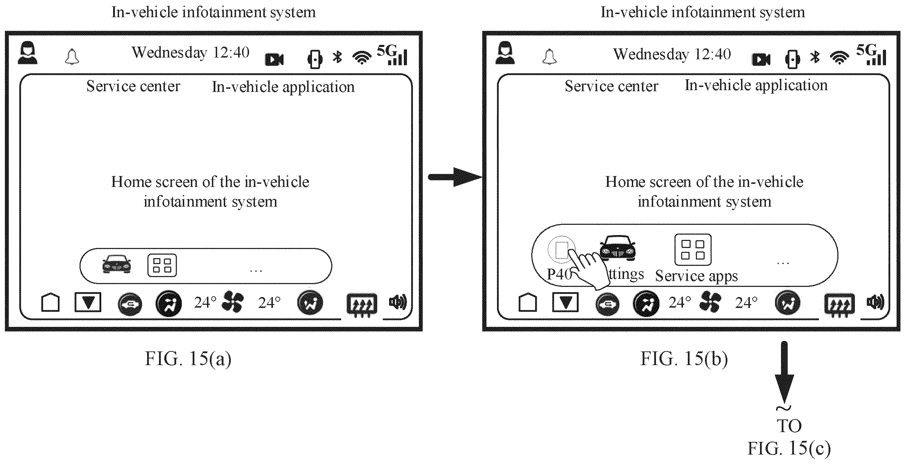

FIG. 15(a) to FIG. 15(g) are schematic diagrams of interfaces in which a super home screen entry and a super home screen layout are displayed on different devices according to this application;

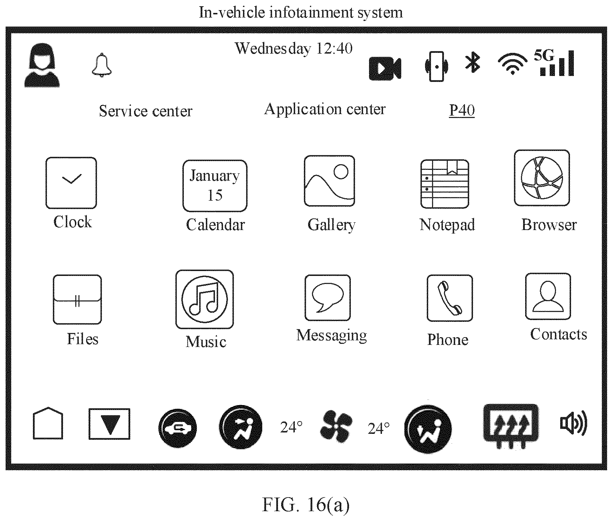

FIG. 16(a) to FIG. 16(h) are schematic diagrams of interfaces displayed by a terminal device in a process in which a terminal device temporarily sets up a super home screen according to this application;

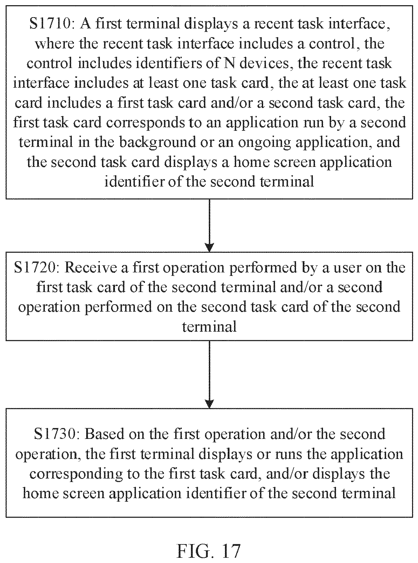

FIG. 17 is a schematic flowchart according to an embodiment of this application;

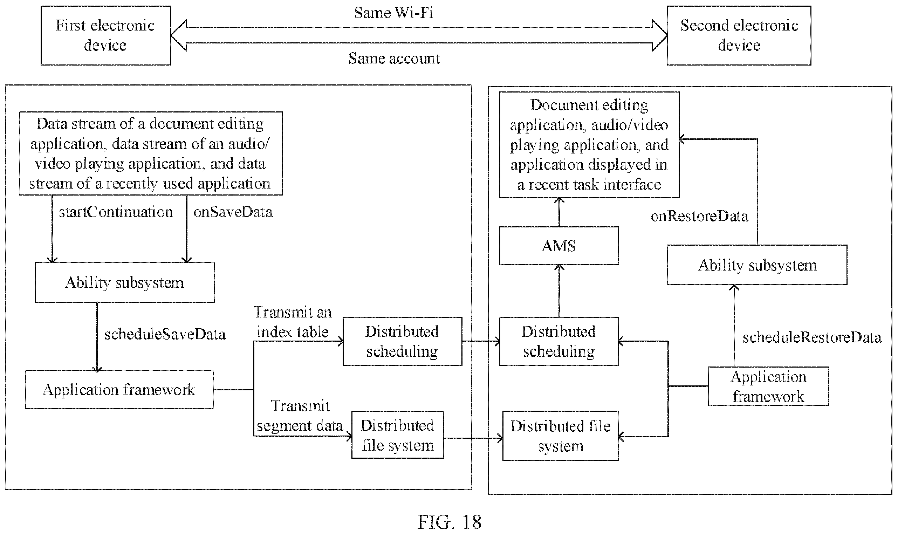

FIG. 18 is a schematic diagram of an internal system architecture in a process in which a first terminal migrates an application data stream to a second terminal according to this application;

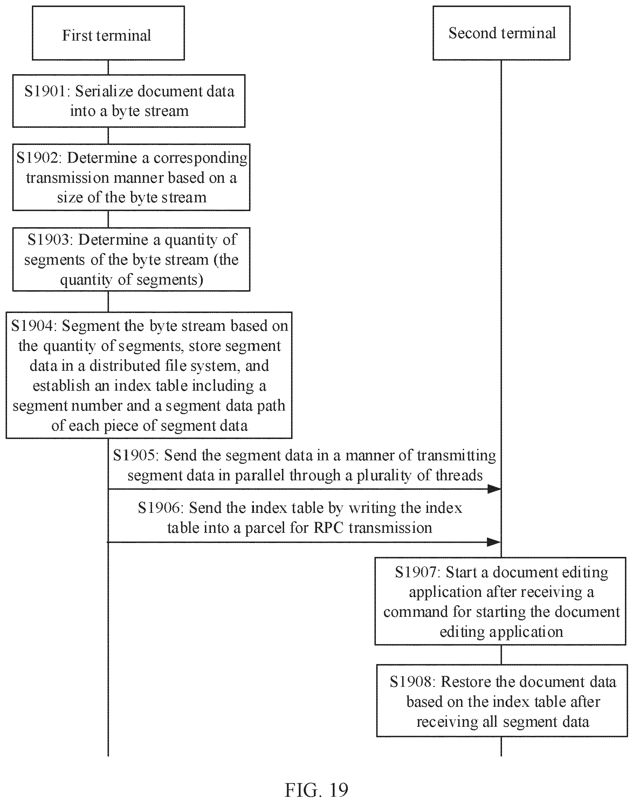

FIG. 19 is an example schematic flowchart according to this application;

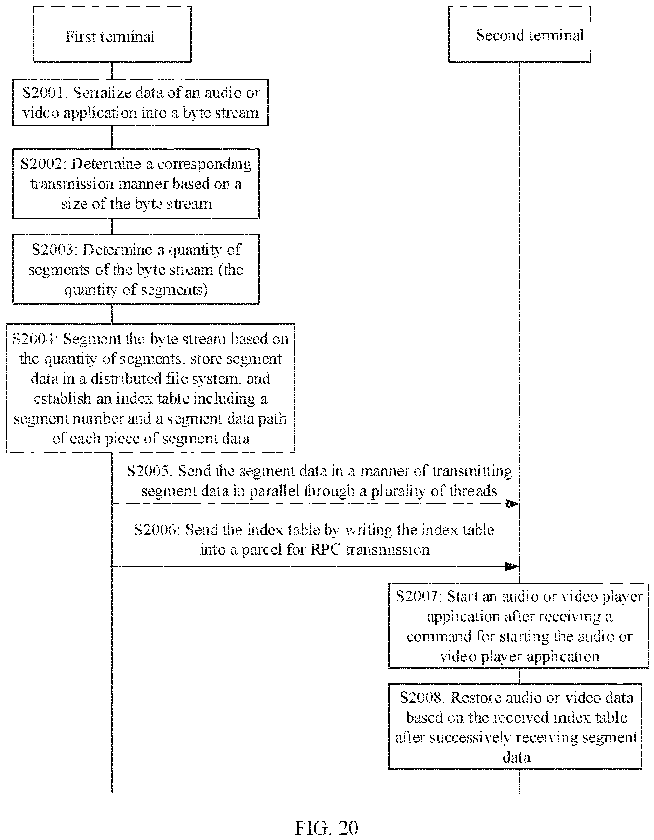

FIG. 20 is another example schematic flowchart according to this application;

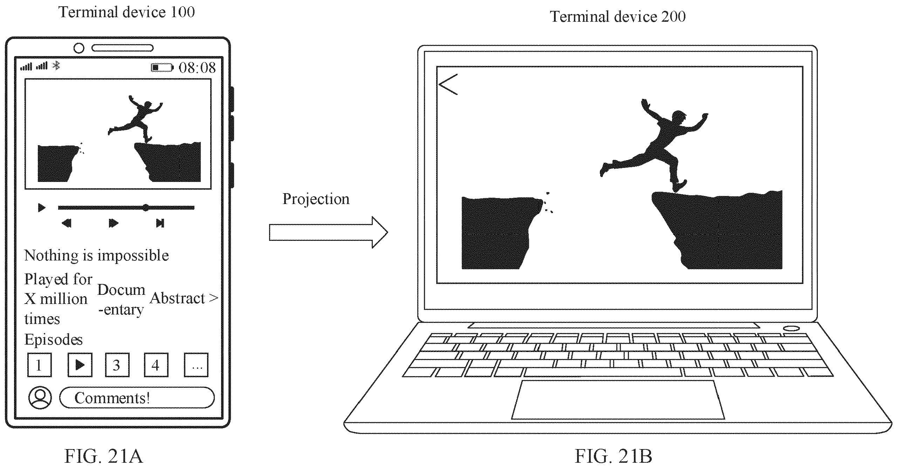

FIG. 21A and FIG. 21B are schematic diagrams of a common task migration scenario according to an embodiment of this application;

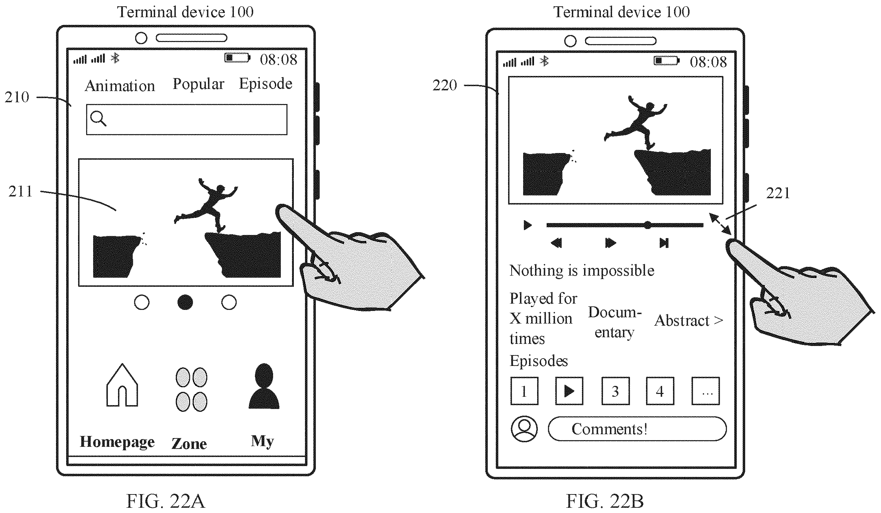

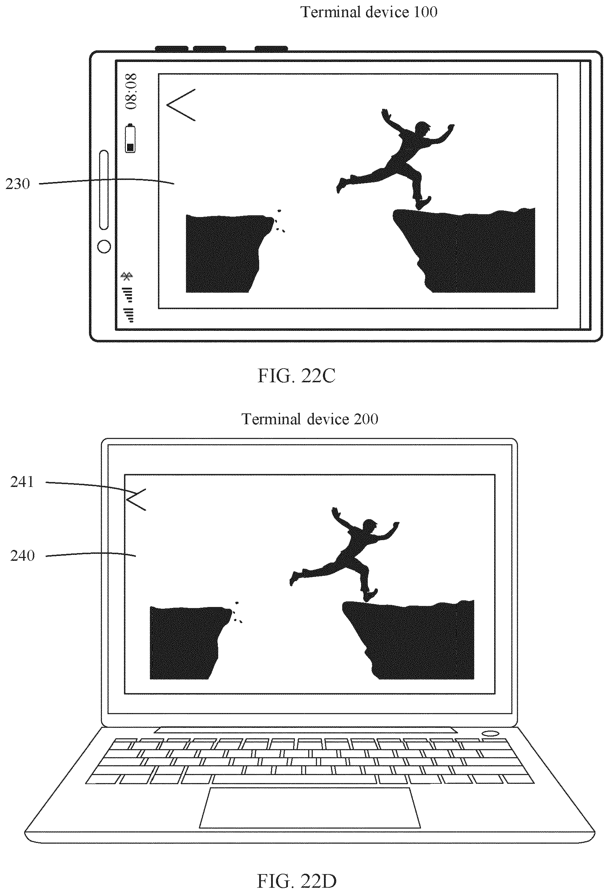

FIG. 22A to FIG. 22E are schematic diagrams of another common task migration scenario according to an embodiment of this application;

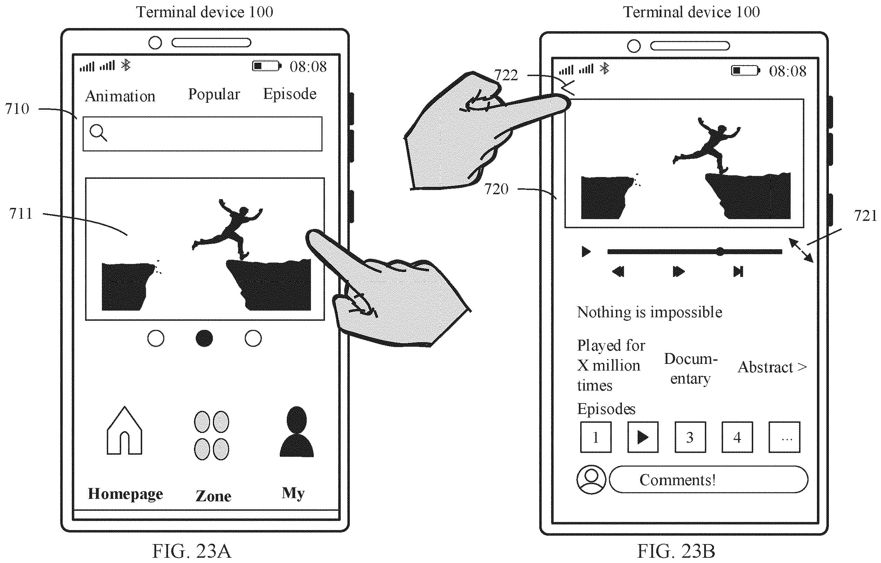

FIG. 23A to FIG. 23G are schematic diagrams of a group of user interfaces in which a task migration is performed between different terminal devices according to an embodiment of this application;

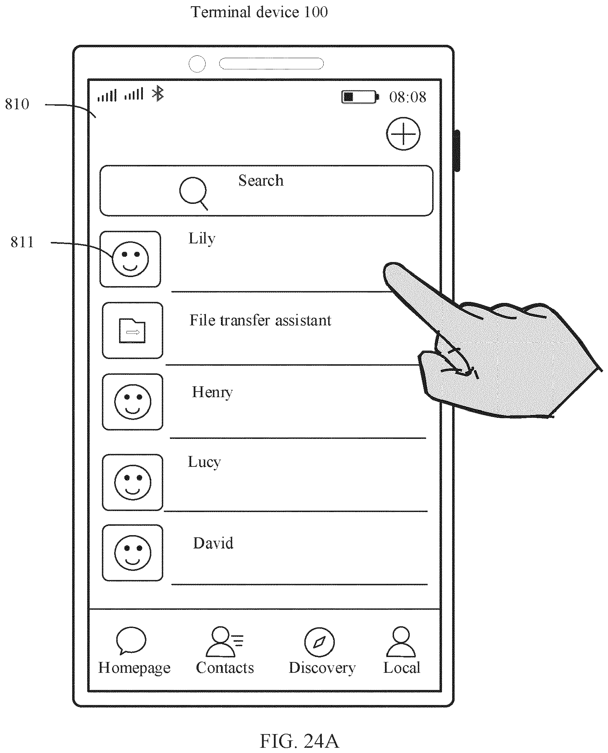

FIG. 24A to FIG. 24G are schematic diagrams of another group of user interfaces in which a task migration is performed between different terminal devices according to an embodiment of this application;

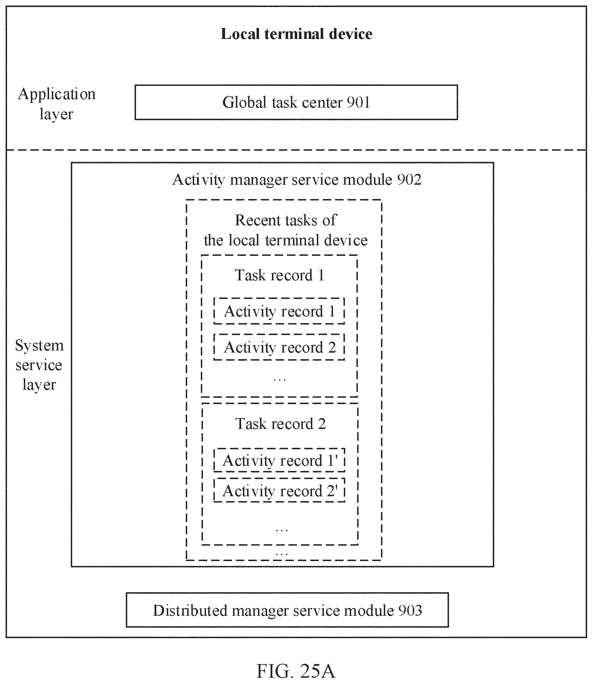

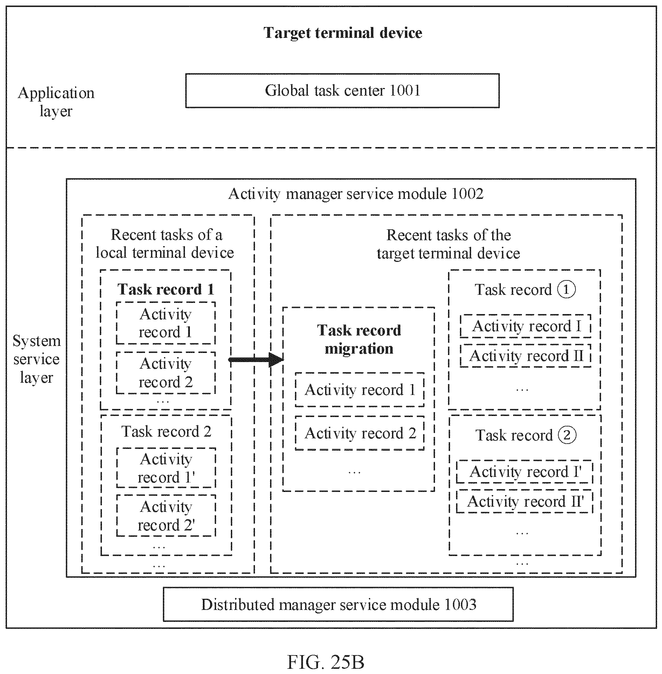

FIG. 25A and FIG. 25B are schematic diagrams of a principle of performing a task migration between different terminal devices according to an embodiment of this application;

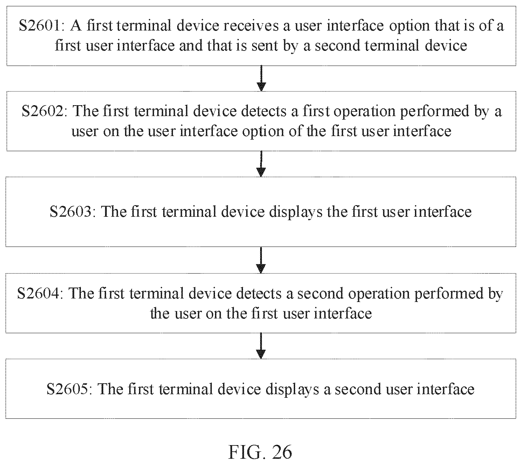

FIG. 26 is an example schematic flowchart according to an embodiment of this application;

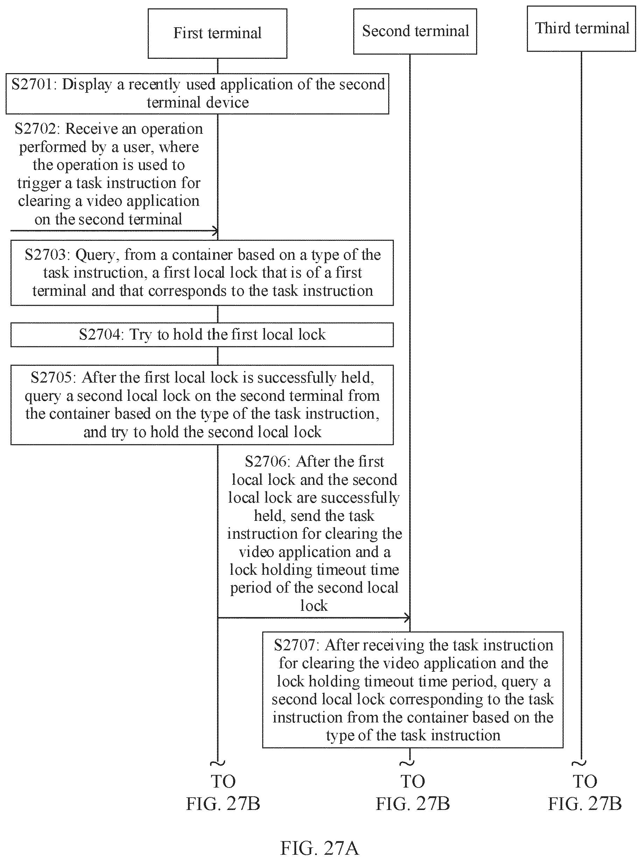

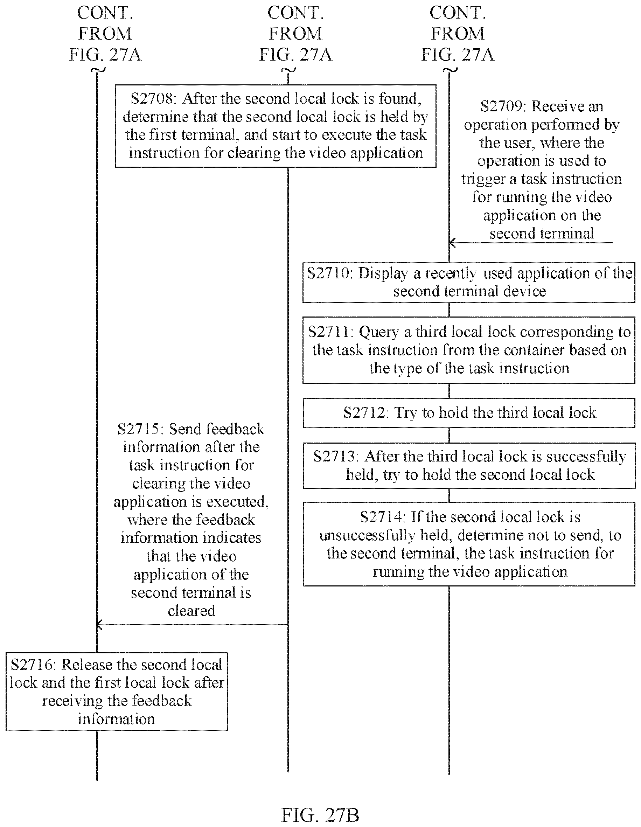

FIG. 27A and FIG. 27B are an example schematic flowchart according to this application;

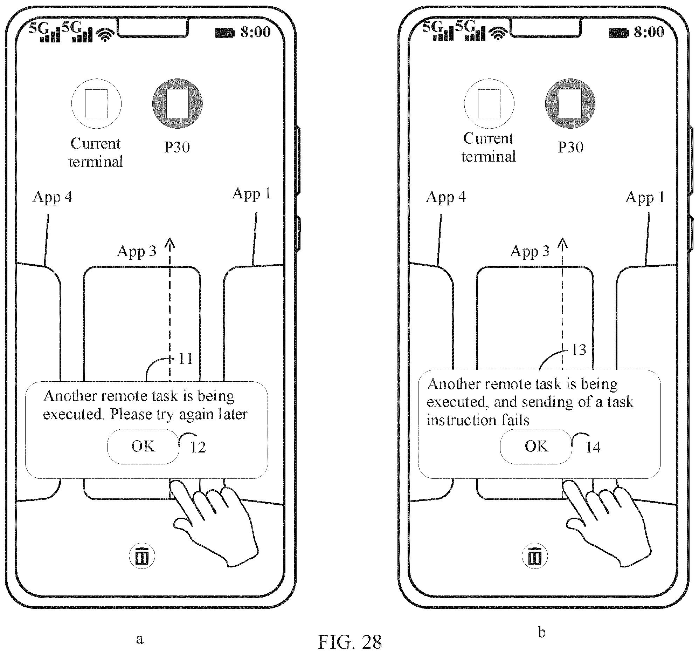

FIG. 28 is a schematic diagram of an example interface in which a terminal prompts a user with a case in which sending or execution of a cross-device task instruction fails according to this application;

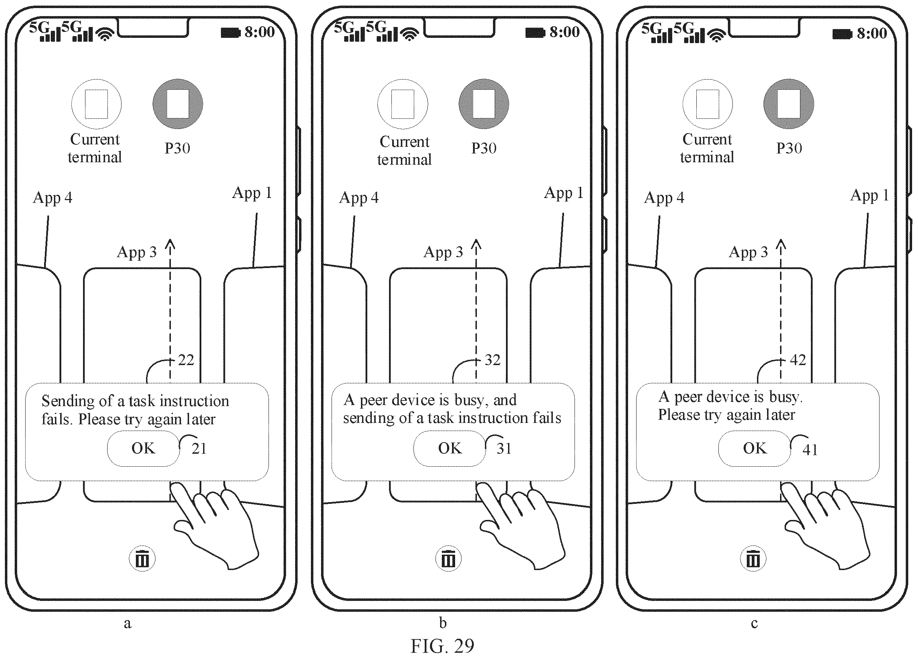

FIG. 29 is a schematic diagram of another example interface in which a terminal prompts a user with a case in which sending or execution of a cross-device task instruction fails according to this application;

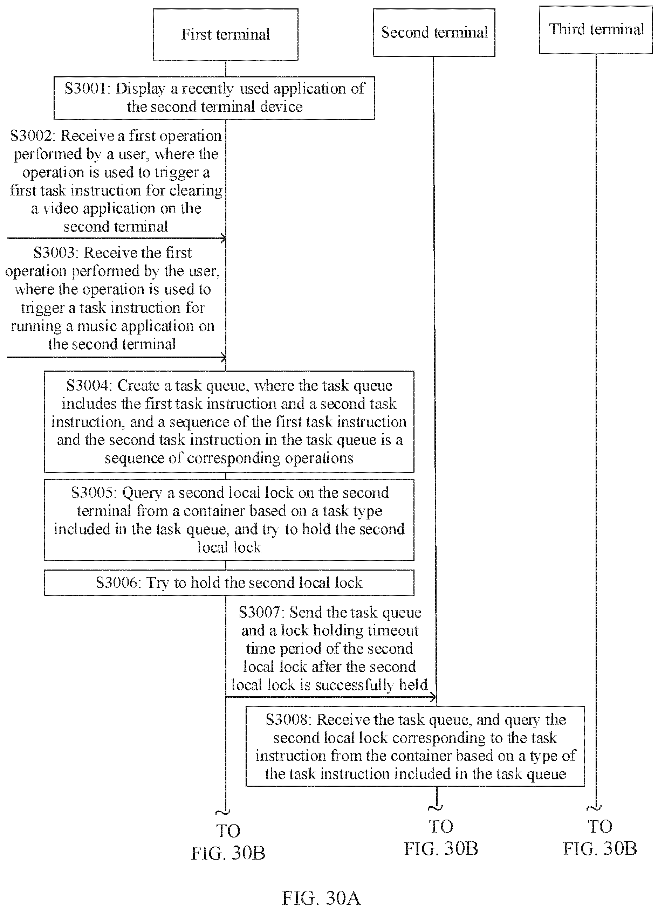

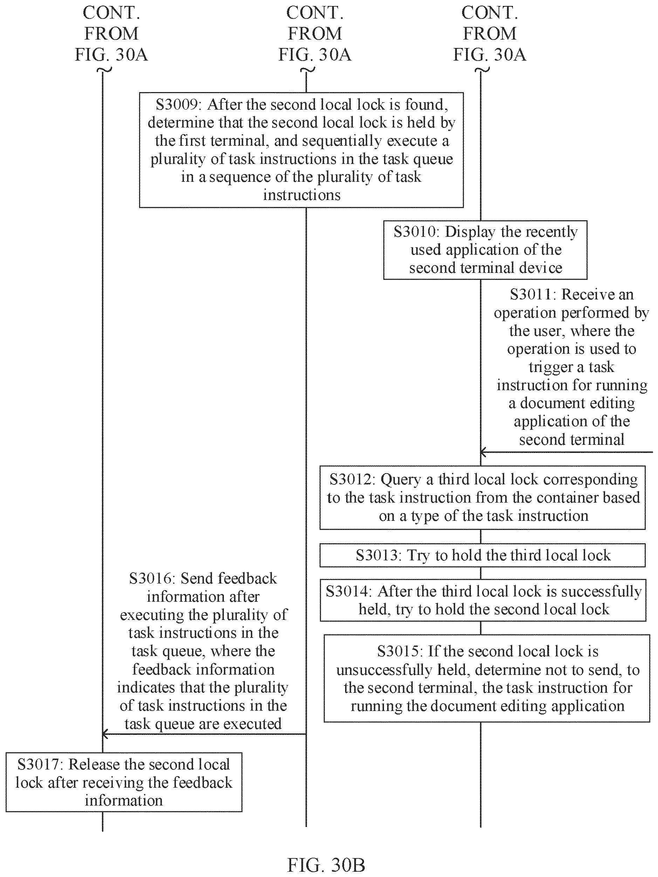

FIG. 30A and FIG. 30B are another example schematic flowchart according to this application;

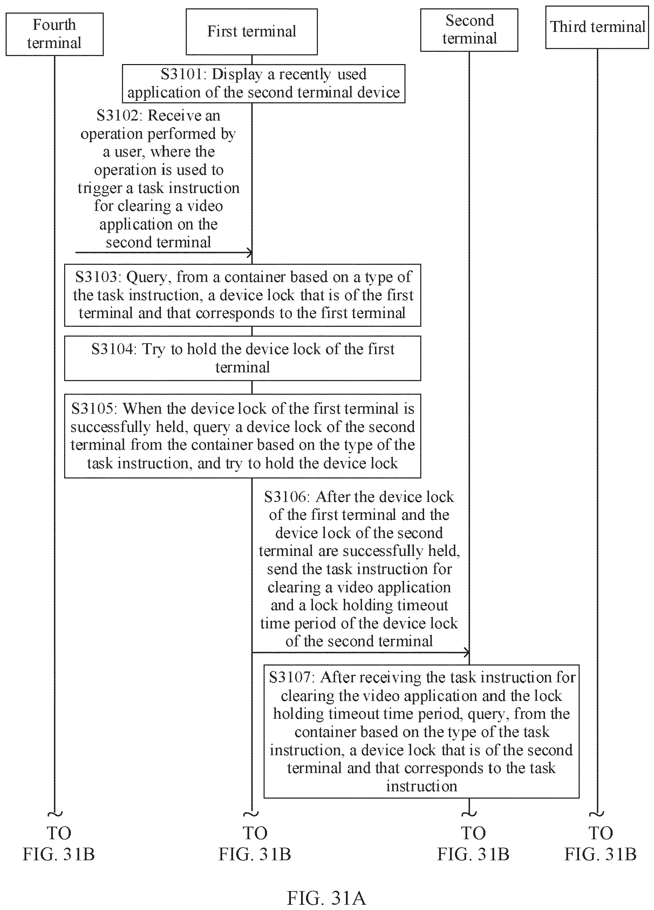

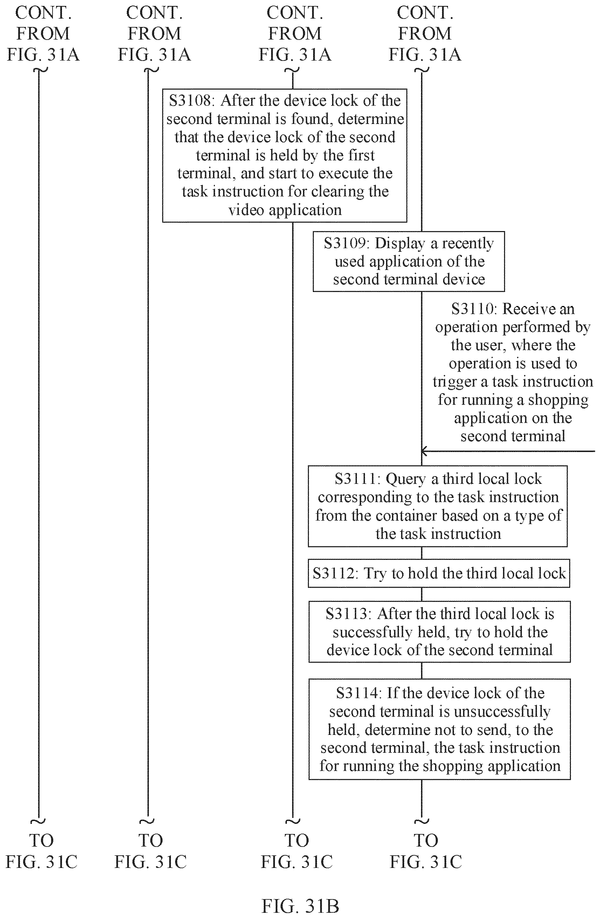

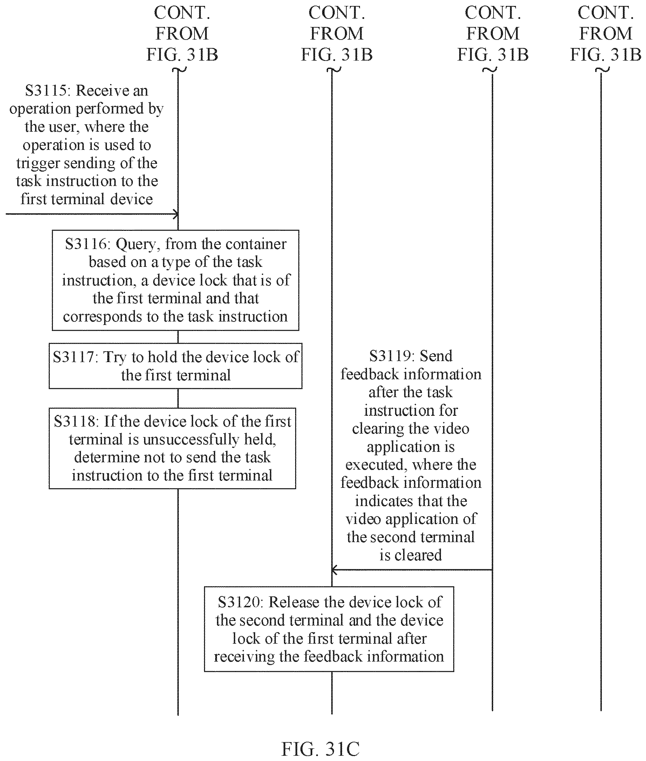

FIG. 31A to FIG. 31C are still another example schematic flowchart according to this application;

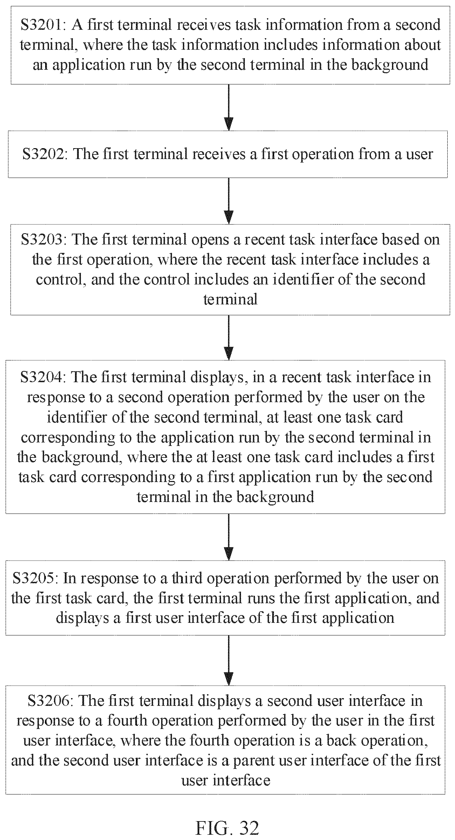

FIG. 32 is still another example schematic flowchart according to this application;

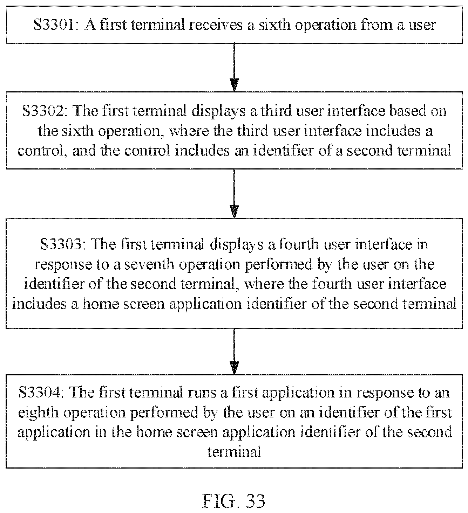

FIG. 33 is still another example schematic flowchart according to this application;

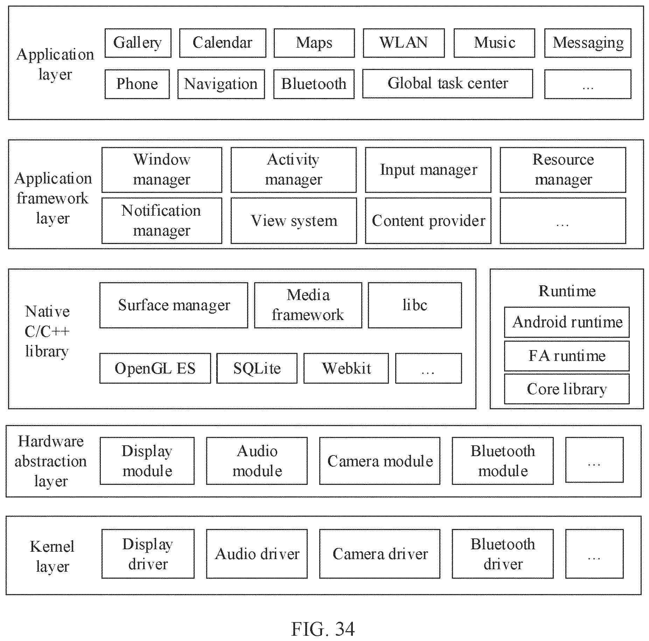

FIG. 34 is a block diagram of a software structure of a terminal according to this application;

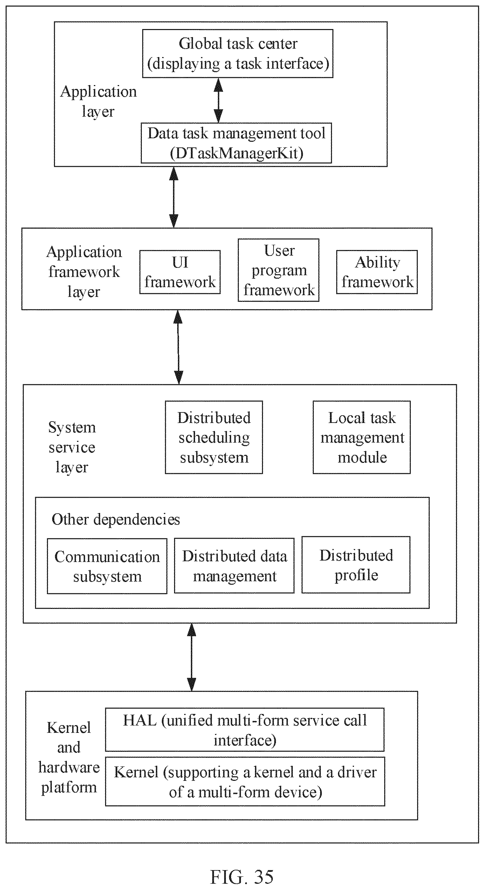

FIG. 35 is a block diagram of a software structure of another terminal according to this application;

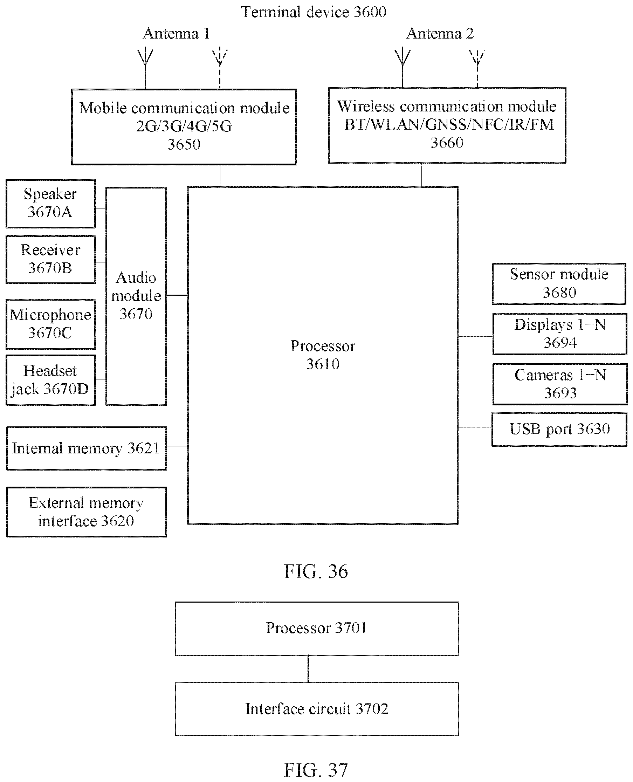

FIG. 36 is a schematic diagram of an example hardware structure of a terminal according to this application; and

FIG. 37 is a schematic diagram of a chip system according to this application.

## DESCRIPTION OF EMBODIMENTS

Currently, a user has more types of intelligent terminals. Therefore, many new user requirements are generated.

For example, when the user plays a video or edits a document on a mobile phone, because the mobile phone has small screen and is inconvenient to use, it may be more convenient to play a video or edit a document on a large-screen device. Therefore, a played video or an edited document on the mobile phone needs to be seamlessly migrated to another large-screen device.

For another example, a plurality of tasks are performed in parallel. For example, the user frequently shops and chats on a mobile phone simultaneously, or watches a video and chats simultaneously. In a scenario in which a plurality of tasks are performed in parallel on the mobile phone, a picture may be blocked due to the plurality of tasks. Therefore, different tasks may be respectively run in parallel on a plurality of devices used by the user, to keep the plurality of tasks to be executed continuously in parallel, and avoid a case in which a picture is blocked due to the plurality of tasks.

For still another example, sometimes a device used by the user needs to be charged, but the user wants to continue, on the device, a task whose processing is not completed. In this case, the task on the device may be continued on another device, so that the user can continue the task whose processing is not completed on the device.

In each of the foregoing scenarios, a migration (or continuation) of an application or a task to an unused device is performed.

In view of this, this application provides a task migration system and method. A task card corresponding to an ongoing or previously run application of another terminal may be displayed on a terminal used by a user, so that the user can view and manage a historical task of another device on a device. This may be applied to almost all applications, without requiring an application to be adapted. When a task card of another device is displayed, task cards of different devices may be laid out in a plurality of different manners. The user can simply perform an operation on the task card, to migrate or continue an application, and meet a requirement of the user for managing and controlling a multi-device task. In addition, a procedure of continuing an application is further simplified, an operation of the user is simplified, and user experience is improved.

The following specifically describes a remote device task display and control method provided in this application.

It should be noted that, in embodiments of this application, "terminal device", "electronic device", and "terminal" all represent a same meaning, and descriptions thereof may be changed.

An Android (Android) system is used as an example. The system provides a systemlevel interface, to display a recently accessed task list. A user may perform an operation of clearing a recently run application or clearing all recently run applications. In this method, a local application (APP) of a terminal can be cleared. In a distributed scenario, a recently used application of another terminal needs to be further displayed and cleared.

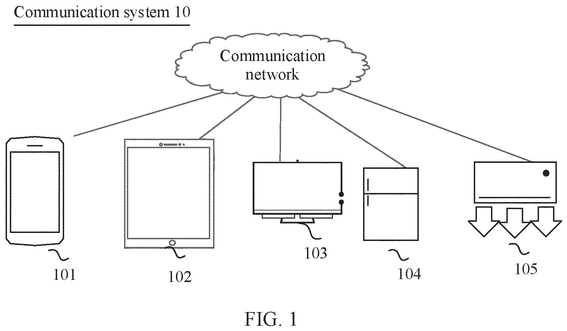

In some example embodiments, FIG. 1 is a schematic diagram of a communication system applicable to embodiments of this application according to this application.

For example, as shown in FIG. 1, a communication system 10 may include various terminal devices (in this application, the terminal device may also be referred to as an electronic device) such as a mobile phone 101, a tablet computer 102, and a large-screen device 103. Optionally, the communication system 10 may further include a smart home device such as a smart refrigerator 104 or a smart air conditioner 105. When an intelligent terminal is a smart home device such as a smart refrigerator or an air conditioner, a recently used application may be a task that is currently executed or that is executed for several recent times by the smart home device.

Certainly, the communication system 10 may further include more terminal devices, for example, IOT (internet of things, internet of things) devices such as a smart sound box, a vehicle-mounted device (which may also be referred to as an in-vehicle infotainment system), a notebook computer, an ultra-mobile personal computer (ultra-mobile personal computer, UMPC), a handheld computer, a netbook, a personal digital assistant (personal digital assistant, PDA), a wearable electronic device, and a virtual reality device, which are not shown in FIG. 1.

A type of the terminal device (for example, the mobile phone 101, the tablet computer 102, or the large-screen device 103) is not specifically limited in this embodiment of this application. In some embodiments, the terminal device in this embodiment of this application may be a device such as a mobile phone, a wearable device (for example, a smart band, a smartwatch, or a headset), a tablet computer, a laptop (laptop), a handheld computer, a notebook computer, an ultra-mobile personal computer (ultra-mobile personal computer, UMPC), a cellular phone, a personal digital assistant (personal digital assistant, PDA), or an augmented reality (Augmented reality, AR)\virtual reality (virtual reality, VR) device; or may be a device such as a television, a large screen, a sound screen, a television, a refrigerator, an air conditioner, a vehicle-mounted device, a printer, or a projector. An example embodiment of the terminal device includes but is not limited to a terminal device provided with iOS®, Android®, Microsoft®, Harmony, or another operating system.

Terminals in the communication system 10 may be interconnected through a communication network.

In some example embodiments, the communication network may be a wired network or a wireless network. For example, the communication network may be a local area network (local area network, LAN), or may be a wide area network (wide area network, WAN), for example, the Internet. The communication network may be implemented based on any known network communication protocol. The network communication protocol may be various wired or wireless communication protocols such as the Ethernet, a universal serial bus (universal serial bus, USB), FireWire (FIREWIRE), a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth, wireless fidelity (wireless fidelity, Wi-Fi), NFC, voice over Internet protocol (voice over Internet protocol, VoIP), communication protocol supporting a network slice architecture, or any other proper communication protocol.

In other words, the terminals in the communication system 10 may form a network (that is, are networked) based on a specific communication protocol and networking policy, so that terminals in an audio system may communicate with each other.

In some example embodiments, the terminal devices in the communication system 10 may access a Wi-Fi network provided by an access point (access point, AP) such as a router, so that a Wi-Fi connection is established between the terminal devices. For another example, the terminals in the communication system 10 may log in to a same account (for example, a Huawei account), and then are interconnected through one or more servers.

A recent task interface is an interface that is in a system user interface (User Interface, UI) and that displays a recently run task of a terminal. When the terminal is triggered to open the recent task interface, a display of the terminal may display the recently run task of the terminal, or a recently run application. Optionally, for a plurality of interfaces of a same application, each of the plurality of interfaces may be displayed as an independent task in the recent task interface. For example, when the terminal opens two Word documents, if the recent task interface is entered, two task cards may be respectively used to display interfaces corresponding to the two Word documents. For ease of description, a task and an application are not specifically distinguished in this application. In addition, whether the plurality of interfaces of the application are used as one task card or a plurality of task cards is not limited in this application.

For example, after a user triggers a terminal to open a first application, the terminal returns a home screen by using a gesture or a button. In this case, the first application is switched to run in the background. When the user opens a second application and runs the second application, the user triggers the terminal to enter a recent task interface. It can be understood that, because a system function of the terminal currently runs a program corresponding to the recent task interface in the foreground, the second application is also switched to run in the background. In this case, both the first application and the second application are recently run applications, and information about the first application and the second application occurs in the recent task interface.

Information about a plurality of recently run applications is displayed in the recent task interface. Usually, an identifier and a task card corresponding to an application are displayed in the recent task interface. Optionally, the identifier of the application may be an application name or an icon (icon) of the application that is represented by using a text, the task card is a rectangular box, and a snapshot of the application exists in the box. For example, the system captures a snapshot of an interface existing when the application is switched to run in the background. The identifier and the task card of the application may be a whole. For example, the identifier is embedded into the task card as a part of the task card; or the identifier and the task card of the application are in a separated state. This is not limited in this application. When there are a plurality of recently run applications on the terminal, there are a plurality of task cards. Due to a page display or an interface setting, some task cards are completely displayed in the recent task interface, some task cards are partially displayed in the recent task interface, and some task cards may be hidden (not displayed) in RecentTasks.

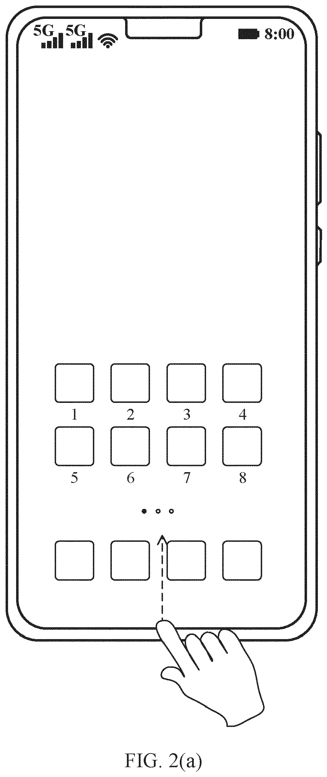

In some example embodiments, as shown in FIG. 2(a), the user may make a slide-up gesture from a bottom of a screen of the terminal on the home screen of the terminal, to trigger the display of the terminal to display the recent task interface. In an actual application, the display of the terminal may be triggered, by using another gesture or in another operation manner (for example, by tapping a "multi-task" button or touching and holding a "back" button), to display the recent task interface. A manner of triggering the terminal to display the recent task interface is not limited in this application.

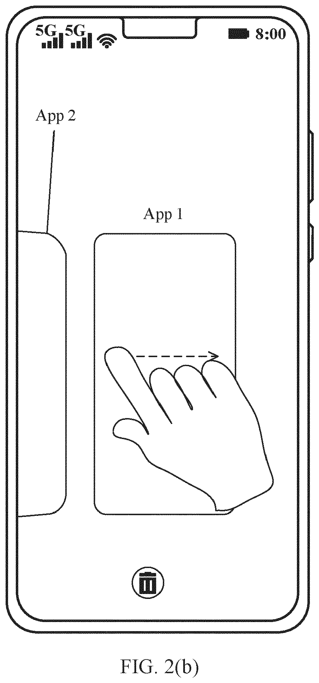

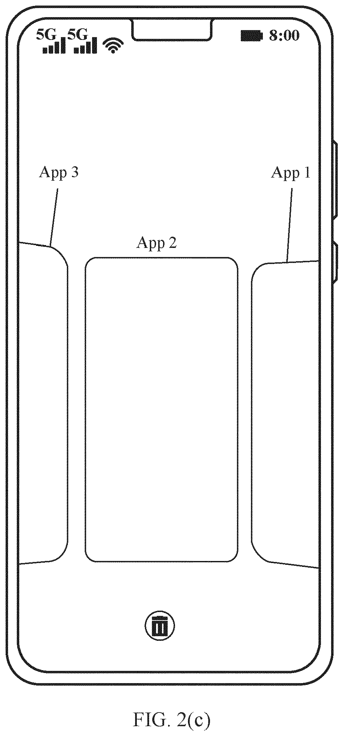

In some example embodiments, as shown in FIG. 2(b), the display of the terminal displays the recent task interface. In the recent task interface, a task card of the first application is completely displayed, and a task card of the second application is partially displayed. The recently run application further includes a third application, and a card of the third application is hidden in the recent task interface. In the recent task interface shown in FIG. 2(b), when the user makes a slide-up gesture on a touchscreen, the recent task interface displayed on the display of the terminal may be switched to a recent task interface shown in FIG. 2(c).

In some example embodiments, as shown in FIG. 2(c), a task card that is currently and completely displayed in the recent task interface is switched from the task card of the first application to the task card of the second application. Before switching, as shown in FIG. 2(b), the task card of the first application is completely displayed in the recent task interface, and the task card of the second application is partially displayed in the recent task interface. After switching, as shown in FIG. 2(c), the task card of the first application is partially displayed in the recent task interface, and the task card of the second application is completely displayed in the recent task interface. In addition, after switching, as shown in FIG. 2(c), the task card of the third application is changed from a hidden state to being partially displayed in the recent task interface.

As shown in FIG. 2(b) and FIG. 2(c), when a plurality of recently run tasks exist, a task card of a recently run task may be completely displayed in the recent task interface, a task card of another recently run task is partially displayed on a left side and/or a right side of the completely displayed task card of the recently run task, and the completely displayed task card and the partially displayed task card are displayed side by side. In an actual application, the task card may alternatively be displayed in the recent task interface in another manner. For example, a task card of a recently run task is completely displayed in the recent task interface, a task card of another recently run task is partially displayed on an upper side and/or a lower side of the completely displayed task card of the recently run task, and the completely displayed task card and the partially displayed task card are displayed side by side. In this embodiment of this application, a manner of displaying a task card in the recent task interface is not limited. The recent task interface may be triggered by an operation to display different task cards through switching, and a completely displayed task card exists before and/or after switching.

In the recent task interface, the user may perform different operations, to achieve different effects.

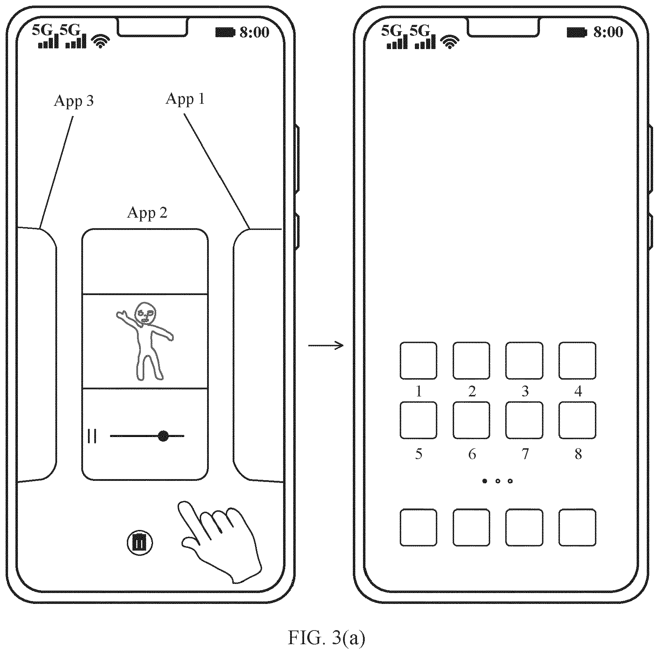

In some example embodiments, as shown in FIG. 3(a), when the user makes a tap gesture in a region outside the task card in the recent task interface, the recent task interface exits, and the display of the terminal displays the home screen.

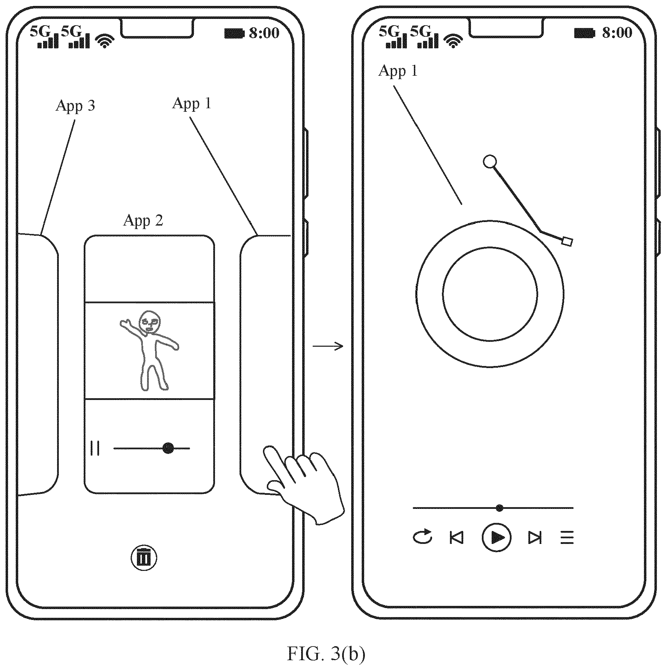

In some example embodiments, as shown in FIG. 3(b), when the user makes a tap gesture in a region corresponding to the task card of the first application, the recent task interface exits, the display of the terminal displays an interface of the first application, and the first application is switched from being run in the background to being run in the foreground.

In FIG. 3(a) and FIG. 3(b), a response of the terminal to a gesture of the user is only used as an example. In an actual application, the response may be another response. This is not limited in this application.

In addition, in an actual application, as shown in FIG. 3(a) and FIG. 3(b), the recent task interface may further display a control or an icon that is used to clear memory space occupied by all recently run applications, for example, a Recycle bin icon in a lower part in FIG. 3(a) and FIG. 3(b). The user may close all the recently run tasks by tapping the icon. In a specific implementation, all applications or a specific application run in a floating window mode in the recent task interface may be closed in another manner. For example, the application may be further closed by using a slide-up gesture, a slide-down gesture, or in a manner of tapping a specific control in a task card (for example, a close button in a task card).

Optionally, in some embodiments of this application, when a task card is displayed, information about memory space occupied by applications respectively corresponding to some or all task cards may be further displayed. For example, a prompt box of a memory space occupied by applications corresponding to some or all task cards may be displayed above or below the task cards, or memory space occupied by applications respectively corresponding to different task cards may be displayed in a list or a table. For example, memory space occupied by an application corresponding to a task card may be xx megabytes (M), yy thousand (K) bytes (B), or the like. This is not limited in this embodiment of this application.

The foregoing describes content included in the recent task interface and a basic operation. In this application, a recent task interface of a terminal may not only display a recently run application of the terminal, but also display a recently run application of another terminal. Further, an operation may be further performed on a task card corresponding to one or some applications, to implement a cross-device migration of an application, application running, and the like.

A scenario shown in FIG. 1 is used as an example for description. A first terminal (for example, the mobile phone 101), a second terminal (for example, the tablet computer 102), a third terminal (for example, the large-screen device 103), and the like are connected through a network. When the user operates the first terminal to enter a recent task interface, the recent task interface not only displays a recently used application of the first terminal, but also displays a recently used application of the second terminal and the third terminal.

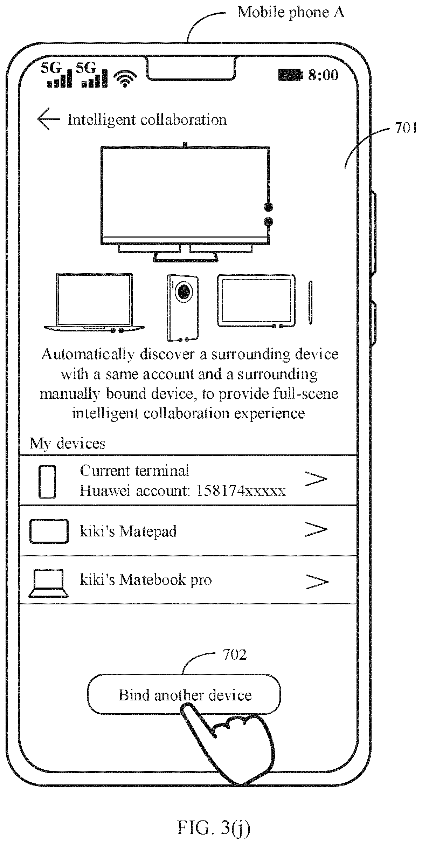

In a possible implementation, before a technical solution of this application is executed between different devices, a trusted relationship may be established between the different devices, or the different devices may be connected. For example, for a manner in which the different devices are connected, different devices may log in to a same account, are connected to a same Wi-Fi hotspot, log in to an associated account, or are established in a same network to form a local area network device group, or the like. For a manner in which the trusted relationship is established, device-level authentication may be performed between different devices in example manners shown in FIG. 3(j) to FIG. 3(z), to establish the trusted relationship. This is not limited in this application.

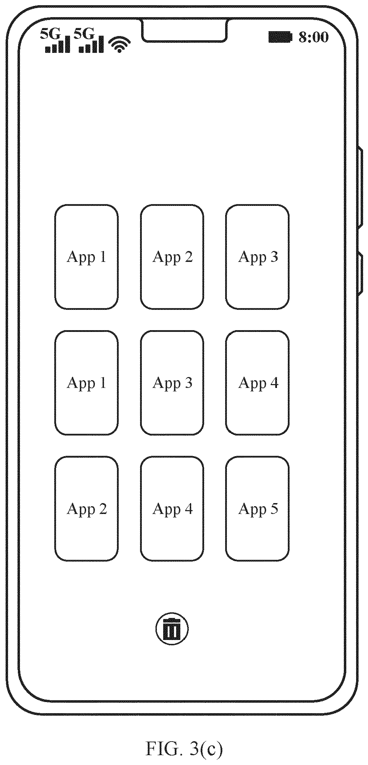

In some example embodiments, as shown in FIG. 3(c), the recent task interface of the first terminal is divided into a plurality of rows, a first row is used to display a task card corresponding to a recently used application of the first terminal, and a second row and a third row are respectively used to display recent task lists of devices such as the second terminal and the third terminal. In this case, the first terminal may synchronize the recent task lists of the second terminal and the third terminal in the background, or when the user opens the recent task interface of the first terminal, the first terminal is triggered to obtain the recent task list of another terminal (the second terminal and the third terminal) connected to the first terminal.

As shown in FIG. 3(c), for example, the first terminal may be a mobile phone, the second terminal may be a tablet computer, and the third terminal may be a large-screen device. An overlapping application may exist in applications run on any two devices. For example, as shown in FIG. 3(c), same applications, namely, an app 1 and an app 3 exist on the mobile phone and the tablet computer. Optionally, a progress or state of the app 1 run on the mobile phone (or an interface of the app 1 displayed on the mobile phone) may be different from a progress or a state of the app 1 run on the tablet computer (or an interface of the app 1 displayed on the tablet computer). A progress or a state of the app 3 run on the mobile phone may also be different from a progress or a state of the app 3 run on the tablet computer. A same application, namely, an app 2 exists on the mobile phone and the large-screen device. Optionally, a progress or a state of the app 2 run on the mobile phone may be different from a progress or a state of the app 2 run on the large-screen device. A same application, namely, an app 4 exists on the large-screen device and the tablet computer. Similarly, a progress or a state of the app 4 run on the large-screen device may be different from a progress or a state of the app 4 run on the tablet computer.

For another example, as shown in FIG. 3(c), the first row shows three recently run applications on the mobile phone. For example, the three applications may be three applications with top three use frequencies; or three applications with top three usage time lengths; or three recently used applications; or one application with a top use frequency, one application with longest usage time, and one recently used application in a plurality of recently run applications on the mobile phone. For another example, when the user may make a slide-up gesture in a region of any row of task card, the first terminal displays another task card of a device corresponding to the row, or when the user may make a slide-up gesture in a region outside the three rows of task cards, the first terminal displays other task cards respectively corresponding to the three devices.

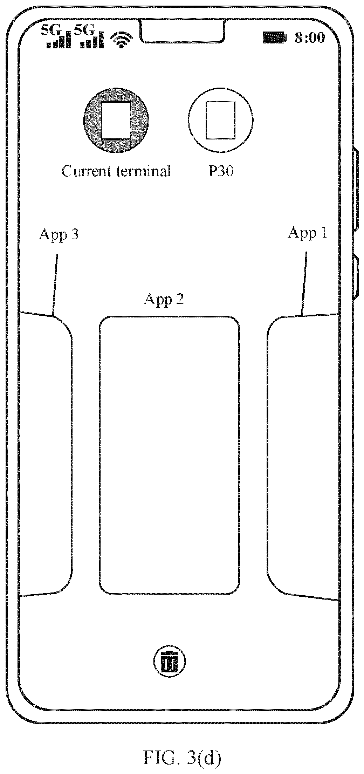

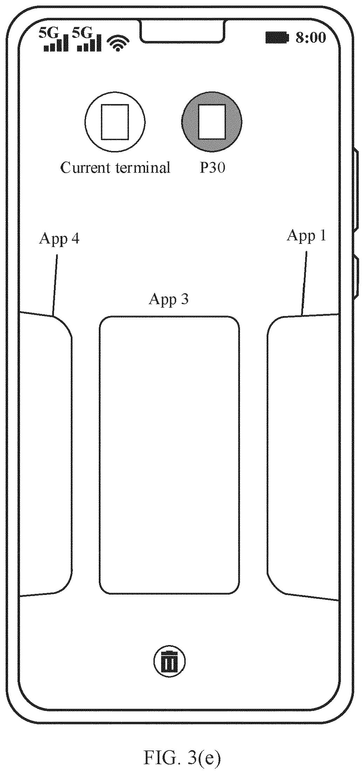

In some example embodiments, identifiers of the first terminal and a plurality of terminals connected to the first terminal (for example, the plurality of terminals and the first terminal log in to a same account, are connected to a same Wi-Fi hotspot, or log in to an associated account) may be further separately displayed in the recent task interface of the first terminal. When an identifier of the first terminal or an identifier of a terminal connected to the first terminal is selected, a recent task list corresponding to the terminal is correspondingly displayed in the recent task interface. In some example embodiments, as shown in FIG. 3(d), when an identifier of a current terminal (the first terminal) is selected, a local recent task list of the first terminal is displayed in the recent task interface. In some example embodiments, as shown in FIG. 3(e), when the first terminal receives an instruction of the user, and an identifier of the second terminal is selected, a recent task list of the second terminal is displayed in the recent task interface. In this case, the first terminal may have completed synchronization of the recent task list of the second terminal and caching of this part of data in the background. When the user taps the identifier of the second terminal, the first terminal displays the recent task list of the second terminal in the recent task interface based on the cached data. Alternatively, the first terminal may not synchronize a recent list task of the second terminal in the background; instead, when the user taps the identifier of the second terminal, the first terminal obtains the recent task list of the second terminal, and displays the task list in a recent task interface corresponding to the identifier of the second terminal.

When a policy in which the first terminal obtains, in the background, a recent task list of another terminal including the second terminal is used, after the user taps to enter the recent task interface of the first terminal or tap an identifier of the another terminal in the recent task interface, because information about the recent task list of the another terminal is pre-cached, the user may load the recent task list of the another terminal in the recent task interface at a fast speed, so that the user obtains the recent task list corresponding to the another terminal more quickly, and user experience is better. However, when the user opens the recent task interface of the first terminal or taps the identifier of the another terminal in the recent task interface, synchronization of the recent task list of the another terminal is triggered, to reduce consumption of network traffic and power that are generated when the first terminal and the another terminal synchronize the recent task list, to save resources.

In some example embodiments, different synchronization policies may be used based on a state of the first terminal. For example, when the first terminal is in a state in which the first terminal is connected to wireless fidelity (Wireless Fidelity, Wi-Fi®) or a state in which power is enough, because a problem of consumption of network traffic or power does not need to be concerned, the first terminal may obtain, in the background, the recent task list of the another terminal connected to the first terminal. When the first terminal is in a state in which the first terminal is connected to a network through a cellular network or power is low, synchronization of the recent task list of the another terminal may be triggered when the user opens the recent task interface of the first terminal or taps the identifier of the another terminal in the recent task interface, to save network traffic or power.

In some example embodiments, in actual use, the user of the first terminal uses other terminals at different use frequencies, different recent task information synchronization policies may be set for terminals connected to the first terminal. For example, when the first terminal is a mobile phone, a tablet computer connected to the mobile phone through a network may have a closer relationship with the mobile phone, and a backup mobile phone that is also connected to the mobile phone may be less associated. In this case, when the user enters the recent task interface, a recent task of the tablet computer that is more associated with the mobile phone is directly displayed, and only an identifier of the backup mobile phone that is less associated with the mobile phone is displayed. When the user taps the identifier of the backup mobile phone, the first terminal is triggered to obtain a recent task of the backup mobile phone.

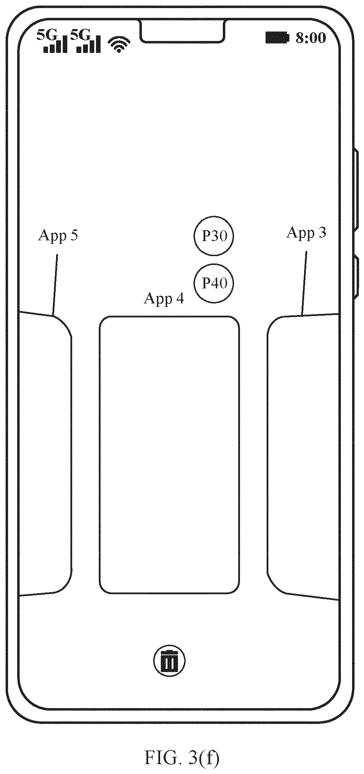

In some example embodiments, FIG. 3(f) is another schematic diagram of displaying a recent task list of a plurality of terminals connected to a first terminal. As shown in FIG. 3(f), a recent task of the first terminal and a recent task of the another terminal are no longer distinguished in the recent task interface of the first terminal. Instead, the recent task of the first terminal and the recent task of the another terminal are displayed in the recent task interface of the first terminal after combination and deduplication. For example, if the first terminal (that is, the current terminal) recently runs the app 1, the app 2, and the app 3, the second terminal (assumed to be a Huawei P30 mobile phone) recently runs the app 1, the app 3, and the app 4, and the third terminal (assumed to be a Huawei P40 mobile phone) recently runs the app 2, the app 4, and an app 5, the recent task interface of the first terminal displays the app 1 to the app 5 (only the app 3, the app 4, and the app 5 are shown in the figure).

In some example embodiments, optionally, a terminal device corresponding to each application may be displayed around a task card corresponding to the application in a recent task view, to notify, to the user of the first terminal, a specific terminal device that recently uses an application displayed in the recent task view. As shown in FIG. 3(f), the identifier of the second terminal (P30) and an identifier of the third terminal (P40) are displayed around a task card of the app 4.

All applications are arranged in the recent task interface in a sequence of opening the applications.

Therefore, when another terminal in a network sends information about a recently used application to the first terminal, a time point of opening the application on the terminal may be sent to the first terminal together, to more accurately arrange all recent applications in the recent task interface of the first terminal. For example, when the second terminal opens an album application at 11:26, and the third terminal opens a settings application at 11:27, the second terminal and the third terminal each send recent task information to the first terminal. The recent task information includes information about a time point at which the second terminal opens the album application and information about a time point at which the second terminal opens the settings application. After a global task center of the first terminal receives the recent task information of the second terminal and the third terminal, it may be determined that the album application is opened before the settings application. Therefore, in the recent task interface, a location of the album application is before a location of the settings application.

When the first terminal tries to synchronize the recent task list of the second terminal, for example, the user operates the first terminal to enter the recent task interface or tap the identifier of the second terminal in the recent task interface, the first terminal sends a task synchronization request to the second terminal. The task synchronization request is used to notify the second terminal to send information (recent task information) about the recently run application of the second terminal to the first terminal.

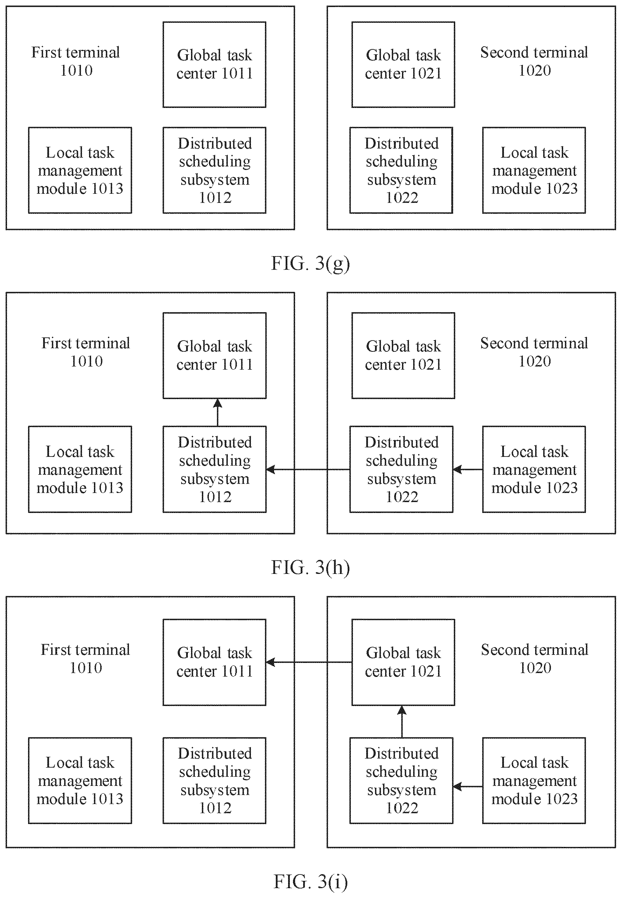

In some example embodiments, as shown in FIG. 3(g), a first terminal 1010 and a second terminal 1020 each include a global task center and a distributed scheduling subsystem. Optionally, the global task center runs at an application layer, and is configured to manage and display a recently used application of a terminal in a network; and the distributed scheduling subsystem runs at a system service layer at a lower layer, and is configured to: obtain information about a recently used application of a current terminal, and exchange recent task information with another terminal.

A distributed scheduling subsystem 1022 of the second terminal 1020 obtains recent task information of the second terminal 1020 from a local task management module 1023, and a listener (listener) of a change of the local task information is registered. The listener is configured to obtain a change of a recently used application of the second terminal. After obtaining the recent task information of the second terminal 1020, the distributed scheduling subsystem 1022 of the second terminal 1020 transmits the task information to a global task center 1011 of the first terminal 1010, so that the first terminal 1010 can display a recent task list of the second terminal 1020 in the recent task interface. In some example embodiments, as shown in FIG. 3(h) and FIG. 3(i), the distributed scheduling subsystem 1022 of the second terminal 1020 may be transmitted to the global task center 1011 of the first terminal 1010 in the following two manners.

In some example embodiments, as shown in FIG. 3(h), after receiving a task synchronization request from the first terminal 1010, the distributed scheduling subsystem 1022 of the second terminal 1020 sends the recent task information of the second terminal 1020 from the local task management module 1023 to a distributed scheduling subsystem 1012 of the first terminal 1010, and then the distributed scheduling subsystem 1012 of the first terminal 1010 sends the recent task information of the second terminal 1020 to the global task center 1011 of the first terminal 1010.

Because the distributed scheduling subsystem is located at a bottom layer, after the first terminal 1010 and the second terminal 1020 are networked, the first terminal 1010 may maintain a list of identifiers in the network. When the recent task information of the second terminal 1020 needs to be obtained, the first terminal 1010 may send the task synchronization request to the second terminal 1020 through the distributed scheduling subsystem 1012, and receive the recent task information of the distributed scheduling subsystem 1022 of the second terminal 1020, to conveniently complete synchronization of the recent task information of the second terminal 1020.

In some example embodiments, as shown in FIG. 3(i), after receiving recent task information synchronization request from the first terminal 1010, the distributed scheduling subsystem 1022 of the second terminal 1020 may send the recent task information of the second terminal 1020 from the local task management module 1023 to a global task center 1021 of the second terminal 1020, and then the global task center 1021 of the second terminal 1020 sends the recent task information to the global task center 1011 of the first terminal 1010.

When this implementation is used, the global task center is located at the application layer, and cannot directly perceive another terminal or obtain information from the another terminal. When the global task center 1021 of the second terminal 1020 needs to send information to the global task center 1011 of the first terminal 1010, the global task center 1021 of the second terminal 1020 needs to obtain an identifier of the first terminal 1010 and an identifier of the global task center. When a message including the recent task information is sent, the message carries the identifier of the first terminal 1010 and the identifier of the global task center, so that after receiving the recent task information from the second terminal 1020, the first terminal 1010 may transfer the recent task information to the global task center of the first terminal.

Optionally, when sending the recent task information to the first terminal, the second terminal may perform transmission in a plurality of formats. For example, in a possible transmission manner, a remote procedure call (Remote Procedure Call, RPC) is used. The RPC is a computer communication protocol, and the protocol allows a program of one computer to invoke a subprogram of another address space. A programmer does not need to additionally program this interaction function, like invoking a local program. The RPC is a server-client (Client/Server) mode, and a classic implementation is a system in which information interaction is performed by sending a request-accept response.

In another possible transmission manner, the second terminal and the first terminal may jointly maintain a shared database. When the second terminal needs to send data to the first terminal, the second terminal may place to-be-sent data in the shared database. When content in the shared database changes, the first terminal may perceive the change, extract content placed by the second terminal in the shared database, and transfer the content to the global task center of the first terminal.

In still another possible transmission manner, when the second terminal needs to send data (for example, including the recent task information or a data stream of a recently run application) to the first terminal, the second terminal may segment the data stream, establish an index table of segment data, transmit the segment data in a distributed file system in parallel through a plurality of threads, and transmit the index table to the first terminal (for example, the index table is transmitted to the first terminal by being written into a parcel for RPC transmission). The first terminal restores application data based on the received segment data and the index table, to finally implement transmission of recent task information or data of a recently run application between unused devices. For a specific process of performing transmission in this manner, refer to descriptions of example embodiments shown in FIG. 18 to FIG. 20.

In yet another possible transmission manner, when the second terminal needs to send data (for example, including the recent task information or a data stream of a recently run application) to the first terminal, a local task stack restoration mechanism of the second terminal is extended to a distributed scenario, so that the second terminal and the second terminal may perform a task migration (that is, transmission of the recent task information or data of the recently run application) based on a stack migration. In this way, the first terminal may store and restore context information (Context) of the local task stack of the second terminal, so that the user can execute a task on the second terminal through a seamless hop on the first terminal, to finally implement transmission of recent task information or data of a recently run application between unused devices. For a specific process of performing transmission in this manner, refer to descriptions of example embodiments shown in FIG. 23A to FIG. 23G, FIG. 24A to FIG. 24G, FIG. 25A and FIG. 25B, and FIG. 26.

Transmitted recent task information includes a stack that records recent task information, snapshot information of a recently used application, an identifier, state information, and the like. The stack is a data structure used to record a recently used application and a sequence, and a threshold of a quantity of recently used applications recorded by a terminal is determined for a setting of the stack. When the threshold is exceeded, an application with earliest usage time is deleted from a recent task list. The state information is used to record a state of each application before a background application is exited, including window mode (window mode) information, intent information, and the like. Optionally, the window mode information indicates a display mode existing when the application runs in the foreground. For example, when a value of the window mode information is 1, it indicates that a previous display mode of the application is display in full screen. When the value of the window mode information is 101, it indicates that the display mode of the application is display in split screen. The intent information includes information required when the application is opened, for example, one or more items of the following data: a remote device ID, a package name of an application, a class name, or a clear mode. In addition, extra user data may be stored. For example, a video application may store a uniform resource identifier (Uniform Resource Identifier, URI) and progress data, to "seamlessly switch" (or referred to as a hop or a migration), on a remote device, a video that is being played by a local device.

Because the first terminal obtains state information of a recently used application of the second terminal, the user may indicate the first terminal to run the application based on the state information of the application. For example, the user directly opens an interface existing when the application enters the background on the second terminal.

Further, in a possible implementation, the state information of the application may further include a feature ability (feature ability, FA) file. Even if the application is not installed on the first terminal, the application may be directly run based on the FA file.

Optionally, in this application, the first terminal needs to obtain recent task information of another terminal in the network, and the recent task information relates to a privacy problem of the user. Therefore, before the first terminal exchanges recent task information with the second terminal, a trusted relationship may be established between the first terminal and the second terminal. In other words, the first terminal and the second terminal are bounded, or a device-level authentication relationship is established.

For ease of understanding, the following describes, by using an example in which a mobile phone A is the first terminal and a mobile phone B is the second terminal, a device-level authentication user interface provided in this embodiment of this application.

Optionally, in some example embodiments, as shown in FIG. 3(j), the user may enter an intelligent collaboration interface 701 from the settings application. The intelligent collaboration interface 701 may include a list with a name "My devices". "My devices" includes Current terminal (that is, the mobile phone A), kiki's Matepad, and kiki's Matebook pro. Current terminal, kiki's Matepad and kiki's Matebook pro may be devices that have a same account (for example, devices that share one Huawei account). Alternatively, Current terminal, kiki's Matepad, and kiki' s Matebook pro may be devices that have different accounts but are authenticated (for an authentication process, refer to the following related descriptions).

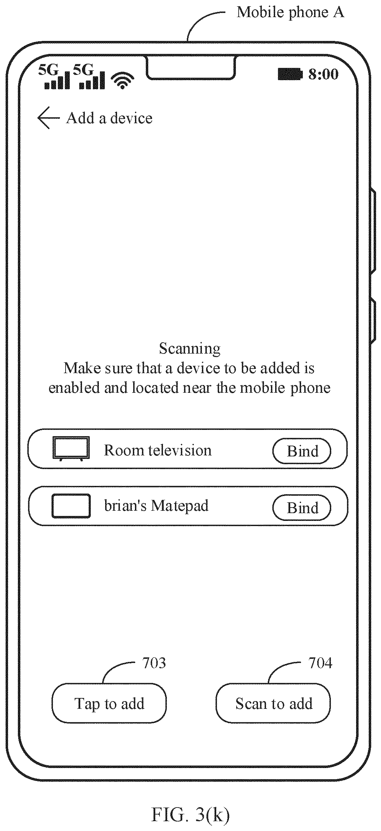

Optionally, the intelligent collaboration interface 701 may include a "Bind another device" button 702. In this embodiment of this application, binding is to establish a trusted relationship between two devices, to perform an operation such as viewing a recently used application between devices. As shown in FIG. 3(k), the mobile phone A may display a "Tap to add" button 703 and a "Scan to add" button 704 in response to an operation (for example, a tap operation) performed by the user on the "Bind another device" button 702. It should be understood that, locations, names, and shapes of elements (for example, a button, an icon, and a word) in UI interfaces corresponding to FIG. 3(j) and FIG. 3(k) are not fixed, and may be freely combined or designed based on a requirement. For example, the button 702 in FIG. 3(j) may be replaced with the button 703 and the button 704 in FIG. 3(k).

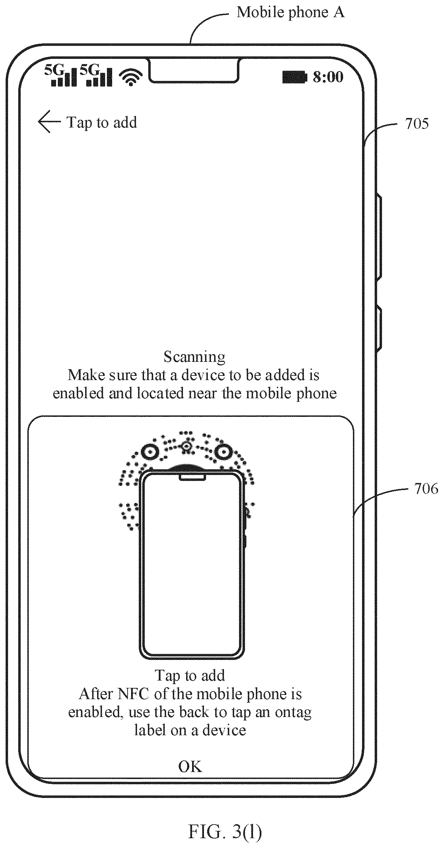

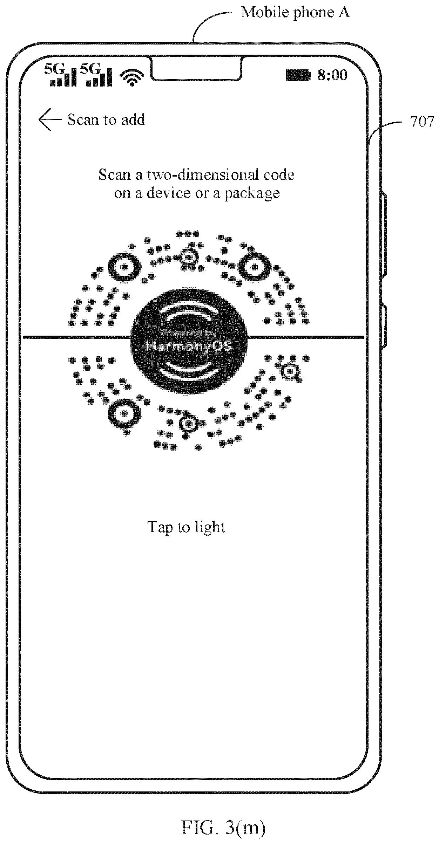

For example, as shown in FIG. 3(l), the mobile phone A may display a "Tap to add" interface 705 in response to a tap operation performed by the user on the "Tap to add" button 703. The "Tap to add" interface 705 may display a pop-up box 706. The pop-up box 706 includes a prompt picture and prompt information. For example, the prompt information may be "Tap to add. After NFC of the mobile phone is enabled, use the back to tap an ontag label on a device". The user can perform an operation based on the prompt information, to add a new device through "Tap". For another example, as shown in FIG. 3(m), the mobile phone A may display a "Scan-to-add" interface 707 in response to a tap operation performed by the user on the "Scan-to-add" button 704. The "Scan-to-add" interface 707 may include a prompt picture and prompt information. The prompt information may be, for example, "Scan a two-dimensional code on a device or package". The user can perform an operation based on the prompt information, to add a new device through "Scan".

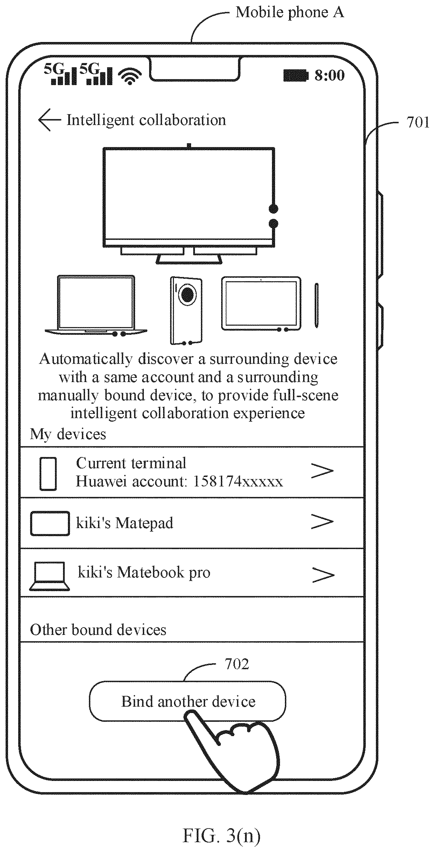

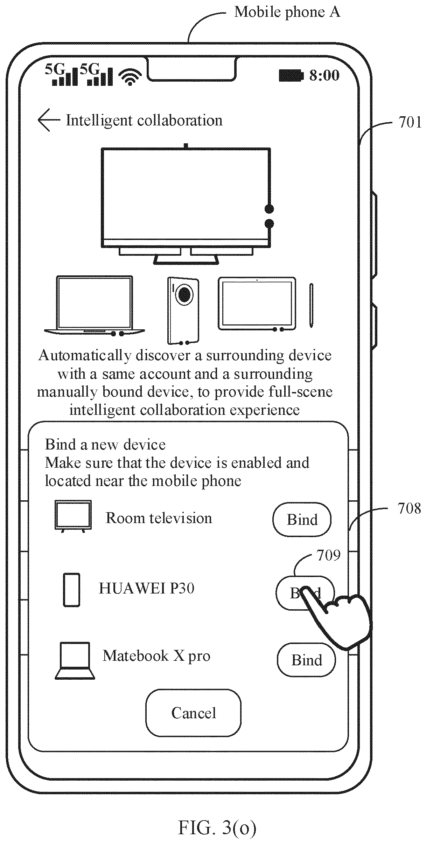

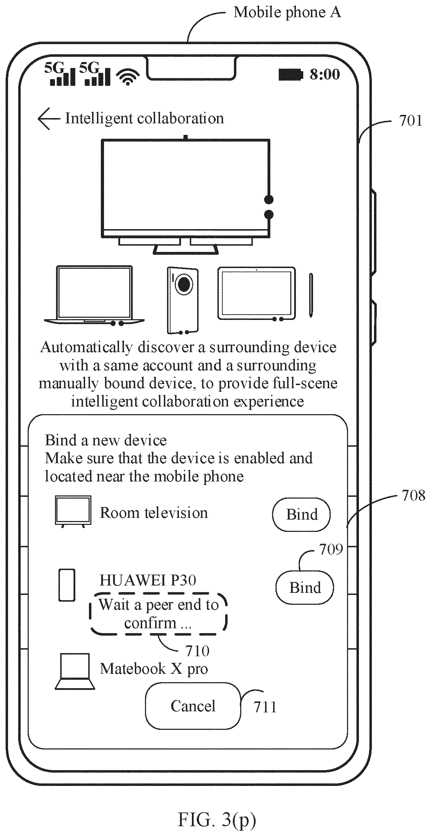

Optionally, in some example embodiments, if the mobile phone A does not support to add a new device through "Tap" or "Scan", in response to an operation that the user taps the "Bind another device" button 702 in the intelligent collaboration interface 701 as shown in FIG. 3(n), the mobile phone A may display a pop-up box 708 as shown in FIG. 3(o). The pop-up box 708 includes prompt information "Please ensure that a device is enabled and is near the mobile phone", and the pop-up box 708 may further include a device detected by the mobile phone A through a shortrange communication network (for example, a Wi-Fi network or a Bluetooth network), for example, a device such as Room television, HUAWEI P30, or Matebook X pro. Each device corresponds to a "Bind" button. As shown in FIG. 3(p), prompt information 710 "Wait a peer end to confirm ..." may be displayed below an identifier of HUAWEI P30 in response to an operation performed by the user on a "Bind" button 709 corresponding to HUAWEI P30. The pop-up box 708 may further include a "Cancel" button 711. In response to an operation that the user taps the "Cancel" button 711, the mobile phone A may return to an interface shown in FIG. 3(n).

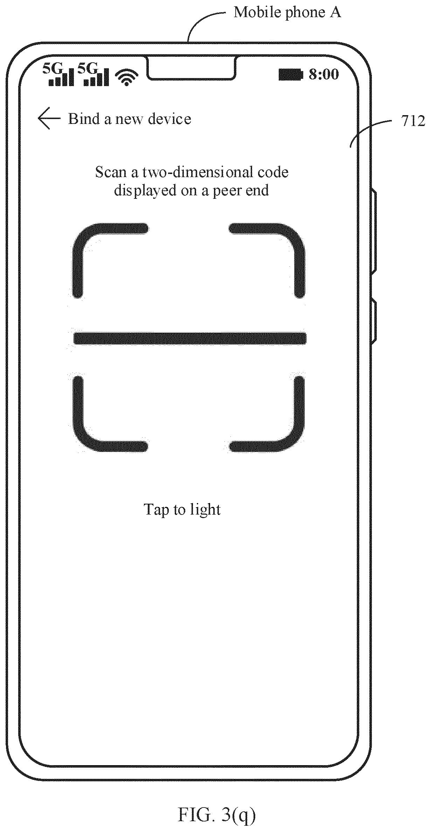

If the peer device provides confirmation (for example, a user of the peer device agrees to establish a trusted relationship), in a possible implementation, the peer device establishes a trusted relationship with the mobile phone A in response to a confirmation instruction of the peer device, so that the mobile phone A can view recent task information of the peer device. In another possible implementation, the mobile phone A further needs to scan a two-dimensional code displayed by the peer device, to complete establishment of the trusted relationship, so as to further improve security and protect privacy. As shown in FIG. 3(q), the mobile phone A may display a "Bind a new device" interface 712, and the "Bind a new device" interface 712 may include prompt information "Scan a two-dimensional code displayed on a peer end". The user may perform an operation based on the prompt information, to add a new device. It should be understood that, a jump relationship between different UI interfaces is not limited in this embodiment of this application. For example, in response to an operation that the user taps the "Bind" button 709 as shown in FIG. 3(o), the mobile phone may directly display a scanning interface 712 as shown in FIG. 3(q).

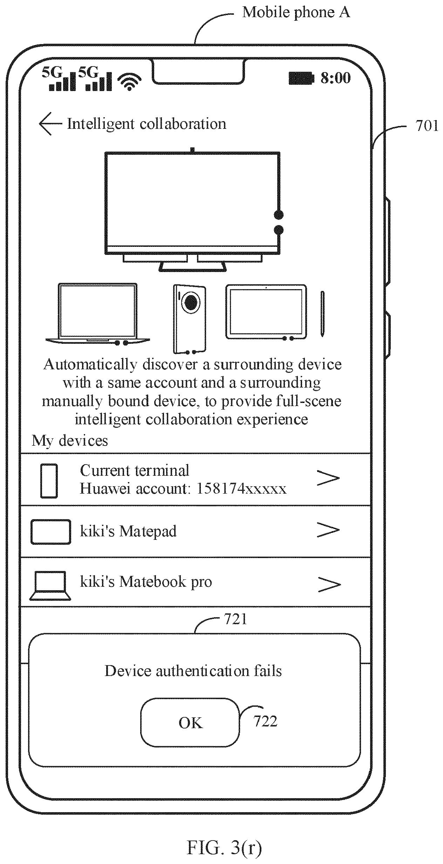

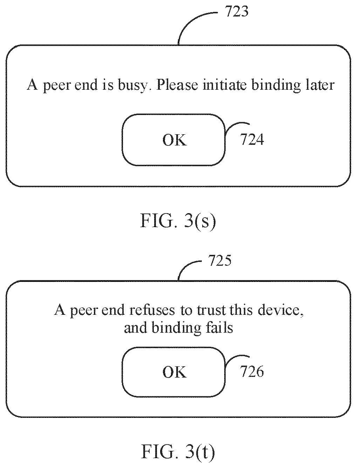

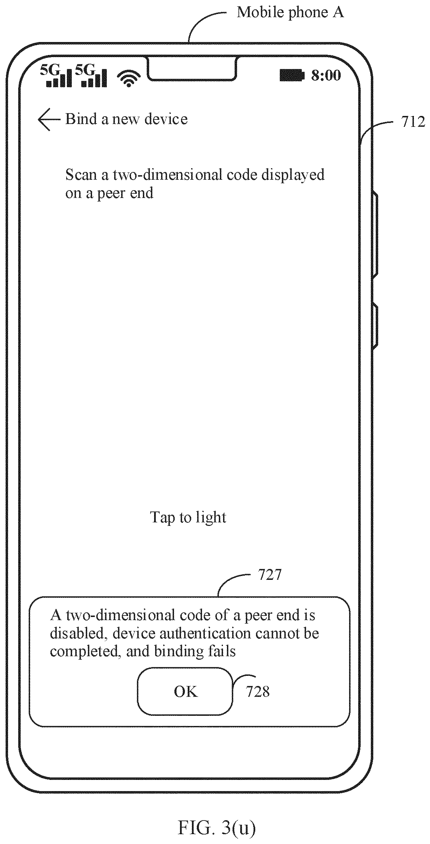

If the peer device does not provide confirmation (for example, the peer device does not have a binding function, a binding timeout, or the peer device is busy, or the user of the peer device does not agree to binding), optionally, as shown in FIG. 3(r), the mobile phone A may display a pop-up box 721, to prompt the user with "Device authentication fails". The pop-up box 721 may be hidden in response to an operation that the user taps an "OK" button 722. Alternatively, the pop-up box 721 may be hidden after a preset time period (for example, 3s). In another possible design, as shown in FIG. 3(s), the mobile phone A may display a pop-up box 723, to prompt the user with "A peer end is busy. Please initiate binding later". The pop-up box 723 may be hidden in response to an operation that the user taps an "OK" button 724. Alternatively, the pop-up box 723 may be hidden after a preset time period (for example, 3s). In still another possible design, as shown in FIG. 3(t), the mobile phone A may display a pop-up box 725, to prompt the user with "A peer end refuses to trust this device, and binding fails". The pop-up box 725 may be hidden in response to an operation that the user taps an "OK" button 726. Alternatively, the pop-up box 725 may be hidden after a preset time period (for example, 3s). Alternatively, as shown in FIG. 3(u), the mobile phone A may display a pop-up box 727 in the interface 712, to prompt the user with "A two-dimensional code of a peer end is disabled, device authentication cannot be completed, and binding fails". The pop-up box 727 may be hidden in response to an operation that the user taps a button 728.

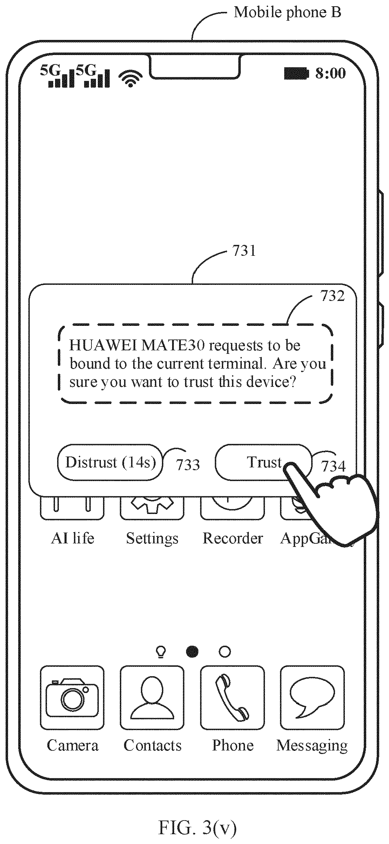

It is assumed that the peer device is the mobile phone B (for example, the peer device may be HUAWEI P30). In some example embodiments, if the mobile phone B receives a binding request of the mobile phone A when displaying a home screen 730, the mobile phone B may display a pop-up box 731 as shown in FIG. 3(v). The pop-up box 731 may include prompt information 732 "HUAWEI MATE30 requests to be bound to the current terminal. Are you sure you want to trust this device". The pop-up box 731 may further include a "Distrust" button 733 and a "Trust" button 734. A countdown (for example, 14s) may also be displayed in the "Distrust" button. If the user does not tap any button when the countdown ends, the pop-up box 731 may be automatically hidden. In response to an operation that the user taps the "Trust" button 734, the mobile phone A may perform an authentication process with the mobile phone B, so that the mobile phone A can be bound to the mobile phone B.

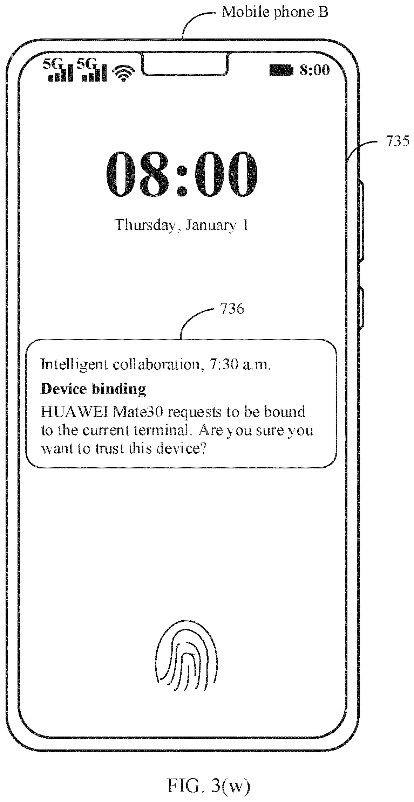

In some example embodiments, if the mobile phone B receives the binding request of the mobile phone A in a screen-off state or a screen-locked state, the mobile phone B may display a pop-up box 736 in a lock screen interface 735 as shown in FIG. 3(w). The pop-up box 736 may prompt the user with a case in which an intelligent collaboration application receives a device binding request at 7:30 a.m., and the device binding request may be specifically "HUAWEI MATE30 (that is, the mobile phone A) requests to be bound to the current terminal. Are you sure you want to trust this device?". In response to an operation that the user enters the home screen from the screen-locked state (for example, an operation of entering a password or entering a fingerprint), the pop-up box 736 in FIG. 3(w) may be replaced with a form of the pop-up box 731 in FIG. 3(v), and the user may choose to trust or distrust HUAWEI MATE30 (for example, the mobile phone A).

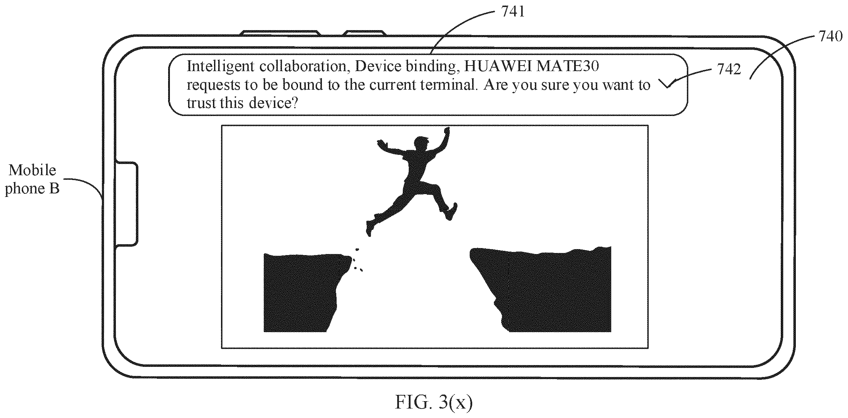

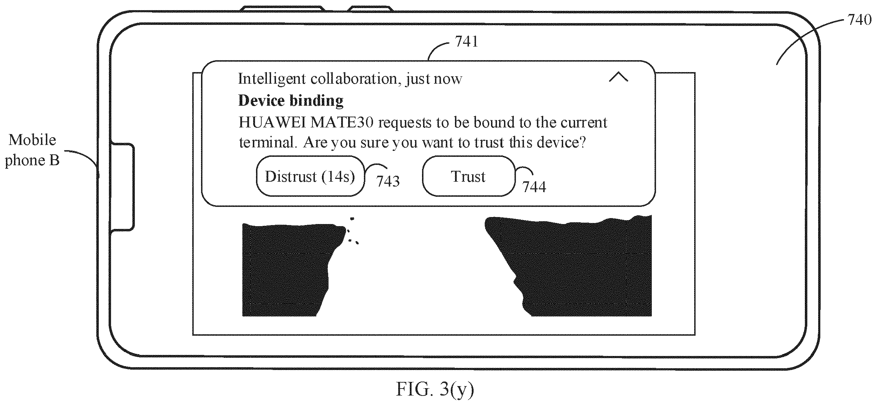

In some example embodiments, if the mobile phone B receives the binding request of the mobile phone A in video playing state or a game state, the mobile phone B may display a pop-up box 741 in a video interface or game interface 740 as shown in FIG. 3(x). The pop-up box 741 may prompt the user with a case in which an intelligent collaboration application receives a device binding request, and the device binding request may be specifically "HUAWEI MATE30 requests to be bound to the current terminal. Are you sure you want to trust this device?". In response to an operation that the user taps a drop-down control 742, as shown in FIG. 3(y), the pop-up box 741 may display more information, for example, may display a "Distrust" button 743 and a "Trust" button 744. A countdown (for example, 14s) may also be displayed in the "Distrust" button 743. If the user does not tap any button when the countdown ends, the pop-up box 741 may be automatically hidden. In response to an operation that the user taps the "Trust" button 744, the mobile phone A may perform an authentication process with the mobile phone B.

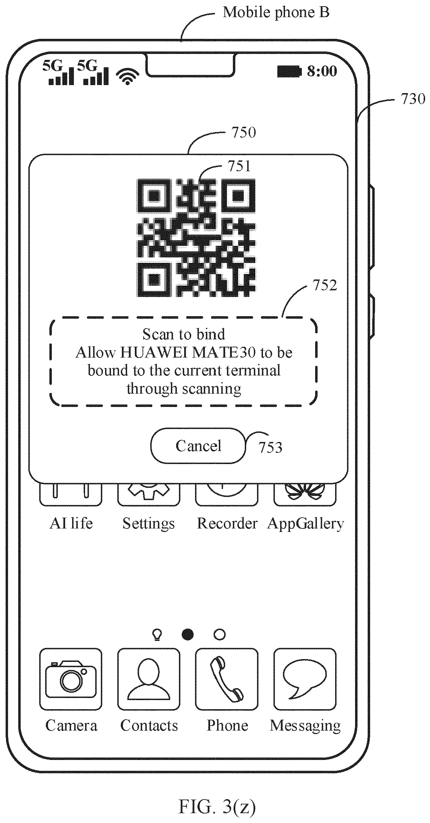

In some example embodiments, in response to an operation that the user taps the "Trust" button, as shown in FIG. 3(z), the mobile phone B may return to the home screen 730 and display a pop-up box 750. The pop-up box 750 may include a two-dimensional code 751 generated by the mobile phone B, and may further include prompt information 752 "Scan to bind. Allow HUAWEI MATE30 to be bound to the current terminal through scanning". In this case, a user of the mobile phone A may scan, by using the mobile phone A, a two-dimensional code displayed by the mobile phone B, so that the mobile phone A is bound to the mobile phone B. The pop-up box 750 may further include a "Cancel" button 753, and the pop-up box 750 may be hidden in response to an operation that the user taps the "Cancel" button 753.

In some example embodiments, if the mobile phone A and the mobile phone B log in to a same account (for example, a Huawei account), the mobile phone A may be directly bound to the mobile phone B. For example, a "Bind" button corresponding to the mobile phone B is directly tapped on the mobile phone A, without waiting the mobile phone B to provide confirmation.

It should be noted that, mutual communication between devices may be performed based on a same network; or based on a previous trusted relationship between devices, for example, a common account, an associated account, or a binding relationship; or based on a same network and a case in which the trusted relationship is established, to implement the solution in this embodiment of this application. This is not limited in this application.

For example, the first terminal, the second terminal, and the third terminal may be networked to form a local area network device group, and a plurality of devices in the local area network device group are trusted devices. In this case, a local area network device including the first terminal, the second terminal, and the third terminal may be referred to as "super device".

For another example, the first terminal, the second terminal, and the third terminal separately log in to a same account.

For another example, the first terminal, the second terminal, and the third terminal respectively log in to different accounts, but the three accounts are mutually trusted associated accounts, home accounts, or the like.

For still another example, at least one device in the first terminal, the second terminal, and the third terminal logs in to an account, at least one device has no account, and a device-level authentication relationship may also be established between a device with an account and a device without an account. A specific representation form in which a trusted relationship is established among the first terminal, the second terminal, and the third terminal is not limited in this application.

The recent task interface of the first terminal not only displays a recently used application of the first terminal, but also displays a recently used application of the second terminal and the third terminal. When a historical task card of another device is displayed in the recent task interface of the first terminal, identifiers of the first terminal and a plurality of terminals (including the second terminal and the third terminal) connected to the first terminal (for example, the plurality of terminals and the first terminal log in to a same account, are connected to a same Wi-Fi hotspot, or log in to an associated account) may be separately displayed in the recent task interface of the first terminal. When an identifier of the first terminal or an identifier of a terminal connected to the first terminal is selected, a recent task list corresponding to the terminal is correspondingly displayed in the recent task interface.

When a recently used application of the second terminal changes, the recent task list displayed in the recent task interface of the first terminal also needs to be updated. The following describes a method for updating a task interface of the first terminal.

For example, the user of the second terminal opens a clock application on the second terminal. In this case, for the second terminal, Clock becomes a recently used application of the second terminal. In the foregoing process, a listener of the task management module of the second terminal is registered in the distributed scheduling subsystem of the second terminal. Therefore, when the recently used application of the second terminal changes, the listener may obtain information about the change, and send the information to the distributed scheduling subsystem of the second terminal.

After obtaining information indicating that Clock becomes a recent application, a second distributed scheduling subsystem may further send the information to the distributed scheduling subsystem of the first terminal. After receiving the information, the distributed scheduling subsystem of the first terminal updates a cache of the recent task information, and notifies the global task center of the first terminal to obtain the updated recent task information. In this case, when the user of the first terminal browses the global task center of the first terminal, the user can see that the clock application is also added to the recent task list corresponding to the second terminal.

In a possible implementation, snapshot information and intent information that are related to the clock application may also be transmitted from the second terminal to the global task center of the first terminal. In the recent task interface of the first terminal, a task card corresponding to Clock displays a snapshot captured by the system when the application enters the background. In addition, when the task card corresponding to Clock is tapped, the clock application may be entered on the first terminal based on a state of using the clock application on the second terminal.

In some example embodiments, for some frequently used applications, if the application is opened on the second terminal at a high frequency, when the application is opened or enters the background each time, a location of the application in the recent task interface, snapshot information captured when the application enters the background, and intent information change. If all information related to the application needs to be transmitted from the second terminal to the first terminal, a large resource is consumed. In this case, the second terminal may obtain, through comparison each time the recent task information needs to be synchronized, information that needs to be transmitted at a current time and information that needs to be transmitted at a previous time, deduplicate, based on a deduplication algorithm, the information that needs to be transmitted, and transmit only changed recent task information to a distributed scheduling subsystem of a first device, to reduce an amount of data exchanged between the second terminal and the first terminal. For example, only task information whose field such as taskid, userid, windowmode, or displayid may be selected, and an isRunning field, or the like is not focused. For example, even if the isRunning field changes, the change is not notified or synchronized to the remote device. In this method, an amount of data that needs to be transmitted between the first device and the second device due to synchronization of the recent task information may be reduced, to save network resources.

The foregoing synchronization of the recent task information is described by using an example in which the second terminal automatically transmits the information to the first terminal in the background. In another possible implementation, when the listener of the second terminal learns that the recently used application of the second terminal changes, this part of the data is transmitted to the distributed scheduling subsystem of the second terminal. The recent task information of the second terminal may change frequently, and the user of the first terminal does not always query the recent task information of the second terminal in the recent task interface of the first terminal. Therefore, the distributed scheduling subsystem of the second terminal may temporarily not send this part of data to the first terminal. When the user of the first terminal operates the first terminal to enter the recent task interface or taps the identifier of the second terminal in the recent task interface, the global task center of the first terminal may be triggered to send a request to the distributed scheduling subsystem of the second terminal through the distributed scheduling subsystem of the first terminal, to request the second terminal to send latest recent task information to the first terminal. The second terminal executes the foregoing task information synchronization procedure, and sends currently obtained recent task information to the first terminal, so that the user of the first terminal can browse to the recent task information of the second terminal. In this case, the second terminal does not need to actively synchronize recent information to the first terminal. Instead, the recent task information is synchronized when a preset trigger condition occurs, for example, when the user of the first terminal operates the first terminal to enter the recent task interface or tap the identifier of the second terminal in the recent task interface. The user of the first terminal does not always need to learn of a recent task situation of the second terminal, and it usually does not need to take too much time to synchronize the recent task information. Therefore, when user experience is ensured, a quantity of times of synchronizing the recent task information of the first terminal and the second terminal is reduced, and an amount of data required for synchronization of the recent task information is reduced, to save network resources.

Whether the recent task information is automatically synchronized in the background or synchronization is triggered based on a preset condition may be preset by the first terminal and/or the second terminal. In other words, whether the recent task information is automatically synchronized in the background or synchronization is triggered based on the preset condition is determined after the first terminal is connected to the second terminal and this function is enabled. Alternatively, whether synchronization is automatically performed in the background or synchronization is triggered based on the preset condition may also be used as an option that may be set by the user, and the user may set, based on an actual use requirement or a state of the first terminal and/or the second terminal, a specific synchronization mode used by the first terminal and/or the second terminal.

When the user of the first terminal is using the first terminal, not only a recently used application of another terminal may be viewed in the recent task interface, but also an application run by the another terminal in the background may be cleared. For example, when the second terminal is currently playing music in the background, and the user of the first terminal expects that the second terminal can stop playing music, a music application of the second terminal may be conveniently cleared in the recent task interface of the first terminal according to the technical solution provided in this application. For example, the user of the first terminal may drag a card of the music application in the recent task list corresponding to the second terminal and slide up. After receiving an instruction of the user, the first terminal may send information about a to-be-cleared application to the distributed scheduling subsystem of the second terminal through the distributed scheduling subsystem of the first terminal. After receiving to-be-cleared task information, the distributed scheduling subsystem of the second terminal stops the music application, and sends feedback information to the distributed scheduling subsystem of the first terminal after the music application is stopped. The feedback information indicates that the music application of the second terminal is cleared. After receiving the feedback information, the distributed scheduling subsystem of the first terminal sends a notification to the global task center of the first terminal, to indicate the global task center to refresh the recent task interface. The music application is not displayed in the refreshed recent task interface, or is not displayed in the recent task list corresponding to the second terminal in the recent task interface.

When the user of the first terminal expects to clear all background applications of the second terminal, to reduce energy consumption of the second terminal and currently occupied processor and memory resources, an icon that indicates to clear all background applications may be tapped in the recent task interface. After the icon is tapped, the global task center of the first terminal sends a notification to the distributed scheduling subsystem of the second terminal through the distributed scheduling subsystem of the first terminal. The notification indicates the second terminal to clear all current background tasks. Feedback information is sent to the first terminal after clearing is completed, so that the global task center of the first terminal can refresh the recent task interface, and the user of the first terminal learns that the recently used background application of the second terminal is cleared.

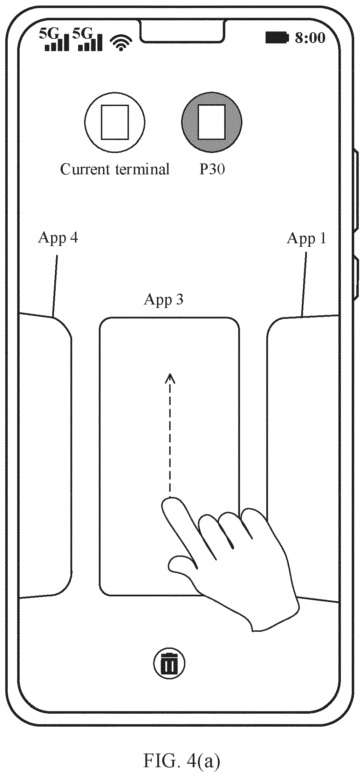

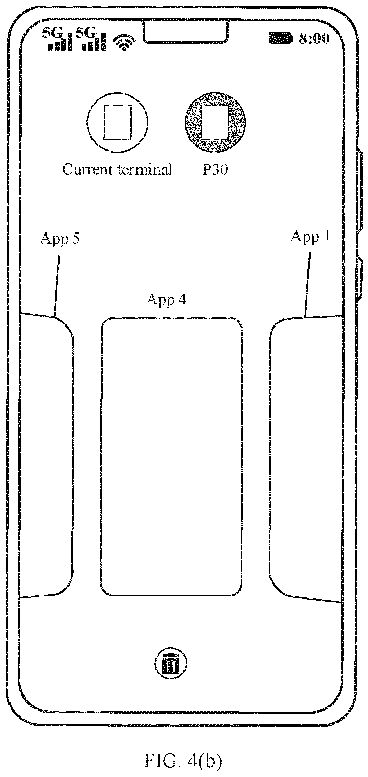

A manner of clearing the recently used application of the second terminal in the recent task interface of the first terminal is used as an example for description. For example, the second terminal (P30) recently runs the app 1, the app 3, the app 4, and the app 5. As shown in FIG. 4(a), the user may view, in the recent task interface of the first terminal, the recently run application of the second terminal. For example, when the user wants to clear the app 3, the user may make a slide-up gesture on a task card corresponding to the app 3. After receiving the instruction from the user, the first terminal may indicate the second terminal to clear the app 3. After clearing the app 3, the second terminal may send feedback information to the first terminal, to indicate that the app 3 is cleared. As shown in FIG. 4(b), after receiving the feedback information, the first terminal stops displaying the app 3 in the recent task interface, and displays the app 1, the app 4, and the app 5 other than the app 3.

In another possible implementation, recently used applications of all terminals are displayed together. In this case, when the user of the first terminal operates the first terminal to enter the recent task interface, each application in the displayed recent task list is a recently used application of one or more terminals in the network. Correspondingly, when the user wants to clear an application, it may mean that the user wants to clear the application on all terminals that recently use the application. For example, when the user slides up the task card of the application to indicate to clear the application, the first terminal obtains, based on information recorded in the global task center, information indicating specific terminals in the network that run a to-be-cleared application in the background. For example, when the user wants to clear a Taobao® application, the global task center determines, based on the recorded information, that the Taobao application is run in the background of the second terminal and the third terminal. In this case, the global task center of the first terminal may send a clearing request to each of the second terminal and the third terminal through the distributed scheduling subsystem of the first terminal. The clearing request indicates each of the second terminal and the third terminal to clear the Taobao application run in the background.

After the second terminal and the third terminal each clear all background applications, feedback information may be sent to the first terminal. In a possible implementation, the global task center of the first terminal receives feedback information of the second terminal, but has not received feedback information of the third terminal. In this case, because whether the third terminal has cleared a corresponding application is not determined, a task card of the Taobao application may continue to be retained in the recent task view. Optionally, when a corresponding identifier of a terminal is displayed around the task card, because the second terminal has cleared the Taobao application in the background, the identifier of the second terminal around the Taobao application may be removed, to notify the user that the second terminal has cleared the Taobao application in the background. Optionally, after the global task center of the first terminal subsequently receives the feedback information of the third terminal, because it is determined that all terminals running the Taobao application in the background have cleared the application, information about the Taobao application may be removed in the recent task interface of the first terminal.

The foregoing describes a case in which the first terminal needs to first establish a trusted relationship between the first terminal and another terminal when obtaining the recent task information of the another terminal in the network. In some example embodiments, after the first terminal obtains established permission to view and even clear a recently used application of the another terminal, an application for which the first terminal can obtain the permission may be limited, to prevent malware from using the permission to execute a behavior that is unfavorable to the user. For example, it may be set that only an application such as the global task center can be authorized to obtain the permission, and corresponding operations may be performed. In this case, after receiving a clearing instruction, the distributed scheduling subsystem of the first terminal may first perform permission verification, to determine whether the clearing instruction comes from an application that is authorized to obtain the permission. If it is determined that the clearing instruction comes from an authorized application, the clearing instruction may be forwarded to a distributed scheduling subsystem of a terminal corresponding to the clearing instruction. If it is determined that the clearing instruction does not come from the authorized application, the clearing instruction is discarded.

It should be understood that, the foregoing description of a permission verification method for an application is merely an example. In some example embodiments, whether an application may be authorized to obtain permission to view and/or clear a recently used application of another terminal may be preset by the first terminal, or may be set by the user of the first terminal.

Verification of whether an application that sends a clearing instruction has permission may be completed by the distributed scheduling subsystem of the first terminal, or may be completed by a distributed scheduling subsystem of the another terminal or another application on the first terminal. The foregoing manner is not limited in this application.

In some example embodiments, the first terminal not only may view or clear a recently used application of the another terminal, but also may migrate a recently used application of the another terminal to the first terminal, migrate a recently used application of the first terminal to the another terminal, or change an application run in the background to being run in the foreground.

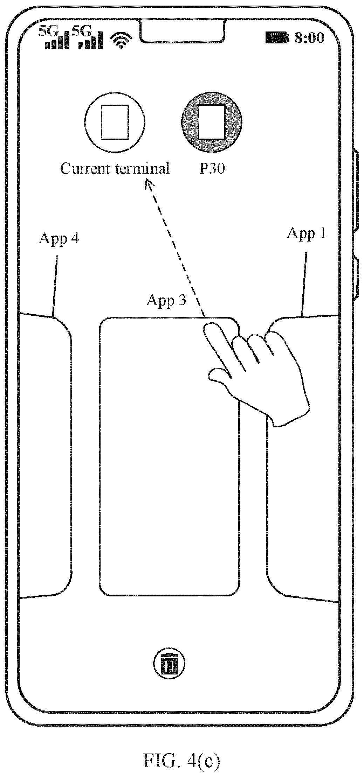

In some example embodiments, as shown in FIG. 4(c), the user of the first terminal opens the recent task interface of the first terminal, and the recent task interface of the first terminal is an interface that displays the recent task list of the second terminal (P30). Because information about the recently used application of the second terminal is sent to the first terminal, the user may migrate an application on the second terminal to the first terminal, and open the application on the first terminal.

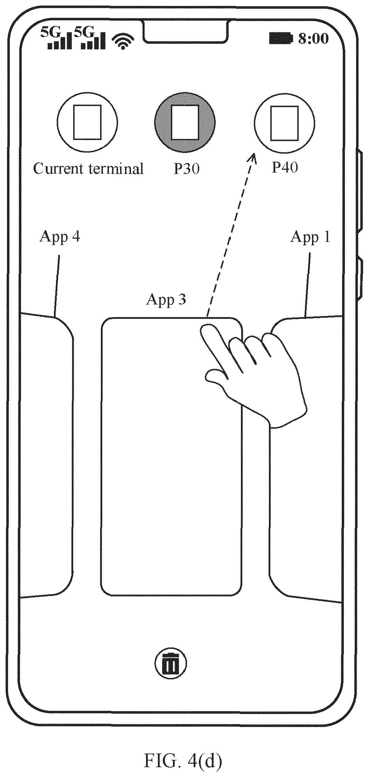

In some example embodiments, the user may drag a task card corresponding to the app 3 to an icon of "Current terminal", to indicate the first terminal to run the app 3. When the first terminal is connected to both the second terminal and the third terminal (P40), as shown in FIG. 4(d), the recent task interface of the first terminal displays icons respectively corresponding to the three terminals. In this case, the first terminal not only may migrate an application on the second terminal to the first terminal, but also may drag the task card corresponding to the app 3 to an icon of "P40", to indicate to migrate the app 3 to the third terminal.

Because the first terminal obtains state information of the recently used application of the another terminal, when an application on the second terminal is migrated to the first terminal or the third terminal, the first terminal or the third terminal may directly open an interface existing when the application enters the background for running on the second terminal. The state information of the application may further include the FA file. Even if the application is not installed on the first terminal or the third terminal, the application may be directly run based on the FA file.

In some embodiments, the first terminal may send page element information and a page resource of a to-be-shared page including an application to another device in a form of an FA file, and the another device may run the FA file by using an FA runtime module, to implement a migration of the application. The FA runtime module may convert source code into a user interface. Therefore, the FA file may be packaged and released independently, and have one or more capabilities in installation-free, off-application independent running, a cross-device UI migration, a cross-device binary migration, so that it is more convenient to share content across devices.

Optionally, migrating the application from the second terminal to the first terminal may be opening the application on the first terminal. In another possible implementation, migrating the application from the second terminal to the first terminal may be sending an interface of the application to the first terminal through projection. In this implementation, when a small amount of data is transmitted, the user of the first terminal can obtain information about an application run by the second terminal.

In some example embodiments, the user of the first terminal may further perform, in an interface of the recent task list of the second terminal, an operation such as tapping a task card corresponding to an application or dragging the task card to an icon of the second terminal in the interface, to indicate the second terminal to change the application being run in the background to being run in the foreground In response to this operation, the interface of the application may be displayed on a display of the second terminal, so that the application can be seen by the user.

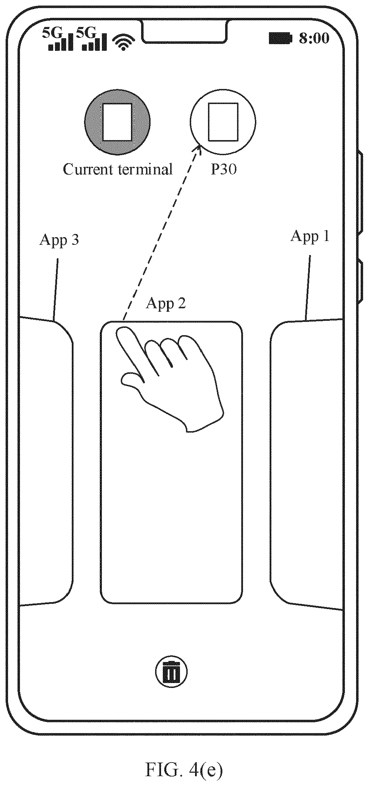

In some example embodiments, as shown in FIG. 4(e), the user of the first terminal opens the recent task interface of the first terminal, and the recent task interface of the first terminal is in an interface that displays the recent task list of the first terminal (current terminal). In the interface, the user may migrate a recently run application of the first terminal to another terminal. For example, the user may drag a task card corresponding to the app 2 to the icon corresponding to the second terminal, to send state information of the app 2 to the second terminal, and run the app 2 on the second terminal.

It should be noted that, a task card corresponding to an application is dragged to an icon of a terminal, to migrate the application to the terminal. This is only an example of an operation manner. This is not limited in this application. Actually, an application migration may alternatively be indicated in another manner. For example, an operation manner in which an option of migrating an application corresponding to a task card to another terminal may occur when the task card is touched and held in the recent task interface, or the like may be set.

Descriptions are provided by using an example in which the recent task information of the another terminal is viewed in this application. Actually, in this application, not only the recently used application of the another terminal may be viewed, but also other information about an application on the another terminal may be viewed, to implement more functions.

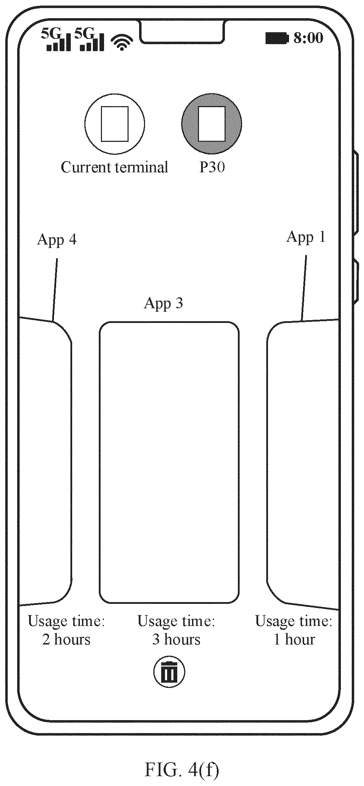

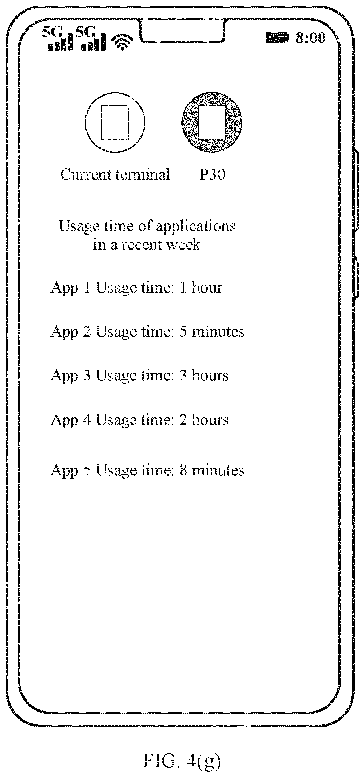

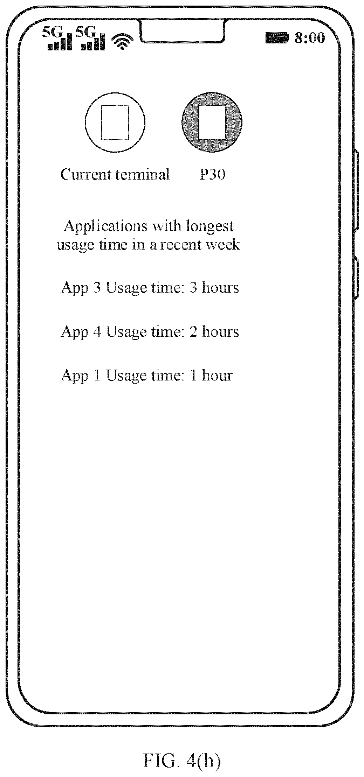

In some example embodiments, the first terminal may further obtain usage time information and/or use time quantity information of an application on the second terminal. Usage time herein may be total usage time of an application on the second terminal, or may be a time period of using an application by the second terminal in a preset time period, for example, a time period of using the application in a day or a week. A use frequency may be a total quantity of times that the second terminal opens an application, or may be a quantity of times that the second terminal opens the application in a preset time period. Optionally, the usage time is used as an example for description. As shown in FIG. 4(f), usage time of an application corresponding to a task card may be displayed next to the task card in the recent task interface. Alternatively, as shown in FIG. 4(g), usage time of an application on the second terminal may be displayed in another interface. To help the user of the first terminal more directly learn of a use situation of the application on the second terminal, data analyzed based on a preset rule may be further displayed on the first terminal. For example, as shown in FIG. 4(h), the user of the first terminal may indicate the first terminal to analyze the application on the second terminal based on usage duration and display identifiers of several applications with longest usage time on the second terminal and corresponding usage time. Optionally, a system of the first terminal or the user of the first terminal may set a quantity of applications that need to be displayed. For example, three applications with longest usage time and usage time of the three applications may be set. In this manner, the user of the first terminal not only may learn of a recently used application of the second terminal, but also may learn of an application with most usage time or a largest use time quantity of the second terminal, to better control a state of using an application on the second terminal.

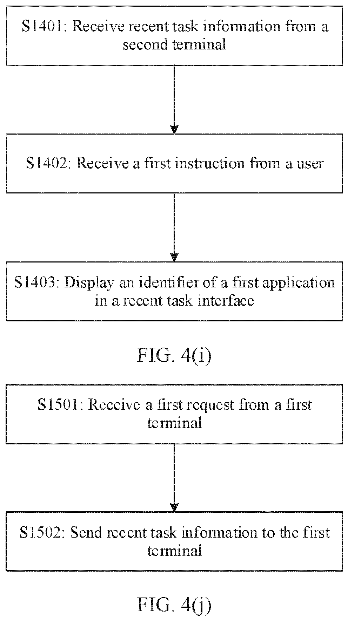

In some example embodiments, FIG. 4(i) is a schematic flowchart of an embodiment of this application.

As shown in FIG. 4(i), this embodiment includes the following steps.

S 1401: A first terminal receives recent task information from a second terminal.

As described above, after the first terminal and the second terminal are connected through a network, the first terminal may receive recent task information from the second terminal. The recent task information includes information about a first application recently run by the second terminal, and the information about the first application includes an identifier of the first application.

S1402: The first terminal receives a first instruction from a user.

After the first terminal obtains the recent task information of the second terminal, the user may send, to the first terminal, the first instruction for instructing the first terminal to open a recent task interface, so that a recently used application of the second terminal can be viewed in the recent task interface.

In a possible implementation, the recent task interface of the first terminal includes at least two controls, and the at least two controls include a first control corresponding to the first terminal and a second control corresponding to the second terminal. When a corresponding control is tapped, a recently used application of a corresponding terminal may be viewed.

In another possible implementation, a recently used application of the first terminal and the recently used application of the second terminal are both displayed in the recent task interface of the first terminal, without a need to tap a control to view a recently used application of a terminal.

The two implementations are examples. A presentation form of the recent task interface is not limited in this application.

S1403: The first terminal displays the identifier of the first application in the recent task interface.

When the recent task interface is entered, a screen of the first terminal displays the identifier of the first application recently used by the second terminal.

It should be understood that, a sequence of the steps is only a possible implementation, and is not limited in this application. For example, step S1402 may be performed before step S1401. To be specific, when receiving the first instruction or a second instruction from the user, the first terminal sends, to the second terminal, a first request that is used to request the recent task information of the second terminal, and then receives the recent task information from the second terminal.

Optionally, this embodiment may further include: The first terminal may further receive an instruction from the user for clearing the first application, and send a second request to the second terminal. The second request indicates the second terminal to clear the first application. After the second terminal clears the first application, the first terminal may further receive feedback information from the second terminal. The feedback information indicates that the first application needs to be cleared.

In the recent task interface of the first terminal, the user may further drag a task card corresponding to the first application to a preset location (for example, an identifier of the first terminal in the recent task interface), so that the first terminal runs the first application based on the information that is about the first application and that is received from the second terminal.

Because the recent task information that is of the second terminal and that is obtained by the first terminal is related to a privacy problem of the user of the second terminal, before the first terminal receives the recent task information of the second terminal, a trusted relationship may be first established between the first terminal and the second terminal.

FIG. 4(j) is a schematic flowchart of another embodiment of this application.

As shown in FIG. 4(j), this embodiment includes the following steps.

S1501: A second terminal receives a first request from a first terminal, where the first request is used to request recent task information of the second terminal, and the recent task information includes a recently used application of the second terminal.

S1502: Send the recent task information to the first terminal.

Optionally, the second terminal may further receive a second request from the first terminal. The second request indicates the second terminal to clear the application in the recent task information. In response to the second request, the second terminal clears a corresponding application, and sends feedback information to the first terminal. The feedback information indicates that the application is cleared.

In another embodiment of this application, the first terminal may further receive other task information from the second terminal, for example, information about an application of the second terminal that has longest running time in a preset time period, to better learn of a use situation of an application of the second terminal.

In some example embodiments, when a recent task interface of the first terminal displays a recently used application of another terminal (in other words, displays a recent task snapshot of the another terminal, or displays a recent task card, a historical task card, or the like of the another terminal), a task card of the another terminal may be laid out in the recent task interface of the first terminal based on a frequently used state of using the another terminal. For example, the frequently used state of using the another terminal includes landscape-mode use, portrait-mode use, unfolded-state portrait-mode use of a foldable screen, unfolded-state landscape-mode use of the foldable screen, folded-state landscape-mode use of the foldable screen, folded-state portrait-mode use of the foldable screen, and the like. Alternatively, the task card of the another terminal may be laid out in the recent task interface of the first terminal based on a state of using the another terminal by a single user. Alternatively, the task card of the another terminal may be laid out in the recent task interface of the first terminal based on a screen situation (for example, a size) and a use situation (for example, landscape-mode use or portrait-mode use) of the first terminal. Alternatively, the task card, or the like of the another terminal may be laid out in the recent task interface of the first terminal based on a setting of the user for the first terminal. This is not limited in this application.

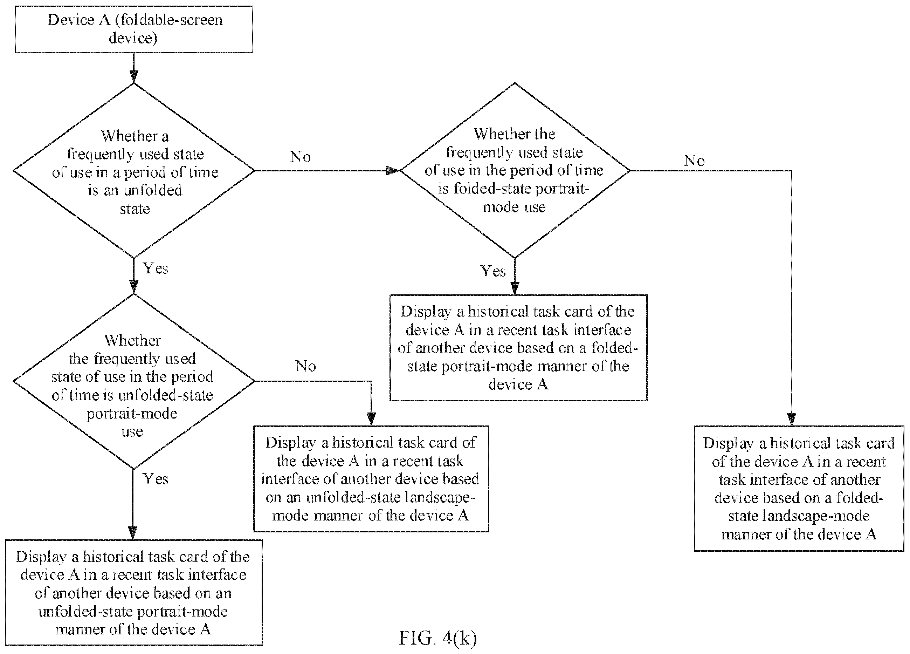

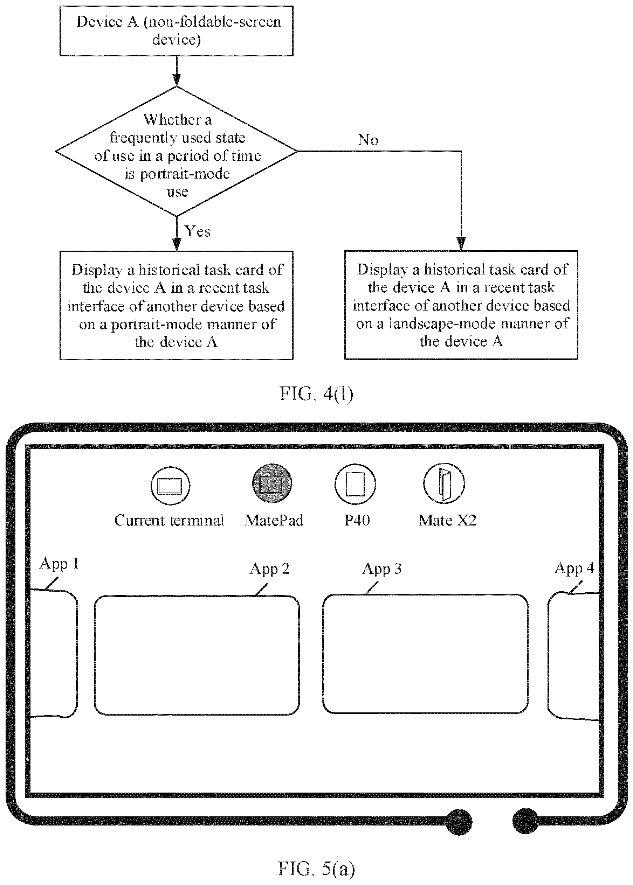

In some example embodiments, a situation of displaying and laying out a historical task card of a device A in a recent task interface of another device may be determined based on procedures shown in FIG. 4(k) and FIG. 4(l).

As shown in FIG. 4(k), if the device A is a foldable-screen device (for example, a foldable-screen mobile phone), whether a frequently used state of using the device A in a previous period of time is an unfolded state is determined; if the frequently used state of using the device A in the previous period of time is the unfolded state, whether the frequently used state of use in the period of time is unfolded-state portrait-mode use is further determined; and if the frequently used state of use in the period of time is unfolded-state portrait-mode use, the historical task card of the device A is displayed (or laid out) in the recent task interface of the another device based on an unfolded-state portrait-mode manner of the device A. If the frequently used state of use is unfolded-state landscape-mode use, the historical task card of the device A is displayed in the recent task interface of the another device based on an unfolded-state landscape-mode manner of the device A.

If the frequently used state of use is a folded state, whether the frequently used state of use is folded-state portrait-mode use in the period of time is further determined; and if the frequently used state of use is folded-state portrait-mode use in the period of time, the historical task card of the device A is displayed in the recent task interface of the another device based on a folded-state portrait-mode manner of the device A. If the frequently used state of use is folded-state landscape-mode use, the historical task card of the device A is displayed in the recent task interface of the another device based on a folded-state landscape-mode manner of the device A.

As shown in FIG. 4(I), if the device A is a non-foldable-screen device (for example, a non-foldable-screen mobile phone or tablet computer), whether a frequently used state of using the device A in a previous period of time is a portrait-mode manner is determined; and if the frequently used state of using the device A in the previous period of time is the portrait-mode manner, the historical task card of the device A is displayed in the recent task interface of the another device based on the portrait-mode manner of the device A. If the frequently used state of use is landscape-mode use, the historical task card of the device A is displayed in the recent task interface of the another device based on a landscape-mode manner of the device A.

It should be understood that, in determining steps shown in FIG. 4(k) and FIG. 4(I), any branch step may be separately performed, and determining does not need to be sequentially performed based on all steps shown in FIG. 4(k) or FIG. 4(I). In other words, in the determining steps shown in FIG. 4(k) and FIG. 4(I), any step may be an independent solution.

In some example embodiments, when a task card of a first terminal and a task card of another device are displayed on the first terminal, a user may further select a task card layout. After the user selects a layout, the first terminal may display the task card of the first terminal and the task card of the another device on the first terminal in a form of the layout selected by the user. For example, forms of layouts that may be selected by the user includes a horizontal list mode (List), a grid mode (Grid), a stack mode (Stack), a vertical list mode (Vertical list), a slim list mode (Slim list), and the like. This is not limited in this application.

The following separately provides descriptions with reference to different examples. It should be understood that, the following examples in FIG. 5(a) to FIG. 6(e) may be a part of the flowchart shown in FIG. 4(k) or FIG. 4(I), or may be independent solutions. This is not limited in this embodiment of this application.

Example 1: It is assumed that a first terminal is a tablet computer, a second terminal is another tablet computer, a third terminal is a non-foldable-screen mobile phone, and a fourth terminal is a foldable-screen mobile phone.

In some example embodiments, FIG. 5(a) is a schematic diagram of displaying a historical task card of a second terminal in a recent task interface of a first terminal (a current terminal). As shown in FIG. 5(a), a layout of the historical task card that is of the second terminal and that is displayed in the recent task interface of the first terminal is displayed as a multi-task layout based on landscape-mode use of the second terminal. In FIG. 5(a), identifiers (icon) of the first terminal and a plurality of terminals connected to the first terminal (for example, the plurality of terminals and the first terminal log in to a same account, are connected to a same Wi-Fi hotspot, or log in to an associated account) are separately displayed in the recent task interface of the first terminal. When an identifier of the first terminal or an identifier of a terminal connected to the first terminal is selected, a historical task card corresponding to the terminal is correspondingly displayed in the recent task interface. As shown in FIG. 5(a), when the first terminal receives an instruction of a user, so that an identifier of the second terminal (MatePad) is selected, the historical task card of the second terminal is displayed in the recent task interface of the first terminal. When the historical task card of the second terminal (MatePad) is displayed in the recent task interface of the first terminal (the current terminal), the historical task card of the second terminal is displayed in a single row based on landscape-mode use of the second terminal (MatePad). In this implementation, when a historical task card of a tablet computer is displayed in a recent task interface of another tablet computer, a landscape-mode historical task card of the tablet computer is displayed in a single row based on landscape-mode use of the tablet computer. This conforms to a use habit of the user for the tablet computer and a normal display rule of the tablet computer, and is friendly to the user, to improve user experience. It should be further understood that, a solution shown in FIG. 5(a) may be an independent solution.

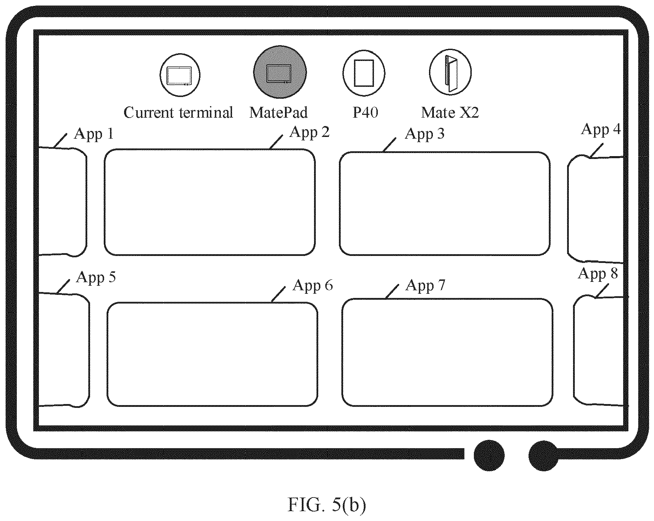

In a possible implementation, as shown in FIG. 5(b), when a historical task card of the second terminal (MatePad) is displayed in a recent task interface of the first terminal (a current terminal), the historical task card of the second terminal may be displayed in two rows based on landscape-mode use of the second terminal (MatePad). In this implementation, when a historical task card of a tablet computer is displayed in a recent task interface of another tablet computer, the historical task card of the second terminal is displayed in two or more rows (for example, three rows) based on landscape-mode use of the tablet computer. This conforms to a use habit of the user for the tablet computer and a normal display rule of the tablet computer, and is friendly to the user, to improve user experience. It should be further understood that, a solution shown in FIG. 5(b) may be an independent solution.

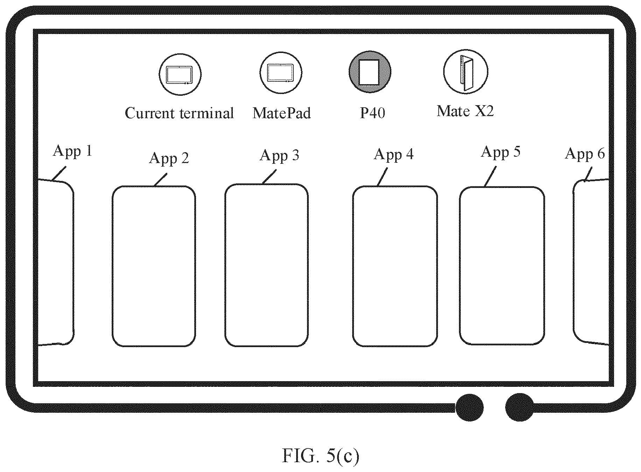

In a possible implementation, FIG. 5(c) is a schematic diagram of displaying a historical task card of a third terminal (P40) in a recent task interface of a first terminal (a current terminal). As shown in FIG. 5(c), when the historical task card of the third terminal (P40) is displayed on the first terminal (the current terminal), the historical task card of the third terminal is displayed based on portrait-mode use of the third terminal (P40). In this implementation, when a historical task card of a non-foldable-screen mobile phone is displayed in a recent task interface of a tablet computer, the historical task card of the non-foldable-screen mobile phone is displayed based on portrait-mode use of the non-foldable-screen mobile phone. This conforms to a use habit of the user for the non-foldable-screen mobile phone and a normal display rule of the tablet computer, and is friendly to the user, to improve user experience. It should be further understood that, a solution shown in FIG. 5(c) may be an independent solution.

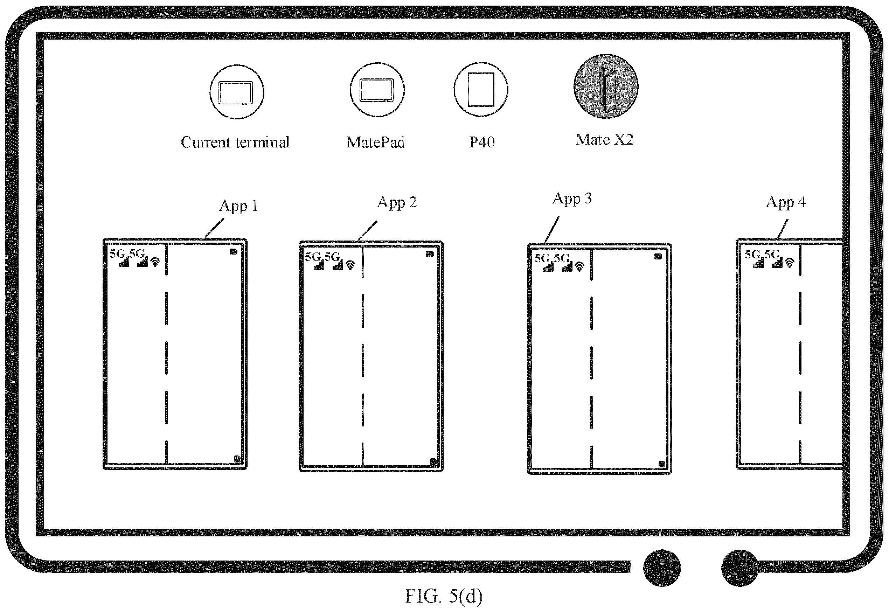

In a possible implementation, FIG. 5(d) is a schematic diagram of displaying a historical task card of a fourth terminal (Mate X2) in a recent task interface of a first terminal (a current terminal). The fourth terminal (Mate X2) is a foldable-screen device. Therefore, in a possible implementation, as shown in FIG. 5(d), when a historical task card of the fourth terminal (Mate X2) is displayed on the first terminal (the current terminal), the historical task card of the fourth terminal is displayed in a single row based on unfolded-state portrait-mode use of a foldable screen of the fourth terminal (Mate X2). Optionally, in another possible implementation, if a screen of the first terminal (the current terminal) is high, the historical task card of the fourth terminal may be displayed in a plurality of rows based on unfolded-state portrait-mode use of a foldable screen of the fourth terminal (Mate X2). In this implementation, when a historical task card of a foldable-screen mobile phone is displayed in a recent task interface of a tablet computer, the historical task card of the foldable-screen mobile phone is displayed based on unfolded-state portrait-mode use of the foldable-screen mobile phone. This conforms to a use habit of the user for the foldable-screen mobile phone and a normal display rule of the tablet computer, and is friendly to the user, to improve user experience. It should be further understood that, a solution shown in FIG. 5(d) may be an independent solution.

Example 2: It is assumed that a first terminal is a non-foldable-screen mobile phone, a second terminal is a tablet computer, and a third terminal is a foldable-screen mobile phone.

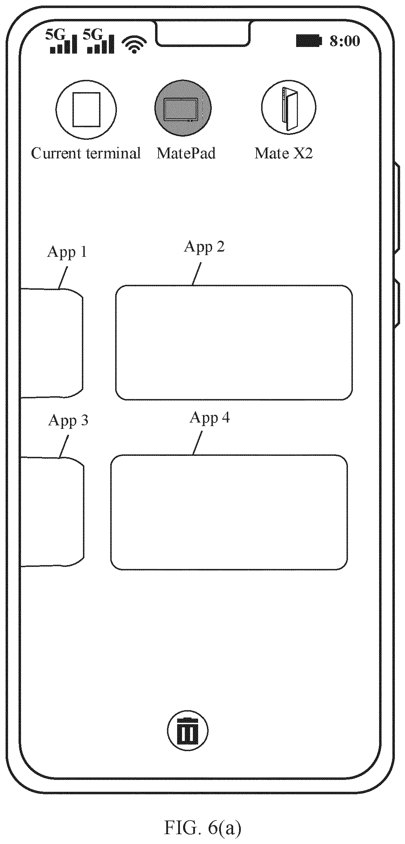

In some example embodiments, FIG. 6(a) is a schematic diagram of displaying a historical task card of a second terminal (MatePad) in a recent task interface of a first terminal (a current terminal). As shown in FIG. 6(a), when the historical task card of the second terminal (MatePad) is displayed on the first terminal (the current terminal), the historical task card of the second terminal is displayed in two rows based on landscape-mode use of the second terminal (MatePad). Optionally, when the historical task card of the second terminal (MatePad) is displayed on the first terminal (the current terminal), the historical task card of the second terminal may alternatively be displayed in one row based on landscape-mode use of the second terminal (MatePad). In this implementation, when a historical task card of a tablet computer is displayed in a recent task interface of a non-foldable-screen mobile phone, the historical task card of the tablet computer is displayed in two rows or a single row based on unfolded-state landscape-mode use of the tablet computer. This conforms to a use habit of the user for the tablet computer and a normal display rule of the foldable-screen mobile phone, and is friendly to the user, to improve user experience. It should be further understood that, a solution shown in FIG. 6(a) may be an independent solution.

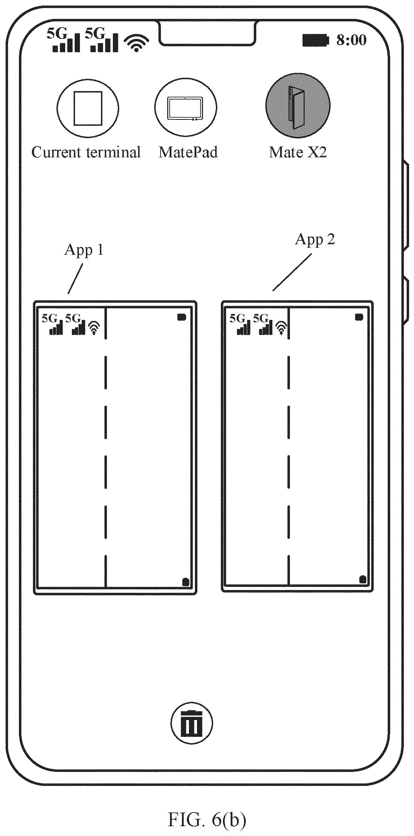

In a possible implementation, FIG. 6(b) is a schematic diagram of displaying a historical task card of a third terminal (Mate X2) in a recent task interface of a first terminal. The third terminal (Mate X2) is a foldable-screen device. Therefore, in a possible implementation, as shown in FIG. 6(b), when the historical task card of the third terminal (Mate X2) is displayed on the first terminal (a current terminal), the historical task card of the third terminal is displayed in a single row based on unfolded-state portrait-mode use of the third terminal (Mate X2). Optionally, if a screen of the first terminal (the current terminal) is high, the historical task card of the third terminal may be displayed in a plurality of rows based on unfolded-state portrait-mode use of the third terminal (Mate X2).

Example 3: It is assumed that a first terminal is a non-foldable-screen mobile phone, a second terminal is a tablet computer, and a third terminal is a foldable-screen mobile phone. In addition, the first terminal is in a landscape-mode display state. In this implementation, when a historical task card of a foldable-screen mobile phone is displayed in a recent task interface of a non-foldable-screen mobile phone, the historical task card of the foldable-screen mobile phone is displayed in a single row based on unfolded-state portrait-mode use of the foldable-screen mobile phone. This conforms to a use habit of the user for the foldable-screen mobile phone and a normal display rule of the non-foldable-screen mobile phone, and is friendly to the user, to improve user experience. It should be further understood that, a solution shown in FIG. 6(b) may be an independent solution.

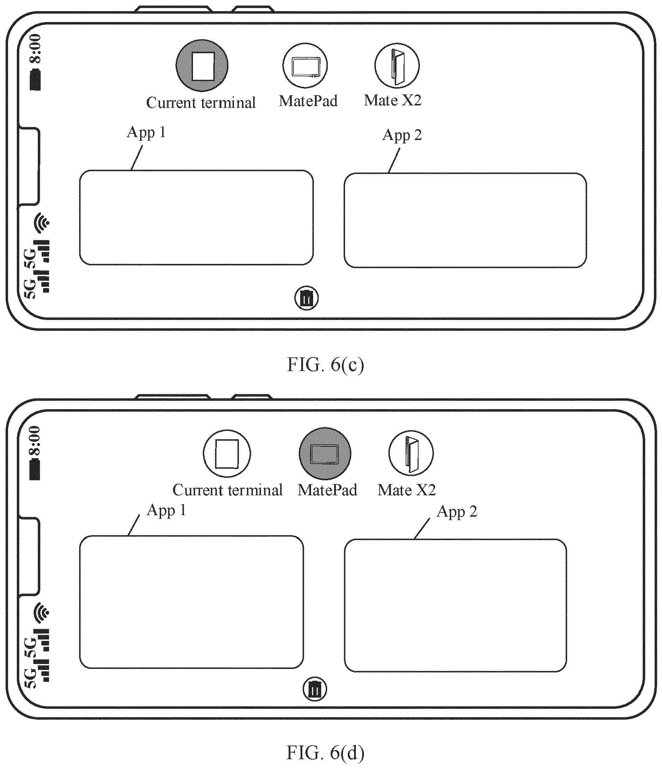

In some example embodiments, FIG. 6(c) is a schematic diagram of displaying a historical task card of a first terminal (for example, P40) in a recent task interface of the first terminal (a current terminal). As shown in FIG. 6(c), because the first terminal is displayed in landscape mode, the historical task card of the first terminal (the current terminal) is displayed based on landscape-mode use of the first terminal (the current terminal).

In a possible implementation, FIG. 6(d) is a schematic diagram of displaying a historical task card of a second terminal (MatePad) in a recent task interface of a first terminal (a current terminal). As shown in FIG. 6(d), because the first terminal is displayed in landscape mode, the historical task card of the second terminal (MatePad) is displayed based on landscape-mode use of the first terminal (the current terminal).

Optionally, in the implementations shown in FIG. 6(c) and FIG. 6(d), when a historical task card of a non-foldable-screen mobile phone is displayed in a recent task interface of the non-foldable-screen mobile phone, the historical task card of the non-foldable-screen mobile phone is displayed (landscape-mode use, landscape-mode display; portrait-mode use, portrait-mode display) on the non-foldable-screen mobile phone based on a state (landscape-mode display or portrait-mode display) of using the non-foldable-screen mobile phone. This adapts to different use habits of a user. A task card of the non-foldable-screen mobile phone is displayed to the user without requiring the user to switch between a landscape mode and a portrait mode, to improve user experience. It should be further understood that, solutions shown in FIG. 6(c) and FIG. 6(d) may be independent solutions.

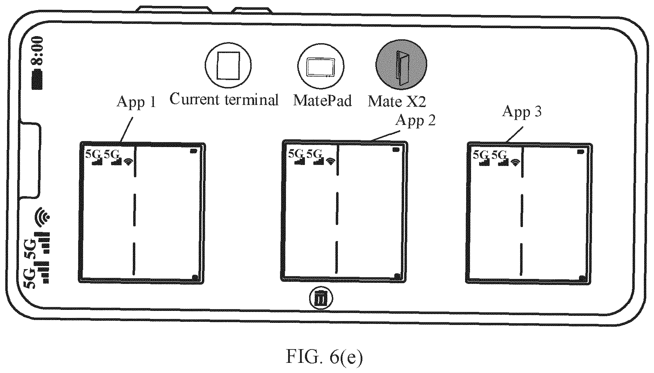

In a possible implementation, FIG. 6(e) is a schematic diagram of displaying a historical task card of a third terminal (Mate X2) in a recent task interface of a first terminal (a current terminal). As shown in FIG. 6(e), because the first terminal is displayed in landscape mode, the historical task card of the third terminal (Mate X2) is displayed based on landscape-mode use of the first terminal (the current terminal), and the historical task card of the third terminal (Mate X2) is displayed in a single row based on unfolded-state portrait-mode use of a foldable screen. Optionally, the historical task card of the third terminal (Mate X2) may alternatively be displayed based on folded-state portrait-mode use of a foldable screen, or folded-state landscape-mode use of a foldable screen, or unfolded-state landscape-mode use. This is not limited in this application.

In the implementation shown in FIG. 6(e), when a historical task card of a foldable-screen mobile phone is displayed in a recent task interface of a non-foldable-screen mobile phone, a task card of the foldable-screen mobile phone is displayed based on a state (landscape-mode use or portrait-mode use) of using the non-foldable-screen mobile phone by the user, and based on unfolded-state portrait-mode use of a foldable screen of the foldable-screen mobile phone or folded-state portrait-mode use of a foldable screen. This adapts to different use habits of a user. A historical task card of the foldable-screen mobile phone is displayed based on a frequently used state of using the foldable-screen mobile phone by the user, without requiring the user to switch between a landscape mode and a portrait mode, to improve user experience. It should be further understood that, a solution shown in FIG. 6(e) may be an independent solution.

It should be understood that, the foregoing examples are merely examples, and should not impose any limitation on a layout of a historical task card that is of another device and that is displayed in a recent task interface of a current device in this application. In another embodiment of this application, a layout different from that in the foregoing examples may alternatively be used for display. This is not limited in this application.

In this embodiment of this application, when a historical task card of another device is displayed in a recent task interface of a first terminal (a current terminal or a local device), one or more last historical task cards of the another device may display a home screen snapshot (or a foreground home screen snapshot) of the device; or display a home screen snapshot of the device and a floating bubble; display a home screen snapshot of the device and a floating window; or display a home screen snapshot of the device. The home screen snapshot displays a task card; or displays a remote control that controls the device; or displays an ongoing (OnGoing) task of the device, or the like. The following provides descriptions with reference to specific examples.

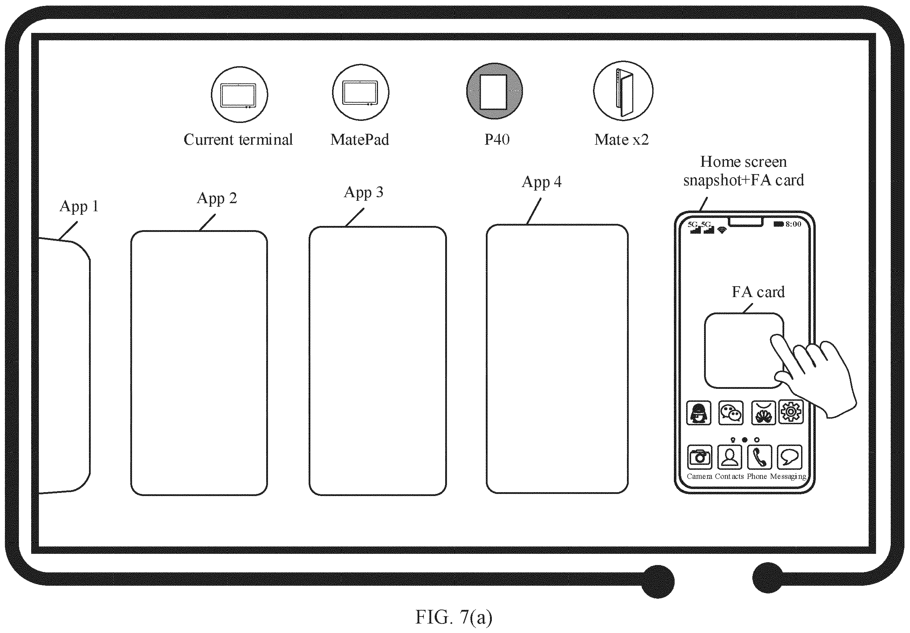

Example 4: It is assumed that a first terminal (a current terminal) is a tablet computer. FIG. 7(a) is a schematic diagram of viewing a historical task card of a non-foldable-screen mobile phone (P40) in a recent task interface of a first terminal. As shown in FIG. 7(a), a last task card in the historical task card of the mobile phone P40 displays a home screen snapshot of the mobile phone P40, and a feature ability (feature ability, FA) card may further exist on the home screen snapshot. The FA card may be a card corresponding to an application or a task. A user may tap "FA card" on the home screen snapshot of the mobile phone P40. In a possible implementation, after the FA card is tapped, an application or a task corresponding to the FA card is displayed on a screen of the first terminal. In other words, the application or the task corresponding to the FA card is opened on the first terminal. Alternatively, in another possible implementation, after the FA card is tapped, the home screen of the mobile phone P40 is displayed on a screen of the first terminal, and the FA card is displayed on the home screen of the mobile phone P40. The user may tap the FA card, and an application or a task corresponding to the FA card is displayed on the screen of the first terminal.

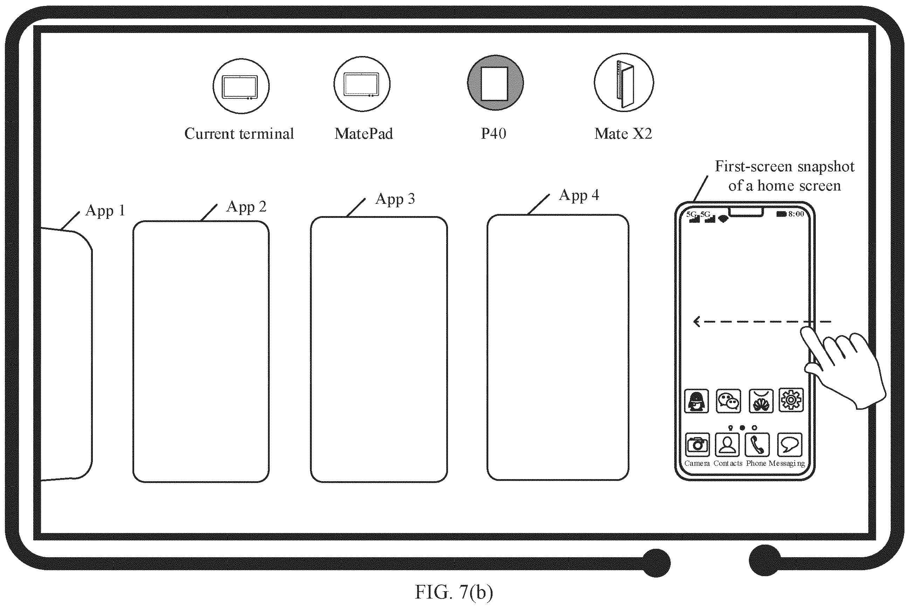

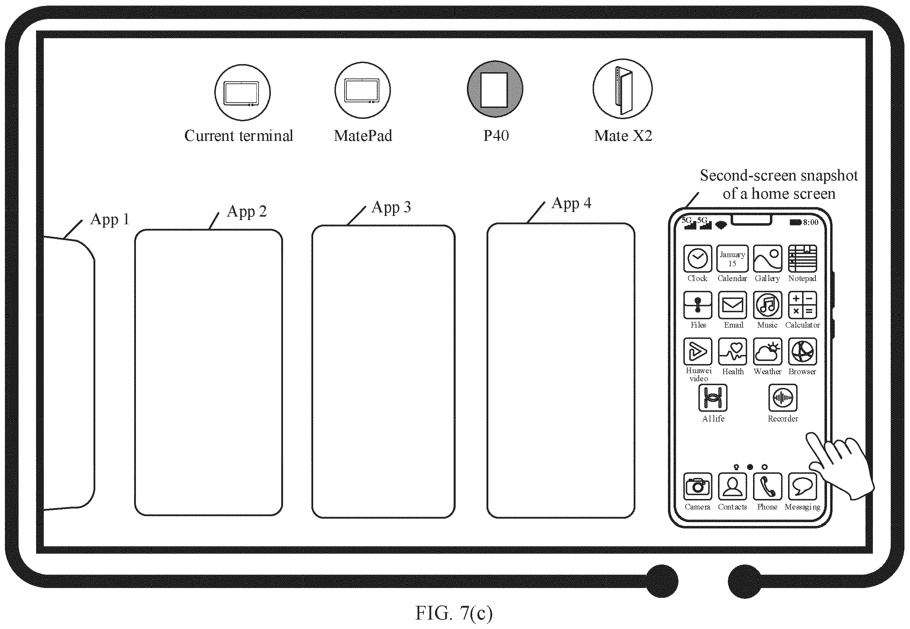

Example 5: It is assumed that a first terminal (a current terminal) is a tablet computer. FIG. 7(b) is a schematic diagram of viewing a historical task card of a non-foldable-screen mobile phone (a mobile phone P40) in a recent task interface of a first terminal. As shown in FIG. 7(b), last several task cards in the historical task card of the mobile phone P40 each display a first-screen snapshot of a home screen of the mobile phone P40. When a user may make a slide-left gesture on the first-screen snapshot of the home screen of the mobile phone P40, a last task card in the recent task interface of the first terminal is switched to a second-screen snapshot of the home screen of the mobile phone P40, as shown in FIG. 7(c). Optionally, the user may tap the first-screen snapshot of the home screen or the second-screen snapshot of the home screen of the mobile phone P40, and the first-screen snapshot of the home screen or the second-screen snapshot of the home screen of the mobile phone P40 is displayed on the first terminal. The user may tap an application icon on a home screen snapshot on the first-screen snapshot or the second-screen snapshot of the home screen of the mobile phone P40, to open the application on the first terminal. Alternatively, in another possible implementation, as shown in FIG. 7(c), the user may tap a blank region on the first-screen snapshot or the second-screen snapshot of the home screen of the mobile phone P40 (a region other than an application icon on a home screen snapshot). After the user taps the blank region, a first-screen interface or a second-screen home screen of the home screen of the mobile phone P40 is displayed on a screen of the first terminal. The user may tap an application icon of the mobile phone P40 on the home screen, to open the application on the current terminal.

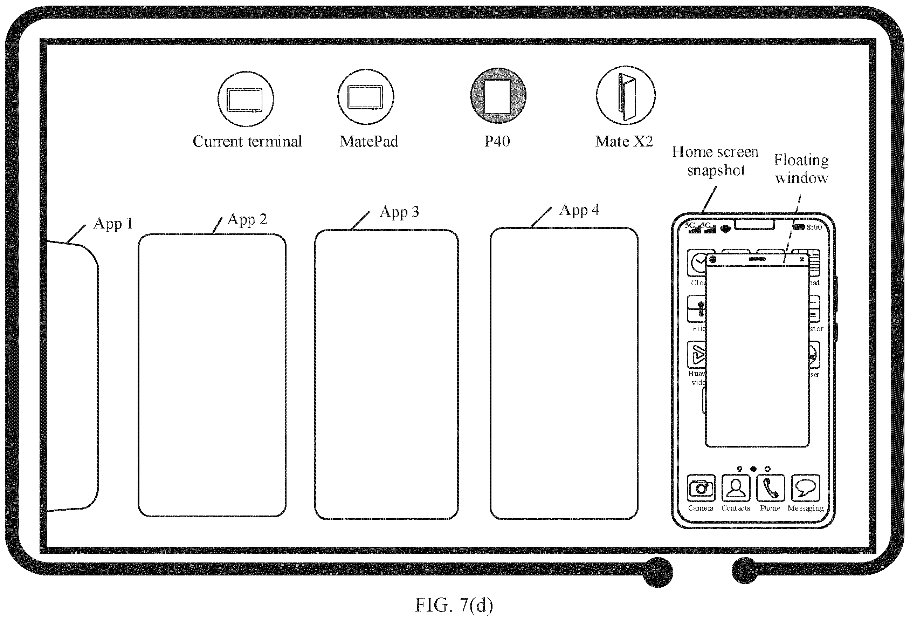

Example 6: It is assumed that a first terminal (a current terminal) is a tablet computer. FIG. 7(d) is a schematic diagram of viewing a historical task card of a nonfoldable-screen mobile phone (for example, P40) in a recent task interface of a first terminal. As shown in FIG. 7(d), a last task card in the historical task card of the mobile phone P40 displays a home screen snapshot of the mobile phone P40, and the home screen snapshot of the mobile phone P40 displays a floating window of a task or an application. Optionally, a user may tap the floating window on the home screen snapshot of the mobile phone P40, and tap the floating window. In a possible implementation, an application or a task corresponding to the floating window is displayed on the first terminal. In other words, the application or the task corresponding to the floating window is opened on the first terminal. Alternatively, in another possible implementation, after the floating window is tapped, an interface of a home screen of P40 is displayed on the first terminal. Optionally, the floating window exists in the interface of the home screen of P40. After the user taps the floating window on the home screen of P40, the application or the task corresponding to the floating window is opened on the first terminal.

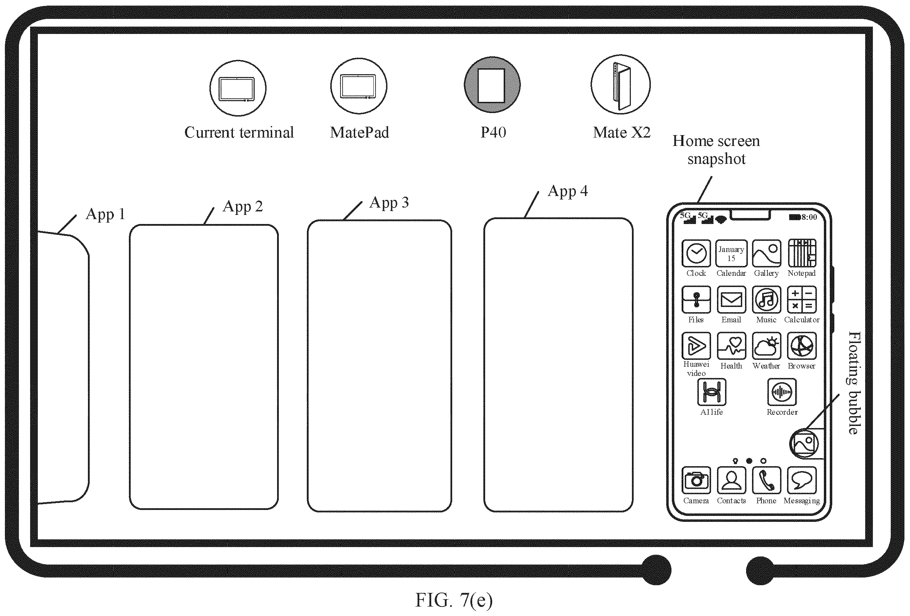

Example 7: It is assumed that a first terminal (a current terminal) is a tablet computer. FIG. 7(e) is a schematic diagram of viewing a historical task card of a nonfoldable-screen mobile phone (for example, P40) in a recent task interface of a first terminal. As shown in FIG. 7(e), a last task card in the historical task card of the mobile phone P40 displays a home screen snapshot of the mobile phone P40, and the home screen snapshot of the mobile phone P40 displays a floating bubble of a task or an application. Optionally, a user may tap the floating bubble on the home screen snapshot of the mobile phone P40. In a possible implementation, after the floating bubble is tapped, the application or the task corresponding to the floating bubble is displayed (for example, displayed in full screen or in a form of the floating window) on the first terminal. In other words, the application or the task corresponding to the floating bubble is opened on the first terminal. Alternatively, in another possible implementation, after the user taps the floating bubble, a home screen of P40 is displayed on the first terminal. Optionally, the floating bubble exists in an interface of the home screen of P40. After the user taps the floating bubble on the home screen of P40, the application or the task corresponding to the floating bubble is opened on the first terminal.

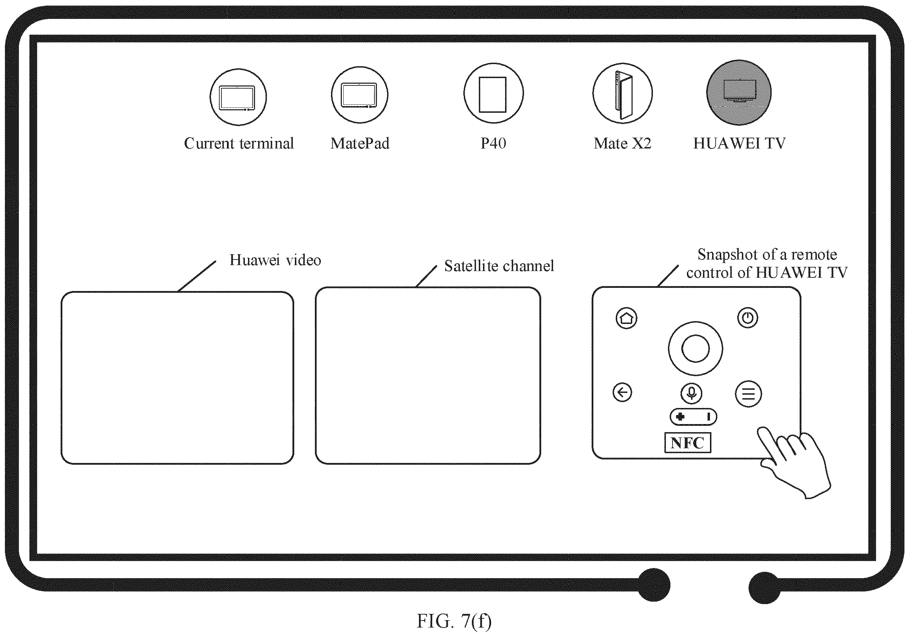

Example 8: It is assumed that a first terminal (a current terminal) is a tablet computer. FIG. 7(f) is a schematic diagram of viewing a historical task card of a large-screen device (HUAWEI TV) in a recent task interface of a first terminal. As shown in FIG. 7(f), a last task card in the historical task card of the large-screen device displays a snapshot of a remote control of the large-screen device. Optionally, as shown in FIG. 7(f), a user may tap a blank region (a region outside a control button on the snapshot of the remote control) on the snapshot of the remote control of the large-screen device. After the user taps the blank region, details of the remote control of the large-screen device are displayed on the first terminal. The user may directly control the large-screen device through the remote control of the large-screen device on the first terminal. Alternatively, the user may directly tap, on the snapshot of the remote control of the large-screen device, the control button on the snapshot of the remote control, to control the large-screen device.

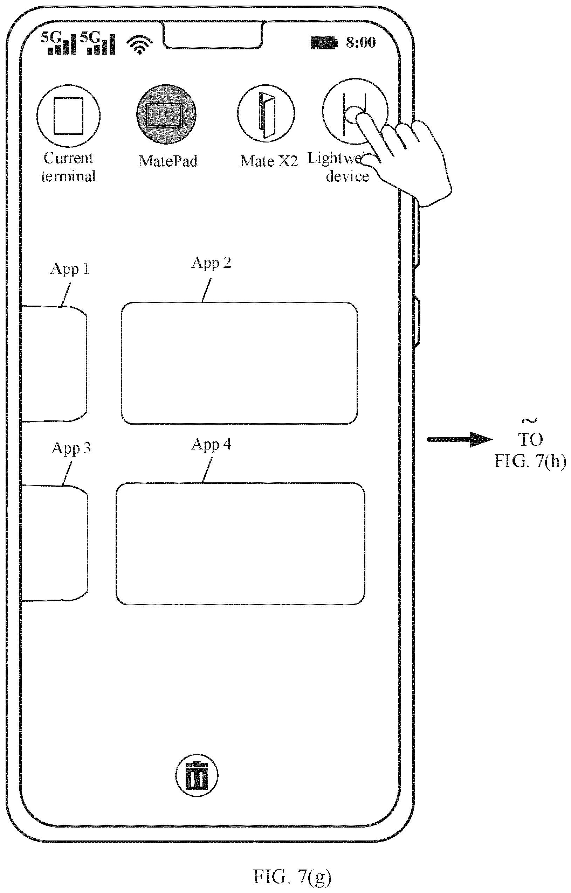

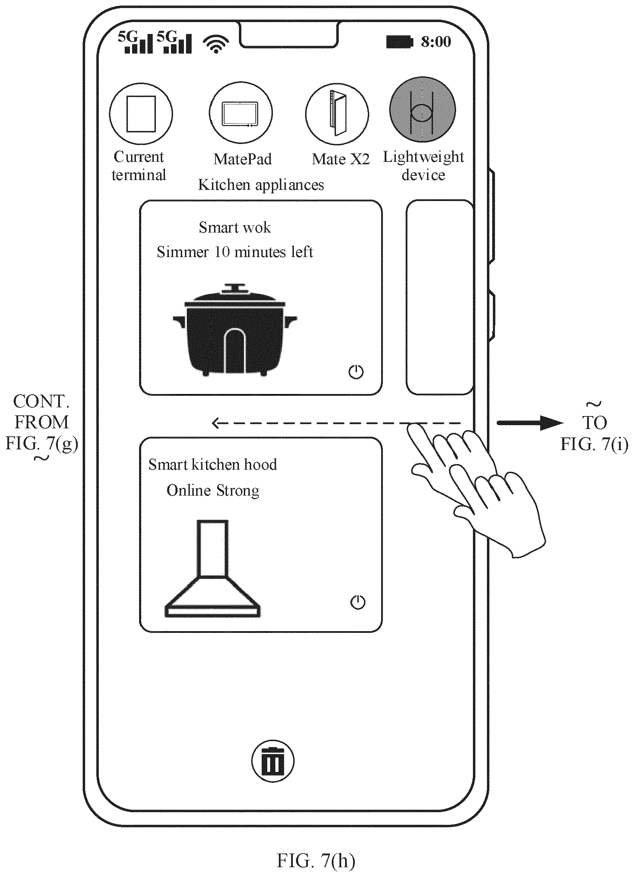

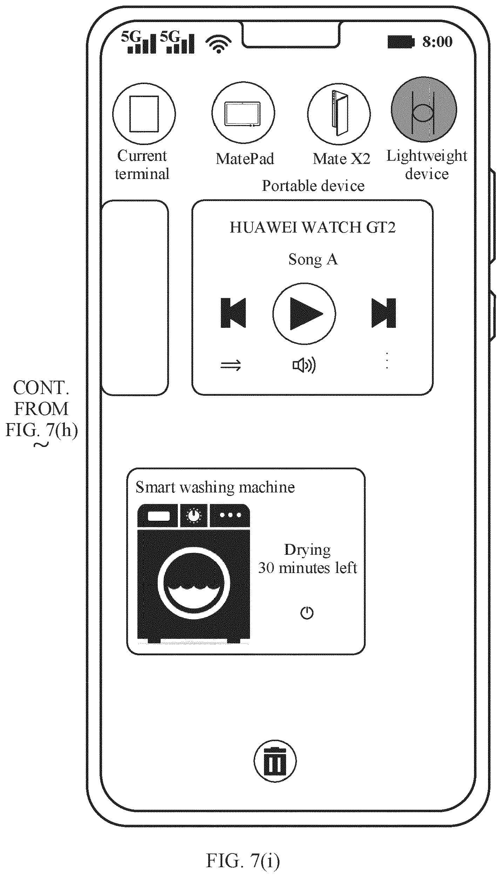

Example 9: It is assumed that a first terminal (a current terminal) is a mobile phone. FIG. 7(g) is a schematic diagram of viewing historical task cards of a plurality of other devices in a recent task interface of a first terminal. Optionally, an icon (icon) of one device (for example, a last device) in the plurality of devices is an icon of a device of a lightweight device type. A lightweight device is a general term of devices such as an internet of things (internet of things, IOT) device, a wearable device, and a smart home device. For example, the lightweight device may include a smart refrigerator, a smart air conditioner, a smart wok, a smart kitchen hood, a smart sound box, a smartwatch, and the like. After a user may tap an icon of "Lightweight device" in FIG. 7(g), as shown in FIG. 7(h), task cards corresponding to ongoing (OnGoing) tasks of these lightweight devices (kitchen appliances) may be displayed on one or more task cards in the recent task interface of the first terminal. When the user makes a slide-left gesture on the task card of the lightweight device in FIG. 7(h), as shown in FIG. 7(i), a task card in the recent task interface of the first terminal displays a task card of another lightweight device (for example, a portable device).

In examples shown in FIG. 7(g) to FIG. 7(i), all lightweight devices are integrated together, and all the lightweight devices are displayed by using one icon of "Lightweight device" at the top of the screen. In some other embodiments of this application, each lightweight device may alternatively correspond to a device icon of the lightweight device, and the device icon is displayed at the top of the screen. In other words, one lightweight device corresponds to one device icon. Alternatively, a lightweight device may be classified. One type of lightweight device corresponds to one icon. For example, a plurality of lightweight devices of a kitchen type correspond to one device icon, and a plurality of lightweight devices of a living room use type correspond to one device icon. Alternatively, the user may independently provide a setting, so that one or several lightweight devices jointly correspond to one device icon, or the like. This is not limited in this application.

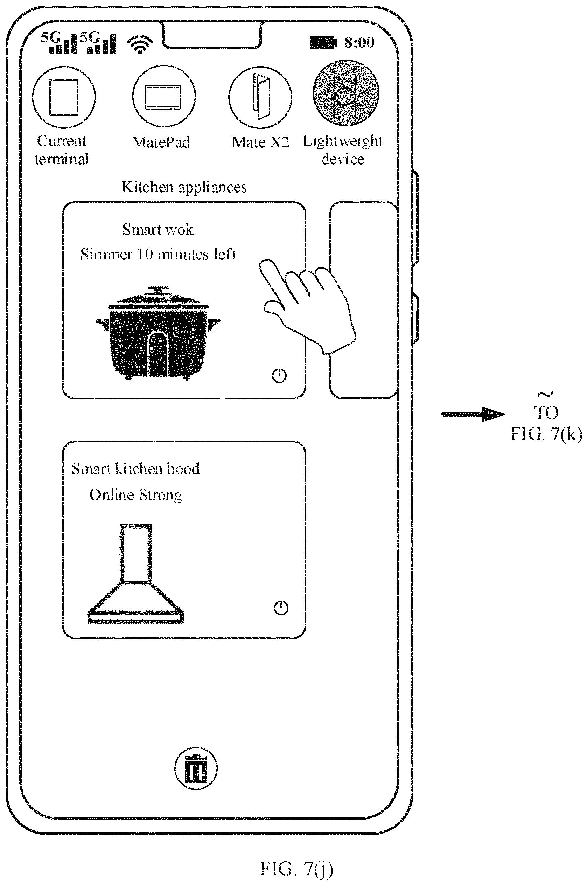

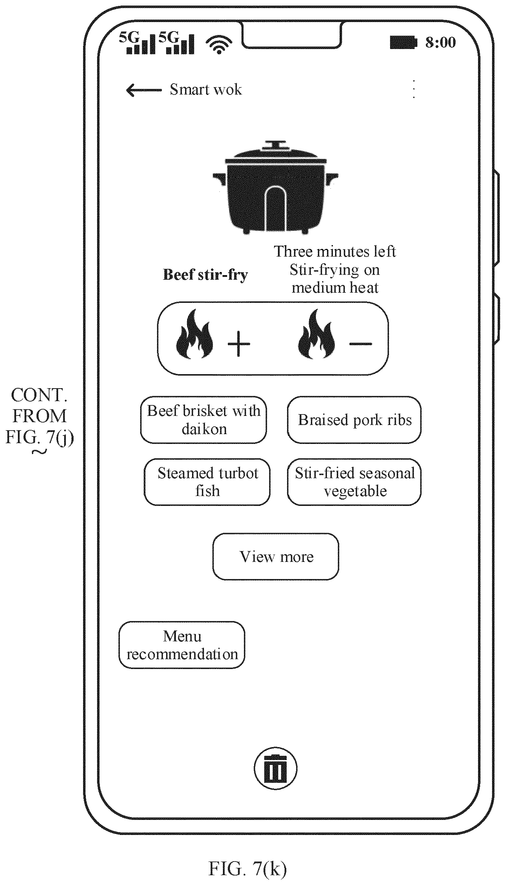

In some example embodiments, in interfaces shown in FIG. 7(h) and FIG. 7(i), in a possible implementation, the user may perform a tap operation in a blank region on any card (that is, a region outside a control button on any card) of any lightweight device shown in FIG. 7(i) and FIG. 7(i). For example, if the user performs a tap operation in a blank region on a task card of the smart wok as shown in FIG. 7(j), an interface displayed by the first terminal is shown in FIG. 7(k). After tapping is performed, details of an ongoing task of the smart wok may be displayed in the interface of the first terminal, and the user may remotely perform task control in a detail interface.

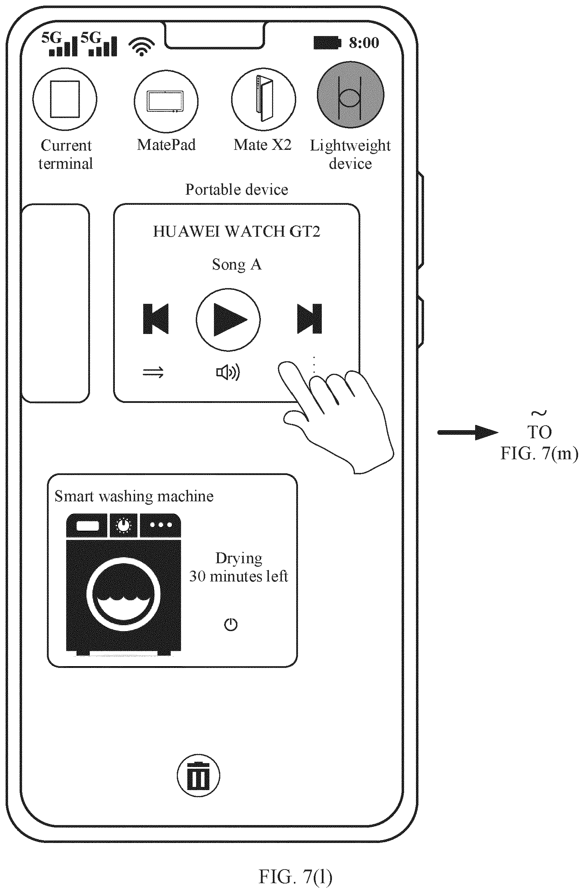

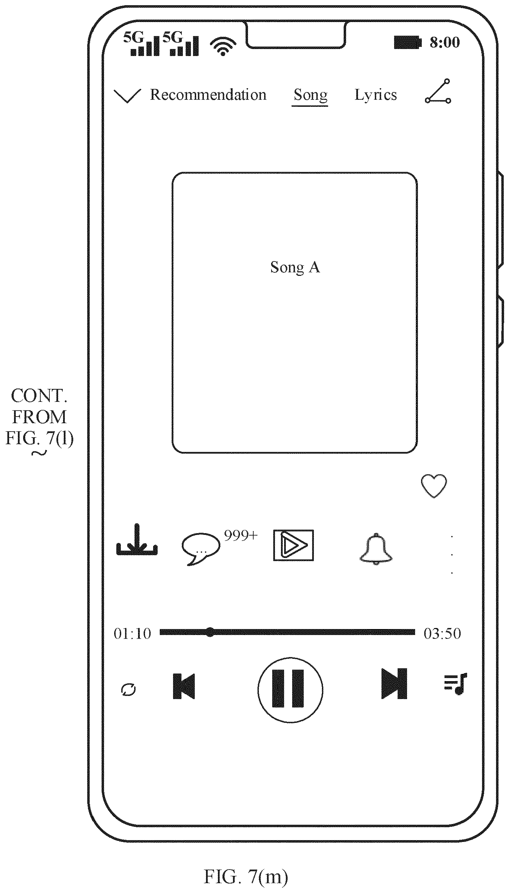

For another example, if the user performs a tap operation in a blank region on a task card of a Huawei watch (HUAWEI WATCH GT2) as shown in FIG. 7(l), an interface displayed by the first terminal is shown in FIG. 7(m). After tapping is performed, details of an ongoing task of a music player may be displayed in the interface of the first terminal, and the user may remotely perform task control in the detail interface.

In some example embodiments, in interfaces shown in FIG. 7(h) and FIG. 7(i), in another possible implementation, the user may also perform a tap operation in a blank region on any card of any lightweight device shown in FIG. 7(i) and FIG. 7(i). After tapping is performed, details of the smart wok (that is, a lightweight device) may be displayed in the interface of the first terminal.

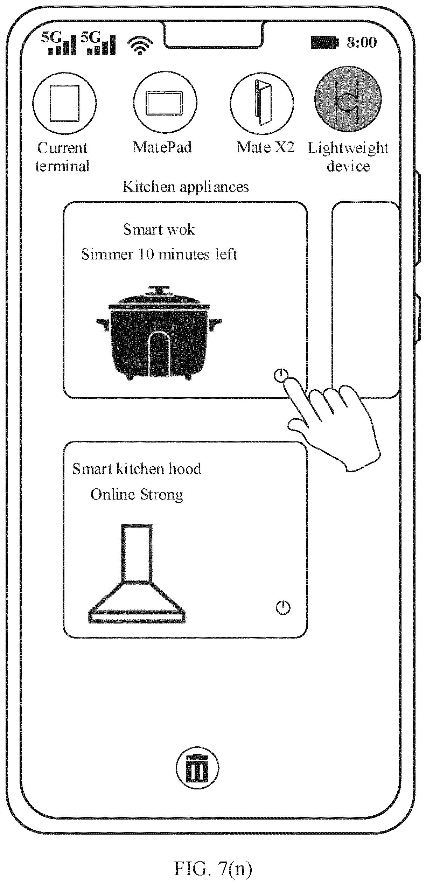

In some example embodiments, in interfaces shown in FIG. 7(h) and FIG. 7(i), in another possible implementation, the user may also directly perform a tap operation on a control button on a card of any lightweight device. In other words, the user directly taps a corresponding control button on the card of the lightweight device, to implement remote task control. For example, as shown in FIG. 7(n), if the user taps an "Off" button on the task card of the smart wok, the smart wok stops running.

In some example embodiments, when a task card of another lightweight device is displayed in the recent task interface of the first terminal, if a small quantity of corresponding operations are performed on a lightweight device, a standard device card may be used to display a task card of the lightweight device. For example, in FIG. 7(h) and FIG. 7(i), portable cards corresponding to the smart wok, the smart kitchen hood, the Huawei watch (HUAWEI WATCH GT2), and the smart washing machine are all standard device cards.

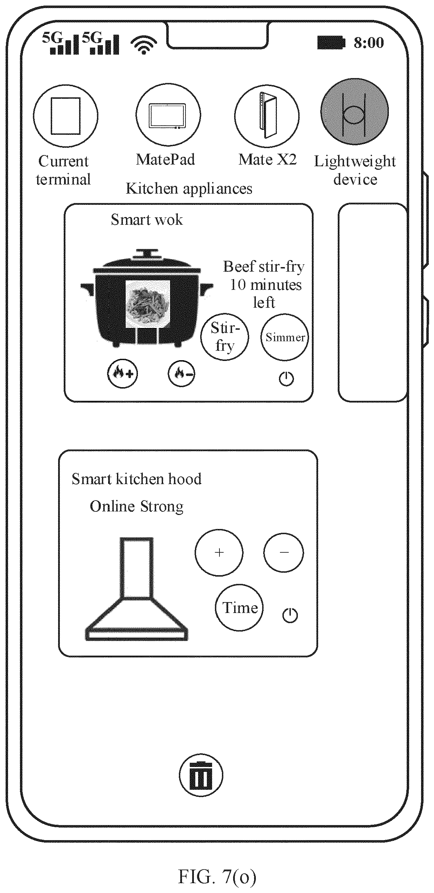

Optionally, in another possible implementation, when a task card of another lightweight device is displayed in the recent task interface of the first terminal, if a large quantity of corresponding operations are performed on a lightweight device, more functions may be displayed on a task card of the lightweight device. For example, it is assumed that the lightweight device is a smart wok, and a switch to a simmer, stir-fry, heat power adjustment, or visual sight of a situation of food in the smart wok can be quickly implemented. Therefore, the task card corresponding to the lightweight device may be displayed by using an immersive task card. For example, as shown in FIG. 7(o), task cards corresponding to the smart wok and the smart kitchen hood in the recent task interface of the first terminal are immersive task cards.

In some example embodiments, when a task card of another lightweight device is displayed in the recent task interface of the first terminal, the user may further drag a task card of a lightweight device to an icon of another intelligent device (for example, MatePad and Mate X2) in the recent task interface of the first terminal. Therefore, the task card of the lightweight device is displayed in a recent task interface of the another intelligent device, or is displayed on a home screen of the another intelligent device. Optionally, after the intelligent device receives information about the task card of the lightweight device, the intelligent device may further add the task card of the lightweight device to RecentTasks center of the intelligent device, or add the task card of the lightweight device to a home screen.

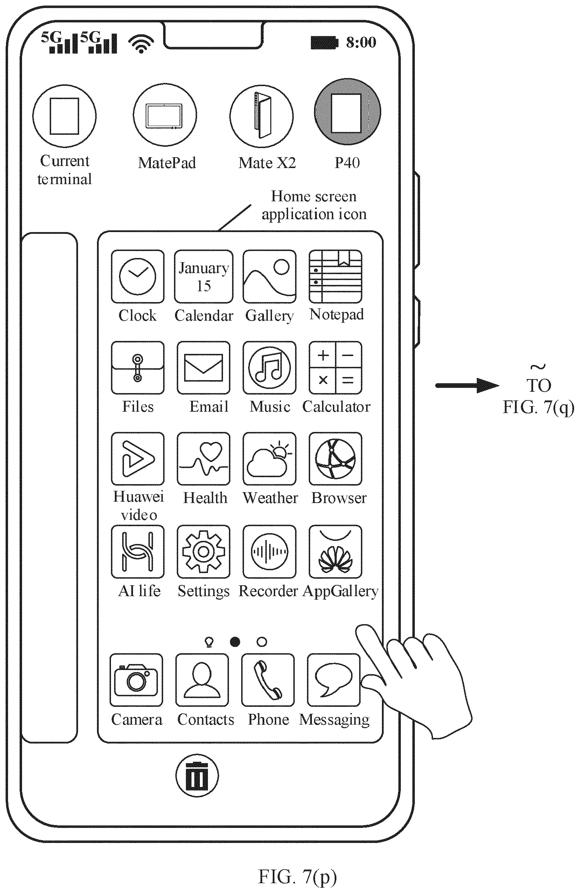

Example 10: It is assumed that a first terminal (a current terminal) is a mobile phone. When a recent task interface of the first terminal displays historical task cards of a plurality of other devices, one or more last task cards may display a home screen application icon of a device. For example, FIG. 7(p) is a schematic diagram of displaying a historical task card of a mobile phone P40 in a recent task interface of a first terminal. A last task card displays a home screen application icon (icon) of the mobile phone P40.

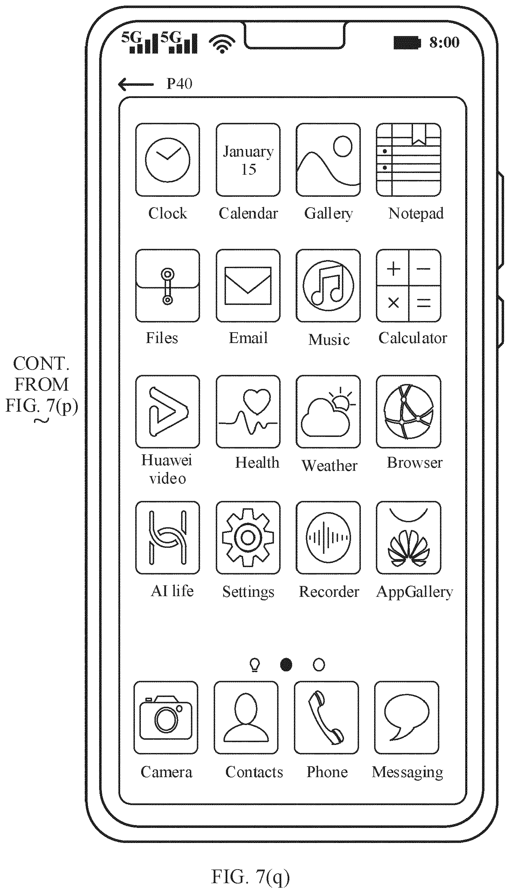

In an example shown in FIG. 7(p), in a possible implementation, a user may tap a blank region on the task card, to display, on the first terminal as shown in FIG. 7(q), the home screen application of the mobile phone P40. The user may drag an application icon in an interface shown in FIG. 7(q), to help the mobile phone P40 manage the application (for example, sort the application, create a folder, or delete the application).

In an example shown in FIG. 7(p), in another possible implementation, the user may alternatively directly perform an operation on a task card of the home screen application of the mobile phone P40. For example, an application icon is dragged on the task card of the home screen application of the mobile phone P40, to help the mobile phone P40 manage the application, without a need to first display, on the first device, the home screen application of the mobile phone P40.

In some example embodiments, in addition to a case in which a task card of another lightweight device is displayed in a recent task interface of a terminal device used by the user, there is a case in which a task card of another intelligent device (including another lightweight device and an intelligent terminal used by the user, for example, a mobile phone or a tablet computer) with a same account or an associated account may also be viewed on a lightweight device, and the task card may be further operated on the lightweight device, to remotely control the another intelligent terminal device on the lightweight device.

For example, when the user views a task card of another intelligent terminal with a same account or an associated account on a lightweight device, a sensor, a camera, a microphone, or the like of the lightweight device may be used to assist in identity authentication of the user, or a sensor, a camera, a microphone, or the like of each of the lightweight device and another nearby device (for example, a smartwatch carried by the user, or a large-screen device in a home) may be used to assist in identity authentication of the user. After identity authentication of the user succeeds, a task card of another device displayed on the lightweight device may be viewed, and an operation may be performed on the task card, to remotely control the another intelligent terminal device and another lightweight device on the lightweight device. The following provides descriptions with reference to specific examples.

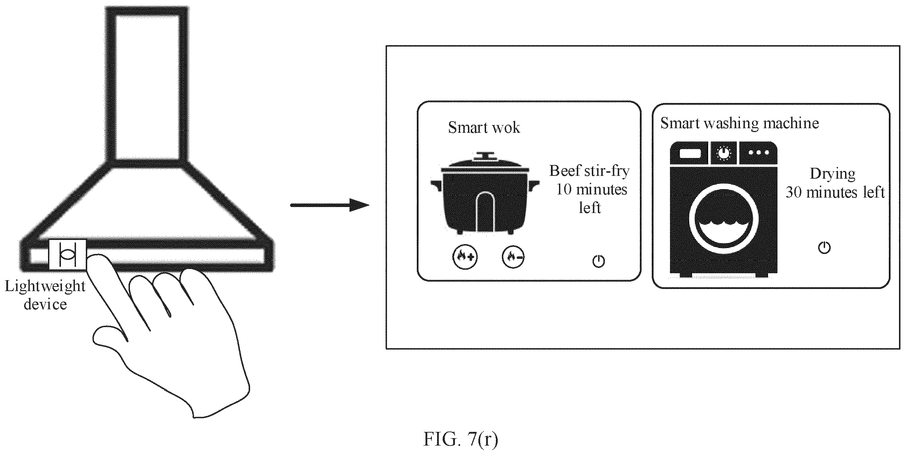

Example 11: As shown in FIG. 7(r), it is assumed that a lightweight device used by a user is a smart kitchen hood. If the user taps a button "Lightweight device" on a screen of the smart kitchen hood, an ongoing (OnGoing) task card of another lightweight device with an account the same as or associated with that of the kitchen hood may be displayed on the screen of the smart kitchen hood. As shown in FIG. 7(r), after the user taps the button "Lightweight device", displayed task cards of lightweight devices includes a task card of a smart wok and a task card of a smart washing machine. When the task card of the another lightweight device is displayed on the screen of the smart kitchen hood, the task card may be adaptively displayed based on the screen of the smart kitchen hood (that is, the task card is responsively laid out based on the screen). When the user slides the task card leftward or rightward, task cards of more lightweight devices with another account or an associated account may be viewed. Optionally, if the user may tap a blank region on a task card (a region outside a control button on the task card), detailed content of the task card is displayed in full screen or is adaptively displayed based on the screen on a display. The user may remotely perform task control in a detail interface. Alternatively, the user may directly perform a tap operation on a control button on a task card of any lightweight device. In other words, the user directly taps a corresponding control button on the card of the lightweight device, to implement remote task control.

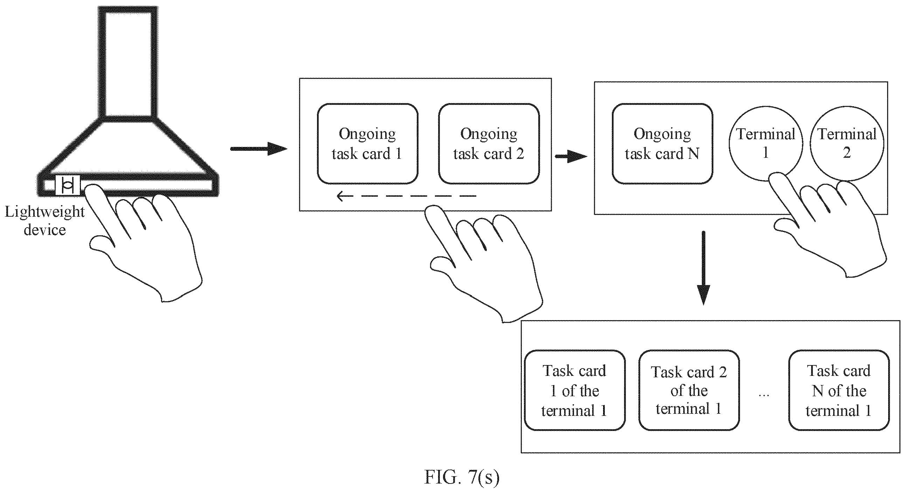

Example 12: As shown in FIG. 7(s), it is assumed that a lightweight device used by a user is a smart kitchen hood, and the user taps a button "Lightweight device" on a screen of the smart kitchen hood. In this case, the smart kitchen hood may invoke a sensor, a camera, a microphone, or the like of each of the smart kitchen hood and another nearby device (for example, a smartwatch carried by the user or a large-screen device in a home) to assist in identity authentication of the user. After identity authentication of the user succeeds, an ongoing task card of another lightweight device with an account the same as or associated with that of the smart kitchen hood is displayed on the screen of the smart kitchen hood. Optionally, one lightweight device may correspond to one ongoing task card. The user slides the ongoing task card leftward. Last several task cards are icons of intelligent terminals with an account the same as or associated with that of the kitchen hood. For a terminal 1 and a terminal 2 as shown in FIG. 7(s), the user selects an icon of an intelligent terminal that needs to be viewed. Assuming that the intelligent terminal that needs to be viewed is the terminal 1, and the user taps an icon of "Terminal 1", a plurality of task cards of the terminal 1 are displayed on the screen of the smart kitchen hood. Optionally, the plurality of task cards of the terminal 1 include a historical task card and a foreground task card of the terminal 1, and the foreground task card is a task card corresponding to an application that is being displayed on a screen of the terminal 1. For example, if a video is being played on the screen of the terminal 1, a task card corresponding to an application of the video is a foreground task card. Optionally, a task card corresponding to a floating window displayed on the screen of the terminal 1 may also be a foreground task card of the terminal 1, and the historical task card includes a task card corresponding to an application run by the terminal 1 in the background.

Optionally, if the user may tap a blank region on a task card, detailed content of the task card is displayed in full screen or is adaptively displayed based on the screen on a display of the smart kitchen hood. The user may remotely perform task control in a detail interface. Alternatively, the user may directly perform a tap operation on a control button on a card of any device. In other words, the user directly taps a corresponding control button on the task card of the device, to implement remote task control.

When a historical task card of another device (a remote device) is displayed in a recent task interface of a first terminal (a current terminal), a user may tap a task card on the first terminal, so that a task or an application corresponding to the task card is displayed (or run) on the first terminal. This process may be referred to as starting a task card of the remote device on the first terminal.

In some example embodiments, when the task card of the remote device is started in the recent task interface of the first terminal, the task card may be started based on a rule shown in FIG. 8(a)-1 and FIG. 8(a)-2.

It should be understood that, in determining steps shown in FIG. 8(a)-1 and FIG. 8(a)-2, any branch step may be separately performed, and determining does not need to be sequentially performed based on all steps shown in FIG. 8(a)-1 and FIG. 8(a)-2. In other words, in the determining steps shown in FIG. 8(a)-1 and FIG. 8(a)-2, any step may be an independent solution.

As shown in FIG. 8(a)-1 and FIG. 8(a)-2, if an application of the remote device is migrated to the recent task interface of the first terminal in a replication mode, in other words, a task card in the recent task interface of the first terminal is obtained from an application of the remote device in the replication mode, after the task card is started on the first terminal, the first terminal and the remote device may simultaneously display (or run) the application. In addition, states of an application displayed by the first terminal and the remote device are synchronized (for example, both the first terminal and the remote device display a same page of a same PPT file), and data of the application in the first terminal and the remote device is synchronized. When displaying the application, the first terminal and the remote device may adaptively display the application based on features of respective screens. In this application, it may be understood that, adaptive display means that in a display process, different devices may adjust, based on sizes of respective screens, sizes and layouts of an application displayed on the screens. In other words, the layout and the size of the application displayed on the screen are resizable (Resizable). For example, one of the first terminal and the remote device displays the application in full screen, and the other one of the first terminal and the remote device displays the application in non-full screen; or one of the first terminal and the remote device displays the application in landscape mode, and the other one of the first terminal and the remote device displays the application in portrait mode; or the like. The application is not pulled back when a task card of the application is tapped in a recent task interface of the remote device, or an icon of the application is tapped on a home screen of the remote device. "Pulling back the application" can be understood as performing an operation on a source device (in this example, the source device is the remote device) of the application, so that the application is migrated back to the source device. The application is not displayed in a recent task interface or a home screen of another device, or is not run on another device.

If an application of the remote device is not migrated to the recent task interface of the first terminal in the replication mode, whether the application is displayed in the recent task interface of the first terminal in a migration mode based on a window projection technology is further determined. In the migration mode based on the window projection technology, the application does not need to be installed on the first terminal. If the application is displayed in the recent task interface of the first terminal in the migration mode based on the window projection technology, whether the application supports a plurality of instances continues to be determined.

When the application supports a plurality of instances, the application may be simultaneously displayed (or run) on the first terminal and the source device (the remote device). Data of the application on the first terminal and the remote device is synchronized. When the first terminal and the remote device display the application, the first terminal and the remote device may adaptively display the application based on features of respective screens. However, states of the application displayed by the first terminal and the remote device may be not synchronized (for example, one device displays a first page of a PPT file, and the other device displays a second page of the PPT file). The application is not pulled back when a task card of the application is tapped in a recent task interface of the remote device, or an icon of the application is tapped on a home screen of the remote device.

If the application does not support a plurality of instances, the application cannot be simultaneously displayed on the first terminal and the remote device. If the application is a foreground task or a foreground application on the remote device (a task or an application that is being displayed and run in an interface of the remote device), after the application is migrated to the first terminal, the remote device automatically exits the task, and a home screen of the remote device is displayed on a screen of the remote device. The application is pulled back when a task card of the application is tapped in a recent task interface of the remote device, or an icon of the application is tapped on a home screen of the remote device.

If an application of the remote device is not displayed in the recent task interface of the first terminal in the migration mode based on the window projection technology, but instead, is displayed in the recent task interface of the first terminal in a migration mode based on an FA technology, the first terminal needs to first install the application or an FA of the application, and then a task card of the application can be displayed in the recent task interface of the first terminal only after installation is completed. After the application or the FA of the application is installed on the first terminal, data of the application on the first terminal and the remote device is synchronized. When the first terminal and the remote device display the application, the first terminal and the remote device may adaptively display the application based on features of respective screens. However, states of the application displayed by the first terminal and the remote device may be not synchronized. The application is not pulled back when a task card of the application is tapped in a recent task interface of the remote device, or an icon of the application is tapped on a home screen of the remote device.

The following provides descriptions with reference to specific examples. It should be understood that, the following examples in FIG. 8(b)-1 and FIG. 8(b)-2 to FIG. 8(n) may be a part of a flowchart shown in FIG. 8(a)-1 and FIG. 8(a)-2, or may be independent solutions. This is not limited in this application.

Example 13: It is assumed that a first terminal (a current terminal) is a tablet computer. FIG. 8(b)-1 and FIG. 8(b)-2 are a schematic diagram of viewing historical task cards of a plurality of other devices in a recent task interface of a first terminal. As shown in FIG. 8(b)-1 and FIG. 8(b)-2, it is assumed that a magazine lock screen application of a remote device (that is, a source device of a task) is displayed in the recent task interface of the first terminal in a replication mode, in other words, a task card of the magazine lock screen application in the recent task interface of the first terminal is obtained from a device P40 in the replication mode. A user taps the task card of the magazine lock screen application in the recent task interface of the first terminal. In other words, after the task card is started on the first terminal, as shown in FIG. 8(c)-1 and FIG. 8(c)-2, the first terminal and P40 may simultaneously display the magazine lock screen application. In addition, states of an application displayed by the first terminal and the remote device are synchronized, and both the first terminal and the device P40 display a picture 3 of the magazine lock application. Data of the application on the first terminal and the device P40 is synchronized. For example, if the user edits the picture 3 on the first terminal, an editing state is automatically synchronized to the device P40. When displaying the magazine lock screen application, the first terminal and the device P40 may adaptively display the magazine lock screen application based on features of respective screens (for example, P40 displays the magazine lock screen application in portrait mode, and the first terminal displays the magazine lock screen application in landscape mode). In this implementation, an application of the remote device is migrated to the first terminal device in the replication mode. The remote device and the first terminal may simultaneously display the application. States (data) of the application displayed on the two devices are synchronized. An operation performed by the user on the application on any device may be synchronized to the two devices, to facilitate an operation of the user, and improve user experience. It should be further understood that, a solution described in Example 13 may be an independent solution.

In a possible implementation, descriptions are provided in Example 14.

Example 14: It is assumed that a first terminal (a local device) is a tablet computer. FIG. 8(d)-1 and FIG. 8(d)-2 are a schematic diagram of viewing historical task cards of a plurality of other devices in a recent task interface of a first terminal. As shown in FIG. 8(d)-1 and FIG. 8(d)-2, it is assumed that a magazine lock screen application of a remote device is displayed in the recent task interface of the first terminal in a migration mode based on a window projection technology, and the magazine lock screen application supports a plurality of instances; or a magazine lock screen application of a remote device is displayed in the recent task interface of the first terminal in a migration mode based on an FA technology. In the two cases, data of the application on the first terminal and a device P40 is synchronized. A user taps a task card of the magazine lock screen application in the recent task interface of the first terminal. It is assumed that after the user taps a picture 2 on the task card of the magazine lock screen application, that is, after the task card is started on the first terminal, as shown in FIG. 8(e)-1 and FIG. 8(e)-2, the first terminal displays the picture 2 of the magazine lock screen application, and the device P40 still displays a picture 3 of the magazine lock screen application. In other words, states of the magazine lock screen application displayed by the first terminal and P40 are not synchronized, and the states of the magazine lock screen application displayed by the two devices do not affect each other. In addition, when displaying the magazine lock screen application, the first terminal and the device P40 may adaptively display the magazine lock screen application based on features of respective screens (for example, P40 displays the magazine lock screen application in portrait mode, and the first terminal displays the magazine lock screen application in landscape mode). In this implementation, an application of the remote device is displayed in the recent task interface of the first terminal in the migration mode based on the FA technology; or an application of the remote device is displayed in the recent task interface of the first terminal in the migration mode based on the window projection technology, and the application supports a plurality of instances. The remote device and the first terminal may simultaneously display the application. States (data) of the application displayed on the two devices are not synchronized, an operation performed by the user on the application on any device is independent, and states of the application displayed on the two devices do not affect each other. An operation of the user is facilitated, so that the user flexibly operates an application on different devices, to improve user experience. It should be further understood that, a solution described in Example 14 may be an independent solution.

In some example embodiments, if an application of the device P40 is displayed in the recent task interface of the first terminal in the migration mode based on the FA technology, prompt information of a source device of the application may not be displayed on the first terminal after the user starts a card of the application on the first terminal. For example, a prompt "from P40" may not be displayed on the first terminal.

In a possible implementation, descriptions are provided in Example 15.

Example 15: It is assumed that a first terminal (a current terminal) is a tablet computer. FIG. 8(f)-1 and FIG. 8(f)-2 are a diagram of an interface displayed on a first terminal after an app "Huawei video" of a remote device (P40) is started on the first terminal. A video of the app "Huawei video" of the device P40 is being played on the first terminal. It is assumed that the application "Huawei video" of the device P40 is displayed in a recent task interface of the first terminal in a migration mode based on a window projection technology, and the application "Huawei video" does not support a plurality of instances. If a user is to pull back the application on the device P40, the user may tap an icon of "Huawei video" on a home screen of the device P40; or select a task card of "Huawei video" of the device P40 in a recent task interface of the device P40, and tap the task card, to pull back the application "Huawei video". FIG. 8(f)-1 and FIG.8(f)-2 show a case in which the user taps the icon of "Huawei video" on the home screen of the device P40. After the user pulls back the application "Huawei video", as shown in FIG. 8(g)-1 and FIG. 8(g)-2, the first terminal no longer plays the video of the app "Huawei video", but instead, displays a home screen of the first terminal. The device P40 continues to play the video by continuing a state of the video previously played on the first terminal (for example, if the first terminal plays a video to a moment t of the video before the app "Huawei video" is pulled back, after the app "Huawei video" is pulled back, the device P40 continues to play the video after the moment t). In this implementation, an application of the remote device is displayed in the recent task interface of the first terminal in the migration mode based on the window projection technology, and the application does not support a plurality of instances. After the user pulls back the application on the remote device, the first terminal does not display the application, so that the user can pull back the application at any time, and an operation of the user is simple. It should be further understood that, a solution described in Example 15 may be an independent solution.

In a possible implementation, descriptions are provided in Example 16.

Example 16: It is assumed that a first terminal (a current terminal) is a tablet computer. FIG. 8(h)-1 and FIG. 8(h)-2 are a diagram of an interface displayed on a first terminal after an app "Huawei video" of a remote device (P40) is started on the first terminal. A video of the app "Huawei video" of the device P40 is being played on the first terminal. It is assumed that the application "Huawei video" of the device P40 is displayed in a recent task interface of the first terminal in a replication mode; or the application "Huawei video" of the device P40 is displayed in a recent task interface of the first terminal in a migration mode based on a window projection technology, and the application "Huawei video" supports a plurality of instances; or the application "Huawei video" of the device P40 is displayed in a recent task interface of the first terminal in a migration mode based on an FA technology. The application "Huawei video" is not pulled back when the user taps an icon of "Huawei video" on a home screen of the device P40; or selects a task card of "Huawei video" of the device P40 in a recent task interface of the device P40, and taps the task card. FIG. 8(h)-1 and FIG. 8(h)-2 show a case in which the user taps the icon of "Huawei video" on the home screen of the device P40. After the user taps the icon of "Huawei video", as shown in FIG. 8(i)-1 and FIG. 8(i)-2, the app "Huawei video" enters a new video selection interface. When the user taps another video (assumed to be a video 2) for playing, in other words, the user initiates a new video task (the video 2) on the device P40, the new task does not affect a video (that is, the video 1) that is of the app "Huawei video" of the device P40 and that is being played on the first terminal. As shown in FIG. 8(i)-1 and FIG. 8(i)-2, the new task (the video 2) that is run by the user on the device P40 and the video (that is, the video 1) that is of the app "Huawei video" and that is migrated from the device P40 to the first terminal do not affect each other. In this implementation, an application of the remote device is displayed in the recent task interface of the first terminal in the replication mode; or an application of the remote device is displayed in the recent task interface of the first terminal in the migration mode based on the window projection technology, and the application supports a plurality of instances; or an application of the remote device is displayed in the recent task interface of the first terminal in the migration mode based on the FA technology. After the user pulls back the application on the remote device, the first terminal may continue to display the application. States of the application displayed or run on the two devices (the remote device and the first terminal) do not affect each other. The user may perform an operation on the application on any device, and the user may perform, on each of the two devices, an independent operation on the application on any one of the two devices, to meet a requirement of the user for a case in which an application simultaneously has different running states, and improve user experience. A solution described in Example 16 may be an independent solution.

In some example embodiments, if a local device is a small-screen device and a remote device is a large-screen device, after a task card of the remote device is started on the local device, an application corresponding to the task card is displayed on a screen of the local device. In a process in which the application is displayed on the local device, the application may be displayed on a display of the local device based on one of the following rules:

Rule 1: Adaptively display the application on the local device based on a screen size of the local device.

Optionally, in this embodiment of this application, if the local device is a wide-screen device and the remote device is a narrow-screen device, after the task card of the remote device is started on the local device, the application corresponding to the task card may be displayed on the display of the local device based on Rule 2.

Rule 2: Automatically display the application on the local device in a parallel horizon manner.

In this embodiment of this application, it can be understood that a parallel-horizon display manner is an application split screen function, and supports to display one application on two screens. A user may display a same application in two windows when a used terminal is in landscape mode. The user simultaneously operates and watches the two windows, and the two windows do not affect each other. For example, when the user uses chatting software when the terminal is in landscape mode, a system may enter a parallel horizon mode, and the user may easily reply to chatting information while browsing Moments or an article of an official account; or during online shopping, the user may continue to browse a list of other commodities while viewing details of a favorite commodity.

In some example embodiments, if the local device is a narrow-screen device and the remote device is a wide-screen device, after the task card of the remote device is initiated on the local device, the application corresponding to the task card may be displayed on the display of the local device based on Rule 3.

Rule 3: Automatically disable a parallel horizon manner on the local device, and adaptively display the application based on a screen size of the local device.

In some example embodiments, if the local device is a narrow-screen device and the remote device is a wide-screen device, after the task card of the remote device is started on the local device, the application corresponding to the task card may be displayed on the display of the local device based on Rule 4.

Rule 4: Display the application on the local device in full screen, and perform no switching between a landscape mode and a portrait mode, that is, display the application on the screen of the local device based on a display state of the application on the remote device.

The following provides descriptions with reference to specific examples.

In a possible implementation, descriptions are provided in Example 17.

Example 17: It is assumed that a first terminal (a local device) is a mobile phone (for example, P40), and a remote device is a tablet computer. After a task card of a magazine lock screen app of the tablet computer is started on P40, a magazine lock screen interface corresponding to the task card is displayed on a screen of P40. As shown in FIG. 8(j)-1 and FIG. 8(j)-2, the magazine lock screen interface displayed on the tablet computer is displayed in full screen, and the magazine lock screen interface is also adaptively displayed in full screen on the device P40. As shown in FIG. 8(j)-1 and FIG. 8(j)-2, if a task card of a magazine lock screen app of the device P40 is started on the tablet computer, a magazine lock screen interface corresponding to the task card is displayed in full screen on a screen of the tablet computer.

In this implementation, after an application of the remote device is migrated to the local device, the remote device and the local device each may adaptively display the application based on respective screens, to improve user experience. It should be further understood that, a solution described in Example 17 may be an independent solution.

In a possible implementation, descriptions are provided in Example 18.

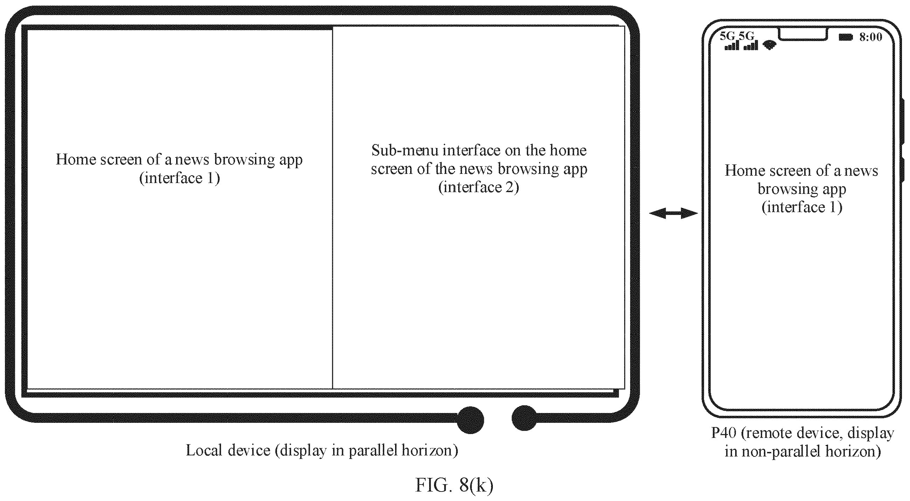

Example 18: It is assumed that a first terminal (a local device) is a tablet computer, and a remote device is a mobile phone (for example, P40). The local device is a wide-screen device, and the remote device is a narrow-screen device. After a task card of a news browsing app of P40 is started on the tablet computer, a news browsing interface corresponding to the task card is displayed on a screen of the tablet computer. As shown in FIG. 8(k), the news browsing interface displayed on the tablet computer is automatically displayed in parallel horizon, and a news browsing interface displayed on a screen of P40 is displayed by automatically disabling parallel horizon, that is, in a normal display state.

As shown in FIG. 8(k), if a task card of a news browsing app of the tablet computer is started on P40, a news browsing interface corresponding to the task card is displayed on the screen of P40. A news browsing interface displayed on the tablet computer is automatically displayed in parallel horizon, and the news browsing interface displayed on the screen of P40 is displayed by automatically disabling parallel horizon, that is, in a normal display state (for example, adaptively displayed in full screen). In this implementation, after an application of the remote device is migrated to the local device, based on features of respective screens, the remote device and the local device may automatically display the application in a parallel horizon manner on a device with a wide screen, and display the application in a normal display manner on a device with a narrow screen, to display the application by fully using the features of respective screens, and improve user experience. It should be further understood that, a solution described in Example 18 may be an independent solution.

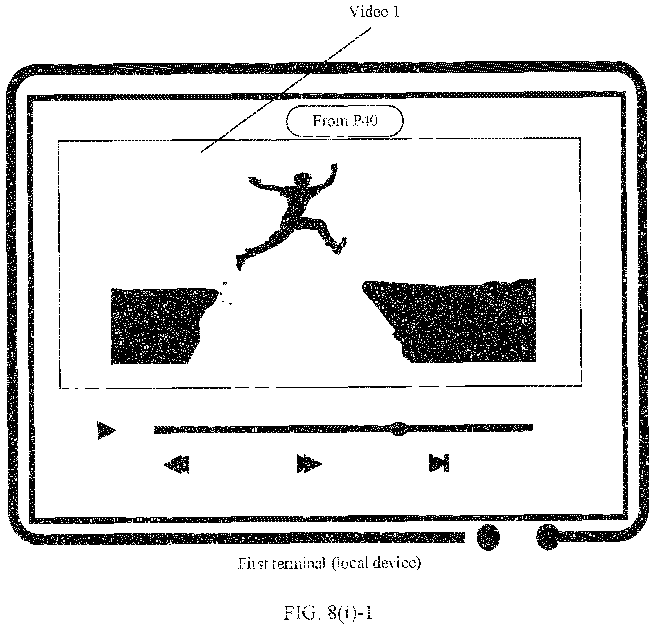

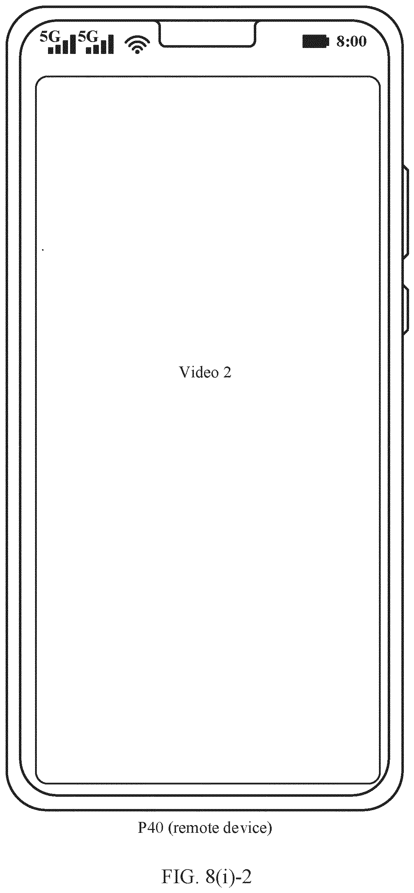

Example 19: It is assumed that a first terminal (a local device) is a mobile phone (for example, P40), and a remote device is a tablet computer. After a task card of a video-type app of the tablet computer is started on P40, a video corresponding to the task card is displayed on a screen of P40. As shown in FIG. 8(I), because a video displayed on the tablet computer is displayed in landscape mode, the video is also displayed in landscape mode on the device P40. In other words, no switching is performed between a landscape mode and a portrait mode.

As shown in FIG. 8(I), after a task card of a video-type app of the device P40 is started on the tablet computer, a video corresponding to the task card is displayed on a screen of the tablet computer. Because a video displayed on the device P40 is displayed in landscape mode, the video is also displayed in landscape mode on the tablet computer. In other words, no switching is performed between a landscape mode and a portrait mode. In this implementation, after an application of the remote device is migrated to the local device, the local device displays the application on the local device in a manner in which the remote device displays the application (the local device displays the application in landscape mode when the remote device displays the application in landscape mode, and the local device displays the application in portrait mode when the remote device displays the application in portrait mode). No switching is performed between a landscape mode and a portrait mode, so that a user feels no significant change between display states existing before and after the application is migrated. This is friendly to the user, and improves user experience. It should be further understood that, a solution described in Example 19 may be an independent solution.

In some example embodiments, if the local device is a large-screen device and the remote device is a small-screen device, after a task card of the remote device is started on the local device, an application corresponding to the task card is displayed on a screen of the local device. In a process in which the application is displayed, the application corresponding to the task card may alternatively be displayed on the screen of the local device in a form of a floating window. Further, if the local device supports adaptive display, when the application corresponding to the task card is displayed on the screen of the local device in the form of the floating window, the application corresponding to the task card may be displayed in a landscape or wide floating window; or if the local device does not support adaptive display, the application corresponding to the task card may be displayed in a portrait or narrow floating window.

In some example embodiments, if the local device is a PC device, after a task card of an application of the remote device is started on the local device, the application may be displayed in a floating window by default on the local device, for example, as shown in Example 20.

In a possible implementation, descriptions are provided in Example 20.

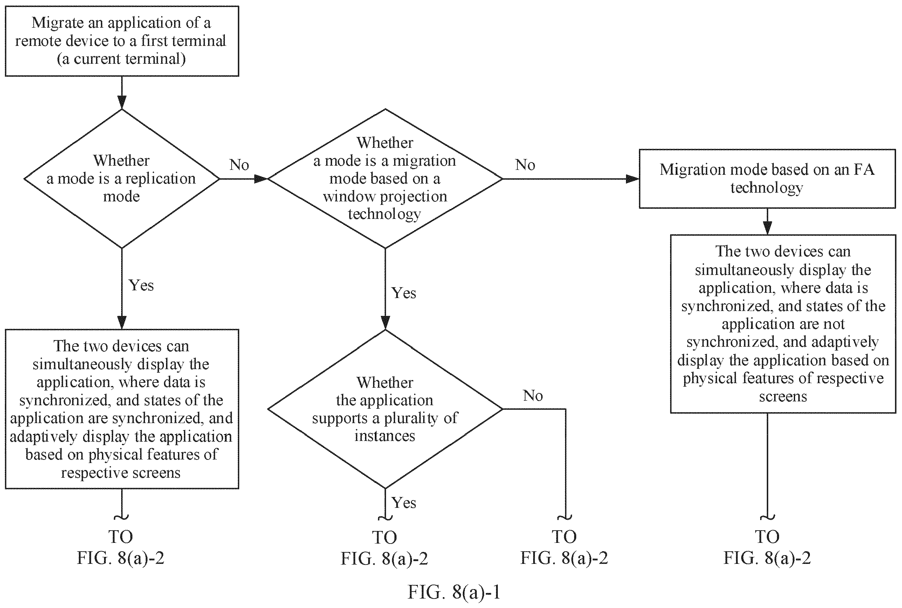

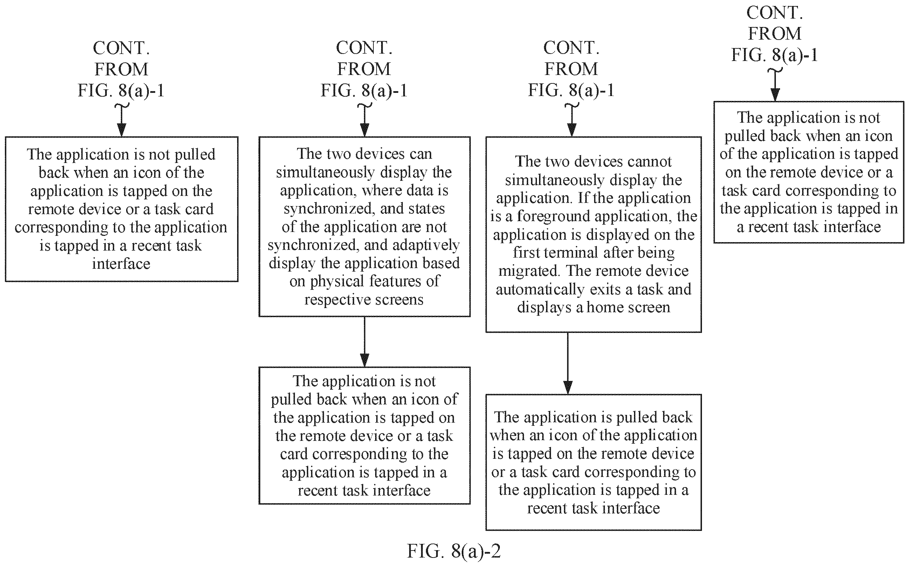

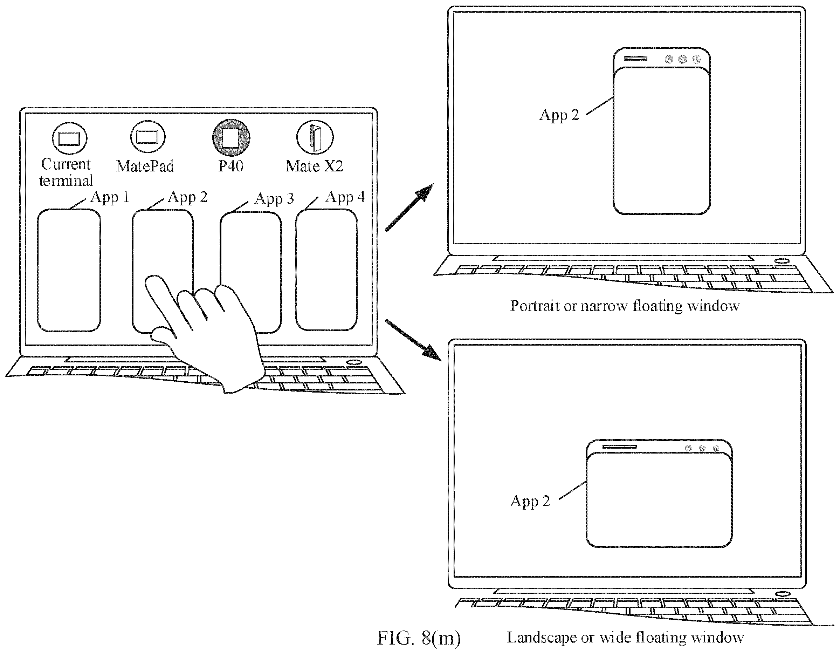

Example 20: As shown in FIG. 8(m), a user taps a task card corresponding to an app 2 of a device P40 in a recent task interface of a PC device, so that the task card is started on the PC device. When the app 2 is displayed on the PC device, as shown in FIG. 8(m), there may be two different forms of display in a floating window, one is display in a portrait or narrow floating window, and the other is display in a landscape or wide floating window. In this implementation, after an application of a remote device with a small screen is migrated to a local device with a large screen, the local device may display the application in a floating window, to improve screen use efficiency. It should be further understood that, a solution described in Example 20 may be an independent solution.

If the local device is a PC device, after a task card of an application of the remote device is started on the local device, when the application is displayed on the local device, optionally, a selection interface may also be set, so that the user can select display in full screen or display in a floating window. An example is shown in Example 21.

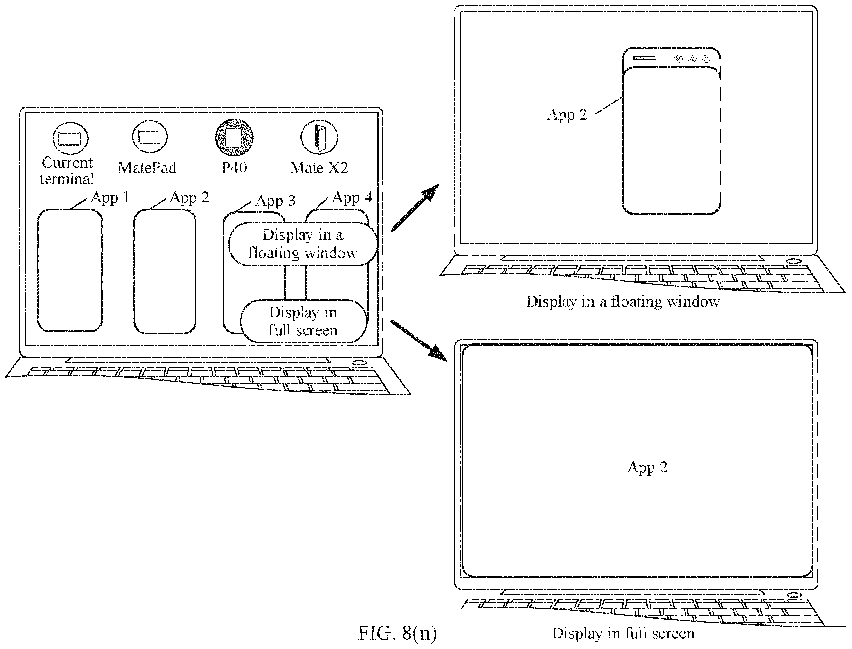

Example 21: As shown in FIG. 8(n), a user taps a task card corresponding to an app 2 of a device P40 in a recent task interface of a PC device, so that the task card is started on the PC device. When the app 2 is displayed on the PC device, as shown in FIG. 8(n), there may be two different forms of display in a floating window, one is display in full screen, and the other is display in a floating window. The user may select display in full screen or display in a floating window based on a requirement of the user. After the user taps and selects a corresponding option, the app 2 may be correspondingly displayed on the PC device based on a selection result of the user. In this implementation, after an application of a remote device with a small screen is migrated to a local device with a large screen, the local device may display the application in a floating window or in full screen, and the user may flexibly make selection. This is friendly to the user, and improves user experience. It should be further understood that, a solution described in Example 21 may be an independent solution.

In this embodiment of this application, in addition to displaying a task card of another device and a task card of the local device in a recent task interface of the local device used by the user, the user may further perform an operation on the task card in the recent task interface, so that an application corresponding to the task card is installed on the local device or the another device. The following provides descriptions with reference to specific examples.

Example 22: It is assumed that a local device (a current terminal) used by a user is a mobile phone (for example, P40). FIG. 8(o)-1 and FIG. 8(o)-2 are a schematic diagram of displaying a task card of another device in a recent task interface of P40. In an example shown in FIG. 8(o)-1 and FIG. 8(o)-2, the user views a task card of a tablet computer 1 (MatePad1) in the recent task interface of the current terminal. If the user may touch and hold a task card corresponding to an app 2 for a long period of time, a prompt box of "Download to a current terminal", "Open in a floating window", and "Open in split screen" may pop up. If the user taps "Download to a current terminal", the current terminal P40 may automatically download and install the app 2. Optionally, after the app 2 is installed, the app 2 is automatically opened on the current terminal. If the user taps "Open in a floating window", the app 2 is opened in a floating window on a screen of the current terminal P40 (that is, after the app 2 is started on the current terminal, the app 2 is displayed in a floating window). If the user taps "Open in split screen", the app 2 is opened in split screen on the screen of the current terminal P40 (that is, after the app 2 is started on the current terminal, the app 2 is displayed in split screen).

Example 23: It is assumed that a local device (a current terminal) used by a user is a tablet computer 1 (MatePad1). FIG. 8(p)-1 and FIG. 8(p)-2 are a schematic diagram of displaying a task card of another device in a recent task interface of MatePad1. In an example shown in FIG. 8(p)-1 and FIG. 8(p)-2, the user views a task card of P40 in the recent task interface of the current terminal. The user touches and holds a task card corresponding to an app 2, and drags the task card to a location of an icon of a device Mate X2, to migrate the app 2 from the device P40 to the device Mate X2. In addition, a prompt box of "Download to Mate X2", "Open in a floating window", "Open in split screen", and "Open in full screen" may further pop up on the current terminal. If the user taps "Download to Mate X2", Mate X2 may automatically download and install the app 2. Optionally, after the app 2 is installed, Mate X2 may automatically open the app 2. If the user taps "Open in a floating window", the app 2 is opened in a floating window on a screen of the current terminal (that is, after the app 2 is started on the current terminal, the app 2 is displayed in a floating window). If the user taps "Open in split screen", the app 2 is opened in split screen on the screen of the current terminal (that is, after the app 2 is started on the current terminal, the app 2 is displayed in split screen). If the user taps "Open in full screen", the app 2 is opened in full screen on the screen of the current terminal (that is, after the app 2 is started on the current terminal, the app 2 is displayed in full screen).

In some example embodiments, in a process in which a task card of another device and a task card of the local device are displayed in the recent task interface of the local device used by the user, the user may further perform an operation on a plurality of task cards of a same device, or perform an operation on task cards of different devices, to simultaneously display, in split screen on a screen of the local device or the remote device, applications respectively corresponding to the plurality of task cards; or display one task in full screen, and display the other tasks in a floating window or a floating bubble; or display each of the plurality of task cards in a floating window. The following provides descriptions with reference to specific examples.

Example 24: It is assumed that a local device (a current terminal) used by a user is a mobile phone (for example, P40). FIG. 8(q)-1 to FIG. 8(q)-3 are a schematic diagram of displaying a task card of another device in a recent task interface of P40. In an example shown in FIG. 8(q)-1 to FIG. 8(q)-3, the user views a task card of the current terminal in the recent task interface of the current terminal. The user touches and holds a task card corresponding to an app 2 of the current terminal by using a left hand, and slides the task card leftward by using a right hand, to switch to a task card corresponding to another application of the current terminal, and select the task card. It is assumed that the user selects a task card corresponding to an app 5 of the current terminal, and the user touches and holds the task card corresponding to the app 5 of the current terminal by using the right hand, and releases the task card after dragging the task card corresponding to the app 5 to overlap the task card corresponding to the app 2. In this case, the app 2 and the app 5 can be displayed in split screen on the current terminal.

In some example embodiments, when the app 2 and the app 5 are displayed on the current terminal, optionally, the app 2 is displayed in full screen, and the app 5 is displayed in a floating window; or the app 5 is displayed in full screen, and the app 2 is displayed in a floating window; or the app 2 and the app 5 each are displayed in a floating window. This is not limited in this application.

Example 25: It is assumed that a local device (a current terminal) used by a user is a mobile phone (for example, P40). FIG. 8(r)-1 to FIG. 8(r)-4 are a schematic diagram of displaying a task card of another device in a recent task interface of P40. In an example shown in FIG. 8(r)-1 to FIG. 8(r)-4, the user views a task card of the current terminal in the recent task interface of the current terminal. The user touches and holds a task card corresponding to an app 2 of the current terminal by using a left hand, and taps a device icon of MatePad1 by using a right hand, to switch to a task card corresponding to MatePad1, slide the task card corresponding to MatePad1 leftward or rightward by using the right hand, and select the task card. It is assumed that the user selects a task card corresponding to an app 4 of MatePad1, and the user touches and holds the task card corresponding to the app 4 of MatePad1 by using the right hand, and releases the task card after dragging the task card corresponding to the app 4 to overlap the task card corresponding to the app 2. In this case, the app 2 of the current terminal and the app 4 of MatePad1 can be displayed in split screen on the current terminal.

In some example embodiments, when the app 2 and the app 4 are displayed on the current terminal, optionally, the app 2 is displayed in full screen, and the app 4 is displayed in a floating window; or the app 4 is displayed in full screen, and the app 2 is displayed in a floating window; or the app 2 and the app 4 each are displayed in a floating window. This is not limited in this application.

Example 26: It is assumed that a local device (a current terminal) used by a user is a mobile phone (for example, P40). FIG. 8(s)-1 to FIG. 8(s)-3 are a schematic diagram of displaying a task card of another device in a recent task interface of P40. In an example shown in FIG. 8(s)-1 to FIG. 8(s)-3, the user views a task card of the current terminal in the recent task interface of the current terminal. The user touches and holds a task card corresponding to an app 2 of the current terminal by using a left hand, and taps a device icon of MatePad 1 by using a right hand, to switch to a task card of MatePad 1, slide the task card of MatePad1 leftward or rightward by using the right hand, and select the task card. It is assumed that the user selects a task card corresponding to an app 4 of MatePad1, and the user touches and holds the task card corresponding to the app 4 of MatePad1 by using the right hand. In this case, the user may slide both the task card corresponding to the app 2 and the task card corresponding to the app 4 to an icon of a target device (a mobile phone P30), and then release the task card corresponding to the app 2 and the task card corresponding to the app 4. In this case, the app 2 and the app 4 can be displayed on a screen of P30. In other words, apps corresponding to different devices are simultaneously migrated to the target device.

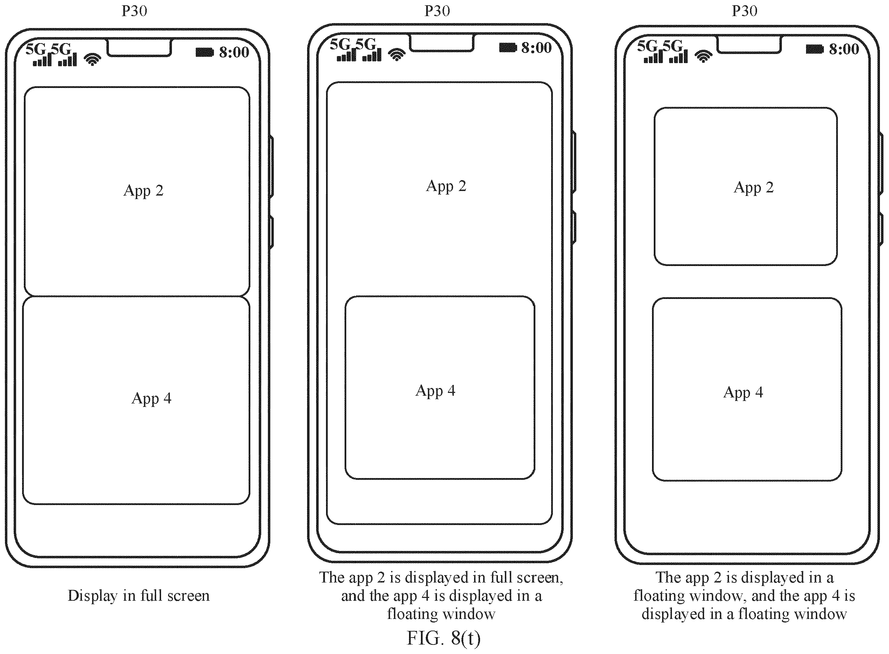

When the app 2 and the app 4 are displayed on the screen of P30, optionally, as shown in FIG. 8(t), the app 2 and the app 4 may be displayed in split screen; or the app 2 is displayed in full screen, and the app 4 is displayed in a floating window; or the app 4 is displayed in full screen, and the app 2 is displayed in a floating window; or the app 2 and the app 4 each are displayed in a floating window.

Optionally, in Example 26, after the user touches and holds the task card corresponding to the app 2 of the current terminal by using the left hand, the user may slide the task card leftward by using the right hand, to switch to a task card corresponding to another application of the current terminal, and select the task card. After selection is completed, the user slides both the task card corresponding to the app 2 and the task card corresponding to the another app of the current terminal to the target device, and releases the task card corresponding to the app 2 and the task card corresponding to the another app. In this case, two different apps 2 of the current terminal can be displayed on the target device.

Example 27: It is assumed that a local device (a current terminal) used by a user is a mobile phone (for example, P40). FIG. 8(u)-1 to FIG. 8(u)-4 are a schematic diagram of displaying a task card of another device in a recent task interface of P40. In an example shown in FIG. 8(u)-1 to FIG. 8(u)-4, optionally, the user touches and holds a task card corresponding to an app 2 of the current terminal by using a left hand, and taps a device icon of MatePad1 by using a right hand, to switch to a task card of MatePad1, slide the task card of MatePad1 leftward or rightward, and select the task card. It is assumed that the user selects a task card corresponding to an app 4 of MatePad1, and the user touches and holds the task card corresponding to the app 4 of Mate Pad 1, and releases the task card after dragging the task card corresponding to the app 4 to overlap a task card corresponding to an app 2. In this case, the task card corresponding to the app 4 and the task card corresponding to the app 2 form a new task card (split-screen task card), and the new task card is displayed in the recent task interface of the current terminal. The task card includes the task card corresponding to the app 4 and the task card corresponding to the app 2.

Optionally, in Example 27, after the user touches and holds the task card corresponding to the app 2 of the current terminal by using the left hand, the user may further slide the task card leftward by using the right hand, to switch to a task card corresponding to another application of the current terminal, and select the task card. After selection is completed, the task card corresponding to the another app of the current terminal is released after being dragged to overlap the task card corresponding to the app 2. In this case, task cards corresponding to two different apps of the current terminal form a new task card, and the new task card is displayed in the recent task interface of the current terminal.

In some example embodiments, after a task (an application) crosses devices in a migration mode based on a window projection technology, and a distance between a local device (a device that displays a task card of a remote device) and the remote device (a source device of the task card) exceeds a threshold, or quality of a network between the local device and the remote device is less than a preset threshold, a communication connection between the local device and the remote device is interrupted. In this case, a "Capsule" prompt may occur on the local device, to prompt a user with a case in which the local device and the remote device are to be disconnected. In addition, the user may perform an operation (for example, a slide-up operation or a slide-down operation) on "Capsule". After an operation is performed on the "Capsule" prompt, the "Capsule" prompt may be hidden; or the "Capsule" prompt may be automatically hidden after a preset display time length. After the "Capsule" prompt is hidden for a preset time length, if the distance between the local device and the remote device still exceeds the threshold, or the quality of the network between the local device and the remote device is still less than the preset threshold, the "Capsule" prompt may occur again. Optionally, after the "Capsule" prompt occurs again, the "Capsule" prompt may be hidden or automatically hidden through an operation of the user. In addition, a prompt of the source device (the remote device) exists on the local device.

In some example embodiments, when a task crosses devices in a migration mode based on an FA technology, if a distance between a local device and a remote device exceeds a threshold, or after quality of a network between the local device and the remote device is less than a preset threshold, a communication connection between the local device and the remote device is interrupted. In this case, optionally, a "Capsule" prompt may not occur on the local device. In other words, no "Capsule" prompt exists on the local device. In addition, an application may be independently used remotely on the local device. Optionally, no prompt of a source device (the remote device) exists on the local device.

The following provides descriptions with reference to specific examples.

Example 28: It is assumed that a first terminal (a local device) is a tablet computer. FIG. 8(v) is a diagram of an interface displayed on a first terminal after an application of a remote device (a device P40) on the first terminal is started on the first terminal. As shown in FIG. 8(v), it is assumed that a magazine lock screen application of the remote device (a source device P40 of a task) is displayed in a recent task interface of the first terminal in a migration mode based on a window projection technology. In this case, if a distance between the local device and the remote device exceeds a threshold, a "Capsule" prompt may occur on the local device, to prompt a user with "A distance from P40 is too far, and a connection is to be disconnected". Optionally, the user may perform an operation (for example, a slide-up operation or a slide-down operation) on "Capsule". After an operation is performed on the "Capsule" prompt, the "Capsule" prompt may be hidden; or the "Capsule" prompt may be automatically hidden after a preset display time length. In addition, a prompt "From P40" of the source device (P40) exists on the local device.

In some example embodiments, after a distance between a local device and a remote device exceeds a threshold, or quality of a network between a local device and a remote device is less than a preset threshold, or a remote device exits "super device", or a remote device changes a login account, or the like, and a communication connection between the local device and the remote device is interrupted, an application that is of the remote device and that is started on the local device is displayed with a mask on the local device, and prompt information is displayed to the user in display of the mask, to prompt the user with "A connection is disconnected due to XXX". If a connection disconnection factor is eliminated (for example, a network is restored, a distance becomes a safe distance again, or a login into a same account or an associated account is restored) within a preset time length, the local device is automatically reconnected to the remote device. After a reconnection succeeds, the local device exits display with a mask, and restores normal task display.

Optionally, a button is further displayed to the user on the mask, to prompt the user with "Reconnect". The user may manually tap the button to reconnect.

Optionally, a button is further displayed to the user on the mask, to prompt the user with "Exit the application". The user may manually tap the button. After the application is exited, a home screen of the local device is displayed. If the user does not tap the button within a preset time length (for example, 15 minutes), after the preset time length ends, the application is automatically exited, and the home screen of the local device is displayed.

If a connection disconnection factor is eliminated (for example, a network is restored, a distance becomes a safe distance again, or a login into a same account or an associated account is restored) before the user exits the application, the local device is automatically reconnected to the remote device. After a reconnection succeeds, the local device exits display with a mask, and restores normal task display.

Optionally, if a migration of the application to the local device fails due to another abnormality reason, for example, the application of the remote device is migrated to another device, display is still performed with a mask on the local device, and a button is further displayed to the user on the mask, to prompt the user with "Exit the application".

The following provides descriptions with reference to specific examples.

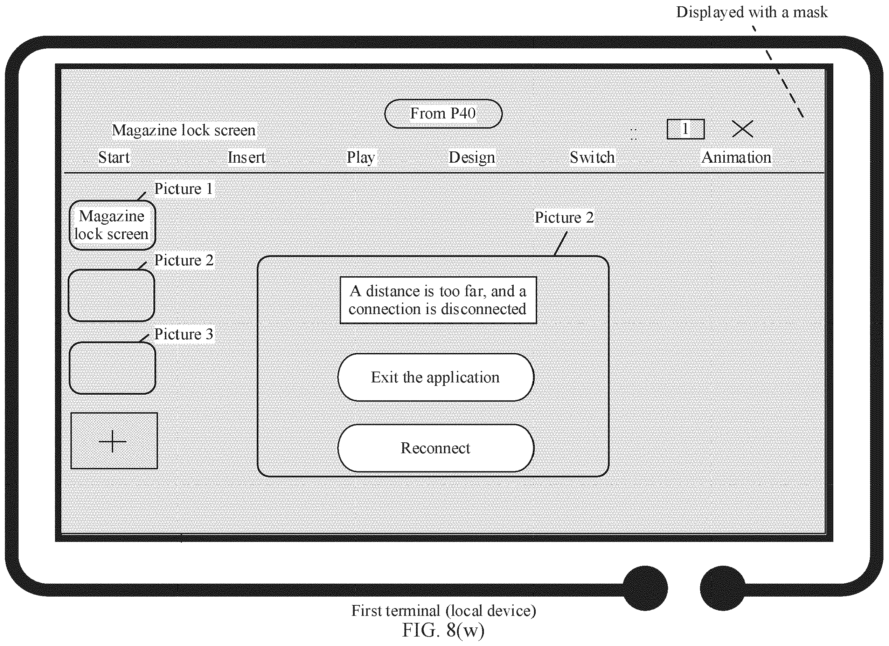

Example 29: It is assumed that a first terminal (a local device) is a tablet computer. FIG. 8(w) is a diagram of an interface displayed on a first terminal after an application "Magazine lock screen" of a remote device (a device P40) on the first terminal is started on the first terminal. As shown in FIG. 8(w), if a distance between the local device and the remote device exceeds a threshold, after a communication connection between the local device and the remote device is interrupted, the application "Magazine lock screen" is displayed with a mask on the local device. In addition, prompt information is displayed to a user in display of the mask, to prompt the user with "A distance is too far, and a connection is disconnected".

Optionally, as shown in FIG. 8(w), a button is further displayed to the user on the mask, to prompt the user with "Reconnect". The user may manually tap the button to reconnect.

Optionally, if a connection disconnection factor is eliminated (for example, a distance becomes a safe distance again) within a preset time length, the local device is automatically reconnected to the remote device. After a reconnection succeeds, the local device exits display with a mask, and restores normal task display.

Optionally, as shown in FIG. 8(w), a button is further displayed to the user on the mask, to prompt the user with "Exit the application". The user may manually tap the button. After the application is exited, a home screen of the local device is displayed. If the user does not tap the button within a preset time length (for example, 15 minutes), after the preset time length ends, the application is automatically exited, and the home screen of the local device is displayed.

In some example embodiments, a local device may further migrate a recently used application of another terminal to the local device, and display the application in the foreground of the local terminal; or migrate a recently used application of the local device to another terminal, and display the application in the foreground of the another terminal. Alternatively, if there are a plurality of other terminals (for example, a device B and a device C are included), the local device may further migrate a recently used application of the device B to the device C, and display the application in the foreground of the device C.

In some example embodiments, in a process in which the local device migrates a task card of a device to another device for display, a user may touch and hold a task card corresponding to the application on the local device, to hide another task card and an unavailable device icon around the local device. The unavailable device icon means that a device does not support the application. To be specific, after the application is migrated to the device, the device cannot run the application.

In some example embodiments, when a user needs to migrate an application to another device (that is, a target device) on the local device, the user may drag a task card corresponding to the application to an icon region of the target device. The local device may automatically determine the target device based on an area of an overlapping region of the task card and an icon of each device.

In some example embodiments, the user may alternatively perform different operations on the task card, to determine a target device to which the task card needs to be migrated.

The following provides descriptions with reference to specific examples.

It should be understood that, in operations such as "tap", "drag", and "move or slide" on a task card in the following examples and operations such as "tap", "drag", and "move or slide" on a task card in the foregoing examples, operations in any two or more examples may be combined into a whole solution, or operations in any one example may be a separate solution. This is not limited in this application.

For example, the operations such as "tap", "drag", and "move or slide" on the task card in the following examples are similar to the operations such as "tap", "drag", and "move or slide" on the task card in the foregoing examples (for example, examples shown in FIG. 4(c) to FIG. 4(e) and an example shown in FIG. 8(p)-1 and FIG. 8(p)-2), and an application corresponding to a task card may be run on a target device by performing an operation on the task card.

Example 30: It is assumed that a first terminal is a mobile phone (P40), a second terminal is a tablet computer 1 (MatePad1), and a third terminal is a tablet computer 2 (MatePad2).

FIG. 9(a)-1 and FIG. 9(a)-2 are a schematic diagram of displaying a historical task card of a second terminal and a historical task card of a third terminal in a recent task interface of a first terminal (a current terminal or a local device). Assuming that a user needs to migrate an app 2 of the current terminal to another device, the user may touch and hold a task card corresponding to the app 2. Assuming that MatePad2 is an unavailable device, an icon of MatePad2 may be hidden. Optionally, in this embodiment of this application, in addition to a case in which an icon of the unavailable device is hidden, the icon of the unavailable device may be displayed to the user in another manner. For example, a text prompt box may be disposed below an unavailable icon, to prompt a case in which the device is an unavailable device. Alternatively, the icon of the unavailable device may be displayed with a mask or displayed in a blurred manner. This is not limited in this application.

Example 31: It is assumed that a first terminal is a mobile phone (P40), a second terminal is a tablet computer 1 (MatePad1), and a third terminal is a tablet computer 2 (MatePad2).

FIG. 9(b)-1 and FIG. 9(b)-2 is a schematic diagram of displaying a historical task card of a second terminal and a historical task card of a third terminal in a recent task interface of a first terminal (a current terminal or a local device). It is assumed that a user needs to migrate an app 2 of the current terminal to MatePad1. The user may touch and hold a task card corresponding to the app 2, and slide the task card upward to an icon region of MatePad1. A shorter distance between the task card and the icon region of MatePad1 leads to a smaller task card. After the task card partially overlaps the icon region of MatePad1, or a distance between the task card and the icon region of MatePad1 is less than a preset threshold, the user releases the task card. After being released, the task card may be automatically migrated to MatePad1, and is displayed in the foreground of MatePad1.

Example 32: It is assumed that a first terminal is a mobile phone (P40), a second terminal is a tablet computer 1 (MatePad1), and a third terminal is a tablet computer 2 (MatePad2).

FIG. 9(c)-1 and FIG. 9(c)-2 are a schematic diagram of displaying a historical task card of a second terminal and a historical task card of a third terminal in a recent task interface of a first terminal (a current terminal or a local device). It is assumed that a user needs to migrate an app 2 of the current terminal to another device. The user may touch and hold a task card corresponding to the app 2, and slide the task card upward to an icon region of a device. If the task card overlaps an icon region of a device, it is determined that an icon of the device is a target device. For example, as shown in FIG. 9(c)-1 and FIG. 9(c)-2, after the user touches and holds the task card corresponding to the app 2, and slides the task card upward, if the task card overlaps an icon of the device MatePad1, it is determined that MatePad1 is a target device. After the user releases the task card, the task card may be automatically migrated to the target device, and displayed in the foreground of the target device.

Example 33: It is assumed that a first terminal is a mobile phone (P40), a second terminal is a tablet computer 1 (MatePad1), and a third terminal is a tablet computer 2 (MatePad2). FIG. 9(d)-1 and FIG. 9(d)-2 are a schematic diagram of displaying a historical task card of a second terminal and a historical task card of a third terminal in a recent task interface of a first terminal (a current terminal or a local device). It is assumed that a user needs to migrate an app 2 of the current terminal to another device. The user may touch and hold a task card corresponding to the app 2, and slide the task card upward to an icon region of the device. If the task card simultaneously overlaps icon regions of a plurality of devices, optionally, it may be determined that an icon of a device with a largest overlapping area is a target device. As shown in FIG. 9(d)-1 and FIG. 9(d)-2, the task card simultaneously overlaps a device icon of MatePad1 and a device icon of MatePad2, and there is a largest overlapping area of the task card and an icon of the device MatePad1, it is determined that MatePad1 is a target device. After the user releases the task card, the task card may be migrated to the target device, and displayed in the foreground of the target device.

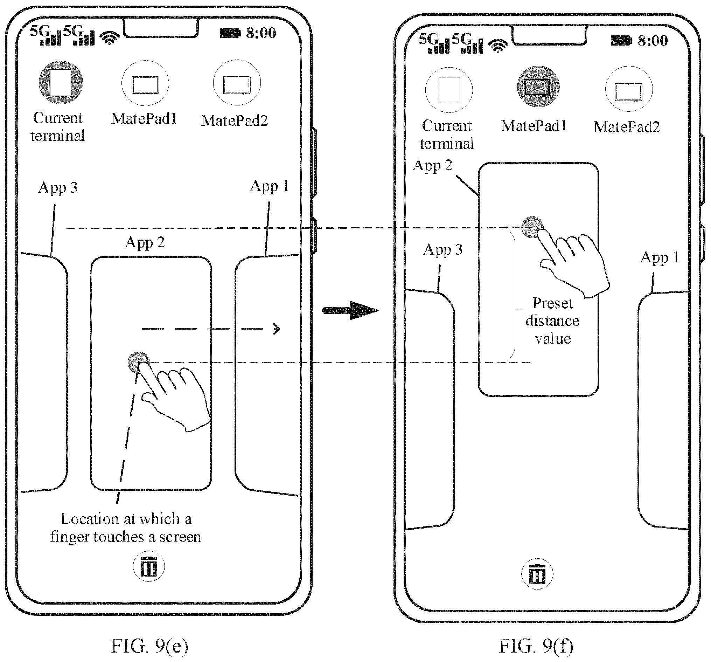

Example 34: It is assumed that a first terminal is a mobile phone (P40), a second terminal is a tablet computer 1 (MatePad1), and a third terminal is a tablet computer 2 (MatePad2). FIG. 9(e) is a schematic diagram of displaying a historical task card of a second terminal and a historical task card of a third terminal in a recent task interface of a first terminal (a current terminal or a local device). It is assumed that a user needs to migrate an app 2 of the current terminal to another device. The user may touch and hold a task card corresponding to the app 2, and slide the task card upward. After a distance (that is, a distance between a location at which a finger touches a screen on a mobile phone of the user before the user slides the task card and a location at which the finger touches the screen on the mobile phone of the user after the user slides the task card) by which the user slides the task card upward is greater than or equal to a preset distance, a device directly above the task card is a target device. For example, an interface displayed when the user touches and holds the task card corresponding to the app 2 and does not slide is shown in FIG. 9(e), an interface displayed after the user slides the task card upward is shown in FIG. 9(f). If a device directly above the task card is MatePad1, it is determined that MatePad1 is a target device. After the user releases the task card, the task card may be migrated to the target device, and displayed in the foreground of the target device.

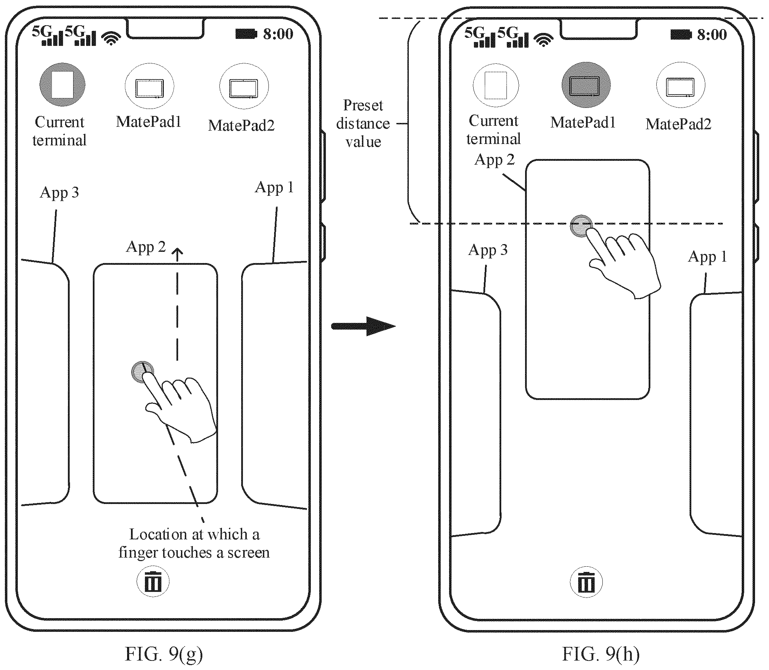

Example 35: It is assumed that a first terminal is a mobile phone (P40), a second terminal is a tablet computer 1 (MatePad1), and a third terminal is a tablet computer 2 (MatePad2). FIG. 9(g) is a schematic diagram of displaying a historical task card of a second terminal and a historical task card of a third terminal in a recent task interface of a first terminal (a current terminal or a local device). It is assumed that a user needs to migrate an app 2 of the current terminal to another device. The user may touch and hold a task card corresponding to the app 2, and slide the task card upward. Optionally, after a distance between a location at which a finger touches a screen on a mobile phone of the user and the top of a screen of the first terminal is less than or equal to a preset distance, a device directly above the task card is a target device. For example, an interface displayed after the user slides the task card upward is shown in FIG. 9(h). If the device directly above the task card is MatePad1, it is determined that MatePad1 is a target device. After the user releases the task card, the task card may be migrated to the target device, and displayed in the foreground of the target device.

In this embodiment of this application, in addition to a case in which a target device to which a task card needs to be migrated is determined in the foregoing manners, some preset rules may be further set. For example, the user may touch and hold a task card of another device in a recent task interface of a current terminal, and release the task card after touching and holding the task card. The task card is automatically migrated to the current terminal, and an application corresponding to the task card is displayed or run on the current terminal. Alternatively, the user may independently set a default target device. The user releases a task card after touching and holding a task card, and the task card is automatically migrated to the default target device. This is not limited in this application.

After the user selects the target device by performing an operation on the task card, in a possible implementation, the user may continue to touch and hold and drag the task card, until the task card overlaps an icon of the selected target device. In this case, the user releases the task card. The task card may be migrated to the target device, and displayed in the foreground of the target device, to complete cross-device interaction. In a possible implementation, after the user selects the target device by performing an operation on the task card, although the task card does not overlap an icon of the selected target device, the user releases the task card. The task card may still be migrated to the target device, and displayed in the foreground of the target device, to complete cross-device interaction. An example is shown in Example 36.

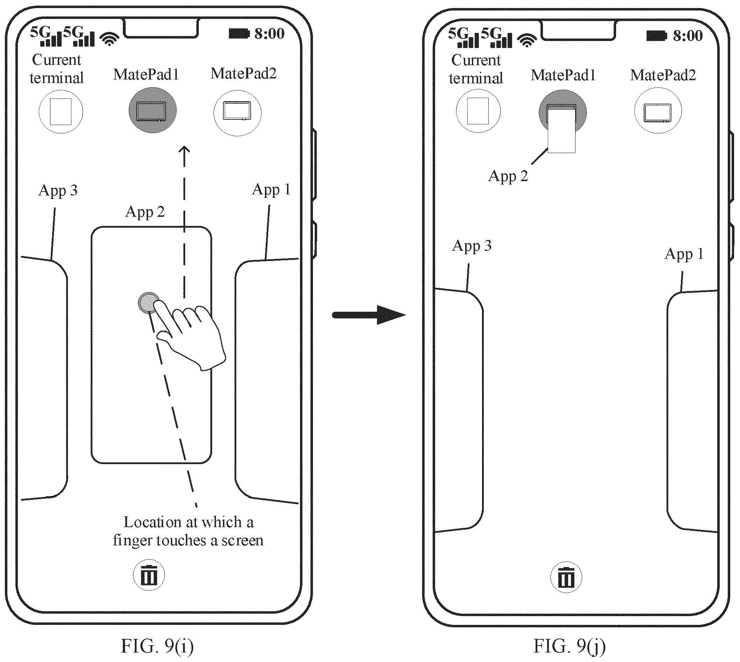

Example 36: It is assumed that a first terminal is a mobile phone (P40), a second terminal is a tablet computer 1 (MatePad1), and a third terminal is a tablet computer 2 (MatePad2). FIG. 9(i) is a schematic diagram of displaying a historical task card of a second terminal and a historical task card of a third terminal in a recent task interface of a first terminal (a current terminal or a local device). It is assumed that a user needs to migrate an app 2 of the current terminal to another device. After the user determines a target device through any one of the foregoing operations, although the task card does not overlap an icon of the selected target device, the user may release the task card. After the user releases the task card, the task card may be migrated to the target device, and displayed in the foreground of the target device. For example, FIG. 9(i) is a diagram of an interface of a target device selected by a user. The target device is MatePad1. In this case, the user releases the task card, and a displayed interface is shown in FIG. 9(j). The task card may automatically move to the icon of the target device (for example, the task card automatically flies to the icon of the target device), so that the task card is migrated to the target device. The task card may be displayed in the foreground of the target device, to implement cross-device interaction.

In some example embodiments, after the user selects the target device by performing an operation on the task card, the icon of the target device may further change correspondingly. For example, the icon of the target device may move downward a distance, or a color of the icon of the target device changes, or the like, to prompt the user with the selected target device. In addition, the user may further perform an operation on the task card, to change the selected target device. The following provides descriptions with reference to specific examples.

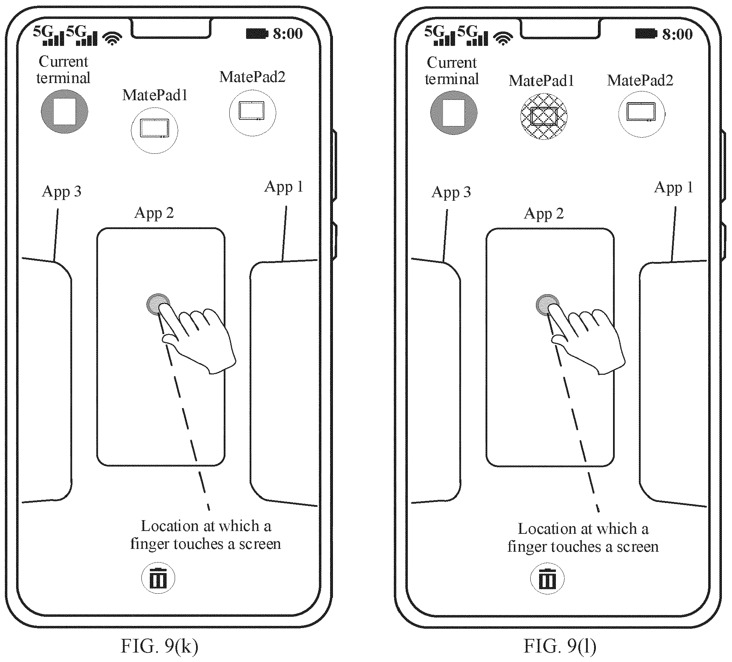

Example 37: It is assumed that a first terminal is a mobile phone (P40), a second terminal is a tablet computer 1 (MatePad1), and a third terminal is a tablet computer 2 (MatePad2). FIG. 9(k) is a schematic diagram of displaying a historical task card of a second terminal and a historical task card of a third terminal in a recent task interface of a first terminal (a current terminal or a local device). It is assumed that a user needs to migrate an app 2 of the current terminal to another device. After the user determines a target device through any one of the foregoing operations, an icon of the target device may move downward a distance. For example, as shown in FIG. 9(k), assuming that a target device selected by the user is MatePad1, a device icon of MatePad1 may move downward a distance. Alternatively, a color of the icon of the target device may become a selected-state color. As shown in FIG. 9(l), if a target device selected by the user is MatePad1, a device icon of MatePad1 becomes a filled state.

In some example embodiments, the selected target device may also be identified in another manner. For example, the selected target device may be prompted to the user in a text prompt box, or the like. This is not limited in this application.

In some example embodiments, a correspondence between a location of a task card and a target device may be further preset. After the user touches and holds the task card and drags the task card to a preset location, a target device corresponding to the region is automatically displayed to the user. As the user drags the task card to change a location, the target device changes accordingly. After determining a target device to which the task card needs to be migrated, the user may release the task card. The task card may automatically move to an icon of the target device (for example, the task card automatically flies to the icon of the target device), so that the task card is migrated to the target device. The task card may be displayed in the foreground of the target device, to implement cross-device interaction.

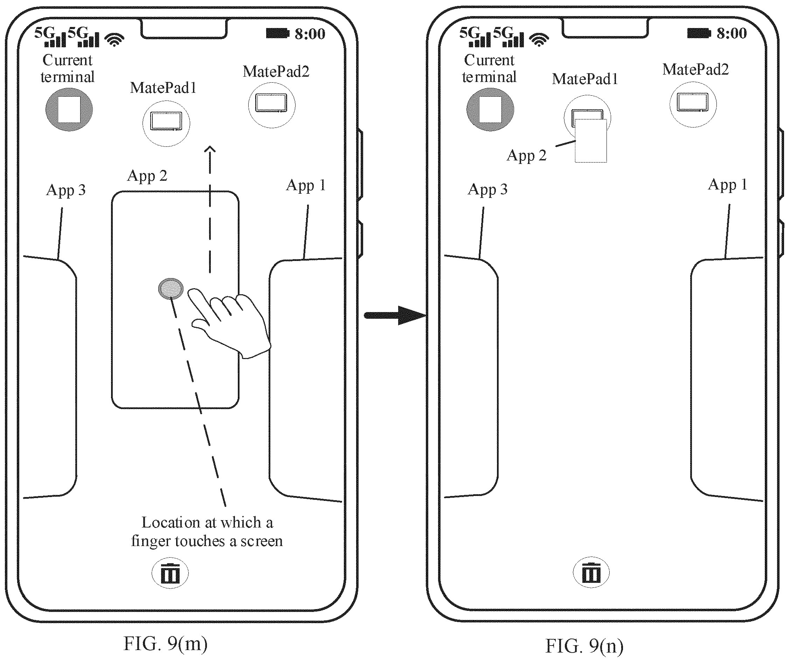

Example 38: It is assumed that a first terminal is a mobile phone (P40), a second terminal is a tablet computer 1 (MatePad1), and a third terminal is a tablet computer 2 (MatePad2). FIG. 9(m) is a schematic diagram of displaying a historical task card of a second terminal and a historical task card of a third terminal in a recent task interface of a first terminal (a current terminal or a local device). It is assumed that a user needs to migrate an app 2 of the current terminal to another device. After the user touches and holds the task card and drags the task card to change a location of the task card, a target device corresponding to the location of the task card is displayed. For example, as shown in FIG. 9(m), the user touches and holds the task card and drags the task card to change the location of the task card. A displayed target is MatePad1. If the user determines that an app 2 needs to be migrated to MatePad1, the user may release the task card. The displayed interface is shown in FIG. 9(n). Optionally, the task card may automatically move to an icon of the target device (for example, the task card automatically flies to the icon of the target device), so that the task card is migrated to the target device.

In some example embodiments, after the user selects the target device by performing an operation on the task card, the selected target device changes as the user further performs an operation on the task card, or the selected target device may be unselected. The following provides descriptions with reference to specific examples.

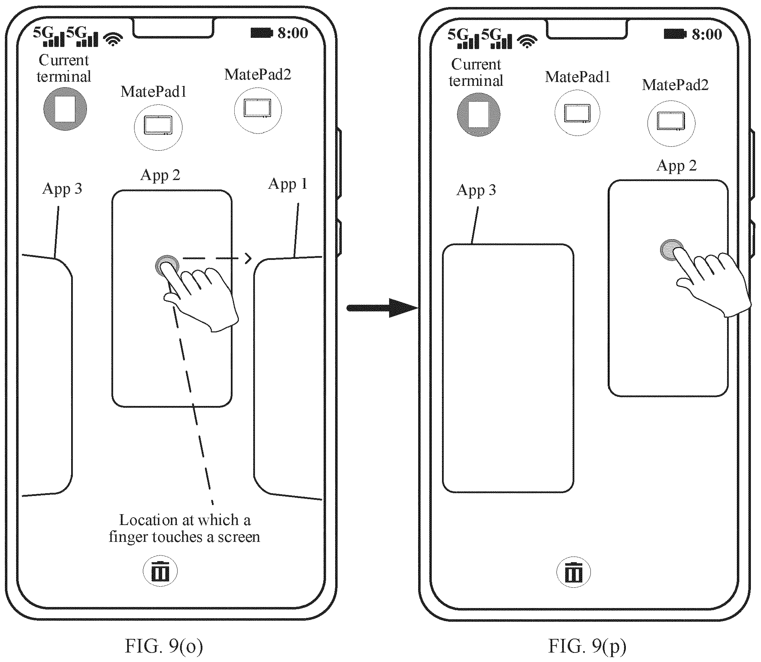

Example 39: It is assumed that a first terminal is a mobile phone (P40), a second terminal is a tablet computer 1 (MatePad1), and a third terminal is a tablet computer 2 (MatePad2). FIG. 9(o) is a schematic diagram of displaying a historical task card of a second terminal and a historical task card of a third terminal in a recent task interface of a first terminal (a current terminal or a local device). It is assumed that a user needs to migrate an app 2 of the current terminal to another device. After the user determines a target device through any one of the foregoing operations, for example, as shown in FIG. 9(o), assuming that a selected target device is MatePad1, if the user continues to drag the task card to slide leftward or rightward, the selected target device switches accordingly. As shown in FIG. 9(p), assuming that the user drags the task card to slide rightward, a changed target device is MatePad2, and a device icon of MatePad2 moves downward a distance. In this case, the user may release the task card. The task card may automatically move to an icon of the target device (MatePad2) (for example, the task card automatically flies to the icon of the target device), so that the task card is migrated to the target device.

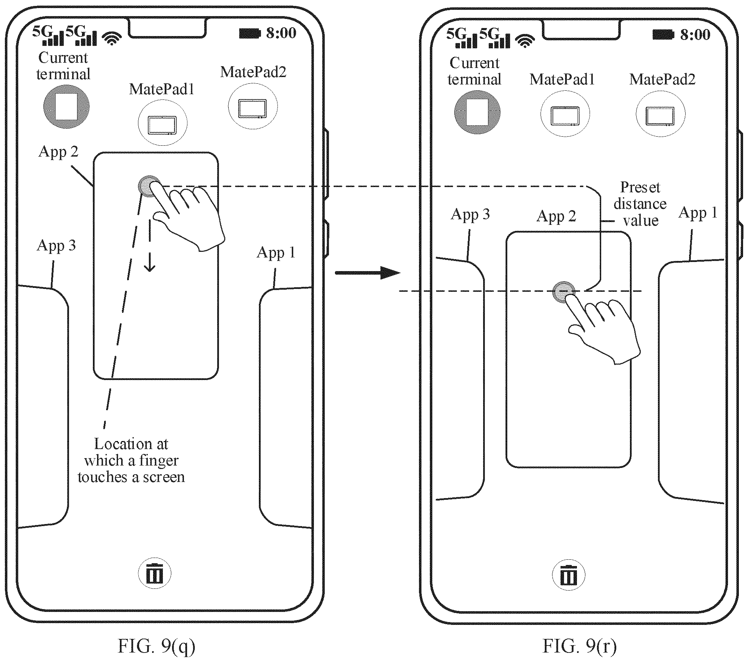

Example 40: It is assumed that a first terminal is a mobile phone (P40), a second terminal is a tablet computer 1 (MatePad1), and a third terminal is a tablet computer 2 (MatePad2). FIG. 9(q) is a schematic diagram of displaying a historical task card of a second terminal and a historical task card of a third terminal in a recent task interface of a first terminal (a current terminal or a local device). It is assumed that a user needs to migrate an app 2 of the current terminal to another device. After the user determines a target device through any one of the foregoing operations, for example, as shown in FIG. 9(q), assuming that a selected target device is MatePad1, a device icon of MatePad1 may move downward a distance. Optionally, if the user continues to drag the task card and slides downward, after a sliding distance (that is, a distance between a location at which a finger touches a screen on a mobile phone of the user before the user slides the task card and a location at which the finger touches the screen on the mobile phone of the user after the user slides the task card) is greater than or equal to a preset distance, for example, as shown in FIG. 9(r), if the user releases the task card, the target device MatePad1 is unselected, a device icon of MatePad1 is restored to a previous location, the task card is restored, for display, to a state existing before the target is selected, and a migration of the task card is canceled.

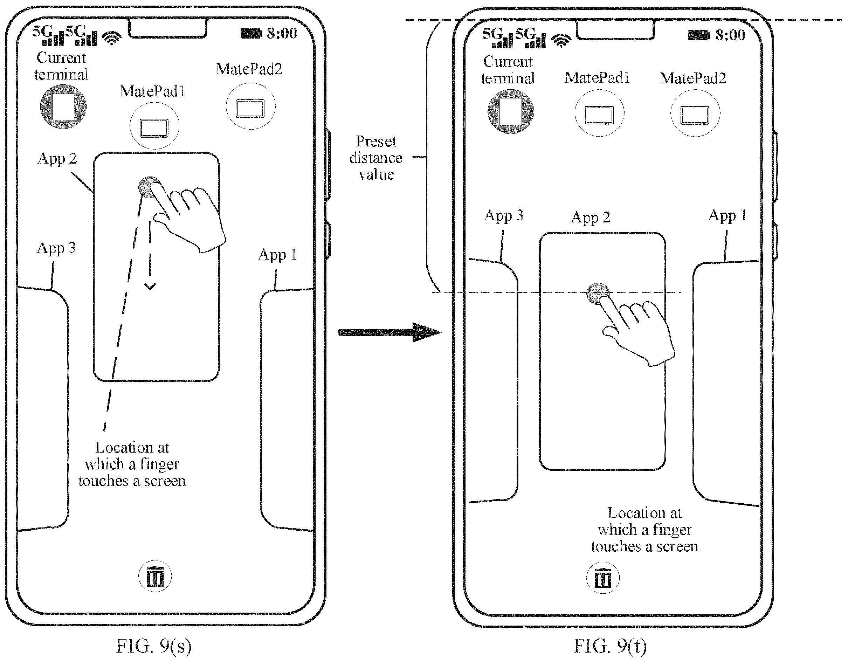

Example 41: It is assumed that a first terminal is a mobile phone (P40), a second terminal is a tablet computer 1 (MatePad1), and a third terminal is a tablet computer 2 (MatePad2). FIG. 9(s) is a schematic diagram of displaying a historical task card of a second terminal and a historical task card of a third terminal in a recent task interface of a first terminal (a current terminal or a local device). It is assumed that a user needs to migrate an app 2 of the current terminal to another device. After the user determines a target device through any one of the foregoing operations, for example, as shown in FIG. 9(s), assuming that a selected target device is MatePad1, a device icon of MatePad1 may move downward a distance. Optionally, if the user continues to drag the task card and slides downward, after a sliding distance (that is, a distance between a location at which a finger touches a screen on a mobile phone of the user and the top of a screen of the first terminal) is greater than or equal to a preset distance, for example, as shown in FIG. 9(t), if the user releases the task card, the target device MatePad1 is unselected, a device icon of MatePad1 is restored to a previous location, the task card is restored, for display, to a state existing before the target is selected, and a migration of the task card is canceled.

In some example embodiments, in a process in which the user drags the task card to select the target device or unselect the target device, the user may further drag the task card to a left edge or a right edge of the screen. In this case, the user may continue to drag the task card leftward or rightward, so that more device icons can be displayed at the top of the screen, and the user can determine the target device from the more device icons. In this embodiment of this application, optionally, the more device icons may be arranged to be displayed in one row, or may be displayed at the top of a screen of a device in a form of a radar graph. This is not limited in this application. For example, Example 42 shows a schematic diagram of an interface in which more device icons are arranged to be displayed in one row.

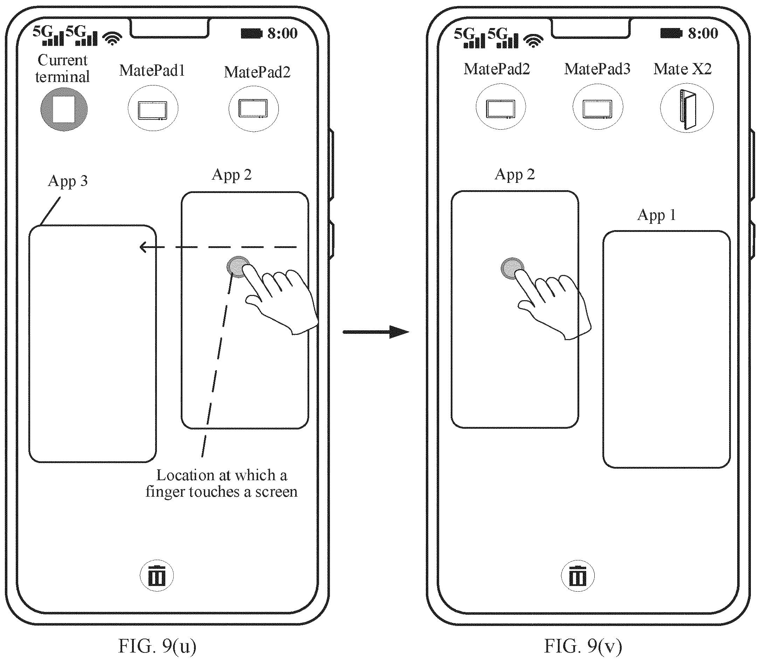

Example 42: It is assumed that a first terminal is a mobile phone (P40), a second terminal is a tablet computer 1 (MatePad1), and a third terminal is a tablet computer 2 (MatePad2). FIG. 9(u) is a schematic diagram of displaying a historical task card of a second terminal and a historical task card of a third terminal in a recent task interface of a first terminal (a current terminal or a local device). It is assumed that a user needs to migrate an app 2 of the current terminal to another device. For example, as shown in FIG. 9(u), the user drags a task card and slides the task card leftward. After the task card is located on a right edge of a screen, the user continues to drag the task card rightward. A displayed interface is shown in FIG. 9(v). Another device icon (MatePad3 and Mate X2) is displayed at the top of the screen, and a plurality of device icons displayed at the top of the screen are displayed in one row. The user may continue to perform an operation on the task card, to determine the target device from the more device icons.

In some example embodiments, in a process in which a local device migrates, in a recent task interface, a task card of a device to a target device for display or running, for example, a user migrates a video of a mobile phone to a large-screen device for playing, or migrates audio of a mobile phone to a sound box for playing, if the target device is in a screen-off state, the target device may automatically turn on a screen, and after the target device turns on a screen, an application corresponding to the task card can be displayed after the user unlocks the target device; or the target device may automatically turn on a screen, unlocking is automatically triggered, and an application corresponding to the task card can be displayed after the user unlocks the target device; or the target device may automatically turn on a screen and is automatically unlocked, and an application corresponding to the task card can be displayed after the target device is unlocked. The following provides descriptions with reference to specific examples.

Example 43: It is assumed that a first terminal is a tablet computer (MatePad), a second terminal is a mobile phone (P40), and a third terminal is a foldable-screen mobile phone (Mate X2). FIG. 10(a) is a schematic diagram of displaying a historical task card of a second terminal and a historical task card of a third terminal in a recent task interface of a first terminal (a current terminal or a local device). It is assumed that a user needs to migrate an app 2 of the current terminal to the second terminal, and the second terminal is in a screen-off state. After the user migrates a task card corresponding to the app 2 to the mobile phone (P40) in any manner in the foregoing embodiments, as shown in FIG. 10(a), the mobile phone P40 is in a screen-off state; after the mobile phone P40 receives task information, the mobile phone P40 automatically turns on a screen; after the mobile phone P40 automatically turns on the screen, the user is triggered to manually unlock the mobile phone P40; and after the user manually unlocks the mobile phone P40, the mobile phone P40 may display or run the app 2.

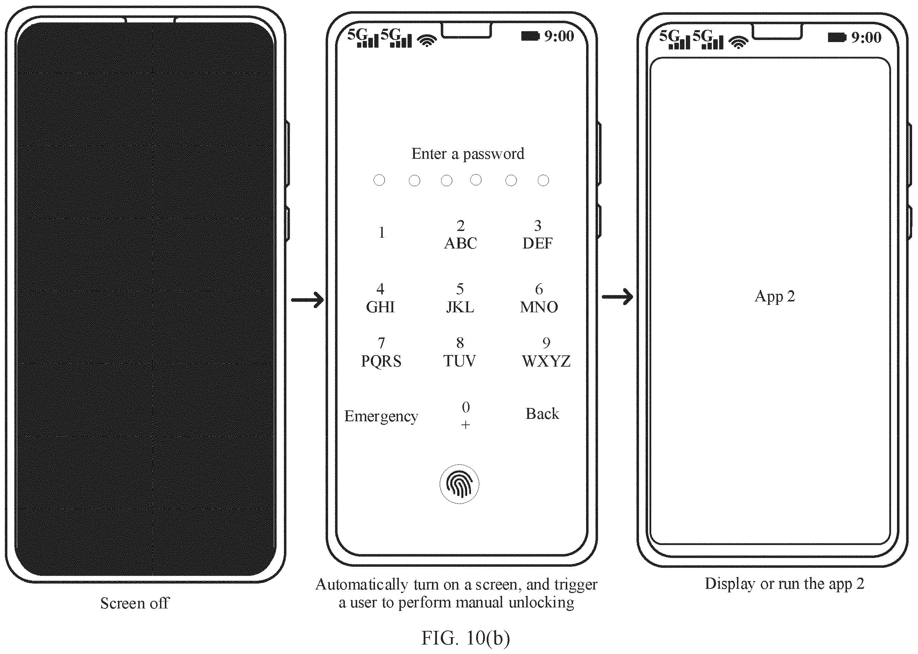

Example 44: It is assumed that a first terminal is a tablet computer (MatePad), a second terminal is a mobile phone (P40), and a third terminal is a foldable-screen mobile phone (Mate X2). FIG. 10(b) is a schematic diagram of displaying a historical task card of a second terminal and a historical task card of a third terminal in a recent task interface of a first terminal (a current terminal or a local device). It is assumed that a user needs to migrate an app 2 of the current terminal to the second terminal, and the second terminal is in a screen-off state. After the user migrates a task card corresponding to the app 2 to the mobile phone (P40) in any manner in the foregoing embodiments, as shown in FIG. 10(b), the mobile phone (P40) is in a screen-off state; after the mobile phone (P40) receives task information, the mobile phone (P40) automatically turns on a screen, and triggers the user to manually unlock the mobile phone (P40); and after the user manually unlocks the mobile phone (P40), the mobile phone (P40) may display or run the app 2.

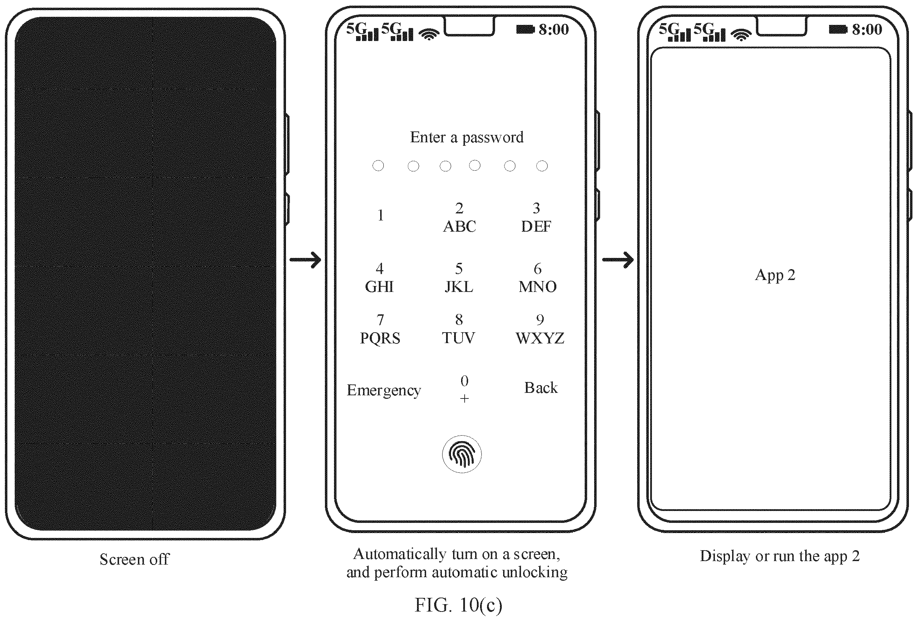

Example 45: It is assumed that a first terminal is a tablet computer (MatePad), a second terminal is a mobile phone (P40), and a third terminal is a foldable-screen mobile phone (Mate X2). FIG. 10(c) is a schematic diagram of displaying a historical task card of a second terminal and a historical task card of a third terminal in a recent task interface of a first terminal (a current terminal or a local device). It is assumed that a user needs to migrate an app 2 of the current terminal to the second terminal, and the second terminal is in a screen-off state. After the user migrates a task card corresponding to the app 2 to the mobile phone (P40) in any manner in the foregoing embodiments, as shown in FIG. 10(c), the mobile phone (P40) is in a screen-off state; after the mobile phone (P40) receives task information, the mobile phone (P40) automatically turns on a screen, and triggers automatic unlocking; and after the user manually unlocks the mobile phone (P40), the mobile phone (P40) may display or run the app 2.

In some example embodiments, in a process in which a local device migrates, in a recent task interface, a task card of a device to a target device for display or running, if the target device is in a screen-off state, in a possible implementation, different rules for triggering the target device to turn on a screen and to be unlocked may be further set based on different types of applications that need to be migrated or sensitivity levels corresponding to the applications. For example, after an application with a low sensitivity level (for example, an application such as a video playing application or an audio playing application) is migrated to a screen-off target device, the target device may automatically turn on a screen and trigger automatic unlocking, so that the application is displayed or run on the target device. For example, after an application with a high sensitivity level (for example, an application such as a document editing application or a picture playing application) is migrated to a screen-off target device, the target device may automatically turn on a screen and trigger a user to manually unlock the target device, so that the application is displayed or run on the target device.

In some example embodiments, different rules for triggering the target device to turn on a screen and to be unlocked may be further set based on different situations of the target device (for example, target devices with different security levels or security capability or different types of target devices). For example, assuming that the target device is a large-screen device, after an application is migrated to a screen-off target device, the target device may automatically turn on a screen and trigger a user to manually unlock the target device, so that the application is displayed or run on the target device. Assuming that the target device is a smart sound box, after an application is migrated to a screen-off target device, the target device may automatically turn on a screen and is automatically unlocked, so that the application is displayed or run on the target device.

In some example embodiments, in a process in which a source device migrates, in a recent task interface, a task card to a target device to run an application corresponding to the task card, for example, the application corresponding to the task card involves a hardware capability of a device, for example, including a hardware capability of a camera, a microphone, a display, and the like of the device, after the application is migrated from the source device to the target device, the application may be run on the target device by using a hardware capability of the source device or a hardware capability of the target device and based on any one of the following several rules:

Rule 1: After the source device migrates the application to the target device, the hardware capability of the target device is not used. In other words, after the application is migrated to the target device, the hardware capability of the source device continues to be used to run the application on a target.

Rule 2: After the source device migrates the application to the target device, a part of the hardware capability of the target device is used. In other words, after the application is migrated to the target device, a part of the hardware capability of the source device and a part of the hardware capability of the target device may be simultaneously used to cooperate to complete running of the application on the target.

Rule 3: After the source device migrates the application to the target device, the hardware capability of the target device is used, and a hardware capability that is of the source device and that is occupied by the application is released. In this case, the source device may run a new application by using the hardware capability of the source device. In other words, the two devices may separately execute different tasks by using respective hardware capabilities, without affecting each other.

Rule 4: After the source device migrates the application to the target device, the hardware capability of the target device is used, and a hardware capability that is of the source device and that is occupied by the application is not released.

With reference to specific examples (for example, Example 46 to Example 48), the following describes the rules of using a hardware capability after a task is migrated.

Example 46: It is assumed that a first terminal is a tablet computer 1 (MatePad1), a second terminal is a mobile phone (P40), and a historical task card of the second terminal and a historical task card of another terminal are displayed in a recent task interface of the first terminal (a current terminal or a local device). It is assumed that a user needs to migrate a video call of the mobile phone P40 (a source device) to MatePad1 (a target device) for running. As shown in FIG. 11(a)-1 and FIG. 11(a)-2, the user may tap a task card corresponding to the video call in a recent task interface of MatePad1, and after the task card is tapped, the video call is run on MatePad1. A camera, a microphone, and a speaker of MatePad1 are invoked for the video call by default. In other words, a hardware capability of the target device is used, and a hardware capability of the mobile phone P40 is not used. Optionally, a hardware capability that is of the mobile phone P40, namely, the source device and that is occupied by the video call may be released; or a hardware capability that is of the mobile phone P40 and that is occupied by the video call is not released. If the hardware capability that is of the mobile phone P40 and that is occupied by the video call is not released, the mobile phone P40 cannot use the hardware capability to re-initiate a new task.

In some example embodiments, a prompt box may further pop up in MatePad1. For example, the prompt box prompts the user with "Are you sure you want to use the hardware capability of this device". If the user taps "Yes", the hardware capability of MatePad1 may be used; and if the user taps "No", the hardware capability of the source device (the mobile phone P40) is used. The prompt box may disappear automatically after a preset time period. If the user does not make selection within the preset time period, the hardware capability of MatePad1 is used by default.

Example 47: It is assumed that a first terminal is a tablet computer 1 (MatePad1), a second terminal is a mobile phone (P40), and a historical task card of the second terminal and a historical task card of another terminal are displayed in a recent task interface of the first terminal. It is assumed that a user needs to migrate a video call of the mobile phone P40 (a source device) to MatePad1 (a target device) for running. As shown in FIG. 11(b)-1 and FIG. 11(b)-2, the user may tap a task card corresponding to the video call in a recent task interface of MatePad1, and after the task card is tapped, the video call is run on MatePad1. A camera, a microphone, and a speaker of each of MatePad1 and the mobile phone P40 are used for the video call, to cooperate to complete the video call on MatePad1. In other words, both a hardware capability of the target device and a hardware capability of the source device are used, to cooperate to complete running of an application on the target. As shown in FIG. 11(b)-1 and FIG. 11(b)-2, after the video call is migrated from the mobile phone P40 to the tablet computer MatePad1, a camera of MatePad1 is used, and the user may choose, on MatePad1, to open a camera of the mobile phone P40. Both the camera of MatePad1 and the camera of the mobile phone P40 are used to perform the video call, and a microphone and a speaker of each of MatePad1 and the mobile phone P40 are used to perform audio recording and audio playing.

Example 48: It is assumed that a first terminal is a tablet computer 1 (MatePad1), a second terminal is a mobile phone (P40), and a historical task card of the second terminal and a historical task card of another terminal are displayed in a recent task interface of the first terminal. It is assumed that a user needs to migrate a video call of the mobile phone P40 (a source device) to MatePad1 (a target device) for running. As shown in FIG. 11(c)-1 and FIG. 11(c)-2, the user may tap a task card corresponding to the video call in a recent task interface of MatePad1, and after the task card is tapped, the video call (a video call task 1) is run on MatePad1. A camera, a microphone, and a speaker of MatePad1 are invoked for the video call by default. In other words, a hardware capability of the target device is used, and a hardware capability of the source device (a local device) is not used. Optionally, after a video task is migrated from the mobile phone P40 to MatePad1, another video task (a video call task 2) may be further performed on the mobile phone P40. The mobile phone P40 and MatePad1 independently use respective hardware capabilities (a camera capability, a microphone, a speaker capability, an input capability, and the like) without mutual interference. In other words, after migrating a video application to MatePad1, the mobile phone P40 uses a hardware capability of MatePad1, and releases a hardware capability that is of the mobile phone P40 and that is occupied by the video application. In this case, the mobile phone P40 may run a new application by using the hardware capability of the source device. In other words, the two devices may separately execute different tasks by using respective hardware capabilities, without affecting each other.

In some example embodiments, when a task is migrated from a source device to a target device for running and a hardware capability of the target device is used when the task is run, in a process in which the task is run on the target device, if a new task is run on the target device and the new task run on the target device and the task migrated from the source device conflict in terms of a hardware capability, for example, both need to use a camera, a microphone, a speaker, and the like of the target device, in a possible implementation, the task migrated from the source device may automatically switch to use a hardware capability of the source device, and continue to be run on the source device; and the new task on the target device preferentially uses the hardware capability of the target device. In other words, it is ensured that a task of the target device is preferentially executed. After the new task on the target device is executed, the hardware capability of the target device is released, and the task migrated from the source device may switch to use the hardware capability of the target device, and continue to be run on the target device.

In some example embodiments, when the new task run on the target device and the task migrated from the source device conflict in terms of a hardware capability, the task migrated from the source device may alternatively preferentially use the hardware capability of the target device. In other words, it is ensured that the migrated task preferentially continues to be executed on the target device. After the migrated task is executed on the target device, the new task on the target device may use the hardware capability of the target device, to execute the new task.

In some example embodiments, when the new task run on the target device and the task migrated from the source device conflict in terms of a hardware capability, the hardware capability of the target device may be separated based on the tasks, and support both the new task and the task migrated from the source device. In addition, the target device may be further displayed in split screen, that is, simultaneously display the new task and the task migrated from the source device. The following provides descriptions with reference to specific examples (Example 49 and Example 50).

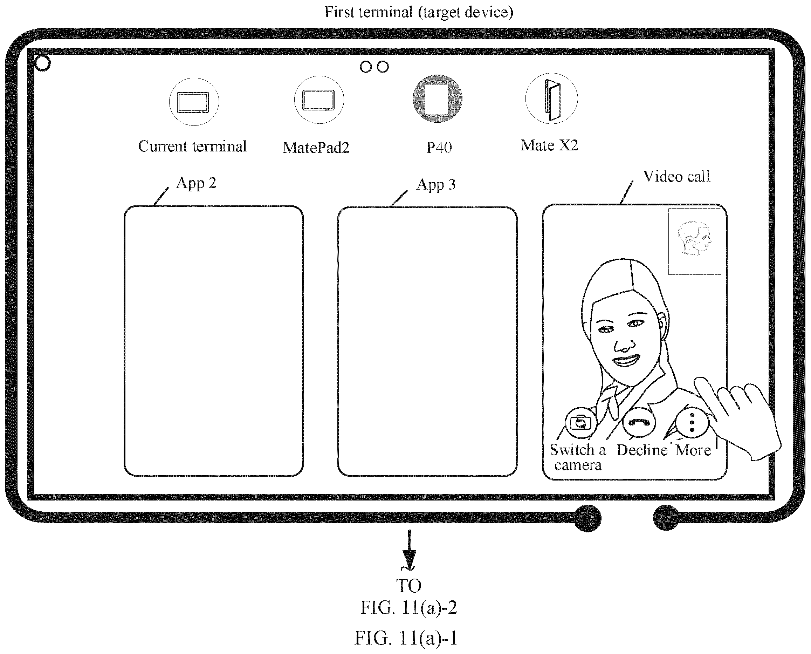

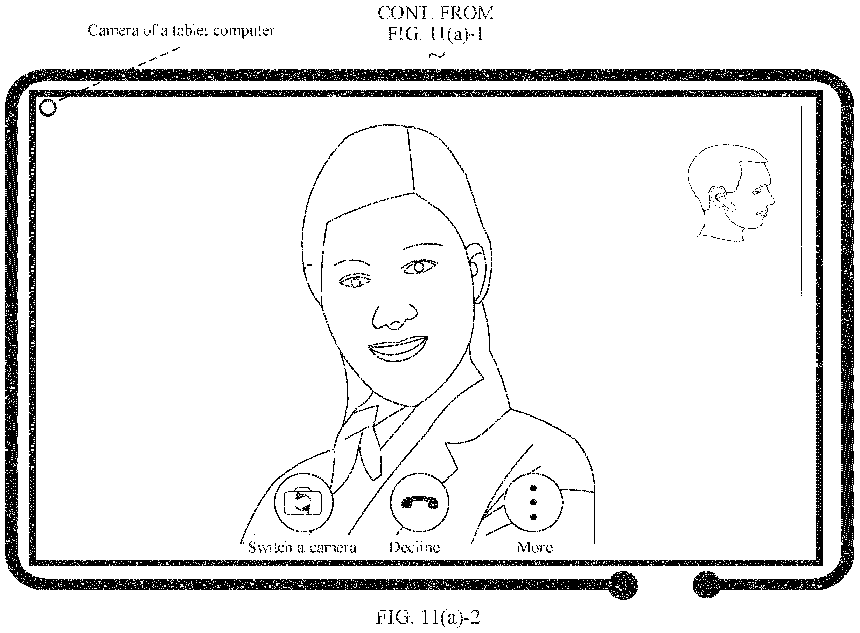

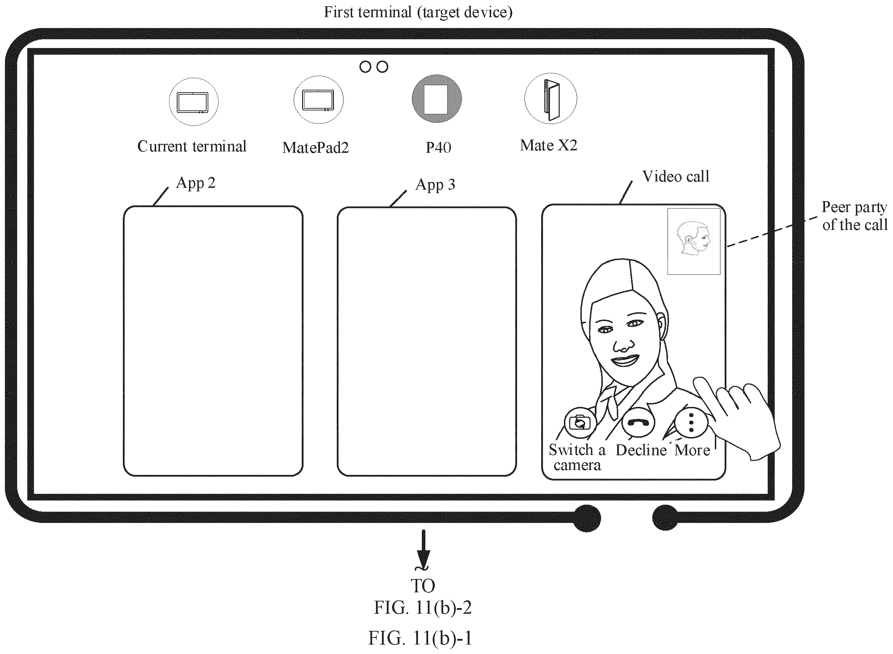

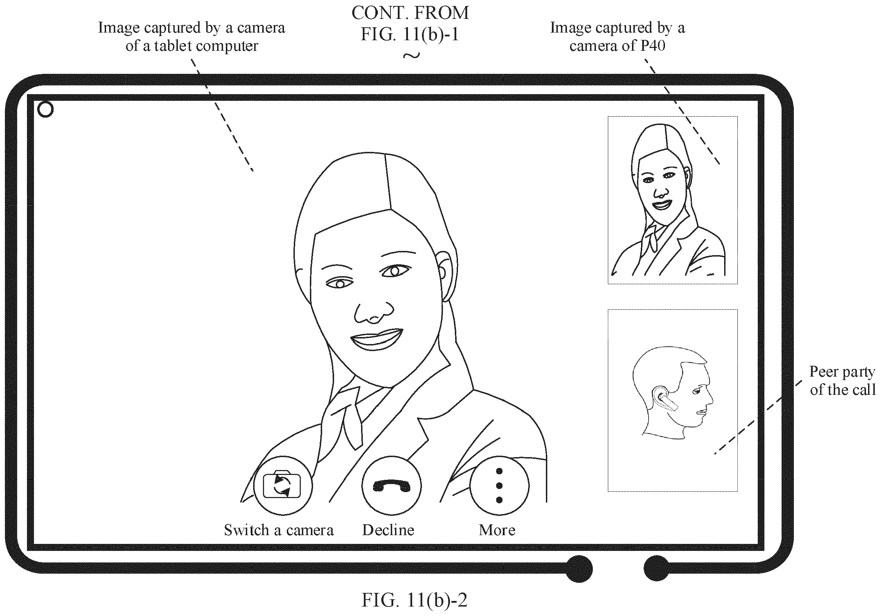

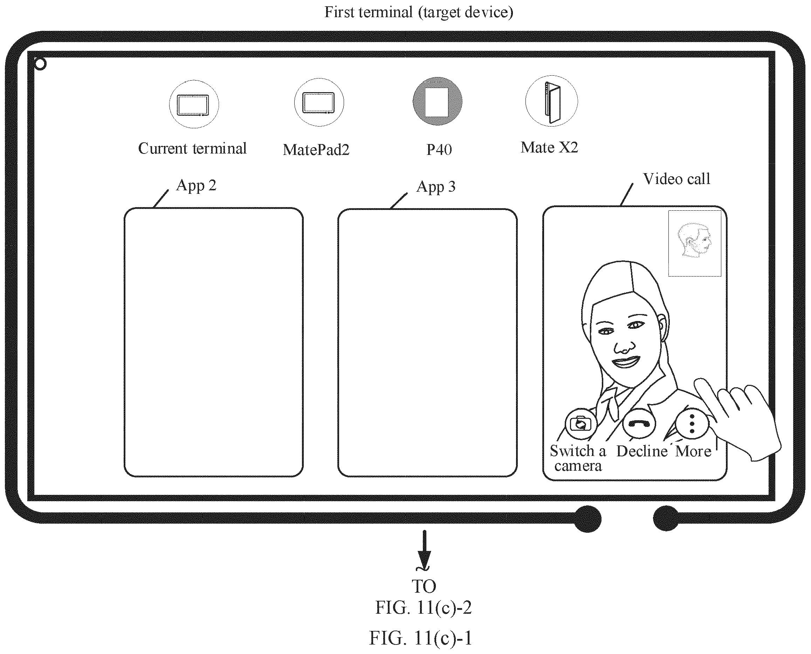

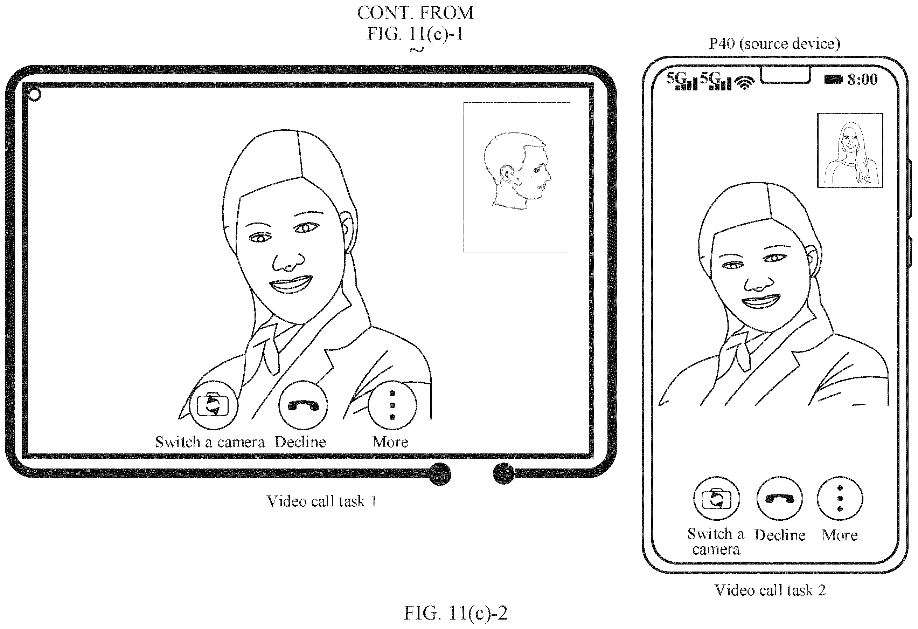

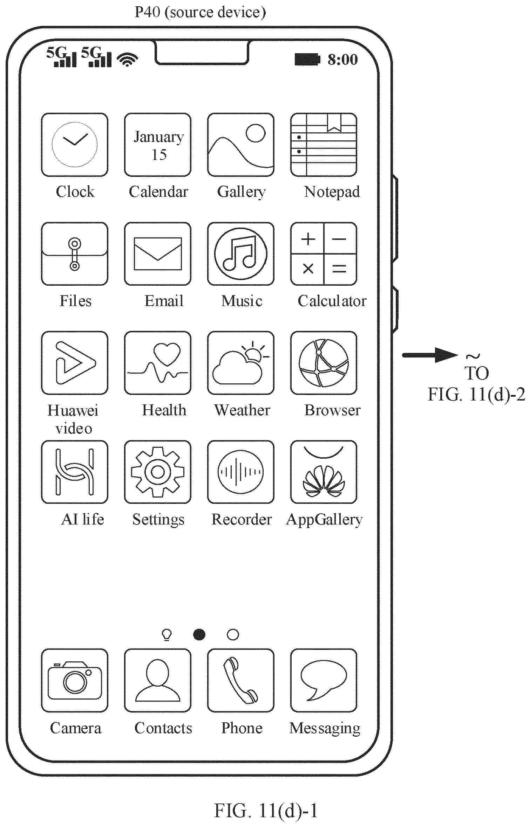

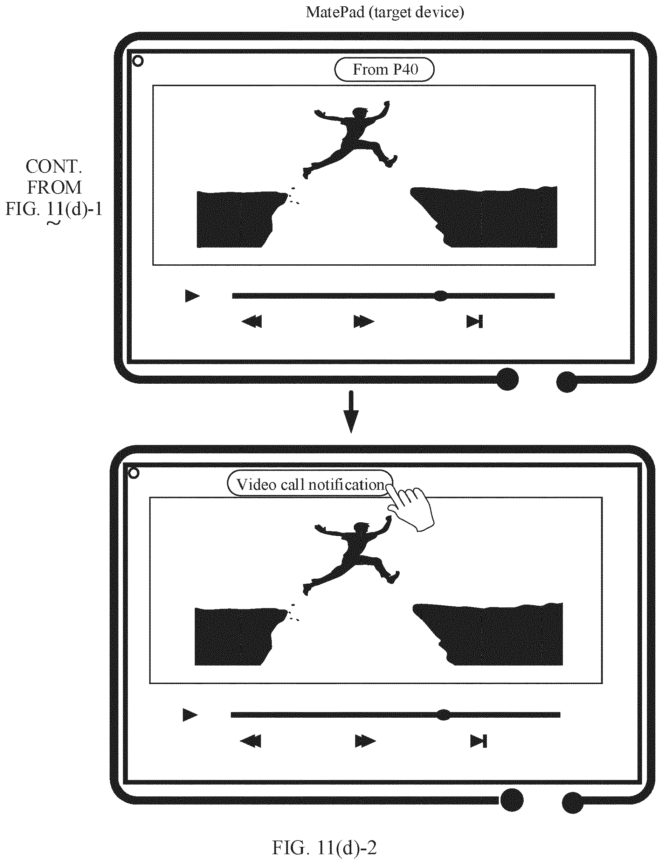

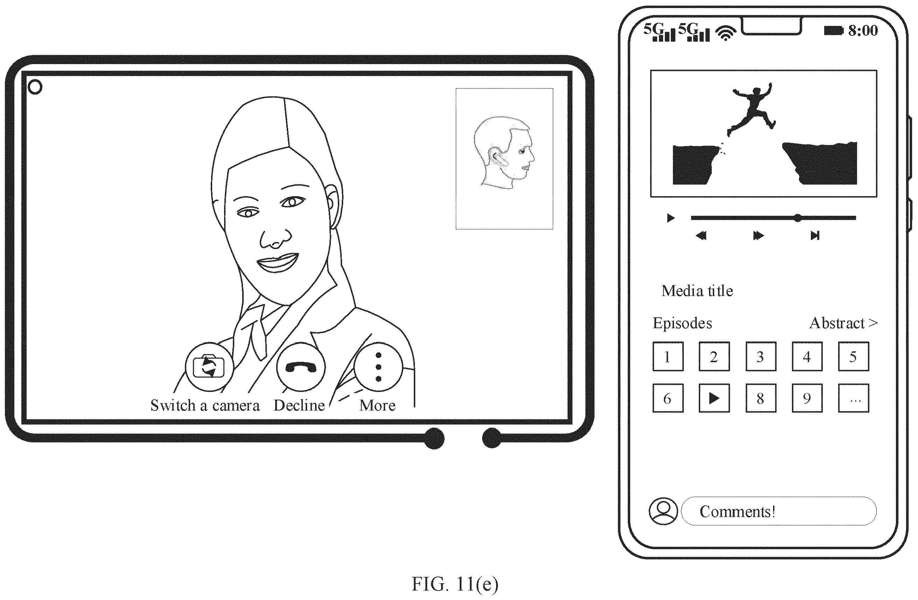

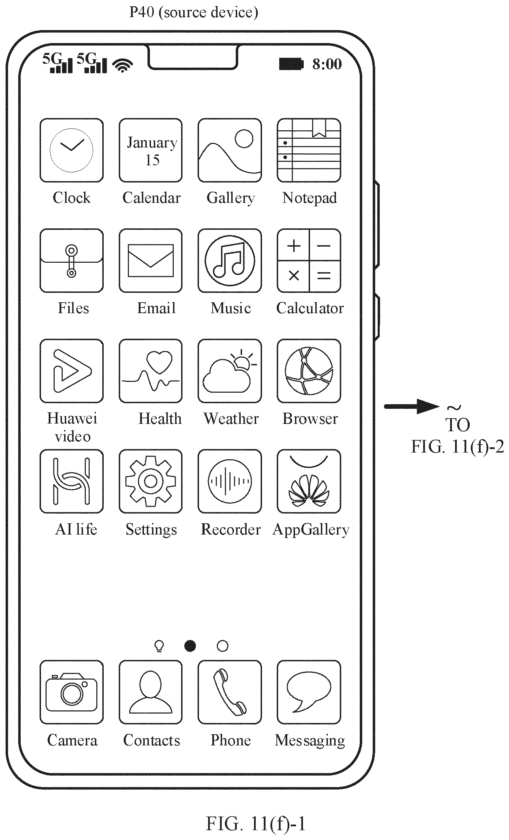

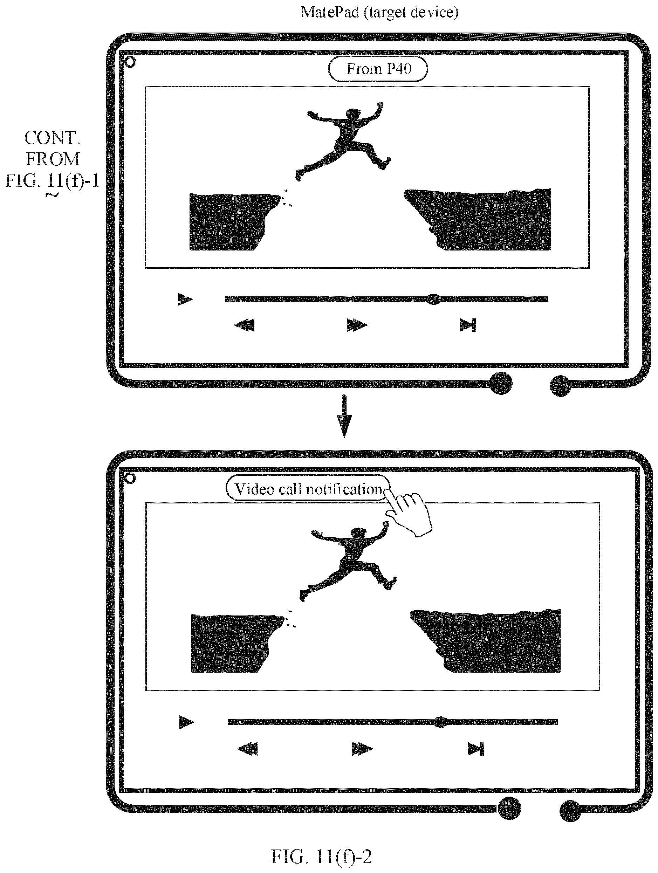

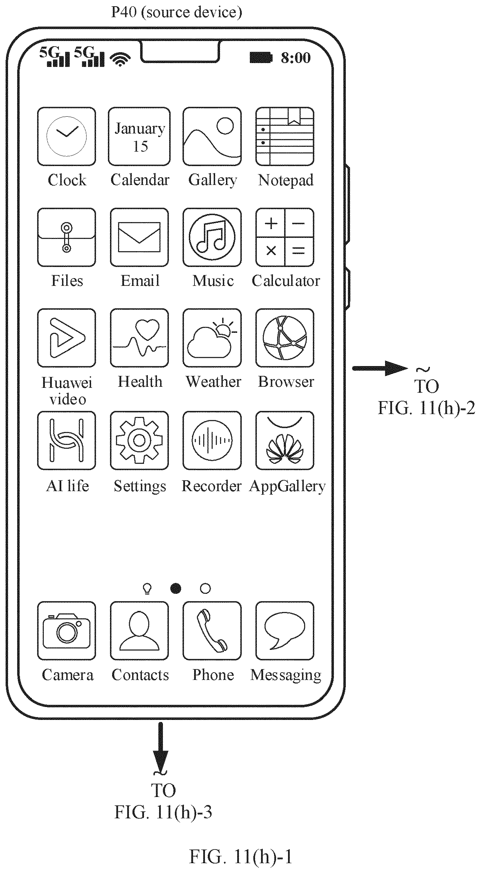

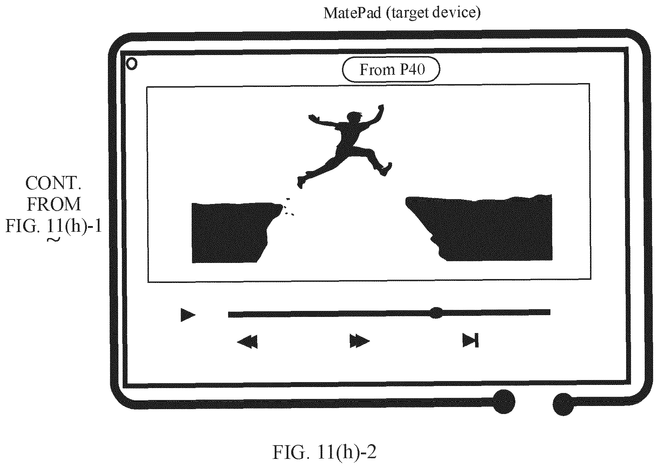

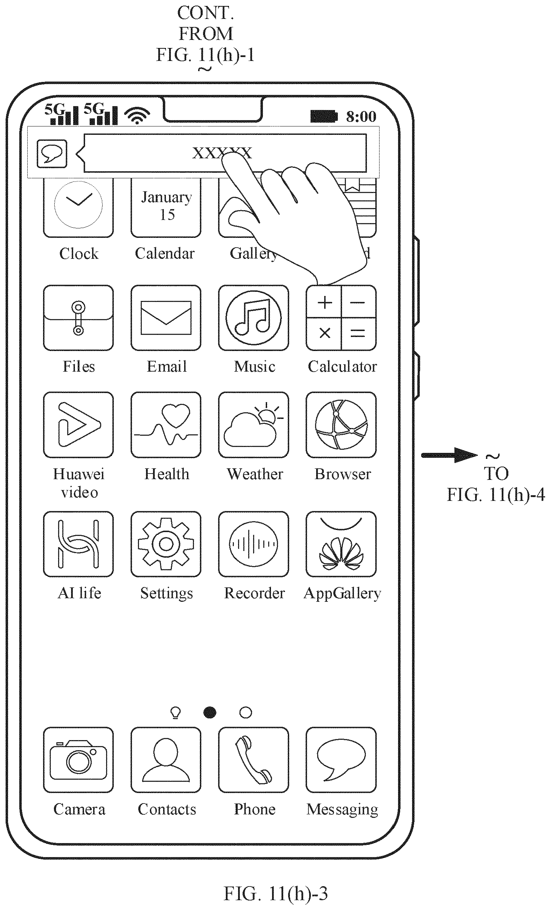

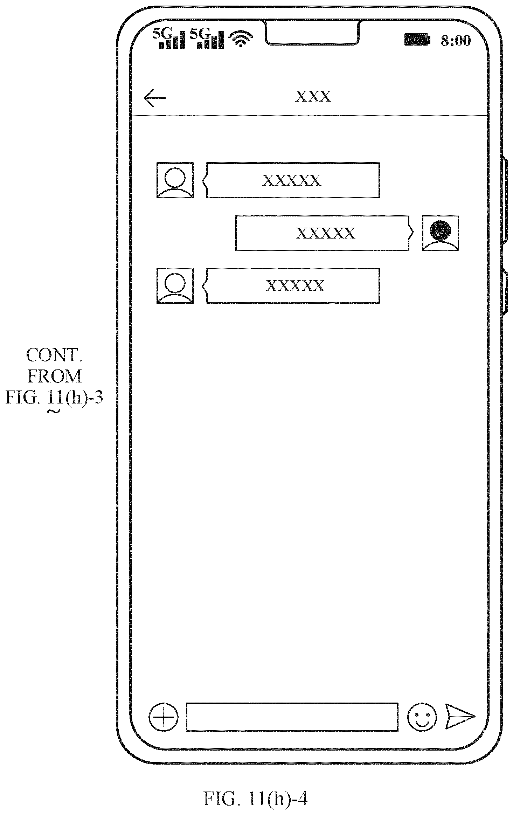

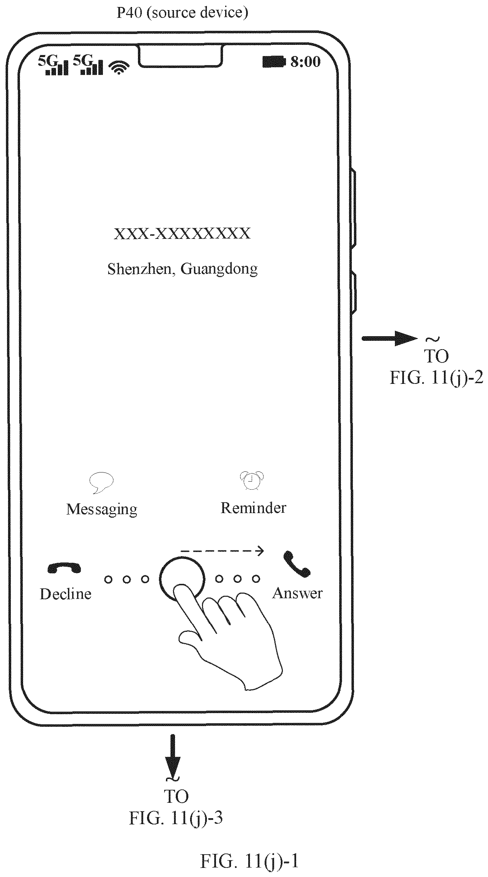

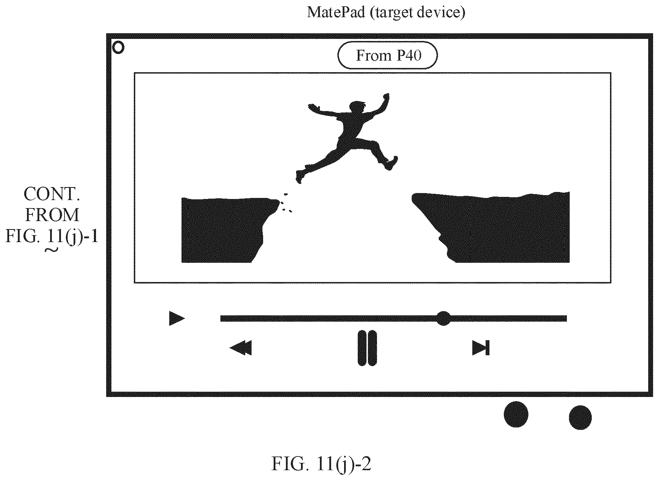

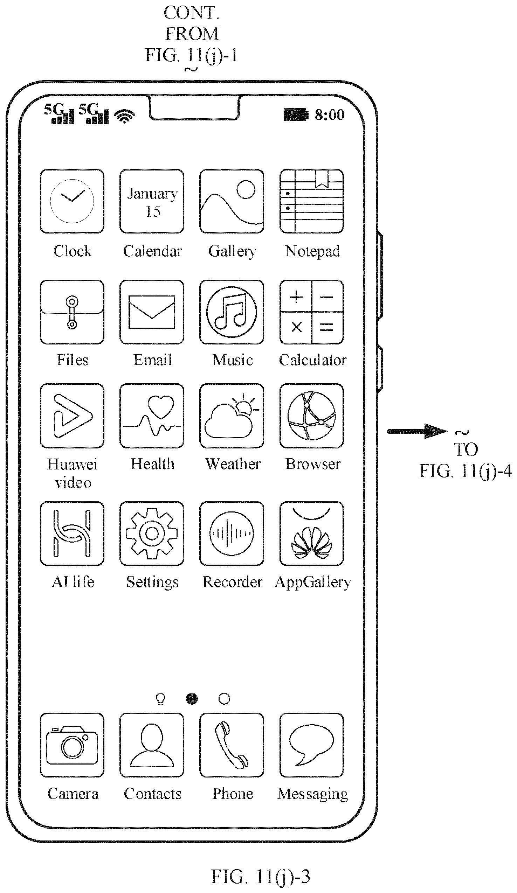

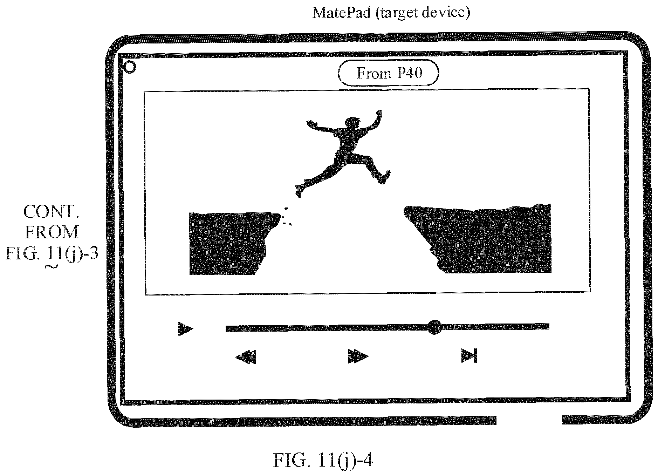

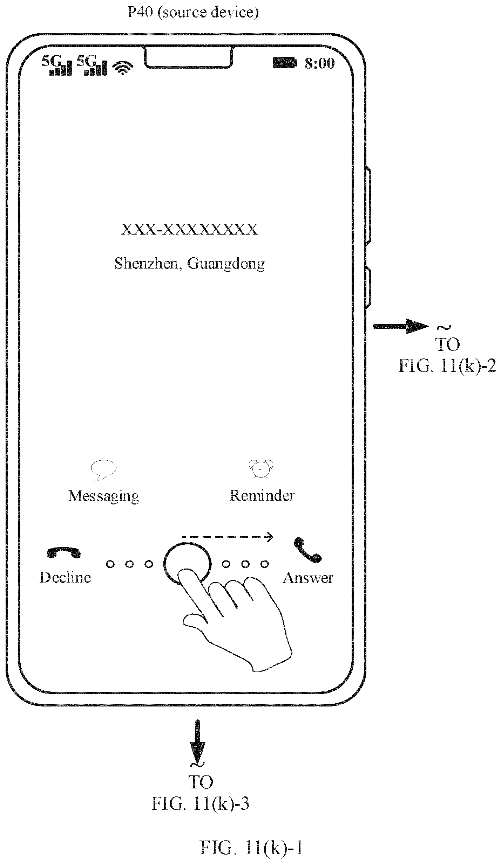

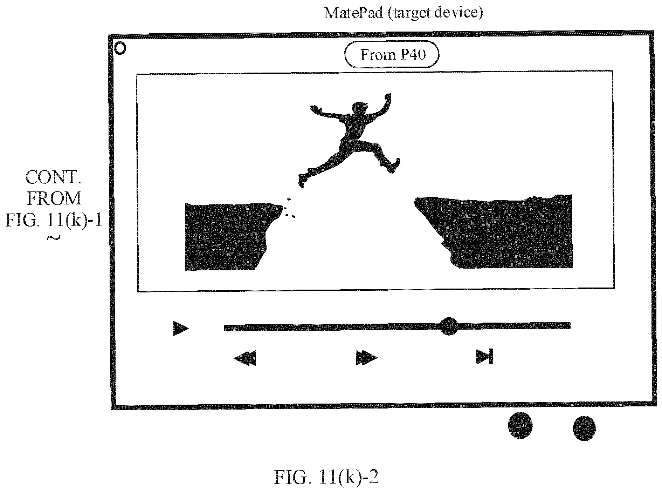

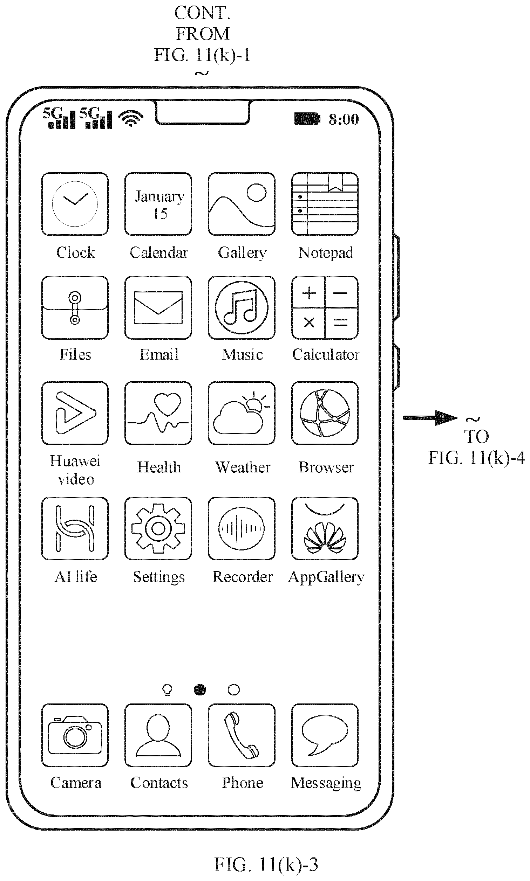

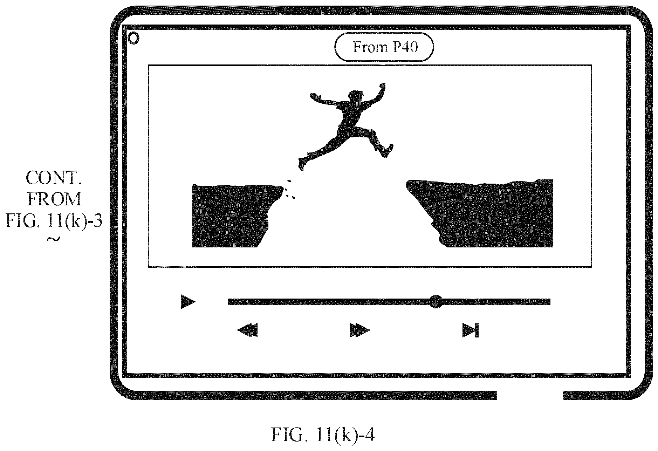

Example 49: As shown in FIG. 11(d)-1 and FIG. 11(d)-2, it is assumed that a video playing task on a mobile phone P40 (a source device) is migrated to a tablet computer MatePad (a target device), and the video playing task is run on MatePad. In a process in which a video is played on MatePad, MatePad receives a video call task, and MatePad may pop up a prompt box of "Video call notification" to a user. After the user taps the prompt box, as shown in FIG. 11(e), a video call screen is displayed on MatePad, and the video is automatically migrated back to the mobile phone P40 to continue playing. After a video call on MatePad ends, the video is automatically migrated to MatePad to continue playing.

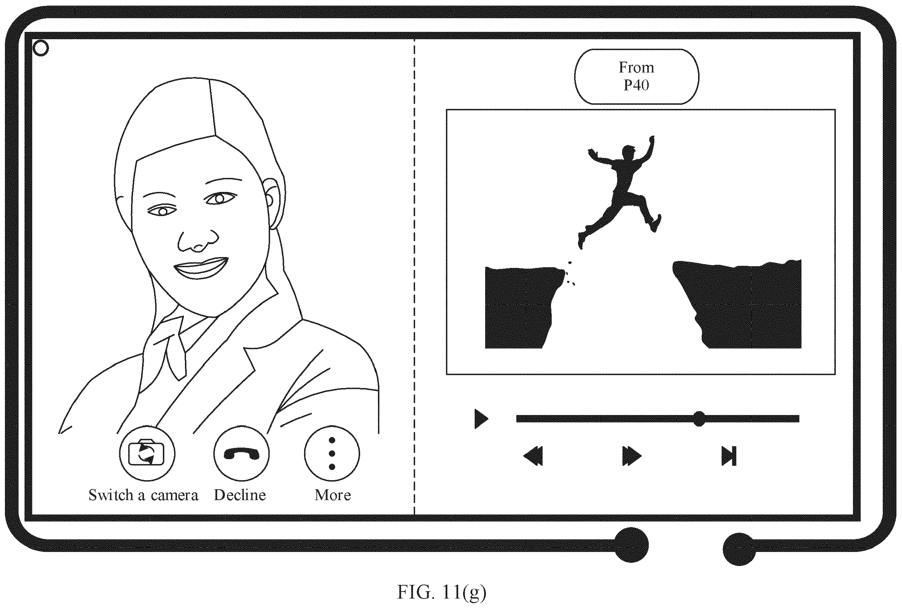

Example 50: As shown in FIG. 11(f)-1 and FIG. 11(f)-2, it is assumed that a video playing task on a mobile phone P40 (a source device) is migrated to a tablet computer MatePad (a target device), and the video playing task is run on MatePad. In a process in which a video is played on MatePad, MatePad receives a video call task, and MatePad may pop up a prompt box of "Video call notification" to a user. After the prompt box is tapped, optionally, as shown in FIG. 11(g), MatePad displays video playing and a video call in split screen. In addition, a hardware capability of MatePad (for example, a camera, a microphone, a speaker, and an input/output capability) may be separated based on two tasks, namely, video playing and the video call, and running of both video playing and the video call is supported.

In some example embodiments, when a task is migrated from a current terminal (a source device) to a target device for running, and a hardware capability of the source device is used when the task is run on the target device, in a process in which the target device runs the task, if a new task is run on the source device, and the new task run on the source device and the task migrated from the source device to the target device conflict in terms of hardware capability, for example, both need to use a camera, a microphone, a speaker, and the like of the source device, there are the following several possible implementations:

In some example embodiments, execution of the task migrated from the source device may be automatically suspended on the target device. After the new task of the source device is executed, the migrated task automatically continues to be executed on the target device.

In another possible implementation, the target device continues to execute, by using a hardware capability of the target device, the task migrated from the source device. In other words, the source device executes the new task by using the hardware capability of the source device, and the target device executes, by using the hardware capability of the target device, the task migrated from the source device. After the new task on the source device is executed, the target device may switch to use the hardware capability of the source device to execute the task migrated from the source device, or continue to use the hardware capability of the target device to execute the task migrated from the source device.

In some example embodiments, the hardware capability of the source device may be separated based on the tasks, and support both the new task and the task that is migrated from the source device and that is executed on the target device.

The following provides descriptions with reference to specific examples (Example 51 to Example 53).

Example 51: As shown in FIG. 11(h)-1 to FIG. 11(h)-4, it is assumed that a video playing task on a mobile phone P40 (a source device) is migrated to a tablet computer MatePad (a target device), the video playing task is run on MatePad, and a hardware capability of the mobile phone P40 is used in a process in which the video playing task is run on MatePad. In the process in which the video playing task is run on MatePad, there is a new information notification on the mobile phone P40. The mobile phone P40 prompts a user by using a sound or a vibration. Assuming that a hardware capability required for the sound or the vibration does not conflict with a hardware capability required for playing a video, the video continues to be played on MatePad. The user may tap a notification prompt box popping up on the mobile phone P40, to view information on the mobile phone P40. Two tasks of viewing the information on the mobile phone P40 and playing the video on MatePad do not affect each other and are executed simultaneously, and the two tasks both use the hardware capability of the mobile phone P40.

Example 52: As shown in FIG. 11(i)-1 to FIG. 11(i)-4, it is assumed that a video playing task on a mobile phone P40 (a source device) is migrated to a tablet computer MatePad (a target device), the video playing task is run on MatePad, and a hardware capability (a microphone, a speaker, and the like) of the mobile phone P40 is used in a process in which the video playing task is run on MatePad. In a process in which the video playing task is run on MatePad, the mobile phone P40 receives an incoming call (for example, a call of an operator or a VoIP network call), a ringtone of the incoming call rings on the mobile phone P40, and MatePad continues to play a video. As shown in FIG. 11(j)-1 to FIG. 11(j)-4, after a user slides to answer the call, a voice is input/output on the mobile phone P40. Because a hardware capability used when MatePad plays the video conflicts with a hardware capability used by a voice call on the mobile phone P40, video playing on MatePad is automatically suspended. After the call on the mobile phone P40 ends, the video on MatePad automatically continues to be played.

Example 53: As shown in FIG. 11(i)-1 to FIG. 11(i)-4, it is assumed that a video playing task on a mobile phone P40 (a source device) is migrated to a tablet computer MatePad (a target device), the video playing task is run on MatePad, and a hardware capability (a microphone, a speaker, and the like) of the mobile phone P40 is used in a process in which the video playing task is run on MatePad. In a process in which the video playing task is run on MatePad, the mobile phone P40 receives an incoming call (for example, a call of an operator or a VoIP network call), a ringtone of the incoming call rings on the mobile phone P40, and MatePad continues to play a video. As shown in FIG. 11(k)-1 to FIG. 11(k)-4, after a user slides to answer the call, a voice is input/output on the mobile phone P40. Because a hardware capability used when MatePad plays the video conflicts with a hardware capability used by a voice call on the mobile phone P40, the hardware capability of the mobile phone P40 may be separated based on the two tasks (the voice call and video playing), video playing on MatePad continues, and the call on the mobile phone P40 is simultaneously performed. After the call on P40 ends, the hardware capability occupied by the call on P40 is automatically occupied by video playing on MatePad.

Alternatively, in Example 53, after a user slides to answer the call, a voice is input/output on the mobile phone P40. Because a hardware capability used when MatePad plays the video conflicts with a hardware capability used by a voice call on the mobile phone P40, video playing on MatePad may automatically switch to use a hardware capability of MatePad. In other words, the two devices may separately execute different tasks by using respective hardware capabilities, without affecting each other. Video playing on MatePad continues. The call on the mobile phone P40 is also performed simultaneously. After the call on P40 ends, the video playing task on MatePad automatically switches to use the hardware capability of the mobile phone P40 to continue to be played.

Example 54: FIG. 12(a)-1 and FIG. 12(a)-2 are a schematic diagram of displaying, in an in-vehicle infotainment system (a target device), a historical task card of P40 (a source device) used by a user. As shown in FIG. 12(a)-1 and FIG. 12(a)-2, when a historical task card layout of P40 is displayed in the in-vehicle infotainment system, the historical task card layout is displayed as a multi-task layout based on portrait-mode use of P40. The user may perform an operation on the task card of P40 in the in-vehicle infotainment system. In this embodiment of this application, the operation may be an operation in any one of the foregoing examples, so that the user performs remote task management and control on P40 in the in-vehicle infotainment system.

Optionally, when the historical task card of P40 is displayed in the in-vehicle infotainment system, the historical task card may also be displayed in any display manner or based on any display rule in the foregoing examples. For example, a last task card displays a home screen snapshot of P40, and an FA card exists on the home screen snapshot; or a last task card displays a first-screen snapshot of a home screen of P40, and may horizontally slide to switch to a second-screen snapshot of the home screen of P40, and the user may tap an application icon on a home screen snapshot, to open the application in the in-vehicle infotainment system; or a last task card displays a home screen snapshot of P40 and a floating window; or a last task card displays a home screen snapshot of P40 and a floating bubble; or a last task card displays an ongoing task card of a plurality of lightweight devices controlled by P40; or a last task card displays P40 and displays a home screen application icon of P40; or the user may start the task card of P40 in the in-vehicle infotainment system; or the user may create a cross-device split screen/floating window in the in-vehicle infotainment system; or after a task on P40 is migrated to the in-vehicle infotainment system, a hardware capability is allocated in the in-vehicle infotainment system and on P40 based on a hardware use rule in the foregoing examples, or the like. This is not limited in this application.

In some example embodiments, the in-vehicle infotainment system may include an electronic control unit (electronic control unit, ECU) in a vehicle, a trip computer, a vehicle-mounted computer, a vehicle-mounted T-BOX, or the like. This is not limited in this embodiment of this application.

In some example embodiments, an intelligent device (for example, P40) used by the user and the in-vehicle infotainment system may establish a communication connection by using a Bluetooth (BT) technology, Wi-Fi, NFC, Zigbee, USB, Cellular, or the like, establish a trusted relationship, and transmit information to each other.

Example 55: FIG. 12(b) is a schematic diagram of displaying, in an in-vehicle infotainment system (a target device), a historical task card of a PC device (a source device) used by a user. As shown in FIG. 12(b), the user may perform an operation on the task card of the PC device in the in-vehicle infotainment system In this embodiment of this application, the operation may be an operation in any one of the foregoing examples, so that the user performs remote task management and control on the PC device in the in-vehicle infotainment system.

In some example embodiments, when the historical task card of P40 is displayed in the in-vehicle infotainment system, optionally, the historical task card may also be displayed in any display manner or based on any display rule in the foregoing examples. For example, a last task card displays a home screen snapshot of the PC device, and an FA card exists on the home screen snapshot; or a last task card displays a home screen snapshot of the PC device and a floating window; or a last task card displays a home screen snapshot of the PC device and a floating bubble; or a last task card displays an ongoing task card of a plurality of lightweight devices controlled by the PC device; or a last task card displays the PC device and displays a home screen application icon of P40; or the user may start the task card of the PC device in the in-vehicle infotainment system; or the user may create a cross-device split screen/floating window in the in-vehicle infotainment system; or after a task on the PC device is migrated to the in-vehicle infotainment system, a hardware capability is allocated in the in-vehicle infotainment system and on the PC device based on a hardware use rule in the foregoing examples, or the like. This is not limited in this application.

Example 56: FIG. 12(c)-1 and FIG. 12(c)-2 are a schematic diagram of displaying, on a PC device (a target device), a historical task card of P40 (a source device) used by a user. As shown in FIG. 12(c)-1 and FIG. 12(c)-2, the user may perform an operation on the task card of P40 on the PC device. In this embodiment of this application, the operation may be an operation in any one of the foregoing examples, so that the user performs remote task management and control on P40 on the PC device.

In some example embodiments, when the historical task card of P40 is displayed on the PC device, the historical task card may also be displayed in any display manner or based on any display rule in the foregoing examples. For example, a last task card displays a home screen snapshot of P40, and an FA card exists on the home screen snapshot; or a last task card displays a first-screen snapshot of a home screen of P40, and may horizontally slide to switch to a second-screen snapshot of the home screen of P40, and the user may tap an application icon on a home screen snapshot, to open the application on the PC device; or a last task card displays a home screen snapshot of P40 and a floating window; or a last task card displays a home screen snapshot of P40 and a floating bubble; or a last task card displays an ongoing task card of a plurality of lightweight devices controlled by P40; or a last task card displays P40 and displays a home screen application icon of P40; or the user may start the task card of P40 on the PC device; or the user may create a cross-device split screen/floating window on the PC device; or after a task on P40 is migrated to the in-vehicle infotainment system, a hardware capability is allocated on the PC device and P40 based on a hardware use rule in the foregoing examples, or the like. This is not limited in this application.

In some example embodiments, in addition to a case in which any solution in the foregoing examples is executed between two devices, remote task management and control may be performed among more devices (for example, three devices, or four devices) by using a task card in a recent task interface. The following provides descriptions with reference to specific examples.

Example 57: FIG. 13A to FIG. 13C are a schematic diagram of displaying a first terminal (MatePad1) and a historical task card in a recent task interface of a second terminal (P40). It is assumed that the user needs to migrate an app 2 of P40 to a third terminal (Mate X2). The user may touch and hold a task card corresponding to the app 2, and slide the task card upward to an icon region of Mate X2. After the user releases the task card, the task card may be automatically migrated to Mate X2, and displayed or run in the foreground of Mate X2. Optionally, when an application corresponding to the app 2 is displayed or run on Mate X2 or the task card of the app 2 is displayed on Mate X2, the application corresponding to the app 2 may be displayed or run on Mate X2 or the task card of the app 2 may be displayed on Mate X2, based on an unfolded-state portrait-mode manner, an unfolded-state landscape-mode manner, a folded-state portrait-mode manner, or a folded-state landscape-mode manner of Mate X2.

Optionally, when the application corresponding to the app 2 is displayed or run on Mate X2 or the task card of the app 2 is displayed on Mate X2, the application corresponding to the app 2 may be displayed or run on Mate X2 or the task card of the app 2 may be displayed on Mate X2, in full screen or in a floating window.

In some example embodiments, for example, in Example 57, on the device P40, the user may touch and hold the task card corresponding to the app 2 by using a left hand, and slide the task card leftward by using a right hand, to switch to a task card corresponding to another application of a current terminal (P40) or (MatePad1), and select the task card. After selection is completed, the task card corresponding to the app 2 and the task card corresponding to the another app both slide to Mate X2, so that applications respectively corresponding to the two different apps can be displayed on Mate X2. Optionally, in a process in which the applications respectively corresponding to the two different apps or task cards respectively corresponding to the two different apps are displayed on Mate X2, the two different apps may be displayed in split screen; or one app is displayed in full screen, and the other app is displayed in a floating window; or the two different apps each are displayed in a floating window.

In some example embodiments, based on the foregoing three migration modes (a replication mode, a migration mode based on a window projection technology, and a migration mode based on an FA technology), an application on a home screen of a source device may be migrated to a target for running. In addition, identifiers of various applications on the home screen of the source device may be displayed on the target device, and a user may operate (for example, open, delete, or sort), on the target device, the identifiers of the various applications on the home screen of the source device, to form a super home screen on the target device. In this embodiment of this application, identifiers of various applications on a home screen (or all or some applications on the home screen) of a terminal device may also be referred to as a home screen application identifier of the terminal device.

In this embodiment of this application, the super home screen can be understood as follows: If a home screen application of another device may be viewed and used on one device, a function of the super home screen is implemented on the device. The following provides descriptions with reference to specific examples.

Example 58: In this application, whether a super home screen function needs to be implemented on a device may be optionally determined based on a case shown in FIG. 14(a)-1 to FIG. 14(a)-3. As shown in FIG. 14(a)-1 to FIG. 14(a)-3, if an in-vehicle infotainment system and a mobile phone establish a trusted connection relationship, a super home screen may be displayed in the in-vehicle infotainment system, to implement the super home screen function. For example, a home screen application of the mobile phone may be viewed and used in the in-vehicle infotainment system. The super home screen function does not need to be implemented on the mobile phone. For example, a home screen application of the in-vehicle infotainment system does not need to be viewed or used on the mobile phone. In this application, the in-vehicle infotainment system may be, for example, a trip computer, a vehicle-mounted computer, a vehicle-mounted device, a vehicle-mounted T-BOX, or the like. This is not limited in this embodiment of this application.

In some example embodiments, if a large-screen device (for example, a Huawei television) and a mobile phone establish a trusted connection relationship, a super home screen may be displayed on the large-screen device, to implement the super home screen function. The super home screen function does not need to be implemented on the mobile phone.

In some example embodiments, if a tablet computer and a mobile phone establish a trusted connection relationship, a super home screen may be displayed on the tablet computer, to implement the super home screen function. The super home screen function does not need to be implemented on the mobile phone.

In some example embodiments, if a personal PC and a mobile phone establish a trusted connection relationship, a super home screen may be displayed on the personal PC, to implement the super home screen function. The super home screen function does not need to be implemented on the mobile phone.

In some example embodiments, if a large-screen device (for example, a Huawei television) and a tablet computer establish a trusted connection relationship, a super home screen may be displayed on each of the large-screen device and the tablet computer, to implement the super home screen function.

In some example embodiments, if a personal PC and a tablet computer establish a trusted connection relationship, a super home screen may be displayed on the personal PC and the tablet computer, to implement the super home screen function.

In some example embodiments, in each of the foregoing scenarios, regardless of a specific device with which the mobile phone establishes a trusted connection relationship, the super home screen function may be further implemented on the mobile phone. For example, a home screen application of another device is viewed and used on the mobile phone. This is not limited in this application.

In some example embodiments, a layout of a super home screen of an unused device may be distinguished based on a physical characteristic (for example, a screen size) of each device with a trusted connection or whether precise interaction is easily performed.

In some example embodiments, for a device that is difficult to perform precise interaction, for example, an in-vehicle infotainment system or a large-screen device, an application on a super home screen displayed on these devices is limited, for example, may be selected by a system or a user, and is displayed based on a home screen application layout of a target device (that is, the device that is difficult to perform precise interaction).

In some example embodiments, for a device that is easy to perform precise interaction, for example, a tablet computer or a personal PC, as many home screen applications may be displayed as possible. When a home screen application is displayed on these devices, the application may be displayed by default based on a home screen layout of a source device of the home screen application. When a home screen style of the source device is a drawer-style home screen, the home screen application is displayed on these devices based on a home screen layout of a target device (that is, the device that is easy to perform precise interaction).

The following provides descriptions with reference to specific examples (Example 59 to Example 64).

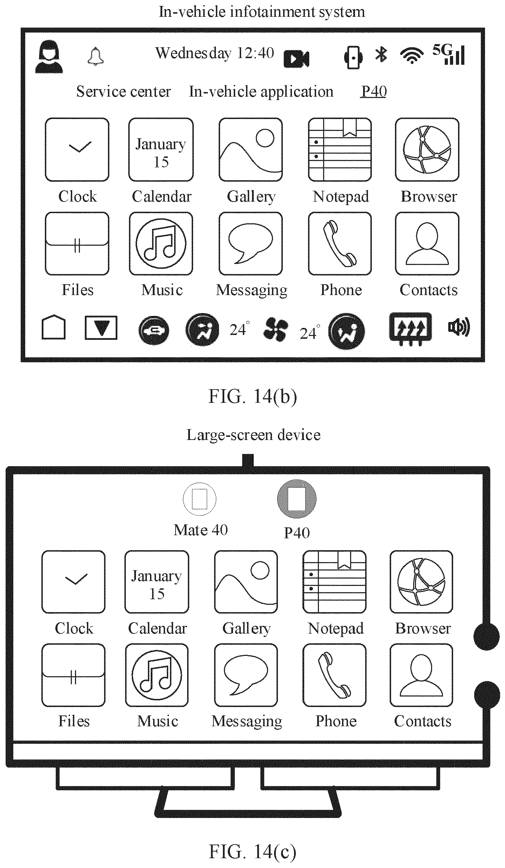

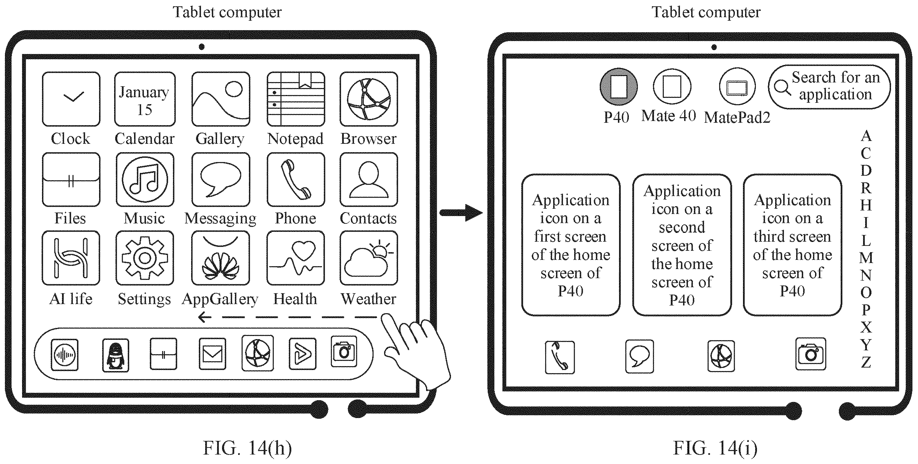

Example 59: FIG. 14(b) is a schematic diagram of displaying a super home screen layout in an in-vehicle infotainment system. The in-vehicle infotainment system is a device that is difficult to perform precise interaction. Therefore, when a home screen application of a mobile phone P40 needs to be displayed in the in-vehicle infotainment system, the home screen application needs to be selected by the in-vehicle infotainment system or a user, and the selected home screen application of the mobile phone P40 is displayed in the in-vehicle infotainment system In addition, a home screen application of the in-vehicle infotainment system and the home screen application of the mobile phone P40 are arranged together and displayed by using a tab (Tab).

Example 60: FIG. 14(c) is a schematic diagram of displaying a super home screen layout on a large-screen device. The large-screen device is a device that is difficult to perform precise interaction. Therefore, when a home screen application of a mobile phone P40 needs to be displayed on the large-screen device, the home screen application needs to be selected by a system of the large-screen device or a user, the selected home screen application of the mobile phone P40 is displayed on the large-screen device. In addition, a home screen application of the large-screen device and the home screen application of the mobile phone P40 are arranged together and displayed by using a tab (Tab).

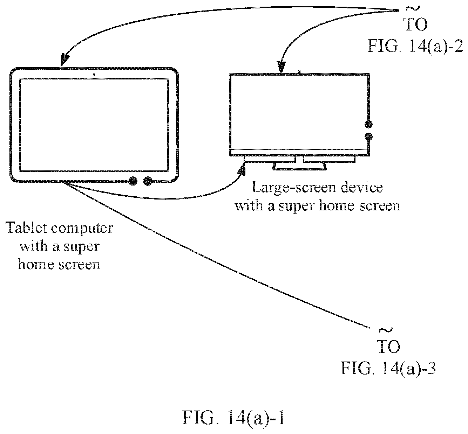

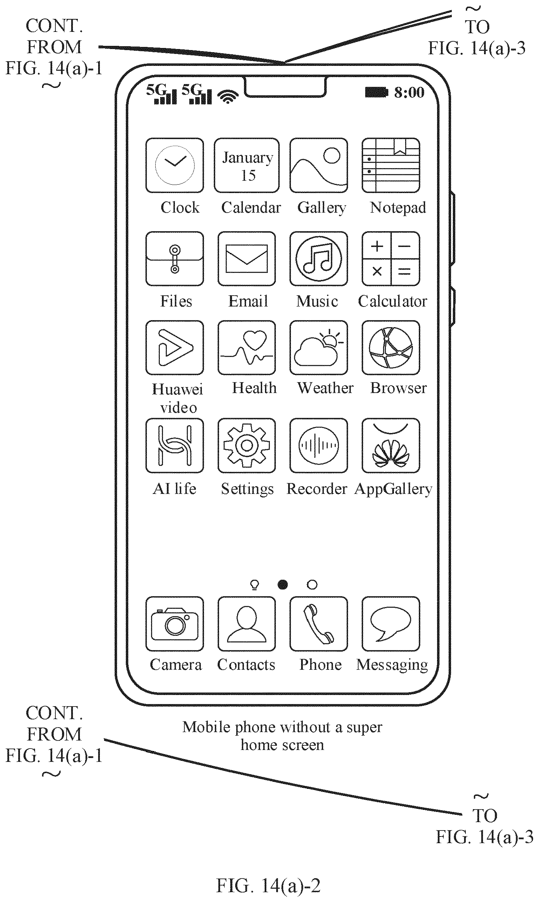

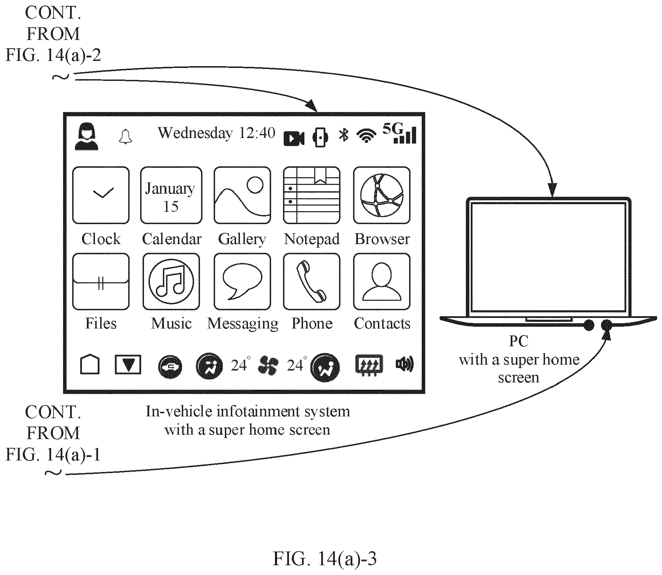

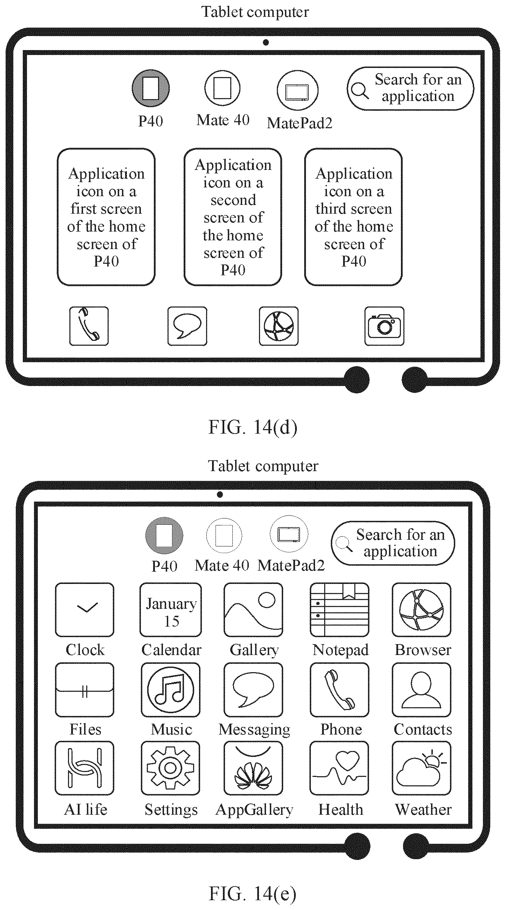

Example 61: FIG. 14(d) is a schematic diagram of displaying a super home screen layout on a tablet computer (for example, MatePad1). The tablet computer is a device that is easy to perform precise interaction. Therefore, when a home screen application of a mobile phone P40 is displayed on the tablet computer, the home screen application does not need to be selected by a system of the tablet computer or a user, and the home screen application of the mobile phone P40 may be displayed as many as possible based on a home screen layout of the mobile phone P40. FIG. 14(d) is a schematic diagram of displaying a home screen application of a mobile phone P40 on a tablet computer when a home screen style of the mobile phone P40 is a standard-style home screen. As shown in FIG. 14(d), a local application of the tablet computer and the home screen application of the mobile phone P40 are arranged together, and displayed by using a tab (Tab) based on a home screen application layout of the mobile phone P40.

Example 62: FIG. 14(e) is a schematic diagram of displaying a super home screen layout on a tablet computer (for example, MatePad1). The tablet computer is a device that is easy to perform precise interaction. Therefore, when a home screen application of a mobile phone P40 is displayed on the tablet computer, the home screen application does not need to be selected by a system of the tablet computer or a user, and the home screen application of the mobile phone P40 may be displayed as many as possible. FIG. 14(e) is a schematic diagram of displaying a home screen application of a mobile phone P40 on a tablet computer when a home screen style of the mobile phone P40 is a drawer-style home screen. A local application of the tablet computer and the home screen application of the mobile phone P40 are arranged together, and displayed by using a tab (Tab) based on a home screen layout of the tablet computer.

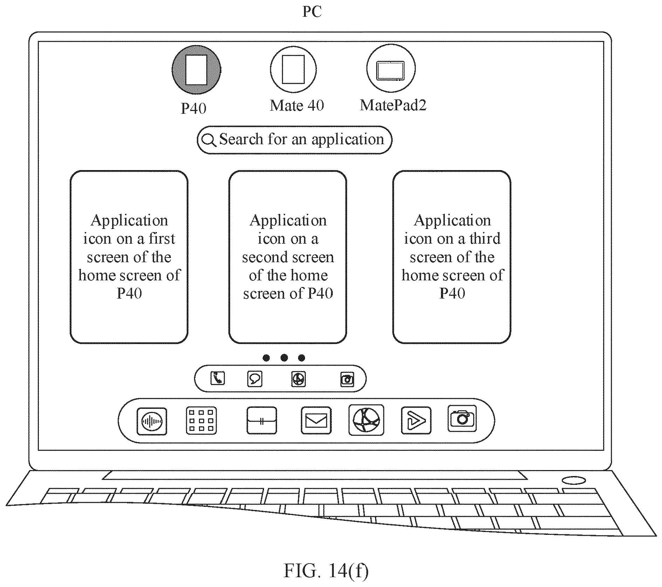

Example 63: FIG. 14(f) is a schematic diagram of displaying a super home screen layout on a PC. The PC is a device that is easy to perform precise interaction. Therefore, when a home screen application of a mobile phone P40 is displayed on the PC, the home screen application does not need to be selected by a system of the PC or a user, and the home screen application of the mobile phone P40 may be displayed as many as possible based on a home screen layout of the mobile phone P40. FIG. 14(f) is a schematic diagram of displaying a home screen application of a mobile phone P40 on a PC when a home screen style of the mobile phone P40 is a standard-style home screen. A local application of the tablet computer and the home screen application of the mobile phone P40 are arranged together, and displayed by using a tab (Tab) based on a home screen application layout of the mobile phone P40.

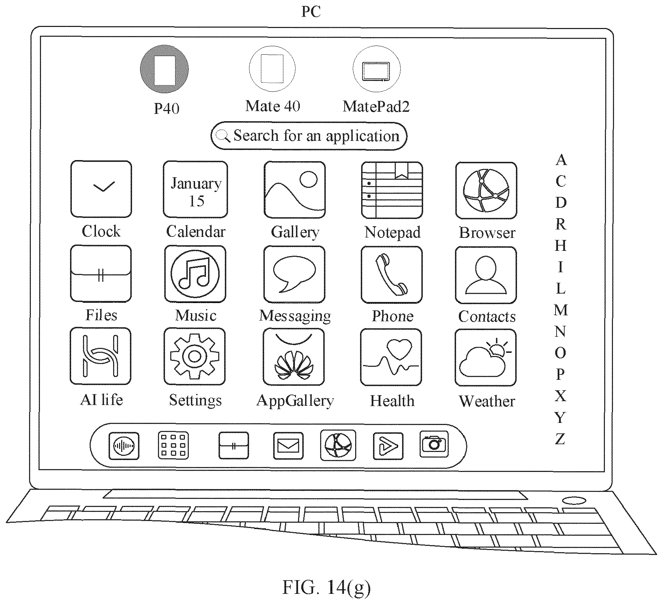

Example 64: FIG. 14(g) is a schematic diagram of displaying a super home screen layout on a PC. The PC is a device that is easy to perform precise interaction. Therefore, when a home screen application of a mobile phone P40 is displayed on the PC, the home screen application does not need to be selected by a system of the PC or a user, and the home screen application of the mobile phone P40 may be displayed as many as possible. FIG. 14(g) is a schematic diagram of displaying a home screen application of a mobile phone P40 on a PC when a home screen style of the mobile phone P40 is a drawer-style home screen. A local application of the PC and a home screen application of the mobile phone P40 are arranged together, and displayed by using a tab (Tab) based on a home screen layout of the PC.

In this embodiment of this application, different forms of super home screen entries are provided for different devices.

In some example embodiments, for example, for a device (for example, an in-vehicle infotainment system or a PC) that has a drawer-style home screen, a local application of the device and a super home screen are arranged together, and displayed by using a tab. Examples are shown in FIG. 14(b) and FIG. 14(f).

In some example embodiments, for a device (for example, a tablet computer or a large-screen device) that does not have a drawer-style home screen, a home screen of the device slides to a last screen, and a super home screen is separately displayed.

In some example embodiments, for a device that has a drawer-style home screen, an icon of "All applications" is provided on a dock. After a user taps the icon, a super home screen is entered. Optionally, a local application of the device and a home screen application of another device are arranged together, and displayed by using a tab (Tab).

In some example embodiments, for a device that does not have a drawer-style home screen, an icon of "Other-end application center" is provided on a dock. After a user taps the icon, a super home screen is entered, and the super home screen displays a home screen application of another device. Optionally, a local application of the device and the home screen application of the another device are arranged together, and displayed by using a tab (Tab).

The following provides descriptions with reference to specific examples (Example 65 to Example 70).

Example 65: FIG. 14(h) is a schematic diagram of a form of a super home screen entry on a tablet computer. Because the tablet computer does not have a drawer-style home screen, a user may slide a home screen of the tablet computer. As shown in FIG. 14(h), for example, the user may slide the home screen of the tablet computer leftward, rightward, or downward, and a super home screen is displayed on a last screen of the home screen of the tablet computer. As shown in FIG.

14(i), a local application of the tablet computer and a home screen application of another device are arranged together, and displayed by using a tab (Tab).

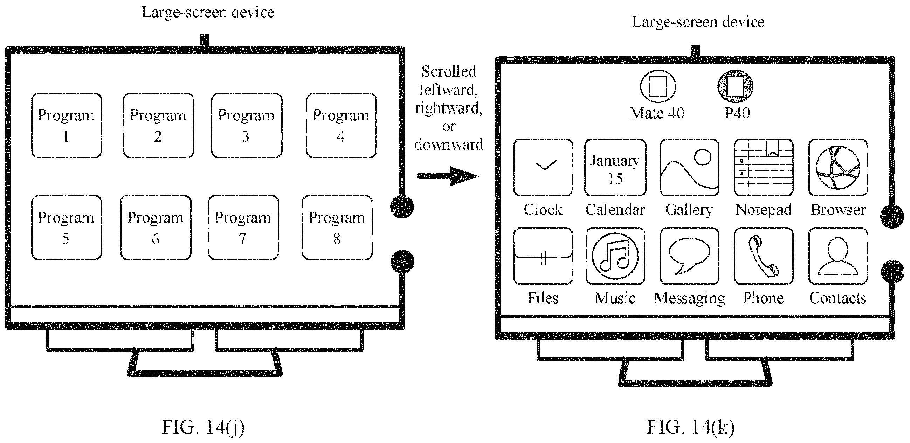

Example 66: FIG. 14(j) is a schematic diagram of a form of a super home screen entry on a large-screen device. Because the large-screen device does not have a drawer-style home screen, as shown in FIG. 14(j), for example, after a user scrolls a home screen of the large-screen device leftward, rightward, or downward, an interface of a super home screen is displayed on the large-screen device. As shown in FIG. 14(k), a local application of the large-screen device and a home screen application of another device are arranged together, and displayed by using a tab (Tab).

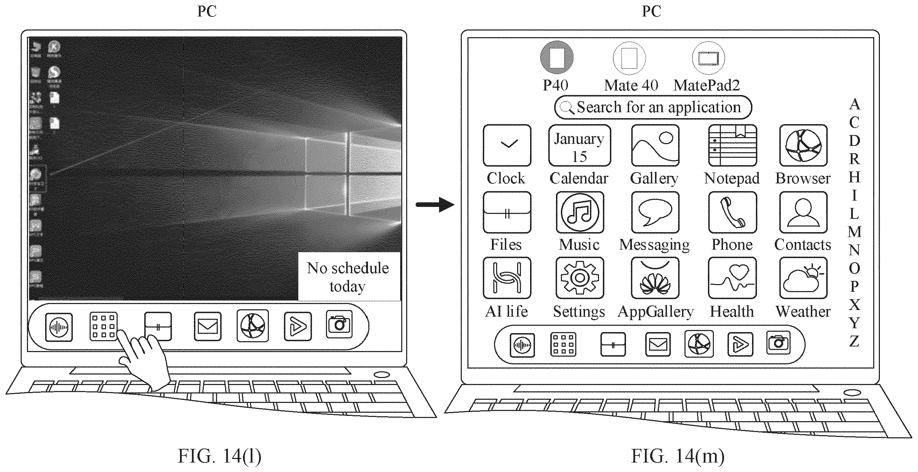

Example 67: FIG. 14(l) is a schematic diagram of a form of a super home screen entry on a PC device. Because the PC device has a drawer-style home screen, as shown in FIG. 14(l), an icon of "All applications" may be provided on a dock on the PC device. After a user taps the icon, a super home screen is entered. As shown in FIG. 14(m), on the super home screen displayed on the PC device, a local application of the PC device and a home screen application of another device are arranged together, and displayed by using a tab (Tab).

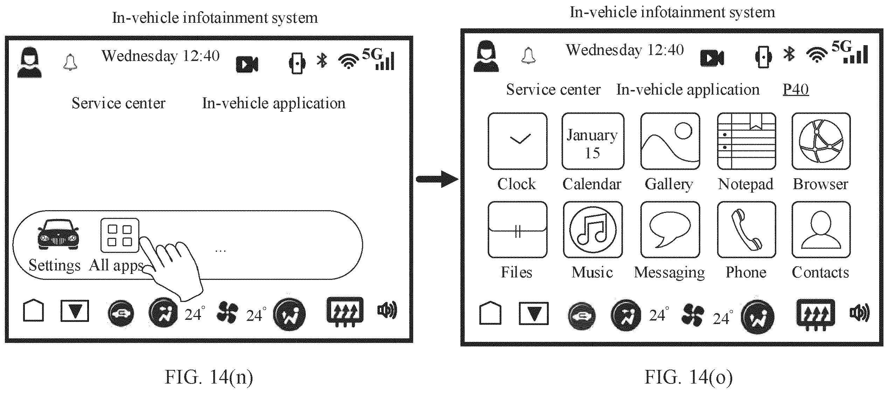

Example 68: FIG. 14(n) is a schematic diagram of a form of a super home screen entry in an in-vehicle infotainment system. Because the in-vehicle infotainment system has a drawer-style home screen, as shown in FIG. 14(n), an icon of "All applications (All Apps)" may be provided on a dock in the in-vehicle infotainment system. After a user taps the icon, a super home screen is entered. As shown in FIG. 14(o), on the super home screen displayed in the in-vehicle infotainment system, a local application of the in-vehicle infotainment system and a home screen application of another device are arranged together, and displayed by using a tab (Tab).

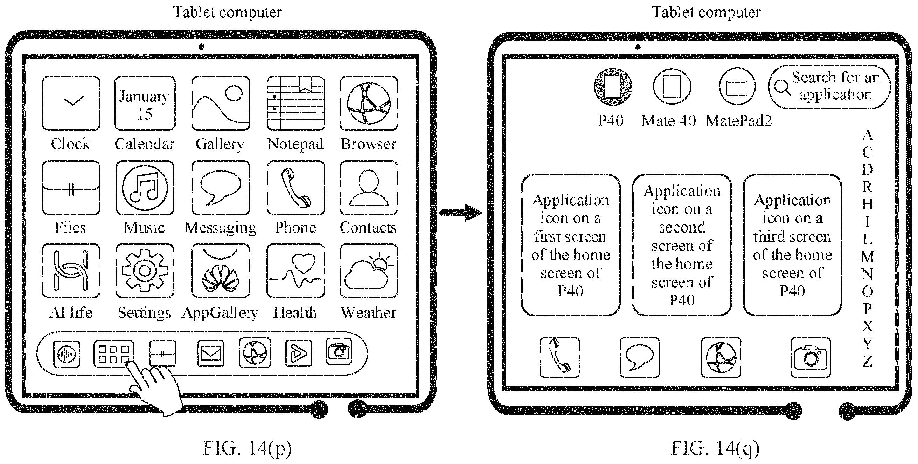

Example 69: FIG. 14(p) is a schematic diagram of a form of a super home screen entry on a tablet computer. Because the tablet computer does not have a drawer-style home screen, an icon of "Other-end application center" may be provided on a dock on the tablet computer. For example, another device includes a mobile phone P40. After a user taps the icon, a super home screen is entered. As shown in FIG. 14(q), on the super home screen displayed on the tablet computer, a local application of the tablet computer and a home screen application of another device (including the mobile phone P40) are arranged together, and displayed by using a tab (Tab).

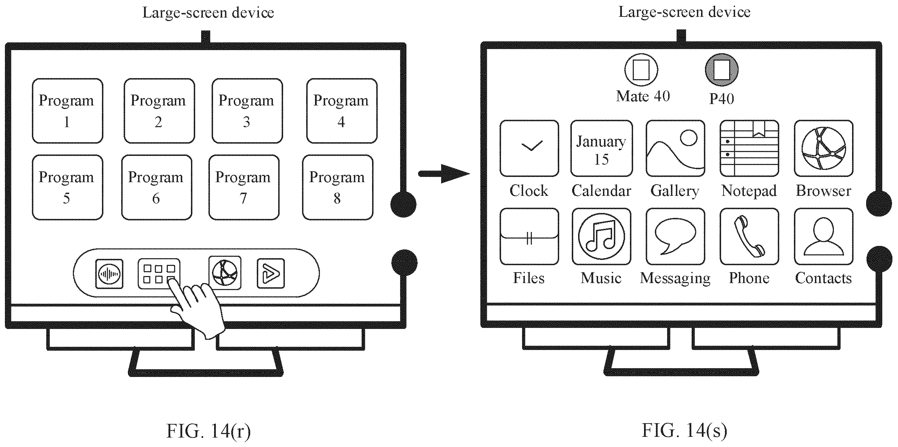

Example 70: FIG. 14(r) is a schematic diagram of a form of a super home screen entry on a large-screen device. Because the large-screen device does not have a drawer-style home screen, as shown in FIG. 14(r), an icon of "Other-end application center" may be provided on a dock on the large-screen device. For example, another device includes a mobile phone P40. After a user taps the icon, a super home screen is entered. As shown in FIG. 14(s), on the super home screen displayed on the large-screen device, a local application of the large-screen device and a home screen application of another device (including the mobile phone P40) are arranged together, and displayed by using a tab (Tab).

In some example embodiments, when a super home screen is displayed in an in-vehicle infotainment system, a user may tap an application icon of another device on the super home screen. After the application icon of the another device is tapped, the application may be displayed in the in-vehicle infotainment system. For example, the application may be displayed in the in-vehicle infotainment system in a floating window, in split screen, in full screen, or in a manner of covering a home screen of the in-vehicle infotainment system. The following provides descriptions with reference to specific examples (Example 71 and Example 76).

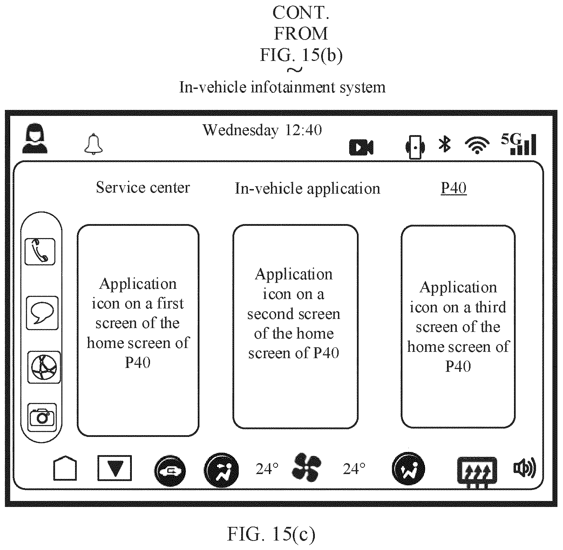

Example 71: FIG. 15(a) is a schematic diagram of an interface existing before an in-vehicle infotainment system establishes a trusted connection to another device. There is no icon of another device on a dock in the in-vehicle infotainment system. FIG. 15(b) is a schematic diagram of an interface existing after an in-vehicle infotainment system establishes a trusted connection to a mobile phone P40. An icon of the mobile phone P40 is displayed on a dock in the in-vehicle infotainment system. A user may tap the icon, and a display result is shown in FIG. 15(c). A super home screen is displayed in the in-vehicle infotainment system. On the super home screen displayed in the in-vehicle infotainment system, a local application of the in-vehicle infotainment system and a home screen application of another device are arranged together, and displayed by using a tab (Tab).

Example 72: A user may tap, in an interface shown in FIG. 15(c), any application on a home screen of a mobile phone P40. It is assumed that the application tapped by the user is an app 1. After the user taps an icon of the app 1, the app 1 is displayed in an in-vehicle infotainment system

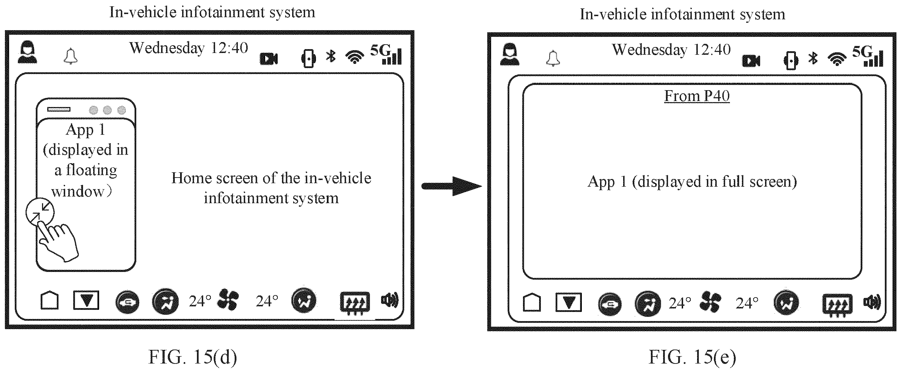

In some example embodiments, in the interface shown in FIG. 15(c), the user taps the icon of the app 1, to display the app 1 in a floating window in the in-vehicle infotainment system, for example, as shown in FIG. 15(d). Optionally, a "full screen button" may further exist in an interface in which the floating window is displayed. After the user taps the "full screen button", as shown in FIG. 15(e), the app 1 is displayed in full screen in the in-vehicle infotainment system.

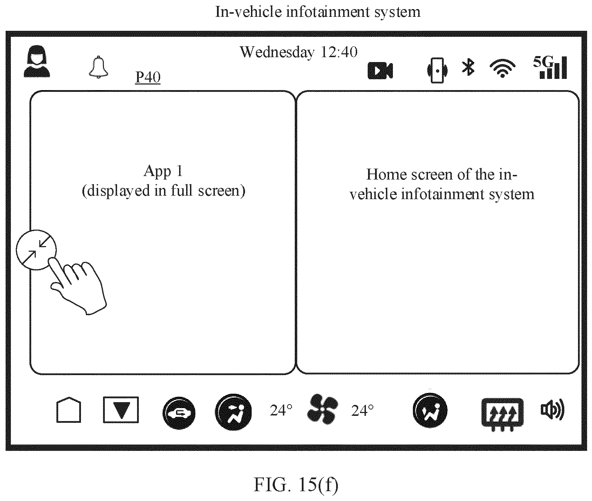

In some example embodiments, in the interface shown in FIG. 15(c), the user may tap an icon of an app (for example, the app 1), to display the app 1 in split screen in the in-vehicle infotainment system, for example, as shown in FIG. 15(f). The split screen means that the app 1 and a home screen of the in-vehicle infotainment system are displayed in split screen on a display of the in-vehicle infotainment system. Optionally, a "full screen button" may further exist in an interface in which the app 1 is displayed in split screen. After the user taps the "full screen button", as shown in FIG. 15(e), the app 1 is displayed in full screen in the in-vehicle infotainment system.

Optionally, in some example embodiments, in the interface shown in FIG. 15(c), the user may tap the icon of the app 1, to display the app 1 in full screen in the in-vehicle infotainment system, for example, as shown in FIG. 15(e).

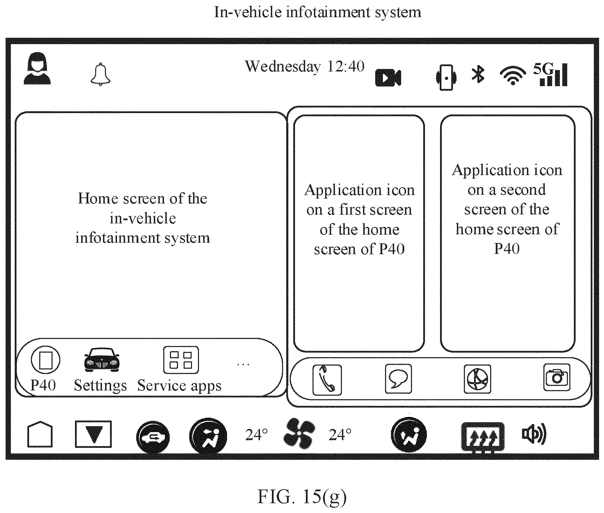

Example 73: In an interface shown in FIG. 15(b), a user may tap an icon of a mobile phone P40 on a dock in an in-vehicle infotainment system. After the icon is tapped, a display result is shown in FIG. 15(g). A super home screen is displayed in the in-vehicle infotainment system. On a super home screen displayed in the in-vehicle infotainment system, a display manner of a home screen application icon of the mobile phone P40 may be the same as that of a home screen layout of the mobile phone P40. Optionally, as shown in FIG. 15(g), the home screen application icon of the mobile phone P40 and a home screen of the in-vehicle infotainment system may be displayed in split screen on a display of the in-vehicle infotainment system.

In some example embodiments, after an application on a super home screen is opened on a device that displays an application in full screen by default, a newly opened application is displayed in full screen on the device. If the application on the super home screen is opened when split screen is satisfied, the newly opened application is displayed in split screen on the device.

In some example embodiments, after an application on a super home screen is opened on a device, for example, a computer (for example, a PC) that performs display in a floating window, a newly opened application is displayed in a floating window on the device, and the new application is displayed in a portrait or narrow floating window or a landscape or wide floating window following a floating window adaptation rule of the device. This is not limited in this application.

In some example embodiments, a temporary super home screen may be set up or a super home screen is temporarily disconnected (closed), through "Tap" or "Scan" between two or more terminal devices with a same account or different accounts. The following provides descriptions with reference to specific examples.

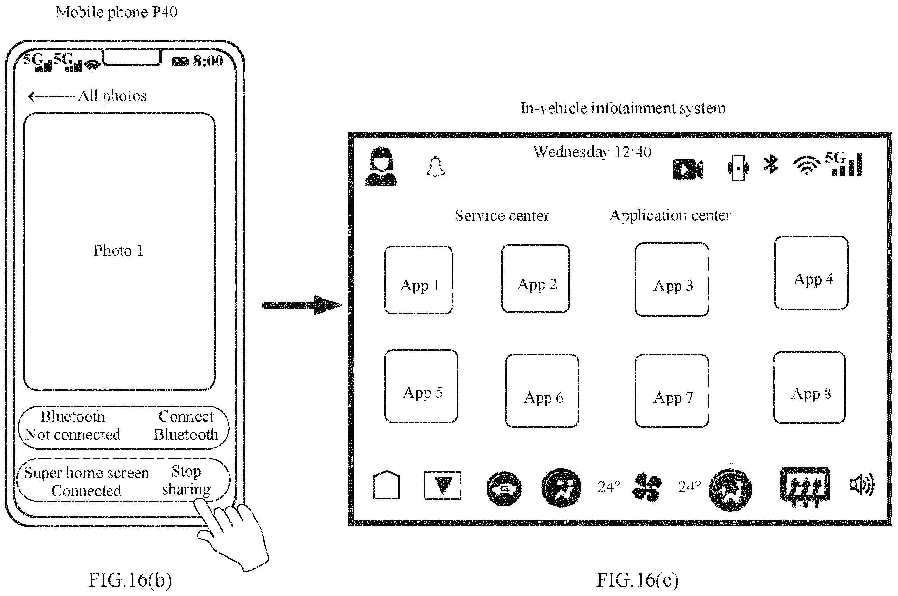

Example 74: It is assumed that a trusted relationship is previously established between a mobile phone P40 used by a user and an in-vehicle infotainment system of a vehicle driven by the user, and a super home screen is previously set up. After the user currently gets on the vehicle and starts the vehicle, a super home screen is automatically set up between the mobile phone P40 and the in-vehicle infotainment system As shown in FIG. 16(a), the super home screen is displayed in the in-vehicle infotainment system In this case, the user may temporarily close the super home screen through "Tap" or "Scan" by using the mobile phone P40. For example, after "Tap" or "Scan" is performed, as shown in FIG. 16(b), a pop-up box may be displayed on the mobile phone P40, to prompt "Stop sharing". After the user taps "Stop sharing", the mobile phone P40 stops sharing with a home screen of the in-vehicle infotainment system. As shown in FIG. 16(c), the super home screen is exited in the in-vehicle infotainment system, the super home screen is no longer displayed in the in-vehicle infotainment system, and the home screen of the in-vehicle infotainment system is displayed.

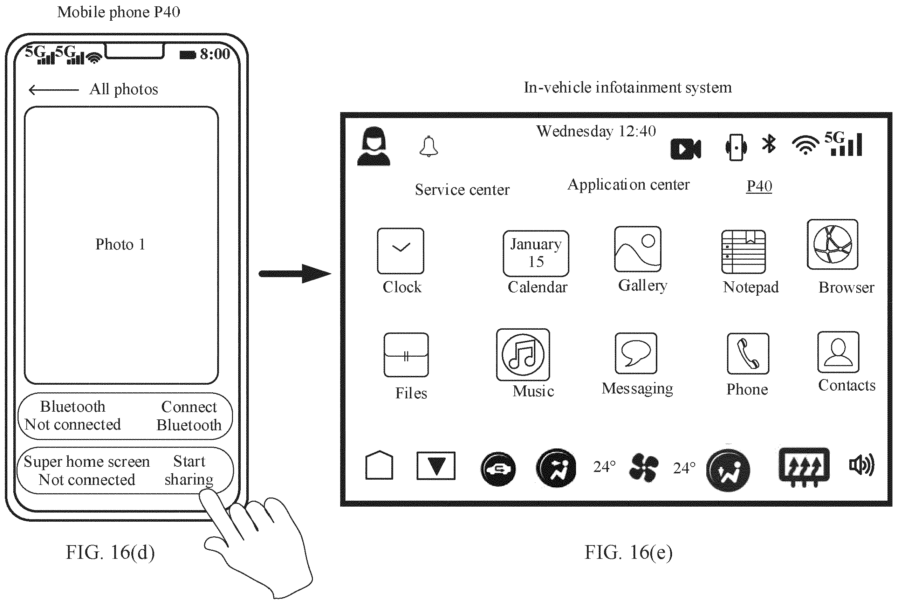

In some example embodiments, after the user closes the super home screen, next time the user gets on the vehicle and starts the vehicle, a super home screen is automatically set up between the mobile phone P40 and the in-vehicle infotainment system, or a super home screen may be temporarily set up through "Tap" or "Scan". For example, as shown in FIG. 16(d), a pop-up box may be displayed on the mobile phone P40, to prompt "Start sharing". After the user taps "Start sharing", the mobile phone P40 performs sharing with the home screen of the in-vehicle infotainment system. An interface displayed in the in-vehicle infotainment system changes from an interface shown in FIG. 16(c) to an interface shown in FIG. 16(e). In other words, the super home screen is displayed.

In some example embodiments, in the foregoing process of temporarily setting up and closing the super home screen, a switch of the super home screen in Settings is not affected.

In some example embodiments, in a process in which the user sets up the super home screen for a first time or each time the user sets up the super home screen, an application management interface may exist. In the application management interface, the user may make selection, so that some applications selected by the user can be displayed on the super home screen. Applications that are not selected do not occur on the super home screen. The following provides descriptions with reference to specific examples.

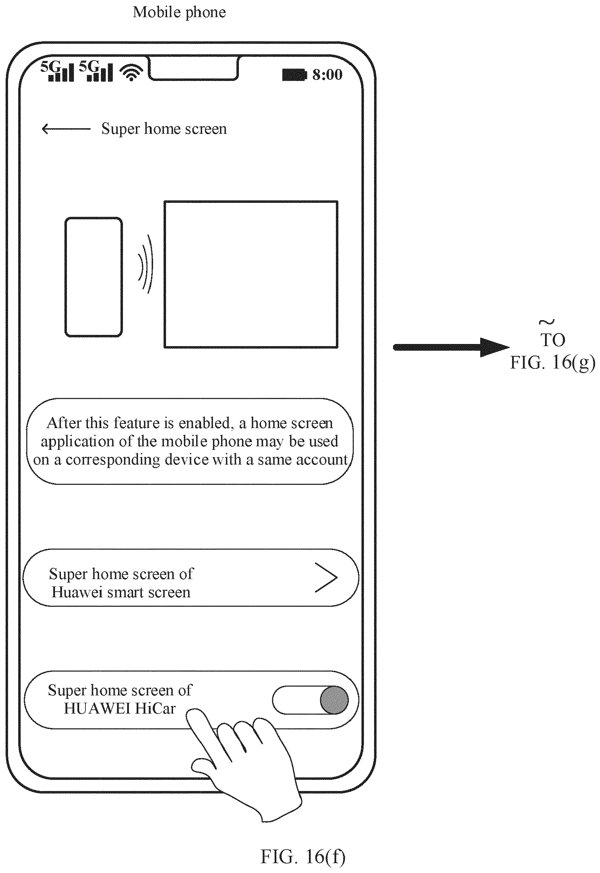

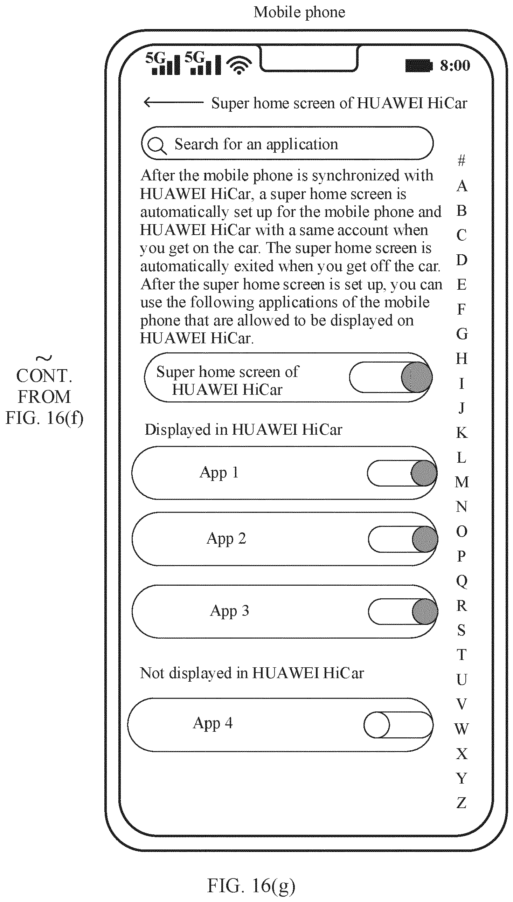

Example 75: It is assumed that a mobile phone and a large-screen device, or a mobile phone and an in-vehicle infotainment system need to set up a super home screen. After a user turns on a switch of "Super home screen" on the mobile phone, the user may search for and add a surrounding trusted device in various manners (for example, through "Tap" or "Scan"). After the mobile phone finds the in-vehicle infotainment system or the large screen, an interface displayed on the mobile phone may be shown in FIG. 16(f). The user taps a device on which a super home screen needs to be set up, for example, selects "Super home screen of HUAWEI HiCar". After the user taps "Super home screen of HUAWEI HiCar", a displayed interface is shown in FIG. 16(g). The user may select an application in the interface, and the application selected by the user is displayed on a super home screen of the in-vehicle infotainment system.

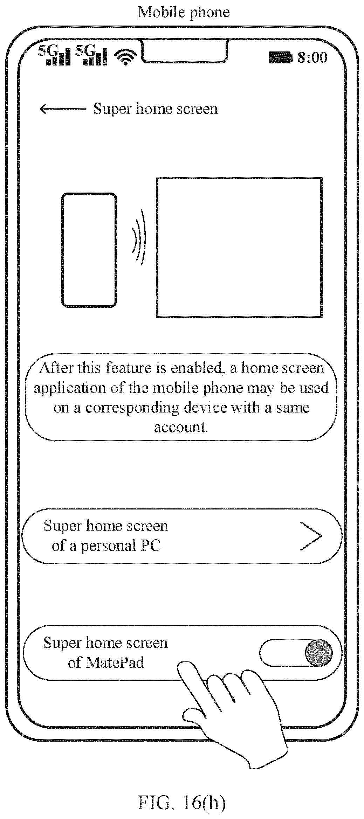

Example 76: It is assumed that a mobile phone and a tablet computer (for example, MatePad), or a mobile phone and a personal PC need to form a super home screen. After a user turns on a switch of "Super home screen" on the mobile phone, the user may search for and add a surrounding trusted device in various manners (for example, through "Tap" or "Scan"). After the mobile phone finds an in-vehicle infotainment system or a large screen, an interface displayed on the mobile phone may be shown in FIG. 16(h). In this case, the user may not need to select an application. In other words, all applications on the mobile phone may be displayed on a super home screen of the personal PC or the tablet computer by default. The user taps a device on which a super home screen needs to be set up, for example, selects "Super home screen of MatePad". After the user taps "Super home screen of MatePad", the super home screen may be displayed on MatePad, and all applications on the mobile phone may be displayed on MatePad.

It should be understood that, in this application, the foregoing examples, interfaces of terminals, operations of the user, and the like are merely examples, and do not constitute a specific limitation on embodiments of this application. For example, in some other embodiments of this application, icons in interfaces displayed by various terminals may include more or less icons than those displayed in an interface shown in any one of the foregoing figures, or some icons are combined, or some icons are split, or there are different icons. This is not limited in embodiments of this application.

It should be further understood that, a solution shown in any one of the examples or any of the figures may be an independent solution, or a solution obtained by combining any plurality of examples or any plurality of figures may be an independent solution. This is not limited in this application.

Based on the foregoing application scenario, the communication system shown in FIG. 1, and the foregoing examples, the following describes a step procedure of a remote device task display and control method provided in this application.

In some example embodiments, FIG. 17 is a schematic flowchart of an example embodiment according to this application. A device involved in the flowchart includes a first terminal and a second terminal, and the first terminal and the second terminal are mutually trusted devices.

As shown in FIG. 17, a procedure includes the following steps.

S1710: The first terminal displays a recent task interface, where the recent task interface includes a control, the control includes identifiers of N devices, the recent task interface includes at least one task card, the at least one task card includes a first task card and/or a second task card, the first task card corresponds to an application run by the second terminal in the background or an ongoing application, and the second task card displays a home screen application identifier of the second terminal. For example, refer to interfaces shown in FIG. 3(d) to FIG. 3(f), or interfaces shown in FIG. 5(a) to FIG. 7(j), or interfaces shown in FIG. 7(p) and FIG. 7(q).

S 1720: Receive a first operation performed by a user on the first task card of the second terminal and/or a second operation performed on the second task card of the second terminal. For example, refer to an operation of the user shown in FIG. 8(b)-1 and FIG. 8(b)-2 or an operation of the user shown in FIG. 7(p).

S 1730: Based on the first operation and/or the second operation, the first terminal displays or runs the application corresponding to the first task card, and/or displays the home screen application identifier of the second terminal. For example, refer to a display interface shown in FIG. 8(c)-1 and FIG. 8(c)-2 or a display interface shown in FIG. 7(q).

In some example embodiments, the user may further perform an operation on an identifier of a second application in the displayed home screen application identifier of the second terminal. After the operation, the first terminal displays and runs the second application.

In some example embodiments, the first terminal may further simultaneously display or run the application corresponding to the first task card and the second application in a display interface of the first terminal. For example, the first terminal simultaneously displays or runs the application corresponding to the first task card and the second application in split screen.

In some example embodiments, when the task card of the second terminal is displayed in the recent task interface of the first terminal, the task card of the second terminal is laid out in the recent task interface of the first terminal based on a state of using the second terminal by the user.

In some example embodiments, the first terminal displays the task card of the second terminal in a single row or a plurality of rows in the recent task interface of the first terminal based on any one of landscape-mode use, portrait-mode use, unfolded-state portrait-mode use of a foldable screen, unfolded-state landscape-mode use of the foldable screen, folded-state landscape-mode use of the foldable screen, and folded-state portrait-mode use of the foldable screen of the second terminal. For example, for details, refer to specific descriptions corresponding to Example 1 to Example 3 (FIG. 5(a) to FIG. 6(e)). For brevity, details are not described herein again. In this implementation, the task card of the second terminal is displayed in a single row or a plurality of rows in the recent task interface of the first terminal based on a state of using the second terminal by the user, a state of using the first terminal by the user, and a screen size of the first terminal. This can improve task card display efficiency of the second terminal, help the user view and manage a historical task of another device on a device, and improve user experience.

In some example embodiments, when the task card of the second terminal is displayed in the recent task interface of the first terminal, the task card of the second terminal includes a task card of a first-screen snapshot of a home screen of the second terminal. In this implementation, a home screen snapshot of the second terminal may be displayed in the recent task interface of the first terminal, to facilitate viewing by the user, and improve user experience.

In some example embodiments, the procedure may further include: The first terminal receives a first operation performed by the user on the task card of the first-screen snapshot of the home screen of the second terminal; and the first terminal displays a task card of a second-screen snapshot of the home screen of the second terminal in the recent task interface of the first terminal based on the first operation performed by the user. For example, for details, refer to specific descriptions corresponding to Example 5 (FIG. 7(b)). For brevity, details are not described herein again. In this implementation, the user may view different home screen snapshots of the second terminal, to improve user experience.

In some example embodiments, the procedure may further include: The first terminal receives a second operation performed by the user on the task card of the first-screen snapshot of the home screen of the second terminal or the task card of the second-screen snapshot of the home screen of the second terminal; and the first terminal displays a first-screen interface of the home screen of the second terminal or a first-screen interface of the home screen of the second terminal on the first terminal based on the second operation, or runs an application in a first-screen interface of the home screen of the second terminal or an application in a second-screen interface of the home screen of the second terminal on the first terminal. For example, for details, refer to specific descriptions corresponding to Example 5 (FIG. 7(b)). In this implementation, the user may perform an operation on applications of different home screen snapshots of the second terminal, to quickly display or open the application on the second terminal. In this way, an operation is simple, and user experience is improved.

In some example embodiments, at least one of an FA card, a floating window, and a floating bubble exists on the task card of the first-screen snapshot of the home screen of the second terminal and/or the task card of a second-screen snapshot of the home screen of the second terminal. For example, for details, refer to specific descriptions corresponding to Example 4 (FIG. 7(a)), Example 6 (FIG. 7(d)), and Example 7 (FIG. 7(e)). For brevity, details are not described herein again. In this implementation, the home screen snapshot of the second terminal may display the FA card, the floating window, or the floating bubble, to flexibly display the task card of the second terminal in the recent task interface of the first terminal in different manners, and improve user experience.

In some example embodiments, the procedure may further include: The first terminal receives a third operation performed by the user on the FA card, the floating window, or the floating bubble; and the first terminal displays the first-screen interface of the home screen of the second terminal or the first-screen interface of the home screen of the second terminal on the first terminal based on the third operation, or runs the FA card, the floating window, or an application corresponding to the floating bubble on the first terminal. In this implementation, the user may perform an operation on the FA card, the floating window, or the floating bubble on the home screen snapshot of the second terminal, to quickly display or open the application on the second terminal. In this way, an operation is simple, and user experience is improved. For details, refer to specific descriptions corresponding to Example 4 (FIG. 7(a)), Example 6 (FIG. 7(d)), and Example 7 (FIG. 7(e)). For brevity, details are not described herein again.

In some example embodiments, when the task card of the second terminal is displayed in the recent task interface of the first terminal, the task card of the second terminal includes a snapshot of a control device configured to control the second terminal. For example, for details, refer to specific descriptions shown in Example 8 (FIG. 7(f)). In this implementation, a task card related to the second terminal may be flexibly displayed in the recent task interface of the first terminal, to improve user experience.

In some example embodiments, the procedure may further include: The first terminal receives a fourth operation performed by the user on the snapshot of the control device; and displays a detail interface of the control device on the first terminal based on the fourth operation, or remotely controls the second terminal. For example, for details, refer to specific descriptions shown in Example 8 (FIG. 7(f)). For brevity, details are not described herein again. In this implementation, the user may view, on the first terminal, a task card of the control device that controls the second device, and may perform an operation on the task card, to quickly control the second terminal device on the first terminal. In this way, an operation is simple, and user experience is improved.

In some example embodiments, the second terminal is a large-screen device, and the control device is a remote control.

In some example embodiments, when the task card of the second terminal is displayed in the recent task interface of the first terminal, the task card of the second terminal includes a task card of a home screen application of the second terminal.

In some example embodiments, the procedure may further include: The first terminal receives a fifth operation performed by the user on an application on the task card of the home screen application of the second terminal; and manages the home screen application of the second terminal on the first terminal based on the fifth operation. For example, for details, refer to specific description shown in Example 10 (FIG. 7(p)). For brevity, details are not described herein again. In this implementation, the user may view a home screen application icon of the second terminal on the first terminal, and may perform an operation on the home screen application icon, to help the second terminal manage the application (sort the application, create a folder, delete the application, or the like), and quickly help, on the first terminal, the second terminal manage the application. In this way, an operation is simple, and user experience is improved.

In some example embodiments, the N devices include a lightweight device, the lightweight device includes a wearable device and a smart home device that are used by the user, and when a task card of the lightweight device is displayed in the recent task interface of the first terminal, the task card of the lightweight device includes task cards respectively corresponding to ongoing tasks of different lightweight devices. In this implementation, the task card of the lightweight device may be displayed in the recent task interface of the first terminal, to enrich types of task cards displayed in the recent task interface of the first terminal. This is friendly to the user.

In some example embodiments, the lightweight device is a general term of devices such as an IOT device, the wearable device, and the smart home device. For example, the lightweight device may include a smart refrigerator, a smart air conditioner, a smart wok, a smart kitchen hood, a smart sound box, a smartwatch, and the like.

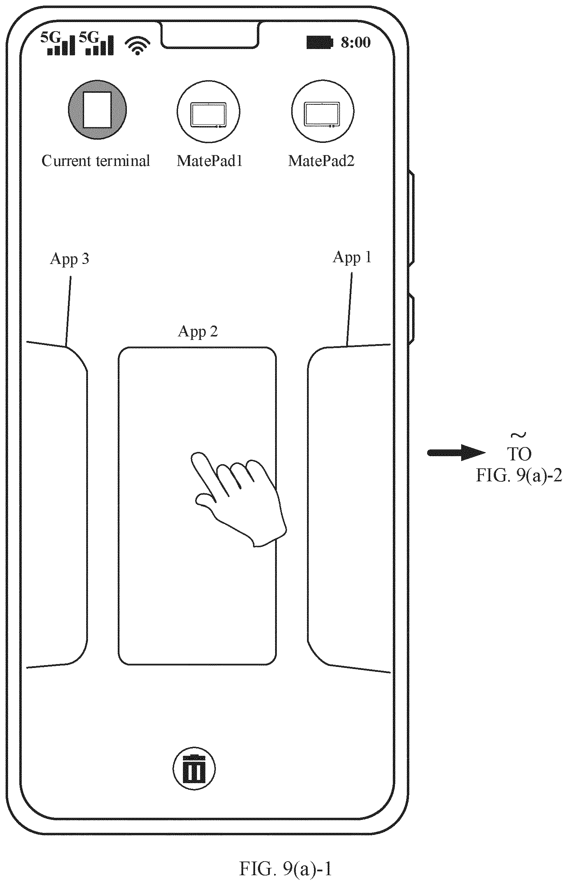

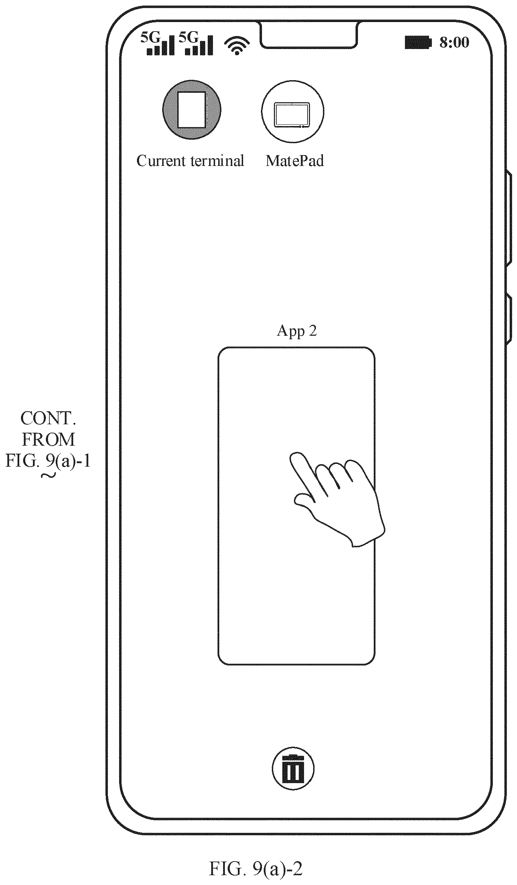

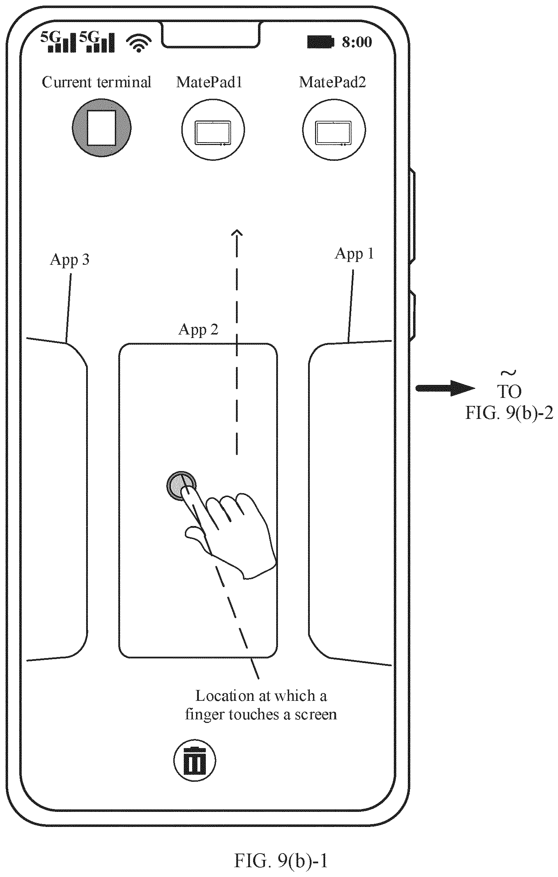

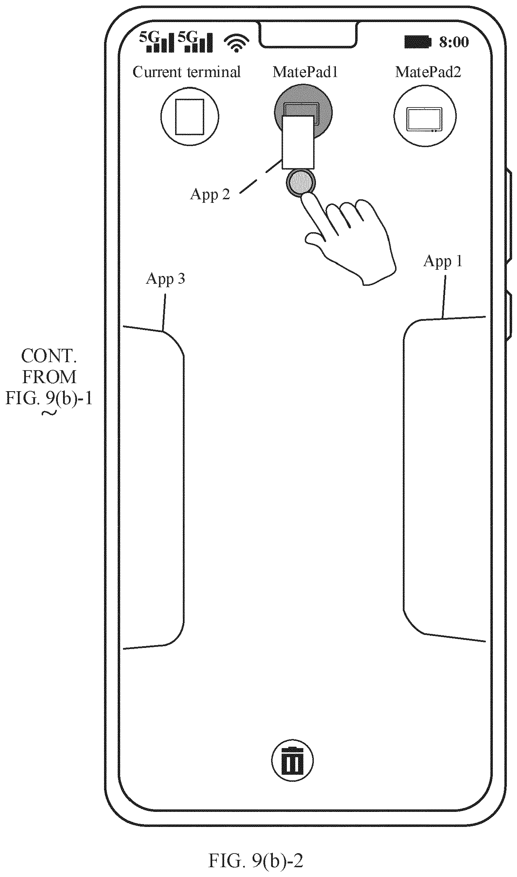

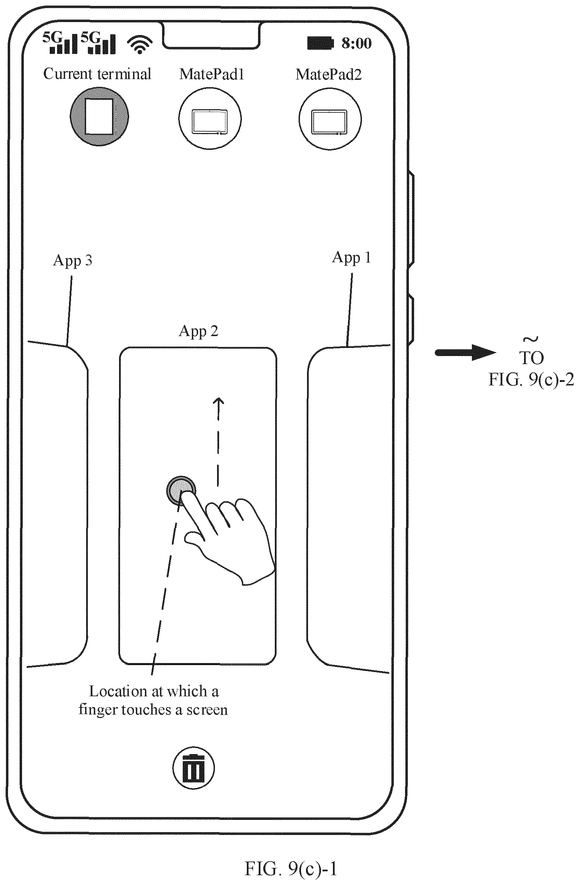

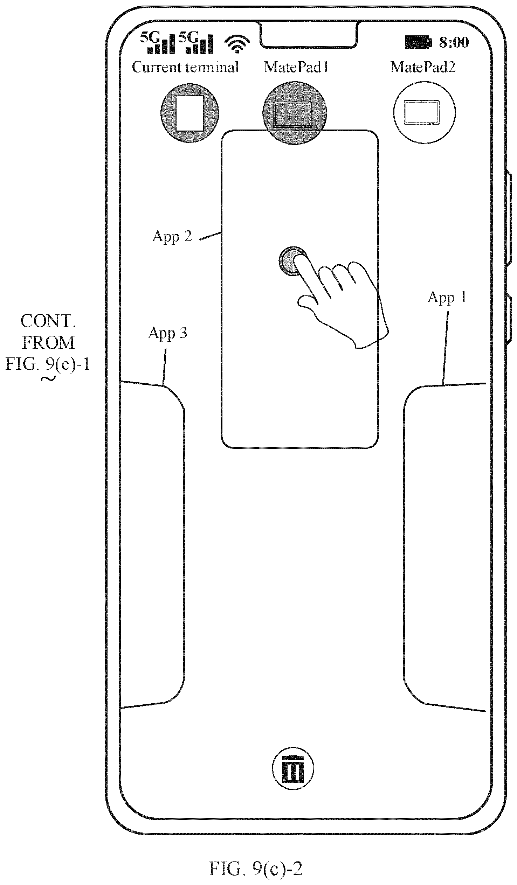

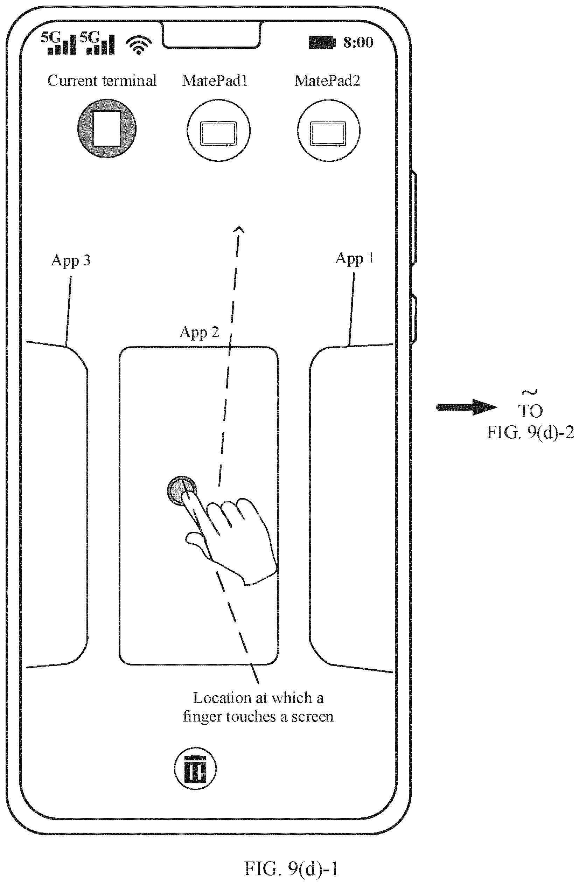

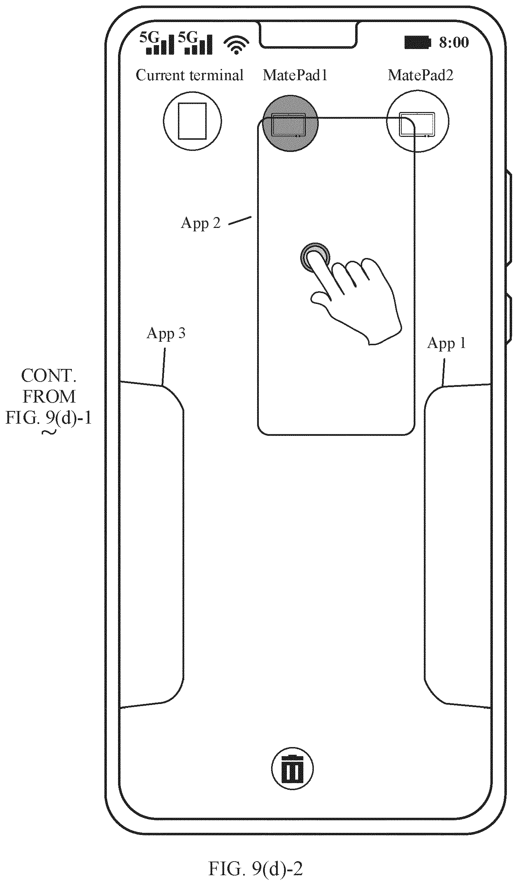

In some example embodiments, the procedure may further include: The first terminal receives a sixth operation performed by the user on the task card of the device; and the first terminal displays a detail interface of the ongoing task of the lightweight device on the first terminal based on the sixth operation, or remotely controls the ongoing task of the lightweight device. For example, for details, refer to specific descriptions shown in FIG. 9 and FIG. 7(g) to FIG. 7(o). For brevity, details are not described herein again. In this implementation, the user may view, on the first terminal, a task card corresponding to an ongoing task of an associated lightweight device, and may perform an operation on the card corresponding to the ongoing task of the lightweight device, to remotely control the ongoing task of the lightweight device. In this way, an operation is simple, and user experience is improved.

In some example embodiments, the N devices include a third terminal, and the procedure further includes: The first terminal receives a seventh operation performed by the user on the task card of the lightweight device; and shares the task card of the lightweight device with the third terminal based on the seventh operation; and the third terminal displays the task card of the lightweight device in a recent task interface. In this implementation, the task card of the lightweight device may be pushed to the third terminal for display, so that the user controls the ongoing task of the lightweight device on the third terminal, to improve user experience.

In some example embodiments, the procedure may further include: displaying, in a display interface of the first lightweight device, a task card corresponding to an ongoing task of a second lightweight device, where the lightweight device includes the first lightweight device and the second lightweight device; the first lightweight device receives an eighth operation performed by the user on the task card corresponding to the ongoing task of the second lightweight device; and the first lightweight device remotely controls the ongoing task of the second lightweight device based on the eighth operation. For example, for details, refer to specific descriptions shown in Example 11 (FIG. 7(r)). For brevity, details are not described herein again. In this implementation, the user may remotely control an ongoing task of another lightweight device on a lightweight device. In this way, an operation is simple, and user experience is improved.

In some example embodiments, the procedure may further include: authenticating an identity of the user by using the first lightweight device and/or a device associated with the first lightweight device; and after authentication of the identity of the user succeeds, displaying a task card of the first terminal and/or the second terminal in the display interface of the first lightweight device.

In some example embodiments, the procedure may further include: The first lightweight device receives a ninth operation performed by the user on a task card of the first terminal and/or a task card of the second terminal; and the first lightweight device remotely controls, based on the ninth operation, an application corresponding to the task card of the first terminal and/or the task card of the second terminal. For example, for details, refer to specific descriptions in Example 12 (FIG. 7(s)). For brevity, details are not described herein again. In this implementation, the user may remotely control a historical task card and a foreground task card of another intelligent terminal on the lightweight device. In this way, an operation is simple, and user experience is improved.

In some example embodiments, the procedure may further include: When the task card of the second terminal is displayed in the recent task interface of the first terminal, the first terminal receives a tenth operation performed by the user on the first task card in the task card of the second terminal, where the tenth operation is used to start, on the first terminal, a first application corresponding to the first task card; the first terminal runs the first application on the first terminal based on the tenth operation; and the first terminal and the second terminal determine a running state of the first application based on different modes in which the first application is migrated to the first terminal. For example, for details, refer to specific descriptions corresponding to FIG. 8(a)-1 and FIG. 8(a)-2. For brevity, details are not described herein again. In this implementation, after starting an application of another terminal, the first terminal may determine, based on different modes in which the application is migrated to the first terminal, to display a running state of the application on the first terminal, to ensure efficiency of running the application on the first terminal, and improve user experience.

In some example embodiments, that the first terminal and the second terminal determine a running state of the first application based on different modes in which the first application is migrated to the first terminal includes: When the first application is migrated to the first terminal in a replication mode, the first terminal and the second terminal each run the first application separately, where data of the first application on the first terminal and the second terminal is synchronized, and operation states are synchronized; and the first terminal and the second terminal each adaptively display the first application based on respective screens. For example, for details, refer to specific descriptions corresponding to Example 13 (FIG. 8(b)-1 and FIG. 8(b)-2 to FIG. 8(c)-1 and FIG. 8(c)-2). For brevity, details are not described herein again.

In some example embodiments, the procedure may further include: The second terminal receives an eleventh operation performed by the user on the first application, where the eleventh operation is used to pull back the first application from the first terminal; and after the second terminal receives the eleventh operation, the first terminal continues to run the first application. For example, for details, refer to specific descriptions corresponding to Example 16 (FIG. 8(h)-1 and FIG. 8(h)-2 to FIG. 8(i)-1 and FIG. 8(i)-2). For brevity, details are not described herein again. In this implementation, normal running of the first application can be ensured.

In some example embodiments, that the first terminal and the second terminal determine a running state of the first application based on different modes in which the first application is migrated to the first terminal includes: When the first application is migrated to the first terminal in a migration mode based on a window projection technology, and the first application supports a plurality of instances, the first terminal and the second terminal each run the first application separately, where data of the first application on the first terminal and the second terminal is synchronized, and operation states are not synchronized; and the first terminal and the second terminal each adaptively display the first application based on respective screens. For example, for details, refer to specific descriptions corresponding to Example 14 (FIG. 8(d)-1 and FIG. 8(d)-2 to FIG. 8(e)-1 and FIG. 8(e)-2). For brevity, details are not described herein again.

In some example embodiments, the procedure may further include: The second terminal receives a twelfth operation performed by the user on the first application, where the twelfth operation is used to pull back the first application from the first terminal; and after the second terminal receives the twelfth operation, the first terminal continues to run the first application. For example, for details, refer to descriptions corresponding to Example 15 (FIG. 8(f)-1 and FIG. 8(f)-2). For brevity, details are not described herein again.

In some example embodiments, that the first terminal and the second terminal determine a running state of the first application based on different modes in which the first application is migrated to the first terminal includes: When the first application is migrated to the first terminal in a migration mode based on a window projection technology, and the first application does not support a plurality of instances, the first terminal or the second terminal runs the first application in a same time period.

In some example embodiments, the procedure may further include: The second terminal receives a thirteenth operation performed by the user on the first application, where the thirteenth operation is used to pull back the first application from the first terminal; and after the second terminal receives the thirteenth operation, the first terminal exits running of the first application, and the second terminal runs the first application. For example, for details, refer to descriptions corresponding to Example 15 (FIG. 8(f)-1 and FIG. 8(f)-2). For brevity, details are not described herein again.

In some example embodiments, that the first terminal and the second terminal determine a running state of the first application based on different modes in which the first application is migrated to the first terminal includes: When the first application is migrated to the first terminal in a migration mode based on an FA technology, before the first terminal runs the first application, the first terminal installs the first application or an FA of the first application; the first terminal and the second terminal each run the first application separately, where data of the first application on the first terminal and the second terminal is synchronized, and operation states are not synchronized; and the first terminal and the second terminal each adaptively display the first application based on respective screens. For example, for details, refer to descriptions corresponding to Example 14 (FIG. 8(d)-1 and FIG. 8(d)-2 to FIG. 8(e)-1 and FIG. 8(e)-2). For brevity, details are not described herein again.

In some example embodiments, the procedure may further include: The second terminal receives a fourteenth operation performed by the user on the first application, where the fourteenth operation is used to pull back the first application from the first terminal; and after the second terminal receives the fourteenth operation, the first terminal continues to run the first application. For example, for details, refer to descriptions corresponding to Example 16 (FIG. 8(h)-1 and FIG. 8(h)-2 to FIG. 8(i)-1 and FIG. 8(i)-2). For brevity, details are not described herein again. In this implementation, normal running of the first application can be ensured, and user experience can be improved.

In some example embodiments, an area of a screen of the first terminal is greater than an area of a screen of the second terminal, and that the first terminal runs the first application after the first application is started on the first terminal includes: automatically displaying the first application on the first terminal in a floating window or in full screen. For example, for details, refer to descriptions corresponding to Example 20 (FIG. 8(m)). For brevity, details are not described herein again. In this implementation, the first application may be displayed and run on the first terminal in a floating window or in full screen, to improve user experience. For example, the first terminal may be a PC device.

In some example embodiments, an area of a

**EP 4 321 999 A1**

screen of the first terminal is greater than an area of a screen of the second terminal, and after the first application is started on the first terminal, the procedure further includes: The first terminal displays prompt information in an interface of the first terminal, where the prompt information is used to prompt the user to display the first application in a floating window or in full screen; and the first terminal displays the first application on the first terminal in a floating window or in full screen based on selection of the user. For example, for details, refer to descriptions corresponding to Example 21 (FIG. 8(n)). For brevity, details are not described herein again. In this implementation, the first application may be displayed and run on the first terminal in a floating window or in full screen based on selection of the user, to improve user experience. For example, the first terminal may be a PC device.

In some example embodiments, after the first application is started on the first terminal, the procedure further includes: when a screen width of the first terminal is greater than a screen width of the second terminal, displaying the first application on the first terminal in a parallel horizon manner, and displaying the first application on the second terminal in a non-parallel horizon manner; or when a screen width of the first terminal is less than a screen width of the second terminal, displaying the first application on the first terminal in a non-parallel horizon manner, and displaying the first application on the second terminal in a parallel horizon manner; or when the first application is displayed on the second terminal in landscape mode, displaying the first application on the first terminal in a landscape-mode display manner; or when the first application is displayed on the second terminal in portrait mode, displaying the first application on the second terminal in a portrait-mode display manner. For example, for details, refer to specific descriptions corresponding to Example 17 to Example 19 (FIG. 8(j)-1 and FIG. 8(j)-2 to FIG. 8(l)). For brevity, details are not described herein again. In this implementation, the first application may be flexibly displayed and run in different forms according to screen sizes of the first terminal and the second terminal, to improve user experience.

In some example embodiments, in a process in which the first terminal runs the first application, the procedure further includes: displaying first prompt information and second prompt information in an interface of the first terminal after a distance between the first terminal and the second terminal is greater than a preset first distance, where the first prompt information prompts the user with a case in which the first terminal and the second terminal are to disconnect a communication connection, and the second prompt information prompts the user with a case in which the first application is from the second terminal. For example, for details, refer to specific descriptions corresponding to Example 28 (FIG. 8(v)). For brevity, details are not described herein again. In this implementation, prompt information is displayed to the user, so that the user can learn of a situation of the communication connection, and user experience can be improved.

In some example embodiments, in a process in which the first terminal runs the first application, the procedure further includes: After the communication connection between the first terminal and the second terminal is disconnected, the first terminal displays the first application with a mask. One of third prompt information, fourth prompt information, and fifth prompt information is displayed in the interface of the first terminal. The third prompt information prompts the user with a case in which the first terminal and the second terminal disconnect the communication connection, the fourth prompt information prompts the user to exit the first application, and the fifth prompt information prompts the user to perform reconnection.

In some example embodiments, the procedure may further include: The first terminal and the second terminal are automatically reconnected after the first terminal and the second terminal meet a preset condition; and after reconnection succeeds, the first terminal restores normal display and runs the first application. For example, for details, refer to specific descriptions corresponding to Example 29 (FIG. 8(w)). For brevity, details are not described herein again. In this implementation, connection state prompt information, automatic reconnection prompt information, and application exit prompt information are displayed to the user, and reconnection is automatically performed after a condition is met, to ensure sequential running of a task migration, and improve user experience.

In some example embodiments, the procedure may further include: The first terminal receives a fifteenth operation performed by the user on the second task card in the recent task interface of the first terminal, where the fifteenth operation is used to migrate a second application corresponding to the second task card to the target device for running, and N devices include the target device; the first terminal determines the target device based on the fifteenth operation; and the target device runs the second application. In this implementation, the user may conveniently determine a target device to which a task card needs to be migrated. An operation is simple and easy to implement, to improve user experience.

In some example embodiments, that the first terminal determines the target device based on the fifteenth operation includes: When the user touches and holds the second task card, a task card other than the second task card and an icon of a device that cannot run the second application are hidden in the recent task interface of the first terminal. The first terminal determines, based on an operation of the user, the target device from a device icon displayed in the recent task interface of the first terminal. For example, for details, refer to specific descriptions corresponding to Example 30 (FIG. 9(a)-1 and FIG. 9(a)-2). For brevity, details are not described herein again. In this implementation, an icon of an unavailable device and another task card are hidden, so that the user determines the target device to which the task card needs to be migrated, to improve efficiency of determining the target device by the user.

In some example embodiments, that the first terminal determines the target device based on the fifteenth operation includes: when the user drags the second task card and the second task card overlaps an identifier of a fourth terminal, determining that the fourth terminal is the target device, where the N devices include the fourth terminal. For example, for details, refer to specific descriptions corresponding to Example 31 and Example 32 (FIG. 9(b)-1 and FIG. 9(b)-2 and FIG. 9(c)-1 and FIG. 9(c)-2). For brevity, details are not described herein again.

In some example embodiments, that the first terminal determines the target device based on the fifteenth operation includes: when the user drags the second task card, and the second task card overlaps each of an identifier of the fourth terminal and an identifier of the fifth identifier, determining that a terminal device indicated by a device icon with a largest overlapping area is the target device, where the N devices include the fourth terminal and the fifth terminal. For example, for details, refer to specific descriptions corresponding to Example 33 (FIG. 9(d)-1 and FIG. 9(d)-2). For brevity, details are not described herein again. In this implementation, an operation is simple and easy to implement, and accuracy of determining the target device can be improved.

In some example embodiments, that the first terminal determines the target device based on the fifteenth operation includes: when the user drags the second task card to slide upward, after a distance that the second task card moves is greater than a preset distance, determining that a device indicated by a device icon directly above the second task card is the target device. For example, for details, refer to specific descriptions corresponding to Example 34 (FIG. 9(e) and FIG. 9(f)). For brevity, details are not described herein again. In this implementation, an operation is simple and easy to implement, and accuracy of determining the target device can be improved.

In some example embodiments, the determining, by the first terminal, a target device according to a fifteenth operation includes: when the user drags the second task card to slide upward, after a distance between the second task card and the top of the screen of the first terminal is less than a preset distance, determining that a device indicated by a device icon directly above the second task card is the target device. For example, for details, refer to specific descriptions corresponding to Example 35 (FIG. 9(g) and FIG. 9(h)). For brevity, details are not described herein again. In this implementation, an operation is simple and easy to implement, and accuracy of determining the target device can be improved.

In some example embodiments, after the target device is determined, in a process in which the user drags the second task card to slide to the target device, an area of the second task card decreases as a distance between the second task card and an icon of the target device decreases. For example, for details, refer to specific descriptions corresponding to Example 31 (FIG. 9(b)-1 and FIG. 9(b)-2). For brevity, details are not described herein again. In this implementation, an operation is simple and easy to implement, and accuracy of determining the target device can be improved.

In some example embodiments, after the target device is determined, the procedure may further include: when the second task card does not overlap the icon of the target device, moving the icon of the target device downward the preset distance, or changing a display state of the icon of the target device to a selected state. For example, for details, refer to specific descriptions corresponding to Example 37 (FIG. 9(k) and FIG. 9(l)). For brevity, details are not described herein again. In this implementation, it may be convenient for the user to view a selected target device, to improve user experience.

In some example embodiments, after the target device is determined, the procedure may further include: When the user drags the second task card, before the second task card overlaps the icon of the target device, the user releases the second task card, and the second task card is automatically migrated to the target device. The target device runs the second application. For example, for details, refer to specific descriptions corresponding to Example 36 (FIG. 9(i) and FIG. 9(j)). For brevity, details are not described herein again. In this implementation, after the target device is determined, the task card does not reach an icon hot zone of the target device. If the user releases the task card, the task card automatically flies to the device icon, to complete cross-device interaction, and improve efficiency of cross-device interaction of the task.

In some example embodiments, after the target device is determined, the procedure may further include: The first terminal receives a sixteenth operation performed by the user on the second task card in the recent task interface of the first terminal. The sixteenth operation is used to select a new target device. For example, for details, refer to specific descriptions corresponding to Example 39 to Example 42 (FIG. 9(o) and FIG. 9(v)). For brevity, details are not described herein again. In this implementation, the use performs an operation on the task card, to change the selected target device, so as to improve efficiency of changing the target device.

In some example embodiments, when the target device is in a screen-off state, before the target device runs the second application, the method further includes: The target device automatically turns on a screen; the target device displays an unlocking interface after the target device automatically turns on the screen; and the target device receives an unlocking operation performed by the user. For example, for details, refer to specific descriptions corresponding to Example 43 (FIG. 10(a)). For brevity, details are not described herein again. In this implementation, the target device automatically turns on the screen, and unlocking is triggered after the screen is turned on. Then, the user manually unlocks the target device, to ensure that the target device can normally run a migrated task, and ensure task migration efficiency.

In some example embodiments, when the target device is in a screen-off state, before the target device runs the second application, the method further includes: The target device automatically turns on a screen, and displays an unlocking interface; and the target device receives an unlocking operation performed by the user. For example, for details, refer to specific descriptions corresponding to Example 44 (FIG. 10(b)). For brevity, details are not described herein again. In this implementation, the target device automatically turns on the screen, and after the screen is turned on, the user is automatically triggered to manually unlock the target device, to improve task migration efficiency when it is ensured that the target device can normally run a migrated task.

In some example embodiments, when the target device is in a screen-off state, before the target device runs the second application, the procedure may further include: The target device automatically turns on a screen and is automatically unlocked. For example, for details, refer to specific descriptions corresponding to Example 45 (FIG. 10(c)). For brevity, details are not described herein again. In this implementation, the target device automatically turns on the screen and is automatically unlocked, to improve task migration efficiency when it is ensured that the target device can normally run a migrated task.

In some example embodiments, a source device corresponding to the second application is the first terminal, and that the target device runs the second application includes: The target device runs the second application on the target device based on a hardware capability of the first terminal; or the target device runs the second application on the target device based on a hardware capability of the first terminal and a hardware capability of the target device; or the target device runs the second application on the target device based on a hardware capability of the target device, and the first terminal releases a hardware capability occupied by the second application; or the target device runs the second application on the target device based on a hardware capability of the target device, and the first terminal does not release a hardware capability occupied by the second application. For example, for details, refer to specific descriptions corresponding to Example 46 to Example 48 (FIG. 11(a)-1 and FIG. 11(a)-2 to FIG. 11(c)-1 and FIG. 11(c)-2). For brevity, details are not described herein again. In this implementation, based on different allocation rules of the hardware capability of the first terminal and the hardware capability of the target device, it is ensured that a migrated task can run normally on the target device, and task migration efficiency is improved.

In some example embodiments, the procedure may further include: In a process in which the target device runs the second application based on the hardware capability of the target device, the target device receives an instruction for running a third application, and a hardware capability used for running the third application on the target device conflicts with a hardware capability used for running the second application. The target device runs the third application based on the hardware capability of the target device. The second application switches back to the first terminal device, and the second application continues to be run based on the hardware capability of the first terminal. For example, for details, refer to specific descriptions corresponding to Example 49 (FIG. 11(d)-1 and FIG. 11(d)-2 to FIG. 11(e)). For brevity, details are not described herein again. In this implementation, in this implementation, after a task is migrated from the source device to the target device, when a new task from the target device preempts hardware, a source-end hardware capability may be used through coordination, to ensure that a task of the target device is preferentially executed. In this way, it can be ensured that the task of the target device is preferentially executed.

In some example embodiments, the procedure may further include: In a process in which the target device runs the second application based on the hardware capability of the target device, the target device receives an instruction for running a third application, and a hardware capability used for running the third application on the target device conflicts with a hardware capability used for running the second application. The target device simultaneously runs the second application and the third application based on the hardware capability of the target terminal. For example, for details, refer to specific descriptions corresponding to Example 50 (FIG. 11(f)-1 and FIG. 11(f)-2 to FIG. 11(g)). For brevity, details are not described herein again. In this implementation, after a task is migrated from the source device to the target device, when a new task from the target device preempts hardware, the hardware capability of the target device may be separated based on the tasks, and a plurality of tasks are supported simultaneously, to ensure that both the task on the target device and the migrated task can run normally, and improve efficiency of running the task of the target device.

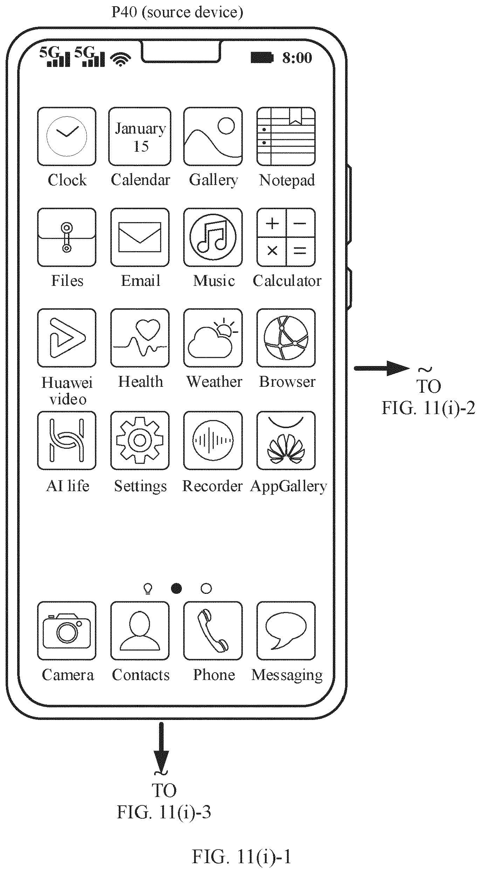

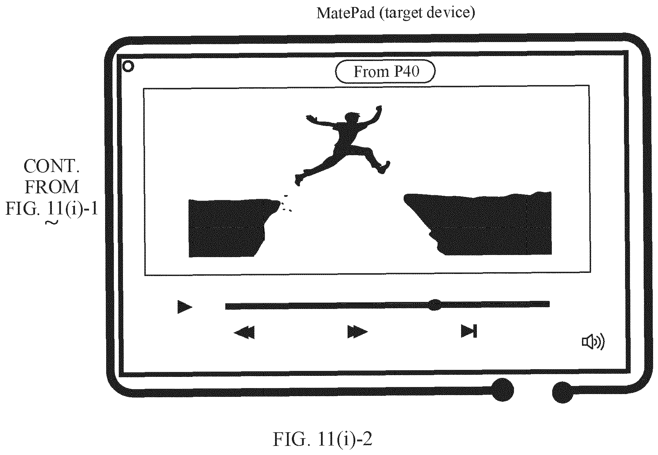

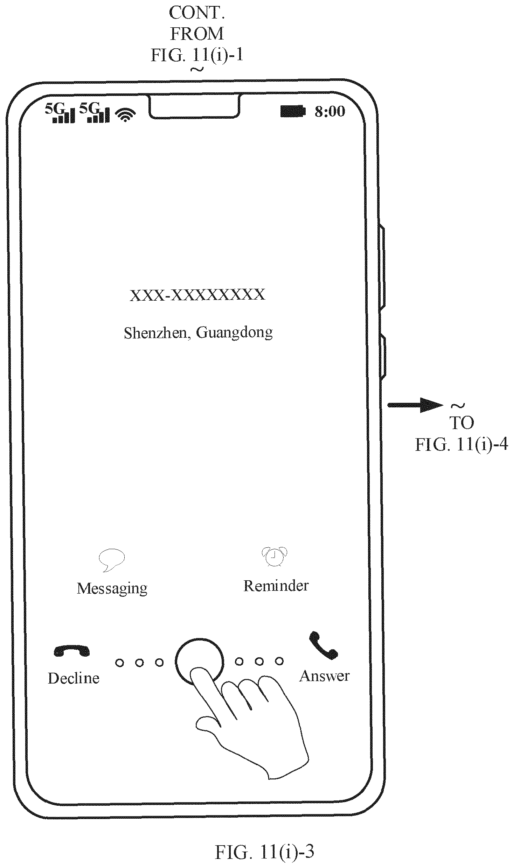

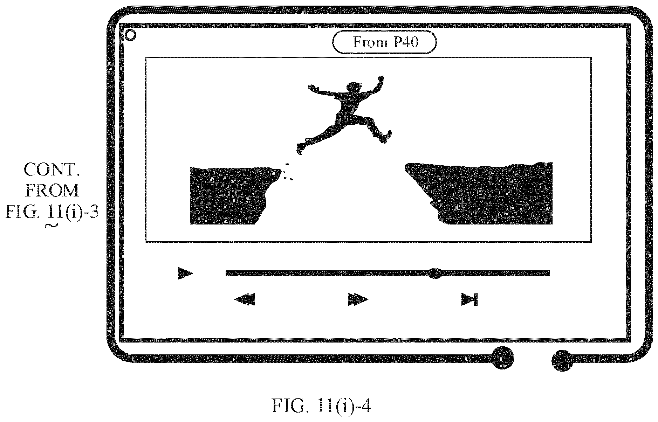

In some example embodiments, the procedure may further include: In a process in which the target device runs the second application based on the hardware capability of the first terminal, the first terminal receives an instruction for running a fourth application, and a hardware capability used for running the second application on the target device conflicts with a hardware capability used for running the fourth application by the first terminal; the target device suspends running of the second application; the first terminal runs the fourth application based on the hardware capability of the first terminal; and after the first terminal ends running of the fourth application, the target device continues to run the second application based on the hardware capability of the first terminal. For example, for details, refer to specific descriptions corresponding to Example 52 (FIG. 11(i)-1 to FIG.

11(i)-4 to FIG. 11(j)-1 to FIG. 11(j)-4). For brevity, details are not described herein again. In this implementation, after a task is migrated from the source device to the target device, when a new task from the source device preempts hardware, running of the migrated task on the target device is suspended, and after a new task ends on the source device, the migrated task on the target device automatically continues, to ensure that the new task on the source device is preferentially executed.

In some example embodiments, the procedure may further include: In a process in which the target device runs the second application based on the hardware capability of the first terminal, the first terminal receives an instruction for running a fourth application, and a hardware capability used for running the second application on the target device conflicts with a hardware capability used for running the fourth application by the first terminal; and the target device switches to continue running the second application based on the hardware capability of the target device, and the first terminal runs the fourth application based on the hardware capability of the first terminal. For example, for details, refer to specific descriptions corresponding to Example 53 (FIG. 11(i)-1 to FIG. 11(i)-4 and FIG. 11(k)-1 to FIG. 11(k)-4). For brevity, details are not described herein again. In this implementation, after a task is migrated from the source device to the target device, when a new task from the source device preempts hardware, the source device executes the new task based on the hardware capability of the source device, and the target device executes, based on the hardware capability of the target device, the task migrated from the source device, to ensure that both the task on the source device and the migrated task can run normally, and improve task running efficiency.

In some example embodiments, the procedure may further include: In a process in which the target device runs the second application based on the hardware capability of the first terminal, the first terminal receives an instruction for running a fourth application, and a hardware capability used for running the second application on the target device conflicts with a hardware capability used for running the fourth application by the first terminal; and the target device continues to run the second application based on the hardware capability of the first terminal, and the first terminal runs the fourth application based on the hardware capability of the first terminal. For example, for details, refer to specific descriptions corresponding to Example 53 (FIG. 11(i)-1 to FIG. 11(i)-4 and FIG. 11(k)-1 to FIG. 11(k)-4). For brevity, details are not described herein again. In this implementation, after a task is migrated from the source device to the target device, when a new task from the source device preempts hardware, the hardware capability of the source device may be separated based on the tasks, and a plurality of tasks are supported simultaneously, to ensure that both the task on the source device and the migrated task can run normally, and improve task running efficiency on the source device.

In some example embodiments, the procedure may further include: The first terminal receives a seventeenth operation performed by the user on a fifth task card in the recent task interface of the first terminal, where the seventeenth operation is used to install a fifth application corresponding to the fifth task card on the first terminal or another device in the N devices; and the first terminal or the another device in the N devices installs the fifth application based on the seventeenth operation. For example, for details, refer to specific descriptions corresponding to Example 22 and Example 23 (FIG. 8(o)-1 and FIG. 8(o)-2 and FIG. 8(p)-1 and FIG. 8(p)-2). For brevity, details are not described herein again. In this implementation, a multi-device task center is used to help another device or a current device to install an application, and an operation is convenient, to improve application installation efficiency, and improve user experience.

In some example embodiments, the procedure may further include: The first terminal receives an eighteenth operation performed by the user on a sixth task card and a seventh task card in the recent task interface of the first terminal, where the eighteenth operation is used to display an application corresponding to the sixth task card and an application corresponding to the seventh task card on the first terminal or the another device in the N devices in a first display manner; and the first terminal or the another device in the N devices displays the application corresponding to the sixth task card and the application corresponding to the seventh task card in the first display manner.

In some example embodiments, the first display manner is a split-screen display manner; or the application corresponding to the sixth task card is displayed in full screen, and the application corresponding to the seventh task card is displayed in a floating window; or the application corresponding to the sixth task card is displayed in a floating window, and the application corresponding to the seventh task card is displayed in a floating window. For example, for details, refer to specific descriptions corresponding to Example 24 to Example 27 (FIG. 8(q)-1 to FIG. 8(q)-3 to FIG. 8(u)-1 to FIG. 8(u)-4). For brevity, details are not described herein again. In this implementation, based on the multi-device task center, the user quickly creates a split screen/floating window on a local device or across devices. An operation is convenient, to help form a new task card. In addition, the new task card may be displayed in different manners, to improve diversity and flexibility of the task card.

In the foregoing embodiments, for example, before a task card of the first terminal or a task card of the another device is displayed in a recent task interface of the second terminal, or before a task card of the second terminal or a task card of the another device is displayed in the recent task interface of the first terminal, the second terminal needs to obtain recent task information of the first terminal or the another device, and the first terminal also needs to obtain recent task information of the second terminal or the another device. Alternatively, after the user starts an application of the second terminal on the first terminal device, the first terminal first needs to obtain data (which may also be referred to as an application data stream) of an application run on the second terminal. In this way, the application can be run normally on the first terminal.

In a possible implementation, the recent task information may be transmitted between different devices by writing the recent task information or the data (the application data stream) of the application into a data packet (Parcel) for RPC transmission. In this solution, an intent is used on a transmit end device to store application data, and the parcel is used to perform IPC and RPC transmission. To be specific, the transmit end device stores data by using the intent, writes the intent into the parcel for transmission, and finally restores the data on a receive end device. However, a maximum limit of RPC transmission is 200 KB, and a cross-device migration cannot be implemented for application data that exceeds 200 KB. This becomes a biggest obstacle that restricts expansion of applications that may be migrated, and severely reduces application migration efficiency. Consequently, user experience is poor.

Therefore, in some example embodiments of this application, in a process in which the recent task information or the application data stream is transmitted between terminal devices, the recent task information or the application data stream is segmented, to obtain a plurality of pieces of segment data, an index table of the segment data is established, the segment data is transmitted in parallel through a plurality of threads in a distributed file system, and the index table is transmitted to a peer terminal device. The peer terminal restores application data based on the received segment data and the index table. In this way, a migration of the recent task information or the application data stream that is at least 200 KB can be supported, data migration efficiency is improved, and user experience is improved.

The following specifically describes specific embodiments of transmission of an application data stream.

In some example embodiments, FIG. 18 is a schematic diagram of an example process in which a first terminal migrates an application data stream (for example, a data stream of a document editing application, a data stream of an audio/video playing application, and a data stream of recent task information) to a second terminal. Optionally, there is a Wi-Fi connection, a Bluetooth connection, a USB, an NFC connection, a Zigbee (Zigbee) connection, a Wi-Fi P2P connection, a local area network-based socket connection, or the like between the first terminal and the second terminal. In addition, the first terminal and the second terminal are mutually determined to be trusted devices. For example, after the first terminal and the second terminal may log in to a same Wi-Fi account, or the first terminal and the second terminal log in to a same account (for example, a Huawei account), or the first terminal and the second terminal are previously verified as trusted devices, or the first terminal and the second terminal are bound in various other manners (for example, by scanning a two-dimensional code), or the like, it may be determined that the first terminal and the second terminal are determined as trusted devices.

As shown in FIG. 18, after a user starts an application (the document editing application, the audio/video playing application, and an application in a recent task interface) on the first terminal, optionally, application data may be stored through a data storage (onSaveData) interface provided by an ability subsystem, and a data migration is started (startContinuation). An application framework layer of the first terminal schedules the data storage interface (scheduleSaveData), extracts application data (data of the document editing application, data of the audio/video playing application, data of a recently used application of the first terminal, or the like) in the ability subsystem, segments the application data into segment data, and sets an index table of the segment data. The segment data is transmitted in parallel through a distributed file system, and RPC transmission is performed on the index table of the segment data through a distributed scheduling system. A distributed file system of the second terminal receives the segment data, and a distributed scheduling system of the second terminal receives an index of the segment data. After respectively receiving the index of the segment data and the segment data from the distributed scheduling system and the distributed file system, an application framework layer of the second terminal restores the application data, and invokes a data restoration interface (for example, scheduleRestoreData) provided by an ability subsystem of the second terminal to transmit the restored application data to a data storage interface (for example, onRestoreData) of the ability subsystem. The distributed scheduling system of the second terminal starts an application (a document editing application, an audio/video playing application, an application displayed in a recent task interface, or the like) based on a capability of an AMS. The application obtains the restored application data by invoking a data restoration (onRestoreData) interface of the ability subsystem, and finally completes restoration work of the application data on the second terminal. The second terminal may run the application (the data of the document editing application, the data of the audio/video playing application, an application that displays a recently used application of the first terminal, or the like), to complete an application migration process.

It should be understood that, each module or each system shown in FIG. 18 is merely an example, and constitutes no limitation on an internal architecture of a terminal device in this application. For example, in some other embodiments of this application, the modules that execute the functions in FIG. 18 may alternatively be other modules, or a plurality of modules may jointly complete one or more functions, or the internal architecture of the terminal device may alternatively have a structure and module different from those in an example shown in FIG. 18, or may further include more or fewer modules, or a combination of a plurality of different module manners, or the like. This is not limited in embodiments of this application.

In some example embodiments, FIG. 19 is a schematic flowchart of an example embodiment according to this application in a scenario shown in FIG. 18. In a procedure shown in FIG. 19, a user edits a document in a document editing application of a first terminal, and the document includes a large quantity of texts and pictures. The first terminal segments a document data stream, establishes an index table of segment data, transmits the segment data in parallel through a plurality of threads in a distributed file system, and transmits the index table by writing the index table into a parcel for RPC transmission. After receiving all pieces of segment data, a second terminal restores data of the document editing application based on the received index table. After the user starts the document editing application on the second terminal, for example, after the user taps a task card corresponding to the document editing application of the first terminal in a recent task interface of the second terminal, it may be ensured that the data of the document editing application can be normally displayed and run on the second terminal after being migrated, so that the user can normally perform document editing on the second terminal.

As shown in FIG. 19, this embodiment includes the following steps.

S1901: When the user migrates a document being edited by the first terminal to the second terminal, the first terminal serializes document data into a byte stream.

S1902: The first terminal determines a corresponding transmission manner based on a size of the byte stream. The size of the byte stream is a data amount of the byte stream. For example, a unit of the size of the byte stream is KB.

In some example embodiments, S1903 to S1908 are performed if a value of the byte stream is greater than or equal to 200 KB. If the size of the byte stream is less than 200 KB, the byte stream is written into a parcel for RPC transmission.

In some example embodiments, S1903 to S1908 may be performed regardless of the size of the byte stream. In this case, S1902 may not be performed. S1903 is directly performed after S1901 is performed.

S1903: Determine a quantity of segments of the byte stream (the quantity of segments).

In this embodiment of this application, the byte stream may be segmented into a plurality of segments for parallel transmission. Therefore, the quantity of segments into which the byte stream is segmented or split needs to be determined.

In some example embodiments, it may be determined that a total quantity of threads included in a thread pool of the first terminal is the quantity of segments. In other words, the quantity of segments may be the same as the total quantity of threads included in the thread pool. Alternatively, the quantity of segments may be determined based on the total quantity of threads included in the thread pool. In other words, the quantity of segments may be different from the total quantity of threads included in the thread pool.

The following describes, by using an example, a process in which the first terminal determines the total quantity of threads included in the thread pool.

In some example embodiments, the first terminal may obtain a core quantity N of a central processing unit (central processing unit, CPU) of the first terminal, and determine, based on the core quantity N, the total quantity of threads included in the thread pool (the total quantity of threads is represented by T).

The core quantity of the CPU is a quantity of cores that physically exist on a hardware CPU. In other words, the core quantity of the CPU is a quantity of CPU chips. For example, a dual-core CPU includes two relatively independent CPU core unit groups, and a quad-core CPU includes four relatively independent CPU core unit groups.

The thread is a minimum execution unit of a program execution stream, and is an actual operation unit in a process. In brief, running of one application may be considered as one process, the thread is an actual task executor in running, and one process includes a plurality of threads that can run simultaneously.

The thread pool is a set of threads. Performance may be improved very well by using the thread pool. When a system is started, a large quantity of idle threads are created in the thread pool. A program sends a task to the thread pool, and the thread pool starts a thread to execute the task. After execution ends, the thread does not die, but returns to the thread pool to be in an idle state, and waits to execute a next task.

The quantity of threads is a logical concept, and the quantity of threads is equal to a quantity of cores simulated by the CPU. Usually, a CPU with two threads may be simulated based on a core quantity of one CPU. In other words, a single-core CPU is simulated as a function similar to a dual-core CPU. For example, the dual-core CPU simulates four threads, and the quad-core CPU may simulate eight threads. For one CPU, a quantity of threads is always greater than or equal to a core quantity of the CPU, and one CPU core corresponds to at least one thread.

For example, in this embodiment of this application, a relationship between a total quantity T of threads included in the thread pool and a core quantity N of a CPU may meet the following formula:

$$T = 2 \times N$$

That is, if the total quantity of threads included in the thread pool is two times of the core quantity of the CPU, the quantity of segments is also two times of the core quantity of the CPU

Optionally, in this embodiment of this application, the total quantity T of threads included in the thread pool and the core quantity N of the CPU may alternatively satisfy another relationship. For example, the total quantity of threads included in the thread pool is three times or four times of the core quantity of the CPU, or the total quantity of threads included in the thread pool may be the same as the core quantity of the CPU. This is not limited in embodiments of this application.

It should be understood that, S1901 to S1903 are optional steps. In other words, in some embodiments of this application, this embodiment may not include S1901 to S1903, and a terminal device directly performs S1904 to S1906.

S1904: The first terminal segments the byte stream based on the quantity of segments, stores the segment data in the distributed file system, and establishes an index table including a segment number and a segment data path of each piece of segment data.

If the procedure does not include S1901 to S1903, in S1904, the first terminal may segment, based on a default quantity of segments, an application data stream (the byte stream corresponding to data of the document application) that needs to be transmitted. Optionally, the default quantity of segments may be determined by the first terminal based on a preset rule and with reference to a size of the application data stream that needs to be transmitted. For example, the preset rule may include a correspondence between a size of an application data stream and a quantity of segments, and the like. This is not limited in this application.

If the procedure includes S 1901 to S 1903, the quantity of segments is determined by using the steps S 1901 to S1903, to improve accuracy of determining the quantity of segments, and further improve application data stream transmission efficiency.

In some example embodiments, for example, it is assumed that the total quantity of threads included in the thread pool is 4, the byte stream is segmented into four segments of data, each piece of segment data may correspond to one segment number, and the segment number may represent a sequence relationship between a plurality of pieces of segment data, or the like. The first terminal may establish an index table corresponding to four segments of data. The index table includes index information of each piece of segment data. Index information of one piece of segment data indicates a storage path, a segment number, a size, and the like of the segment data in the distributed file system. According to the index table, four segments of data may be combined to form a complete byte stream.

It should be further understood that, in this embodiment of this application, a size of each piece of segment data is fixed. For each piece of segment data, the segment data does not include a message header field. In this embodiment of this application, information or content indicated by the message header field of the segment data is located in the index table, and is not in the segment data. Optionally, the information or content indicated by the message header field includes information such as a correspondence between a segment number of segment data and a segment data path, a length of the segment data, and a start identifier and an end identifier of the segment data.

S 1905: The first terminal sends the segment data to the second terminal in a manner of transmitting segment data in parallel through a plurality of threads.

In some example embodiments, it is assumed that the total quantity of threads included in the thread pool is 4, the byte stream is segmented into four segments of data, and the first terminal may transmit one piece of segment data through one thread. In other words, the four segments of data are transmitted in parallel through four threads. In other words, the plurality of pieces of segment data are sent in parallel through a plurality of threads, instead of being sent in series. The plurality of pieces of segment data may be separately sent, instead of sending the plurality of pieces of segment data as a whole. A peer device may restore data based on only received partial segment data, or a peer device may restore data based on all received segment data. In other words, the segment data is sent in a parallel stream transmission manner. In this way, data transmission efficiency can be greatly improved.

S 1906: The first terminal sends the index table to the second terminal by writing the index table into a parcel for RPC transmission.

In some example embodiments, because a quantity of bytes occupied by the index table is usually small, RPC transmission may be performed by using the parcel. In other words, after index table information is completely sent to the peer device as a whole, the peer device can restore, based on the received complete index table information, the received index table, to obtain content included in the index table.

It should be understood that, in this embodiment of this application, the index table may also be transmitted in a same manner as the segment data. For example, the index table may be segmented based on the quantity of segments, to obtain segment index table data, the segment index table data is stored in the distributed file system, a segment number of each piece of segment index table data and an index of a segment index table data path may be established, and the index table is sent to the second terminal by transmitting segment index data in parallel through a plurality of threads.

Optionally, in some example embodiments, this embodiment may further include step S1907: The second terminal starts the document editing application after receiving a command for starting the document editing application.

For example, in S1907, after receiving the index table, the distributed scheduling system of the second terminal may start the document editing application based on a capability of an AMS.

It should be understood that, in this application, the second terminal may alternatively start the document editing application in another manner. This is not limited in this application.

Optionally, in some example embodiments, this embodiment may further include step S1908: The second terminal restores the document data based on the index table after receiving all segment data.

After the second terminal performs S 1907 and S 1908, a process of migrating a data stream of an application, namely, the document editing application is completed, and the user may continue to edit a document on the second terminal, so that the document editing application is seamlessly migrated on different devices, to improve efficiency of migrating the application data stream, reduce time used for an application migration, and improve user experience.

In some example embodiments, after receiving all the segment data, the second terminal may read each segment of data based on a path in the index table, set a path of each segment of data on the onRestoreData interface of the second terminal, restore document data based on the segment number through the onRestoreData interface, and integrate the segment data into complete document data, to finally complete restoration work of application data.

It should be understood that, because an application that needs to be migrated is a document editing application, in S1908, the second terminal can restore document data only after all the segment data is received.

In this embodiment provided in this application, in a process in which data of the document editing application is migrated between terminals, the data stream of the document editing application is segmented, the index table of segment data is established, the segment data is transmitted in parallel through a plurality of threads in the distributed file system, and the index table is transmitted by writing the index table into a parcel for RPC transmission. Therefore, a migration of an application data stream that is at least 200 KB can be supported, application data stream migration efficiency is improved, time used for an application migration is reduced, the user does not perceive an application data migration process, and user experience is improved. In addition, after receiving all segment data, a peer device restores the data of the document editing application, to ensure that the data of the document editing application can be normally displayed and run on the peer device after being migrated, and ensure that the user can normally perform document editing on the peer device.

FIG. 20 is a schematic flowchart of another example embodiment according to this application in a scenario shown in FIG. 18. In a procedure shown in FIG. 20, a user plays audio or a video by using an audio or video application on a first terminal, and the first terminal segments a data stream of the audio or video application, establishes an index table of segment data, transmits the segment data in parallel through a plurality of threads in a distributed file system, and transmits the index table by writing the index table into a parcel for RPC transmission. After receiving partial segment data, the second terminal restores the data of the audio or video application based on the received index table, to ensure that the data of the audio or video application can be normally displayed and run on a peer device after being migrated, and ensure that the user can continue to play the audio or the video following a previous progress on the peer device.

As shown in FIG. 20, this embodiment includes the following steps:

> S2001: When the user migrates, to the second terminal, a data stream of an audio or video player application that is being played by the first terminal, the first terminal serializes the data of the audio or video application into a byte stream.
> S2002: The first terminal determines a corresponding transmission manner based on a size of the byte stream.
> S2003: Determine a quantity of segments of the byte stream (the quantity of segments).
> S2001 to S2003 are optional steps.

If the procedure does not include S2001 to S2003, in S2004, the first terminal may segment, based on a default quantity of segments, an application data stream (the byte stream corresponding to the data of the audio or video application) that needs to be transmitted. Optionally, the default quantity of segments may be determined by the first terminal based on a preset rule and with reference to a size of the application data stream that needs to be transmitted. For example, the preset rule may include a correspondence between a size of an application data stream and a quantity of segments, and the like.

If the procedure includes S2001 to S2003, the quantity of segments is determined by using the steps S2001 to S2003, to improve accuracy of determining the quantity of segments, and further improve application data stream transmission efficiency.

S2004: The first terminal segments the byte stream based on the quantity of segments, stores the segment data in the distributed file system, and establishes an index table including a segment number and a segment data path of each piece of segment data.

S2005: The first terminal sends the segment data to the second terminal in a manner of transmitting segment data in parallel through a plurality of threads.

S2006: The first terminal sends the index table to the second terminal by writing the index table into a parcel for RPC transmission.

For a specific process of S2002 to S2006, refer to descriptions of S 1902 to S 1906 in the foregoing procedure. For brevity, details are not described herein again.

In some example embodiments, this embodiment may further include step S2007: The second terminal starts the audio or video player application after receiving a command of the audio or video player application.

In some example embodiments, this embodiment may further include step S2008: After successively receiving the segment data, the second terminal restores audio or video data based on the received index table.

After the second terminal performs S2007 and S2008, the user may continue to play the audio or the video on the second terminal, so that the audio or the video is seamlessly switched between different devices, to improve user experience.

In some example embodiments, the second terminal may read received partial segment data based on a path in the index table, integrate the received segment data based on the segment number, and set a path of the integrated segment data on an onRestoreData interface of the second terminal, to complete restoration work of the audio or video data.

It should be understood that, an application that needs to be migrated is the data of the audio or video application. Therefore, in S2008, the second terminal can restore data before all the segment data is received, and can start to restore the data of the audio or video application after receiving the partial segment data. In other words, in S2008, the second electronics may simultaneously receive the segment data and restore the received segment data. After restoring the data of the audio or video application, the user may obtain a current audio or video playing progress on the second terminal, and start to continue to play.

In this embodiment provided in this application, in a process in which the data of the audio or video application is migrated between terminals, the data stream of the audio or video application is segmented, the index table of the segment data is established, the segment data is transmitted in parallel through a plurality of threads in the distributed file system, and the index table is transmitted by writing the index table into a parcel for RPC transmission. Therefore, a migration of an application data stream that is at least 200 KB can be supported. In addition, after receiving partial segment data, the peer device restores the data of the audio or video application, without a need to wait until all segment data are received, to improve application data stream migration efficiency, reduce time used for an application migration is reduced, and user experience is improved.

The foregoing describes a method provided in this application by using the data stream of the document editing application and the data stream of the audio/video playing application as an example. In some example embodiments, in a process in which recent task information or a data stream of another application is transmitted between different terminals, embodiments provided in this application may also be used. To be specific, recent task information or a data stream of an application of a local terminal is segmented, an index table of segment data is established, the segment data is transmitted in parallel through a plurality of threads in a distributed file system, and the index table is transmitted to a peer terminal. The peer terminal restores the recent task information or the data stream of the application based on the received segment data and the index table, so that a recently run application of the local terminal is displayed on the peer terminal, and an application run by the local terminal in the background is further viewed and run on the peer terminal. In this way, efficiency of migrating the recent task information or the data stream of the application can be improved, and user experience can be improved.

In the foregoing process in which a task or an application is migrated between different terminal devices, the task or the application may be migrated between different terminal devices in the following two implementations:

In a first implementation, video information on one terminal device is projected onto another terminal device based on a projection technology.

As shown in FIG. 21A and FIG. 21B, a terminal device 100 (for example, a mobile phone) plays a video. When a user wants to watch the video on a terminal device 200 (for example, a notebook computer), the terminal device 100 may detect a projection operation performed by the user, and in response to the operation, the terminal device 100 may notify the terminal device 200 to synchronously play the video. In this case, the video can be synchronously played on the terminal device 200 only when the terminal device 100 continues to play the video. In other words, a task can be synchronously executed on the terminal device 200 only when the terminal device 100 continues a previous task. It can be easily learned that, a disadvantage of this implementation method is that a computing resource of a remote device cannot be used very well, projection communication consumes a communication link and a computing resource of each of a local device and the remote device, and the local device needs to maintain a projection task as a task at the top of the stack.

In a second implementation, task page information of one terminal device and information required for restoring a task page are transmitted to another terminal device, and the another terminal device may display the task page based on the information. In this embodiment of this application, the task page information of the terminal device and the information required for restoring the task page may be referred to as recent task information of the terminal device. In other words, the recent task information of the terminal device includes the task page information of the terminal device and the information required for restoring the task page.

As shown in FIG. 22A to 22E, a terminal device 100 may detect a tap operation performed by a user on a video playing option 211 in a user interface 210 (which may be a home screen of a video application). In response to the operation, the terminal device 100 may display a user interface 220. When the terminal device 100 detects a tap operation performed by the user on a full-screen playing control 221, in response to the operation, the terminal device 100 may display a user interface 230, to start to play a video in full screen. When the user wants to continue to play the video on the terminal device 100, the terminal device 100 may send task page information of the user interface 230 and information required for restoring a task page to a terminal device 200. After receiving the foregoing information, the terminal device 200 may display a user interface 240, and continue to play the video. A disadvantage of this method is that when the terminal device 200 detects a tap operation performed by the user on a back control 241 in the user interface 240, in response to the operation, the terminal device 200 directly displays a user interface 250 (that is, a home screen of the terminal device 200), instead of displaying a previous user interface (for example, the user interface 220) of the user interface 230. In other words, in the implementation method, only current task page information can be restored, and a previous page of a current task page cannot be stored and restored. This does not conform to a user habit very well, and user experience is poor.

In some example embodiments of this application, a local task stack restoration mechanism of a local terminal device is extended to a distributed scenario, so that a task migration can be performed based on a stack migration between the local terminal device and a target terminal device. In this way, the target terminal device may store and restore context information (Context) of the local task stack of the local terminal device, so that a user can perform a seamless hop on the target terminal device, to execute a task on the local terminal device, and improve user experience.

In some example embodiments, FIG. 23A to FIG. 23G show an example of a group of user interfaces in which a task migration is performed between different terminal devices according to an embodiment of this application.

It is assumed that a local terminal device is a terminal device 100, and a target terminal device is a terminal device 200. The following describes a user interface in a task migration process by using an example in which a recently used application of the terminal device 100 is a video application.

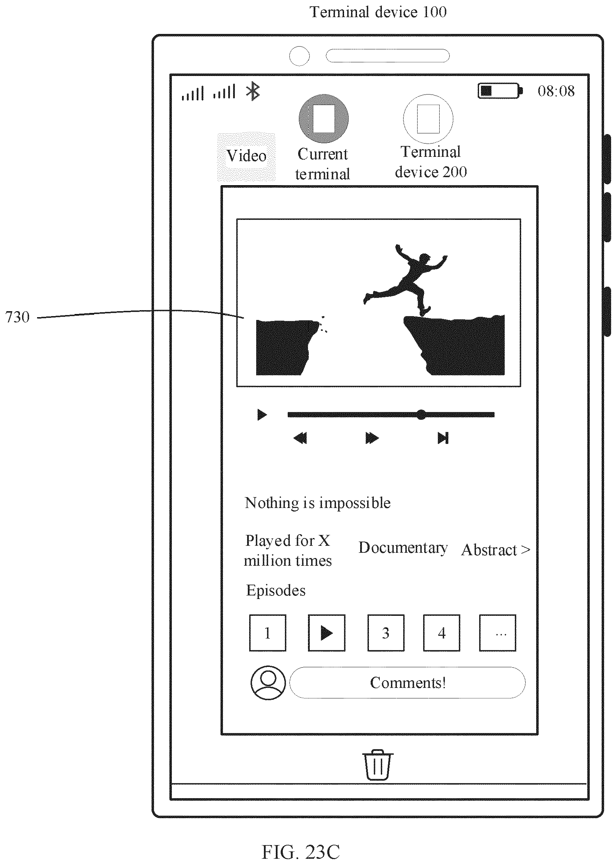

As shown in FIG. 23A, a user interface 710 displayed by the terminal device 100 may be a home screen of the video application. The terminal device 100 may detect a tap operation performed by a user on a video playing option 711. In response to this operation, the terminal device 100 may display a user interface 720 shown in FIG. 23B, and start to play a video. That is, the terminal device 100 recently plays the video by using the video application. Therefore, after detecting an operation performed by the user to trigger the terminal device 100 to display a recent task interface, in response to the operation, the terminal device 100 may display a task card 730 corresponding to the video application in FIG. 23C. Optionally, the terminal device 100 may detect a tap operation performed by the user on a back control 722. In response to the operation, the terminal device 100 may display the user interface 710 shown in FIG. 23A, to return to the home screen of the video application.

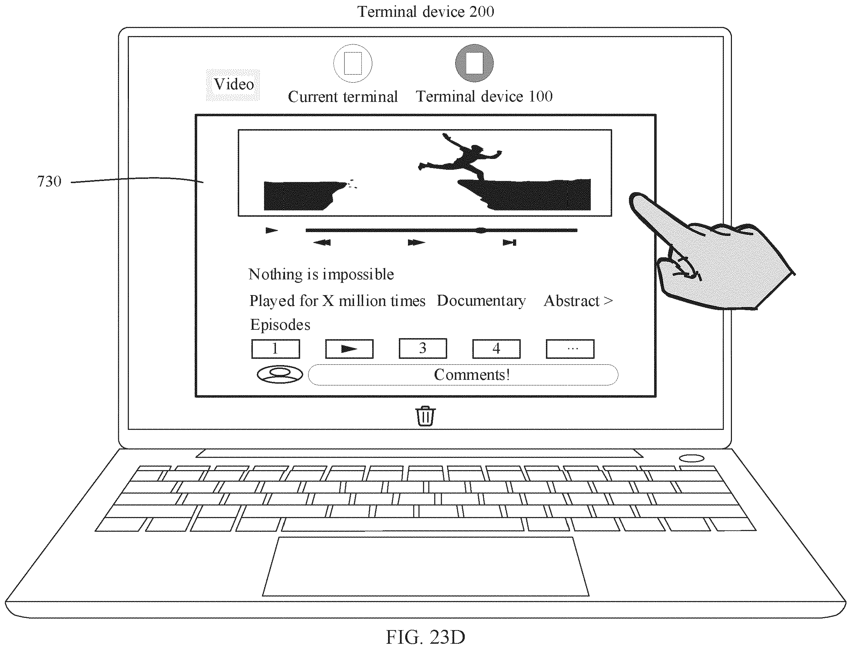

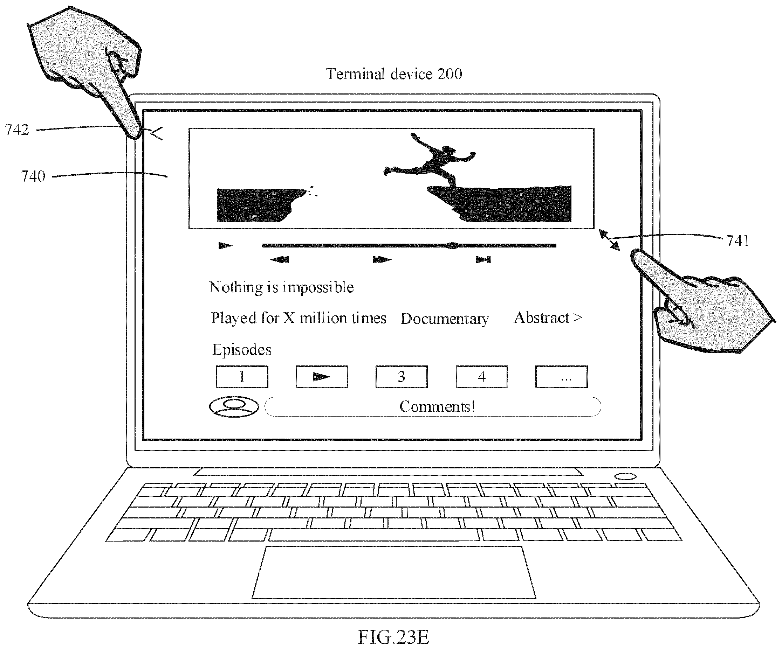

As shown in FIG. 23D, when the user does not want to continue to watch, on the terminal device 100, the video played by the video application, but wants to continue to watch the video on the terminal device 200, the user needs to perform a task migration. For example, the terminal device 200 may detect an operation performed by the user to trigger the terminal device 200 to display the recent task interface of the terminal device 100. In response to the operation, the terminal device 200 may display the recent task interface of the terminal device 100. The recent task interface may include a task card 730 corresponding to the video application. After the terminal device 200 detects a tap operation performed by the user on the task card 730 corresponding to the video application, in response to the operation, the terminal device 200 may display a user interface 740 shown in FIG. 23E. The user may continue to watch the video on the terminal device 200 following a video playing progress on the terminal device 100, so that the user can "seamlessly switch"/"seamlessly hop", between different terminal devices, a user interface in which the video is being played.

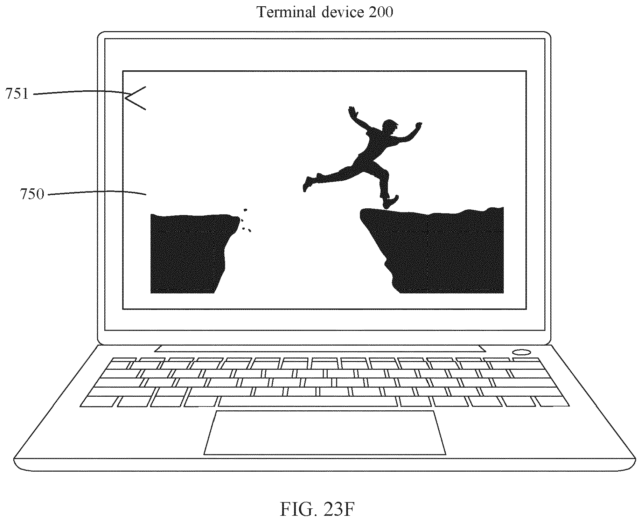

As shown in FIG. 23E, when the user wants to play the video in full screen on the terminal device 200, the terminal device 200 may detect a tap operation performed by the user on a full-screen playing control 741. In response to the operation, the terminal device 200 may display a user interface 750 shown in FIG. 23F, that is, enter a next user interface of the user interface 740, so that the user plays the video in full screen on the terminal device 200.

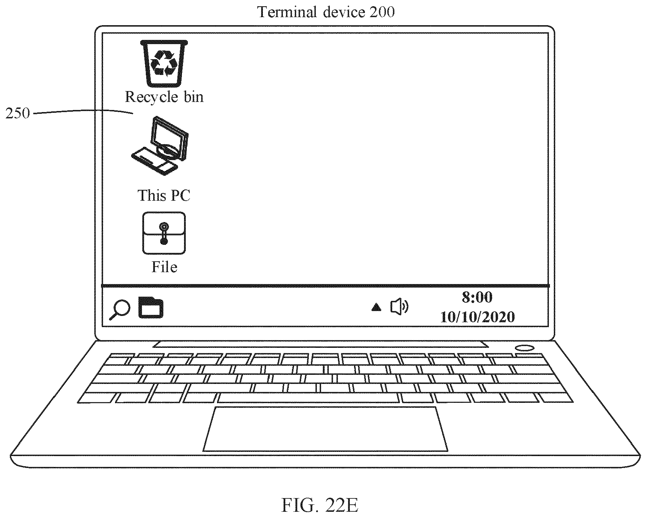

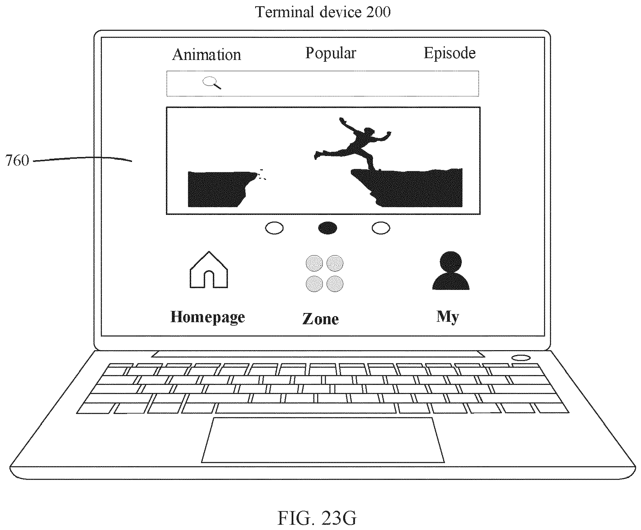

As shown in FIG. 23E, after the terminal device 200 detects a tap operation performed by the user on a back control 742, in response to the operation, the terminal device 200 may display a user interface 760 shown in FIG. 23G, and return to the home screen of the video application, that is, enter a previous user interface of the user interface 740, instead of directly returning to the home screen of the terminal device 200 shown in FIG. 22E.

It can be easily learned from FIG. 23E to FIG. 23G that, after a task migration is performed, the terminal device 200 can display a user interface displayed in RecentTasks of the terminal device 100. In addition, if the user triggers the terminal device 200 to perform an operation of jumping to another user interface of the video application, the terminal device 200 may also jump from the user interface displayed in RecentTasks and display another user interface of the application (for example, a previous user interface and/or a next user interface that are displayed in RecentTasks). An operation is simple, convenient, flexible, and efficient, to improve user experience.

Related text descriptions in FIG. 23A to FIG. 23G are descriptions of a process in which the terminal device 100 performs a task migration to the terminal device 200. It is easily understood that, a process in which the terminal device 200 performs a task migration to the terminal device 100 is similar to the process in which the terminal device 100 performs a task migration to the terminal device 200. Details are not described herein again.

In some example embodiments, FIG. 24A to FIG. 24G show an example of another group of user interfaces in which a task migration is performed between different terminal devices according to an embodiment of this application.

It is assumed that a local terminal device is a terminal device 100, and a target terminal device is a terminal device 300. The following describes a user interface in a task migration process by using an example in which a recently used application of the terminal device 100 is a chatting application.

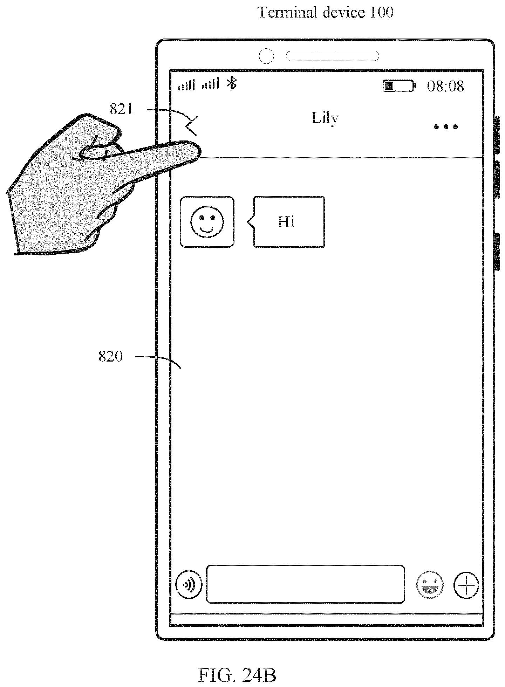

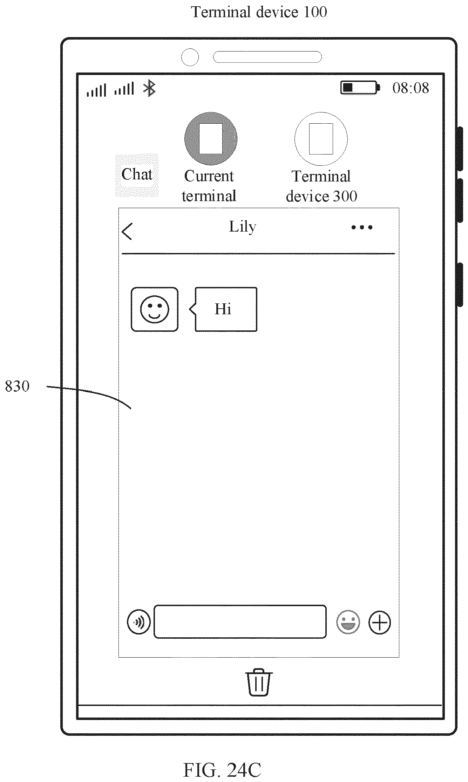

As shown in FIG. 24A, a user interface 810 displayed by the terminal device 100 may be a home screen of the chatting application. The terminal device 100 may detect a tap operation performed by a user on a contacts option 811. In response to this operation, the terminal device 100 may display a user interface 820 shown in FIG. 24B, and enter a chatting interface. That is, the terminal device 100 recently performs chatting by using the chatting application. Therefore, after detecting an operation performed by the user to trigger the terminal device 100 to display a recent task interface, in response to the operation, the terminal device 100 may display a task card 830 corresponding to the chatting application in FIG. 24C. Optionally, the terminal device 100 may detect a tap operation performed by the user on a back control 821. In response to the operation, the terminal device 100 may display a user interface 810 shown in FIG. 24A, to return to the home screen of the chatting application.

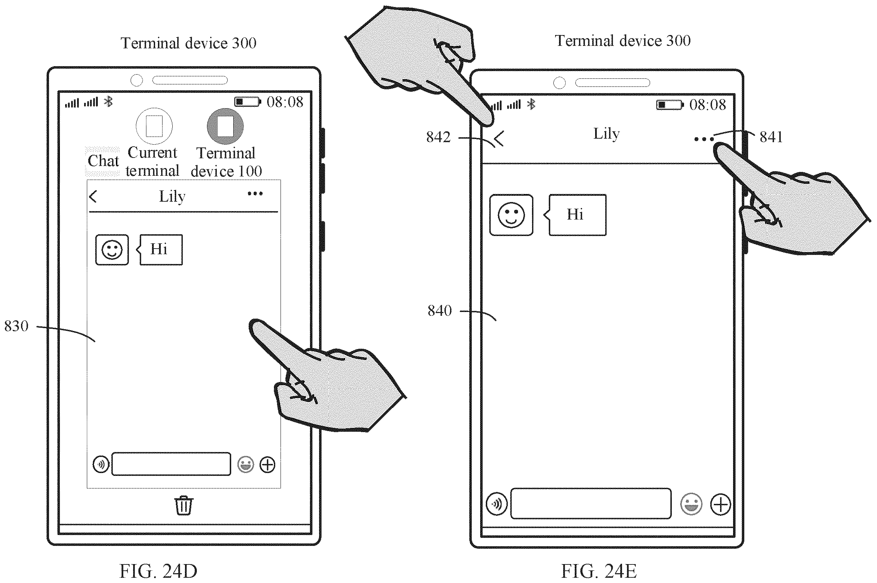

When the user does not want to continue to perform chatting on the terminal device 100 by using the chatting application, but wants to continue to perform chatting on a terminal device 300, the user needs to perform a task migration. As shown in FIG. 24D, for example, the terminal device 300 may detect an operation performed by the user to trigger the terminal device 300 to display the recent task interface of the terminal device 100. In response to the operation, the terminal device 300 may display the recent task interface of the terminal device 100. The recent task interface may include a task card 830 corresponding to the chatting application. After the terminal device 300 detects a tap operation performed by the user on the task card 830 corresponding to the chatting application, in response to the operation, the terminal device 300 may display a user interface 840 shown in FIG. 24E. The user may continue to perform chatting on the terminal device 300 following a chatting progress on the terminal device 100, so that the user can "seamlessly switch"/"seamlessly hop", between different terminal devices, a user interface in which chatting is performed.

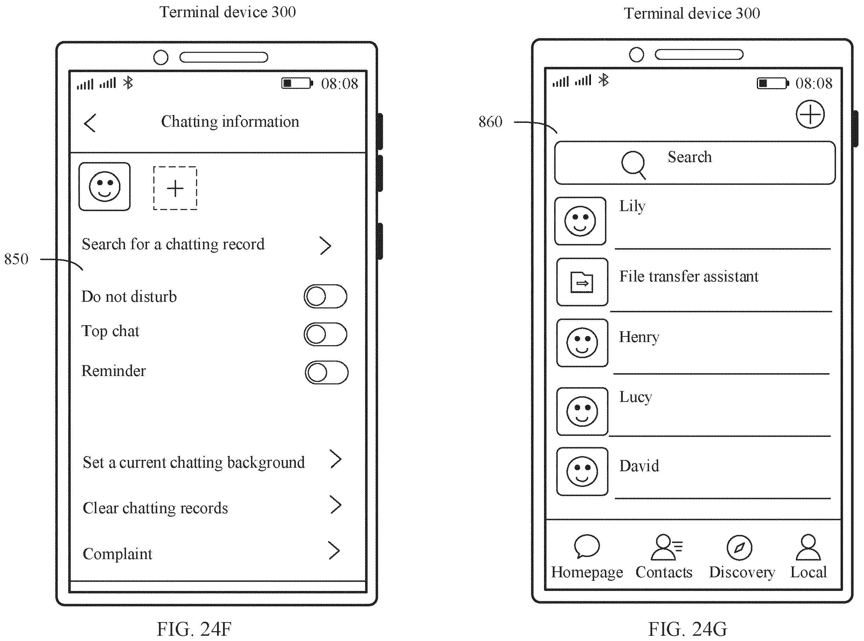

As shown in FIG. 24E, if the user wants to provide, on the terminal device 300, a related setting for chatting information in the user interface 840 shown in FIG. 24E, the terminal device 300 may detect a tap operation performed by the user on a more control 841. In response to the operation, the terminal device 300 may display a user interface 850 shown in FIG. 24F, that is, enter a next user interface of the user interface 840, so that the user can provide, on the terminal device 300, a related setting for the chatting information.

As shown in FIG. 24E, after detecting a tap operation performed by the user on a back control 842, in response to the operation, the terminal device 300 may display a user interface 860 shown in FIG. 24G, and return to the home screen of the chatting application, that is, enter a previous user interface of the user interface 840, instead of directly returning to the home screen of the terminal device 300.

It can be easily learned from FIG. 24E to FIG. 24G that, after a task migration is performed, the terminal device 300 can display a user interface displayed in RecentTasks of the terminal device 100. In addition, if the user triggers the terminal device 300 to perform an operation of jumping to another user interface of the chatting application, the terminal device 300 may also jump from the user interface displayed in RecentTasks and display another user interface of the chatting application (for example, a previous user interface and/or a next user interface that are displayed in RecentTasks). An operation is simple, convenient, flexible, and efficient, to improve user experience.

Related text descriptions in FIG. 24A to FIG. 24G are descriptions of a process in which the terminal device 100 performs a task migration to the terminal device 300. It is easily understood that, a process in which the terminal device 300 performs a task migration to the terminal device 100 is similar to the process in which the terminal device 100 performs a task migration to the terminal device 300. Details are not described herein again.

It should be noted that, in embodiments of this application, the video application and the chatting application are only used as examples to describe a process in which a task migration is completed in a method provided in embodiments of this application. This is not limited thereto. Embodiments of this application are further applicable to another application. This is not limited in this embodiment of this application.

Based on the foregoing UI embodiments, the following describes some example embodiments of specific internal implementations of a terminal in this application.

In some example embodiments, as shown in FIG. 25A and FIG. 25B, optionally, a local terminal device and a target terminal device each may include a global task center, an activity manager service (Activity Manager Service, AMS) module, and a distributed manager service (Distributed Manager Service, DMS) module. The global task center runs at an application layer, and the activity manager service module and the distributed manager service module run at a system service layer.

The global task center is configured to manage and display a recently used application of the local terminal device and a recently used application of the target terminal device that establishes a communication connection to the local terminal device.

The distributed manager service module is configured to: obtain information about the recently used application of the local terminal device, and exchange recent task information with the target terminal device that establishes a communication connection to the local terminal device.

The activity manager service module is configured to: start, switch, and schedule a component in a system, and manage and schedule a process of each application. The activity manager service module may store a stack corresponding to a recent task list of each of the local terminal device and the target terminal device that establishes a communication connection to the local terminal device.

The stack is a data structure used to record the recently used application and a sequence, and a threshold of a quantity of recently used applications recorded by a terminal device is determined for a setting of the stack. When the threshold is exceeded, an application with earliest usage time is deleted from a recent task list.

RecentTasks (RecentTasks) is a recent task list at the system service layer, and is equivalent to a stack management structure. RecentTasks may include one or more task records (TaskRecord), and a task record at the top of the stack indicates a currently visible task.

The task record is a stack management structure. Each task record includes one or more activity records (ActivityRecord). An activity record at the top of the stack indicates a currently visible user interface.

The activity record is a minimum unit of activity (Activity) management. One activity record corresponds to one user interface.

The activity record may include a component PersistentState, a component intent, and the like. Optionally, the component PersistentState is configured to store user data in a user interface corresponding to the activity record. For example, a video application may store a uniform resource identifier (Uniform Resource Identifier, URI), progress data of playing a video by a user, or the like, and a chatting application may store chatting information (for example, chatting content and chatting time) of the user. The component intent is configured to indicate an activity to be started, carries information required for starting the activity, and may include a package name corresponding to an application corresponding to the activity, a class name, interface data corresponding to the activity, extra data, and the like. The extra data may be user data that is stored in the component PersistentState and that is obtained by the component intent in a putExtras method, and the interface data may be data required for generating a user interface.

The activity (Activity) is one of basic components of an Android (Android) operating system, and may be configured to provide an interactive user interface or view for the user in an application. One application may have a plurality of activities, the application loads an activity by using a task stack, and an activity at the top of the task stack is an activity with which the user can directly interact.

The following describes a specific internal implementation process of some example embodiments of this application with reference to FIG. 25 A and FIG. 25B.

Stage 1: A target terminal device displays a recent task list of a local terminal device.

When the target terminal device establishes a communication connection to the local terminal device, after the target terminal device receives an operation (which may also be referred to as a third operation) performed by a user to enter the recent task interface (which may also be referred to as a third user interface), in response to the operation, a distributed manager service module 1003 of the target terminal device may send a request (which may also be referred to as a second request) for obtaining the recent task information to a distributed manager service module 903 of the local terminal device. After receiving the request, the distributed manager service module 903 of the local terminal device may obtain recent task information of the local terminal device from an activity manager service module 902, and then may send the recent task information to the target terminal device, so that the target terminal device can display the recent task list of the local terminal device in the recent task interface.

Optionally, the recent task information may include information such as a stack corresponding to the recent task list, snapshot information of a recently used application, and an identifier of the recently used application.

In a possible implementation, the recent task information may further include a feature ability (feature ability, FA) file. In this way, even if a corresponding application is not installed on the target terminal device, the application may be directly run based on the FA file when the user taps a task card corresponding to the application.

Stage 2: The target terminal device performs a stack migration.

After displaying the recent task list of the local terminal device in the recent task interface, the target terminal device may detect a tap operation performed by the user on a task card of a recent task in the recent task list (or an operation of dragging a task card of a recent task in the recent task list to an identifier of the target terminal device). In response to the operation, the target terminal device may indicate, by using the distributed manager service module 1003, an activity manager service module 1002 to search for a task stack (that is, a task record) corresponding to the task card, and then the activity manager service module 1002 may migrate the task stack corresponding to the task card to RecentTasks of the target terminal device, to complete a stack migration.

For example, as shown in FIG. 25B, the task stack corresponding to the task card tapped by the user may be a task record 1, and an activity management module may migrate the task record 1 from RecentTasks of the local terminal device to RecentTasks of the target terminal device, to obtain a migration task record, so as to complete a stack migration.

Optionally, an activity record 1 in the task record 1 may be a first activity record, and an activity record 2 may be a second activity record.

In a possible implementation, in Stage 1, when the user performs an operation of entering the recent task interface, the target terminal device may alternatively send only a request for obtaining the snapshot information of the recently used application and the identifier of the recently used application to the local terminal device by using the distributed manager service module 1003. In Stage 2, when the user taps a task card of a recent task in the recent task list (or drags a task card of a recent task to the identifier of the target terminal device), the target terminal device may send, to the distributed manager service module 903 of the local terminal device by using the distributed manager service module 1003, a request (also referred to as a first request) for obtaining the task card corresponding to the task card tapped by the user, where the request carries an identifier of an application corresponding to the task card. The distributed manager service module 903 of the current terminal device may send the identifier of the application corresponding to the task card to the activity manager service module 902, to notify the activity manager service module 902 to search for and send a task stack corresponding to the application to the distributed manager service module 903. After receiving the task stack corresponding to the application, the distributed manager service module 903 may send the task stack corresponding to the application to the target terminal device. After receiving the task stack corresponding to the task card tapped by the user, the target terminal device migrates the task stack to RecentTasks of the target terminal device, to complete a stack migration.

Phase 3: The target terminal device starts a migration task, and completes a task migration.

The target terminal device indicates, by using the distributed manager service module 1003, the activity manager service module 1002 to find the task stack migrated in Stage 2. Further, the activity manager service module 1002 may invoke a StartActivity (or StartAbility) method and an OnRestore method to reuse the task stack migrated in Stage 2. To be specific, the activity manager service module 1002 may restore a user interface corresponding to the activity record based on an activity record at the top of the migrated task stack, so that the target terminal device can display the user interface corresponding to the task card tapped by the user, to complete the task migration.

For example, if a migration task record in FIG. 25B is a task stack corresponding to a task card shown in FIG. 23D, a user interface corresponding to the activity record 1 in the migration task record may be a user interface shown in FIG. 23E, and a user interface corresponding to the activity record 2 in the migration task record may be a user interface shown in FIG. 23G. Similarly, if a migration task record in FIG. 25B is a task stack corresponding to a task card shown in FIG. 24D, a user interface corresponding to the activity record 1 in the migration task record may be a user interface shown in FIG. 24E, and a user interface corresponding to the activity record 2 in the migration task record may be a user interface shown in FIG. 24G.

That is, the target terminal device may not only restore a current user interface of the migration task, but also restore a previous user interface of the current user interface (which may also be referred to as a parent user page of the current user interface).

It can be easily understood that, in this embodiment provided in this application, the task migration is implemented by migrating the task stack, user interfaces corresponding to all activity records stored in the migrated task stack may be restored on the target terminal device.

For example, a video application is used as an example. After the user enters a user interface 760 shown in FIG. 23G, the user may tap a control in the user interface 760 to view another user interface. For example, a user interface corresponding to an "My" option may be entered by tapping "My", to view some personal information (for example, a historically watched video) of the user, and a corresponding setting operation may be further performed. For another example, a chatting application is used as an example. After the user enters a user interface 860 shown in FIG. 24G, the user may view another user interface by using a control in the user interface 860. For example, a user interface in which chatting is performed with Lucy may be entered by tapping a "Lucy" option, to view a chatting record between the user and Lucy.

In this embodiment of this application, the task migration is performed based on the stack migration, and a local task stack restoration interface is unified with a migration task stack restoration interface. Based on a restoration mechanism for reusing a local task, context information of the migration task can be stored, user experience is improved, development costs and development difficulty of a developer are reduced, and large resource overheads generated by the task migration on a system are avoided.

It should be noted that, in this embodiment of this application, a specific task migration process is merely described by using an example in which the local terminal device migrates a task to the target terminal device. Similarly, the target terminal device may alternatively migrate a task to another terminal device (for example, a third terminal device). A specific process is not described herein again.

In a possible implementation, if an application required for executing a task is installed on each of the target terminal device and the local terminal device, the task is migrated from the local terminal device to the target terminal device, and the target terminal device may independently run the task. Independent running herein means that not only a UI involved in the task can be independently processed, but also the target terminal device can support, based on local software and hardware, communication, data calculation, multimedia playing energy, and the like that are involved in running of the task. In this way, the task can be run by fully using a local resource of the target terminal device instead of depending on the local terminal device. In addition, a communication connection between the target terminal device and the local terminal device does not need to always exist.

In another possible implementation, if an application required for executing a task is installed on the local terminal device, and the application required for the task is not installed on the target terminal device, in a process in which the task is migrated from the local terminal device to the target terminal device, in addition to the recent task information, interface data required for entering a next user interface of the current user interface from the current user interface needs to be transmitted, or after an operation performed by the user to enter a next user interface of the current user interface is detected, a request is sent to the target terminal device to obtain interface data required for entering the next user interface of the current user interface.

In some example embodiments, FIG. 26 shows an example of a specific procedure of some example embodiments of this application.

As shown in FIG. 26, this embodiment includes the following steps.

S2601: A first terminal device receives a user interface option that is of a first user interface and that is sent by a second terminal device.

After the first terminal device establishes a communication connection to the second terminal device, the first terminal device may receive the user interface option (which may also be referred to as a task card of a recent task) that is of the first user interface and that is sent by the second terminal device. The first user interface is a user interface of the first application, and the first application is a recently run application of the second terminal device.

The first terminal device may be a terminal device 200 or a terminal device 300. The second terminal device may be a terminal device 100.

S2602: The first terminal device detects a first operation performed by a user on the user interface option of the first user interface.

After the first terminal device receives the user interface option that is of the first user interface and that is sent by the second terminal device, the first terminal device detects the first operation performed by the user on the user interface option of the first user interface. Optionally, the first operation may be an operation that the user taps the user interface option of the first user interface, or may be an operation that the user drags the user interface option of the first user interface to an identifier of the first terminal device in a recent task interface.

S2603: The first terminal device displays the first user interface.

After the first terminal device detects the first operation performed by the user on the user interface option of the first user interface, the first terminal device may display the first user interface.

Optionally, the first user interface may be a user interface 740 shown in FIG. 23E, or may be a user interface 840 shown in FIG. 24E.

Optionally, in some example embodiments, the procedure may further include: S2604 and S2605.

S2604: The first terminal device detects a second operation performed by the user in the first user interface.

After the first terminal device may display the first user interface, the first terminal device may detect the second operation performed by the user in the first user interface. Optionally, the second operation may be a back operation, for example, an operation that the user taps a back control 742 in FIG. 23E, or an operation that the user taps a back control 842 in FIG. 24E.

S2605: The first terminal device displays a second user interface.

After the first terminal device may detect the second operation performed by the user in the first user interface, the first terminal device may display the second user interface. The second user interface is a user interface of the first application, and is different from the first user interface.

Optionally, the second user interface may be a user interface 760 shown in FIG. 23G, or may be a user interface 860 shown in FIG. 24G.

When the procedure includes S2604 and S2605, after the terminal device displays the first user interface, and receives the second operation performed by the user in the first user interface, the terminal device may display a parent interface or a sub-interface of the first user interface, instead of returning to a home screen of the first terminal device. This conforms to a use habit of the user, is friendly to the user, helps the user perform a subsequent operation, and improves user experience.

In this embodiment of this application, the parent interface may also be referred to as a parent user interface, and the sub-interface may also be referred to as a sub-user interface. The parent interface may be understood as a previous user interface (or an upper-level user interface) of a currently displayed interface of a terminal, and the sub-interface may be understood as a next user interface (or a lower-level user interface) of the currently displayed interface of the terminal.

For example, when the terminal displays a current interface, the user may tap a control (for example, a back control) in the current interface, and the terminal displays a parent interface of the current interface. When the terminal displays the parent interface of the current interface, the user may tap a control in the current interface (for example, a control for entering a menu or an item), and the terminal displays the current interface.

For another example, when the terminal displays the current interface, the user may tap a control in the current interface (for example, a control for entering a menu or an item), and the terminal displays a sub-interface of the current interface. When the terminal displays a sub-interface of the current interface, the user may tap a control (for example, a back control) in the current interface, and the terminal displays the current interface.

For example, in this embodiment of this application, the user interface 760 shown in FIG. 23G may be referred to as a parent user interface of the user interface 740 shown in FIG. 23E. The user interface 860 shown in FIG. 24G may be referred to as a parent user interface of the user interface 840 shown in FIG. 24E.

In the foregoing embodiment, when the user of the first terminal is using the first terminal, not only a recently used application of the second terminal may be viewed in the recent task interface, but also an application run by the second terminal in the background may be cleared. In addition, when a user of a third terminal is using the third terminal, not only a recently used application of the second terminal may be viewed in a recent task interface, but also an application run by the second terminal in the background may be cleared. For example, when the second terminal is playing a video in the background, the user of the first terminal expects that the second terminal may stop playing the video, and the user of the third terminal expects that the second terminal may continue to play the video. The user of the first terminal may drag a card of a video application in a recent task list corresponding to the second terminal and slide up. After receiving an instruction of the user, the first terminal sends a task instruction for clearing the video application to the second terminal. In addition, the user of the third terminal may make a tap gesture in a region corresponding to a task card of the video application. After receiving an instruction of the user, the third terminal sends a task instruction for running the video application to the second terminal. In this scenario, an execution conflict is generated because the third terminal simultaneously receives two task instructions. Consequently, the second terminal unsuccessfully executes the task instructions, a problem of instability occurs in a cross-device task scenario, and user experience is affected.

In a possible implementation, a table may be created and stored in a database in the cloud. The table includes fields such as a method name corresponding to a task, and a unique index is created on the field, namely, the method name. If a terminal device wants to perform a method, the terminal device inserts data into a table by using the method name. If the data is successfully inserted, a task lock corresponding to the method is obtained. After the device obtains the task lock corresponding to the method, before the device releases the task lock, another terminal cannot obtain the task lock. In other words, another device cannot perform any method (task) in the table. After the task is executed, the terminal deletes the corresponding data, and releases the task lock. After the task lock is released, another terminal may obtain the task lock, and execute the task, to ensure that one terminal executes only one task instruction from another terminal device at a same time point.

However, the task lock in the foregoing solution is a database-based distributed task lock, is mostly used in an end-cloud coordination scenario, and is inapplicable to an embedded device in a local area network. In addition, the database-based distributed task lock needs to be implemented based on a distributed database. Availability and performance of a database directly affect availability and performance of a distributed lock. Further, the database-based distributed task lock does not have a lock failure mechanism. It is possible that after a terminal successfully inserts data, the terminal restarts, but corresponding data is not deleted. Consequently, a task lock cannot be obtained after the terminal restarts.

Therefore, in some example embodiments of this application, a local lock is created on a target device, and the local lock can be held by only one another device at a same time point. If a specific device successfully holds the local lock, the target device may execute a task from the device. In a period in which the device holds the local lock, the target device does not execute a task instruction sent by another device, to ensure that the target device executes only a task instruction from one device at a same time point, avoid a conflict between a plurality of cross-device tasks, resolve a problem of instability in a cross-device task scenario, and improve user experience.

The following provides descriptions with reference to specific examples.

In some example embodiments, FIG. 27A and FIG. 27B are a schematic flowchart of an example embodiment according to this application. As shown in FIG. 27A and FIG. 27B, the procedure includes the following steps.

S2701: A display interface of a first terminal displays a recently used application of a second terminal device.

S2702: The first terminal receives an operation performed by a user, where the operation is used to trigger a task instruction for clearing a video application on the second terminal.

For example, when the user performs a slide-up operation in a region corresponding to a task card of a video application on the second terminal, a task instruction for clearing the video application on the second terminal is triggered. The operation of the user is not limited in this application.

S2703: The first terminal queries, from a container (for example, a map) based on a type of the task instruction, a local lock (referred to as a first local lock or a first task lock for differentiation) that is of the first terminal and that corresponds to the task instruction. The container is a data structure used to store data, and the map is one type of container. A key-value mapping relationship is maintained in the container. A key is an index of a value. A terminal may query the corresponding value based on the key. The value may be understood as a lock object in this application. The terminal may determine a corresponding key based on the task instruction, to determine a corresponding value (lock object) based on the key.

The first local lock is used to ensure that the first terminal can send one task instruction to only one device (for example, the second terminal) at a same time point, and the first local lock may be a preemptive cross-device task lock. If the first terminal needs to send a plurality of task instructions (that is, a multi-process or multi-thread task) to the second terminal at a same time point, when a task instruction successfully holds or preempts the first local lock, the first terminal may send the task instruction to the second terminal. If the first terminal needs to send only one task instruction to the second terminal at a same time point, the task instruction holds the first local lock. In other words, the first local lock can be held by only one cross-device task instruction on the first terminal at a same time point.

For example, it is assumed that when the user performs a slide-up operation in a region corresponding to a task card of a video application on the second terminal, a task instruction for clearing the video application on the second terminal is triggered. In addition, an application manager in the background of the first terminal also sends a task instruction to the second terminal. The task instruction is used to clear a music application on the second terminal or is used to run the video application on the second terminal. In this case, the two task instructions preempt the first local lock, and when a task instruction preempts the first local lock, the first terminal may send the task instruction to the second terminal.

S2704: The first terminal tries to hold the first local lock.

In some example embodiments, the first terminal may try to hold the first local lock in a trylock (trylock) or blocking waiting lock (lock) manner. The trylock (trylock) manner may be understood as follows: The first terminal tries to hold the first local lock. If holding fails (for example, the first local lock is occupied or held by another instruction that needs to be executed by the second terminal), the first terminal gives up holding the first local lock, that is, does not send, to the second terminal, the task instruction for clearing the video application. A blocking waiting lock (lock) manner may be understood as follows: The first terminal tries to hold the first local lock. If holding fails, the first terminal waits until the first terminal successfully holds the first local lock. Optionally, a waiting time length may be further set. If the first terminal does not successfully hold the first local lock when the waiting time length ends, the first terminal gives up holding the first local lock, that is, does not send, to the second terminal, the task instruction for clearing the video application.

In some example embodiments, the first terminal may further maintain a lock holding timeout time period of the first local lock. After a time period in which the first terminal holds the first local lock exceeds the lock holding timeout time period of the first local lock, the first terminal releases the first local lock, that is, no longer holds the first local lock. After the first terminal no longer holds the first local lock, the first terminal gives up or terminates a task of clearing the video application of the second terminal. Another cross-device task on the first terminal may hold the first local lock.

Optionally, when it is determined that the first local lock is occupied by another cross-device task instruction of the first terminal, the first terminal may display information to the user in the display interface, to notify the user that execution or sending of the task instruction fails.

For example, if the first terminal unsuccessfully holds the first local lock (for example, before the first terminal triggers the task instruction that is for clearing the video application (for example, an app 3) on the second terminal and that is sent to the second terminal, if the first terminal has sent a task instruction to the second terminal and has not received feedback information of executing the task instruction, the task instruction on the first terminal unsuccessfully holds the first local lock), the first terminal may display a message to the user, to notify the user that sending of the task instruction for clearing the video application on the second terminal fails. For example, in some example embodiments, a in FIG. 28 is a schematic diagram of an example in which a first terminal displays a message to a user. The first terminal may display a pop-up box 11, to prompt the user with "Another remote task is being executed. Please try again later". The pop-up box 11 may be hidden in response to an operation that the user taps an "OK" button 12. Alternatively, the pop-up box 11 may be hidden after a preset time period (for example, 3s). For another example, b in FIG. 28 is a schematic diagram of another example in which a first terminal displays a message to a user. The first terminal may display a pop-up box 13, to prompt the user with "Another remote task is being executed, and sending of a task instruction fails". The pop-up box 14 may be hidden in response to an operation that the user taps an "OK" button 13. Alternatively, the pop-up box 14 may be hidden after a preset time period.

For example, if the first terminal unsuccessfully holds the first local lock, after the user performs a clearing operation of sliding upward or sliding downward in the video application, a card of the video application is still displayed on the first terminal, and does not disappear.

It should be understood that S2703 and S2704 are optional or unnecessary steps.

S2705: After the first terminal successfully holds the first local lock, the first terminal queries a local lock (referred to as a second local lock or a second task lock for differentiation) of the second terminal from the container (for example, the map) based on the type of the task instruction, and tries to hold the local lock of the second terminal.

If the procedure does not include the S2703 or the S2704, the first terminal performs S2705 after S2702. In this case, S2705 is replaced with the following: The first terminal queries the local lock of the second terminal from the container (for example, the map) based on the type of the task instruction, and tries to hold the local lock of the second terminal.

When the procedure includes S2703 and S2704, because the first terminal successfully holds the first local lock corresponding to the task instruction, it is proved that the first terminal does not currently send another cross-device task instruction to the second terminal, that is, the task instruction may occupy the first local lock, to ensure that task instructions sent by the first terminal to the second terminal do not conflict, and improve efficiency and a success rate of sending the task instruction.

When the procedure does not include S2703 or S2704, another instruction sent by the first terminal to the second terminal may conflict with the task instruction. Efficiency and a success rate of sending the task instruction cannot be ensured. The first terminal may unsuccessfully send the task instruction to the second terminal.

The second local lock is used to ensure that the second terminal executes only a task instruction from one device at a time point or in a time period. If a device successfully holds the second local lock, it means that the second terminal may execute a task instruction sent by the device. Another device that does not hold the second local lock does not send a task instruction to the second terminal, or even if the device sends a task instruction to the second terminal, the second terminal does not execute the task instruction. In other words, the second local lock can be held by only one device at a same time point in addition to the second terminal. In other words, in this case, a granularity of the second local lock may be a device level. To be specific, the second local lock is used to ensure that in a second application and the first application on the second terminal, only one application executes a task instruction from a same device at a same time point.

Optionally, in some example embodiments, the granularity of the second local lock may alternatively be an application level. The second local lock is used to ensure that the first application executes only a task instruction from one device at a same time point, and the second local lock can be held by only one device at a same time point. In other words, the second local lock is at an application level. A same application on the second terminal can execute only a task instruction from one device at a same time point, and cannot execute task instructions from different devices at a same time point. For example, the user views, in the recent task interface of the first terminal, an application run by the second terminal in the background, but does not perform an operation on the application run by the second terminal in the background. In this case, the first terminal does not try to hold or preempt the second local lock. In addition, a user of a third terminal views, in a recent task interface of the third terminal, the application run by the second terminal in the background, and does not perform an operation on the application run by the second terminal in the background. In this case, the third terminal does not try to hold or preempt the second local lock either. However, if the user of the first terminal performs a slide-up operation or a touch operation on the application run by the second terminal in the background, to indicate the second terminal to clear or run the application, the first terminal tries to hold or preempt the second local lock. If the user of the third terminal does not perform an operation on the application run by the second terminal in the background, the first terminal successfully holds the second local lock. In a period in which the first terminal holds the second local lock, the user of the third terminal may view the application run by the second terminal in the background, but cannot perform an operation (for example, clearing or running) on the application run by the second terminal in the background, or even if the user of the third terminal performs an operation on the application run by the second terminal in the background, the second terminal does not respond to the operation. In other words, execution of a task instruction triggered by the operation fails.

In the foregoing example, if the granularity of the second local lock is the application level, the user of the first terminal and the user of the third terminal may perform an operation on a same application on the second terminal, for example, an application displayed in a recent task interface. In this application, a conflicting application list may be further preset. The conflicting application list includes a plurality of different applications that conflict with each other. For example, a task instruction sent by the first terminal to the second terminal is used to operate the first application on the second terminal, and a task instruction sent by the third terminal to the second terminal is used to operate the second application on the second terminal. If the two applications are both in the conflicting application list, the second terminal holds a task instruction of an application that first holds the second local lock. The second terminal does not execute a task instruction from another device before the device releases the second local lock. If neither of the two applications is in the conflicting application list, or one is in the conflicting application list but the other is not in the conflicting application list, the second terminal simultaneously executes the two task instructions.

For example, the first terminal may also try to hold the second local lock in a trylock (trylock) or blocking waiting lock (lock) manner.

In some example embodiments, the first terminal may further maintain a lock holding timeout time period of the second local lock. After a time period in which the first terminal holds the second local lock exceeds the lock holding timeout time period of the second local lock, the first terminal releases the second local lock, that is, no longer holds the second local lock. After the first terminal no longer holds the second local lock, the first terminal cannot determine whether the second terminal can execute a cross-device task instruction sent by the first terminal; or after the first terminal no longer holds the second local lock, the first terminal gives up or terminates a cross-device task instruction sent to the first terminal. In addition, after the first terminal no longer holds the second local lock, another device may hold the second local lock.

S2706: After the first terminal successfully holds the first local lock and the second local lock, the first terminal sends, to the second terminal, the task instruction for clearing the video application and the lock holding timeout time period of the second local lock.

In some example embodiments, the first terminal may send, to the second terminal in a plurality of manners, the task instruction for clearing the video application and the lock holding timeout time period of the second local lock.

For example, the first terminal may send, to the first terminal in an RPC manner, the task instruction for clearing the video application.

In some example embodiments, when it is determined that the second local lock is held by another device, the first terminal may display information to the user in the display interface, to notify the user that execution of the task instruction fails.

In some example embodiments, if the first terminal unsuccessfully holds the second local lock, for example, before the first task instruction sent to the second terminal is triggered, if the second terminal has executed a remote task instruction from another device and has not completed execution, the second terminal unsuccessfully holds the second local lock. In this case, the first terminal may display a message to the user, to notify the user that sending of the task instruction fails. For example, in some example embodiments, as shown in a in FIG. 29, the first terminal may display a pop-up box 22, to prompt the user with "Sending of a task instruction fails. Please try again later". The pop-up box 22 may be hidden in response to an operation that the user taps an "OK" button 21, or the pop-up box 22 may be hidden after a preset time period (for example, 3s). For another example, as shown in b in FIG. 29, the first terminal may display a pop-up box 32, to prompt the user with "A peer device is busy, and sending of a task instruction fails". The pop-up box 32 may be hidden in response to an operation that the user taps an "OK" button 31, or the pop-up box 32 may be hidden after a preset time period. For another example, as shown in c in FIG. 29, the first terminal may display a pop-up box 42, to prompt the user with "A peer device is busy. Please try again later". The pop-up box 42 may be hidden in response to an operation that the user taps an "OK" button 41, or the pop-up box 42 may be hidden after a preset time period (for example, 3s).

For example, if the first terminal unsuccessfully holds the second local lock, after the user performs a clearing operation of sliding upward or sliding downward in the video application, a card of the video application is still displayed on the first terminal, and does not disappear.

Optionally, in another possible implementation, after the first terminal successfully holds the first local lock, the first terminal may also send, to the second terminal, the task instruction for clearing the video application, and after or when sending, to the second terminal, the task instruction for clearing the video application, try to hold the second local lock. If holding of the second local lock fails, execution of the task instruction fails. The first terminal may wait until the second local lock is held; or after receiving the task instruction for clearing the video application, the second terminal queries, from the container, whether the second local lock corresponding to the task instruction is held by another device, and sends a message to the first terminal if the second local lock is held by the another device, to notify that the second local lock is held by the another device, and execution of the task instruction fails.

S2707: After receiving the task instruction for clearing the video application and the lock holding timeout time period of the second local lock, the second terminal queries the second local lock corresponding to the task instruction from the container based on the type of the task instruction.

S2708: After finding the second local lock, the second terminal determines that the second local lock is held by the first terminal, and starts to execute the task instruction for clearing the video application.

In some example embodiments, the second terminal may maintain the lock holding timeout time period of the second local lock. After this time length expires, the second terminal stops or gives up executing the task of clearing the video application of the second terminal.

Optionally, after the lock holding timeout time period of the second local lock expires, if the second terminal has not finished executing the task of clearing the video application of the second terminal, the second terminal may send a message to the first terminal, to notify that execution of the task of clearing the video application fails. Optionally, the first terminal may alternatively display information to the user in the display interface, to notify the user that execution of the task instruction fails.

S2709: A display interface of the third terminal displays the recently used application of the second terminal device.

S2710: The third terminal receives an operation performed by the user, where the operation is used to trigger a task instruction for running the video application on the second terminal.

For example, when the user of the third terminal makes a tap gesture in a region corresponding to a task card of the video application, the task instruction for running the video application of the second terminal is triggered. The operation of the user is not limited in this application.

Optionally, in some example embodiments, the procedure may further include step S2711: The third terminal queries, from the container based on a type of the task instruction, a local lock (referred to as a third local lock or a third task lock for differentiation) that is of the third terminal and that corresponds to the task instruction. The third local lock is used to ensure that the third terminal can send one task instruction to only the second terminal at a same time point, and the third local lock may be a preemptive cross-device task lock. If the third terminal needs to send a plurality of task instructions (that is, a multi-process or multi-thread task) to the second terminal at a same time point, when a task instruction successfully holds the third local lock, the third terminal may send the task instruction to the second terminal. If the third terminal needs to send only one task instruction to the second terminal at a same time point, the task instruction holds the third local lock. In other words, the third local lock can be held by only one cross-device task instruction on the third terminal at a same time point.

Optionally, in some example embodiments, the procedure may further include step S2712: The third terminal tries to hold the third local lock.

Optionally, in some example embodiments, the third terminal may also try to hold a second distributed task lock in a trylock (trylock) or blocking waiting lock (lock) manner.

In this application, the third terminal may further maintain a lock holding timeout time period of the third local lock. After a time period in which the third terminal holds the third local lock exceeds the lock holding timeout time period of the third local lock, the third terminal releases the third local lock, that is, no longer holds the third local lock. After the third terminal no longer holds the third local lock, the third terminal gives up or terminates the task instruction for running the video application on the second terminal, and another cross-device task on the third terminal may hold the third local lock.

S2713: After the third terminal successfully holds the third local lock, the third terminal tries to hold the second local lock.

It should be understood that S2711 and S2712 are optional or unnecessary steps.

If the procedure does not include S2711 or S2712, S2713 is directly performed after S2710. In this case, S2713 is replaced with the following: The third terminal queries the local lock of the third terminal from the container (for example, the map) based on the type of the task instruction, and tries to hold the local lock of the third terminal.

When the procedure includes S2711 and S2712, because the third terminal successfully holds the first local lock corresponding to the task instruction, it is proved that the third terminal does not currently send another cross-device task instruction to the second terminal, that is, the task instruction may occupy the third local lock. In this way, it is ensured that the task instruction sent by the third terminal to the second terminal does not conflict, to improve efficiency and a success rate of sending the task instruction.

When the procedure does not include S2711 or S2712, another instruction sent by the third terminal to the second terminal may conflict with the task instruction. Efficiency and a success rate of sending the task instruction cannot be ensured. The third terminal may unsuccessfully send the task instruction to the second terminal.

In this application, because the first terminal has held the second local lock, the third terminal is not to successfully hold the second local lock. This means that the second terminal does not execute a task instruction from the third terminal. The third terminal can hold the second local lock only when the first terminal releases the second local lock and no another device holds the second local lock. When the third terminal holds the second local lock, the second terminal executes the task instruction from the third terminal, or the third terminal sends, to the second terminal, the task instruction for running the video application of the second terminal.

S2714: If the third terminal unsuccessfully tries to hold the second local lock, the third terminal determines not to send, to the second terminal, the task instruction for running the video application.

Because the first terminal has held the second local lock, the second terminal executes only the task instruction that is for clearing the video application and that is sent by the first terminal, to avoid a conflict between a plurality of tasks, resolve a problem of instability in a cross-device task scenario, and improve user experience.

Optionally, when trying to hold the second local lock by the third terminal fails, the third terminal may alternatively display information to the user in the display interface, to notify the user that sending of the task instruction for running the video application fails.

Optionally, in some example embodiments, the procedure may further include step S2715: The second terminal sends feedback information to the first terminal after the second terminal executes the task instruction for clearing the video application, where the feedback information indicates that the video application of the second terminal is cleared. In this way, the first terminal device may determine that the second terminal has executed a corresponding task instruction, to ensure that execution of the task instruction is completed.

Optionally, in some example embodiments, the procedure may further include step S2716: The first terminal releases the second local lock and the first local lock after receiving the feedback information.

After the first terminal releases the second local lock, another device may hold the second local lock. After the another device holds the second local lock, the second terminal may send a task instruction to the second terminal. After receiving the task instruction, the second terminal may execute the task instruction.

After the first terminal releases the first local lock, another cross-device task on the first terminal may hold the first local lock. When the another cross-device task on the first terminal holds the first local lock, the first terminal device may send the task instruction to the second terminal or another terminal.

Optionally, after receiving the feedback information, the first terminal may send a notification to a global task center of the first terminal, to indicate the global task center to refresh the recent task interface. The video application is not displayed in the refreshed recent task interface, or is not displayed in a recent task list corresponding to the second terminal in the recent task interface. After the user confirms that the video application is not displayed in the refreshed recent task interface, or is not displayed in the recent task list corresponding to the second terminal in the recent task interface, the user determines that the task instruction is successfully executed.

According to this embodiment provided in this application, a local lock is created on a target device or in an application of the target device. The local lock can be held by only one another device at a same time point. A terminal that sends a cross-device task instruction to the target device or the application of the target device tries to hold the local lock. If a specific device successfully holds the local lock, the target device may execute a task from the device. In a period in which the device holds the local lock, the target device does not execute a task instruction sent by another device, to ensure that the target device or the application of the target device executes only a task instruction from one device at a same time point, avoid a conflict between a plurality of cross-device tasks, resolve a problem of instability in a cross-device task scenario, and improve user experience.

In some example embodiments, FIG. 30A and FIG. 30B are a schematic flowchart of another example embodiment according to this application. As shown in FIG. 30A and FIG. 30B, the procedure includes the following steps.

S3001: A display interface of a first terminal displays a recently used application of a second terminal device.

S3002: The first terminal receives a first operation performed by a user, where the first operation is used to trigger a task instruction (referred to as a first task instruction for differentiation) for clearing a video application on the second terminal.

S3003: After receiving the first operation, the first terminal receives a second operation performed by the user, where the second operation is used to trigger a task instruction (referred to as a second task instruction for differentiation) for running a music application on the second terminal.

S3004: The first terminal creates a task queue, where the task queue includes the first task instruction and a second task instruction, and a sequence of the first task instruction and the second task instruction in the task queue is a sequence of corresponding operations.

Optionally, in this embodiment, the first terminal may receive only one operation (the first operation or the second operation) performed by the user, to trigger the first task instruction or the second task instruction. Before this, the first terminal may receive a plurality of operations performed by the user. The plurality of operations are respectively used to trigger different task instructions. The first terminal may create a task queue based on a sequence of the plurality of operations performed by the user, and then insert the first task instruction or the second task instruction into the previously created task queue. The task queue includes a plurality of task instructions, and a sequence of the plurality of task instructions is a sequence of corresponding operations.

Optionally, the first terminal may also try to hold a first local lock. In this embodiment, the first local lock is used to ensure that the first terminal sequentially sends the plurality of task instructions to the second terminal based on the sequence. In other words, it is ensured that the first terminal does not send the plurality of task instructions to the second terminal at a same time point, and a sequence in which the second terminal executes the plurality of task instructions is ensured.

S3005: The first terminal queries a second local lock of the second terminal from a container (for example, a map) based on a task type included in the task queue, and tries to hold the second local lock.

For descriptions of the second local lock, refer to the descriptions in S2705. For brevity, details are not described herein again.

S3006: The first terminal tries to hold the second local lock.

For example, the first terminal may try to hold a second distributed task lock in a trylock (trylock) or blocking waiting lock (lock) manner.

In some example embodiments, if the first terminal unsuccessfully holds the second local lock (for example, the second local lock is occupied or held by another device), the first terminal gives up holding the second distributed task lock, that is, does not send the task queue to the second terminal.

S3007: The first terminal sends the task queue and a lock holding timeout time period of the second local lock to the second terminal after the first terminal successfully holds the second local lock.

For a specific process of S3007, refer to descriptions of S2706 in the foregoing procedure. For brevity, details are not described herein again.

S3008: After receiving the task queue and the lock holding timeout time period of the second local lock, the second terminal queries the second local lock corresponding to the task instruction from the container based on a type of the task instruction.

S3009: After finding the second local lock, the second terminal determines that the second local lock is held by the first terminal, and may sequentially execute a plurality of task instructions in the task queue in a sequence of the plurality of task instructions. For example, the task instruction for clearing the video application may be executed first. The task instruction for running the music application is executed after the task instruction is executed.

Optionally, if the second terminal has not executed all of the plurality of task instructions in the task queue after the lock holding timeout time period of the second local lock expires, the second terminal may send a message to the first terminal, to notify a task instruction or task instructions that are unsuccessfully executed in the task queue.

S3010: A display interface of the third terminal displays the recently used application of the second terminal device.

S3011: The third terminal receives an operation performed by the user, where the operation is used to trigger a task instruction for running a document editing application of the second terminal.

For example, when a user of the third terminal makes a tap gesture in a region corresponding to a task card of the document editing application, the task instruction for running the document editing application of the second terminal is triggered. The operation of the user is not limited in this application.

Optionally, the third terminal may alternatively sequentially receive a plurality of operations performed by the user, and create a task queue based on task instructions respectively corresponding to the plurality of operations. A sequence of the plurality of task instructions included in the task queue in the task queue is a sequence of corresponding operations.

Optionally, in some example embodiments, the procedure may further include step S3012: The third terminal queries, from the container based on a type of the task instruction, a third task lock that is of the third terminal and that corresponds to the task instruction.

For descriptions of the third local lock, refer to the descriptions in S2711 in the procedure. For brevity, details are not described herein again.

Optionally, in some example embodiments, the procedure may further include step S3013: The third terminal tries to hold the third local lock.

For example, the third terminal may also try to hold a second distributed task lock in a trylock (trylock) or blocking waiting lock (lock) manner.

S3014: After the third terminal successfully holds the third local lock, the third terminal tries to hold the second local lock.

If the procedure does not include S3012 or S3013, S3014 is performed after S3011. In this case, S3014 may be replaced with the following: The third terminal tries to hold the second local lock.

When the procedure includes S3012 and S3013, because the third terminal successfully holds the third local lock corresponding to the task instruction, it is proved that the third terminal does not currently send another cross-device task instruction to the second terminal, that is, the task instruction may occupy the third local lock, to ensure that the task instruction sent by the third terminal to the second terminal does not conflict, and improve efficiency and a success rate of sending the task instruction.

When the procedure does not include S3012 or S3013, another instruction sent by the third terminal to the second terminal may conflict with the task instruction. Efficiency and a success rate of sending the task instruction cannot be ensured. The first terminal may unsuccessfully send the task instruction to the second terminal.

In this application, because the first terminal has held the second local lock, the third terminal is not to successfully hold the second local lock. This means that the second terminal does not execute a task instruction from the third terminal. The third terminal can hold the second local lock only when the first terminal releases the second local lock and no another device holds the second local lock. When the third terminal holds the second local lock, the second terminal executes the task instruction from the third terminal, or the third terminal sends, to the second terminal, the task instruction for running the video application of the second terminal.

S3015: If the third terminal unsuccessfully tries to hold the second local lock, the third terminal determines not to send, to the second terminal, the task instruction for running the document editing application.

Optionally, in some example embodiments, the procedure may further include step S3016: After executing the plurality of task instructions in the task queue, the second terminal sends feedback information to the first terminal after executing the plurality of task instructions in the task queue, where the feedback information indicates that the plurality of task instructions in the task queue are executed. In this way, the first terminal device may determine that the second terminal has executed a corresponding task instruction, to ensure that execution of the task instruction is completed.

After the second terminal releases the second distributed task lock, another device may hold the second distributed task lock.

Optionally, in some example embodiments, the procedure may further include step S3017: The first terminal releases the second local lock after receiving the feedback information.

After the first terminal releases the second local lock, another device may hold the second local lock. After the another device holds the second local lock, the second terminal may send a task instruction to the second terminal. After receiving the task instruction, the second terminal may execute the task instruction.

Optionally, after receiving the feedback information, the first terminal sends a notification to a global task center of the first terminal, to indicate the global task center to refresh the recent task interface. The video application is not displayed in the refreshed recent task interface, or is not displayed in a recent task list corresponding to the second terminal in the recent task interface.

According to this embodiment provided in this application, a local lock is created on a target device, and the local lock can be held by only one device at a same time point. When a device successfully holds a distributed task lock, the target device may receive a task queue from the device, and sequentially execute a plurality of task instructions in a sequence of the plurality of task instructions included in the task queue. In a period in which the device holds the local lock, the target device does not execute a task instruction sent by another device, to avoid a conflict between a plurality of cross-device tasks, ensure that a plurality of task instructions from a same device are executed in sequence, resolve a problem of instability in a cross-device task scenario, and improve user experience.

In some example embodiments, FIG. 31A to FIG. 31C are a schematic flowchart of another example embodiment according to this application. As shown in FIG. 31A to FIG. 31C, the procedure includes the following steps.

S3101: A display interface of a first terminal displays a recently used application of a second terminal device.

S3102: The first terminal receives an operation performed by a user, where the operation is used to trigger a task instruction for clearing a video application on the second terminal.

Optionally, in some example embodiments, the procedure may further include step S3103: The first terminal queries, from a container based on a type of the task instruction, a device lock that is of the first terminal and that corresponds to the first terminal (that is, queries a unique correspondence associated with the device).

In this embodiment, the device lock of the first terminal has the following two functions:

Function 1: The device lock of the first terminal is used to ensure that the first terminal can send one task instruction (that is, a function of a first local lock) to only one device (for example, the second terminal) at a same time point. If the first terminal needs to send a plurality of task instructions (that is, a multi-process or multi-thread task) to the second terminal at a same time point, when a task instruction successfully holds the first local lock, the first terminal may send the task instruction to the second terminal. If the first terminal needs to send only one task instruction to the second terminal at a same time point, the task instruction holds the first local lock. In other words, the first local lock can be held by only one cross-device task instruction on the first terminal at a same time point.

Function 2: The device lock of the first terminal is used to ensure that in a process in which the first terminal and another terminal (for example, the second terminal) cooperate to execute or execute a cross-device task, the first terminal does not execute a task instruction sent by another device. In other words, the device lock of the first terminal is further used to ensure that the first terminal executes or executes a cross-device task with only one device at a same time point, that is, participates in only a cross-device task between the first terminal and one device.

The device lock of the first terminal can be held by only one device at a same time point.

Optionally, in some example embodiments, the procedure may further include step S3104: The first terminal tries to hold the device lock of the first terminal.

In some example embodiments, the first terminal may try to hold the device lock of the first terminal in a trylock (trylock) or blocking waiting lock (lock) manner.

If the first terminal cannot successfully hold the device lock of the first terminal, it means that in a process in which the first terminal and another terminal cooperate to execute or execute a cross-device task, the first terminal also executes a task instruction sent by another device, or the first terminal may simultaneously send a plurality of task instructions to the second terminal.

In this application, the first terminal may further maintain a lock holding timeout time period of the device lock of the first terminal.

It should be understood that, S3103 and S3104 are optional steps.

S3105: After the first terminal successfully holds the device lock of the first terminal, the first terminal queries a device lock of the second terminal from the container (for example, a map) based on the type of the task instruction, and tries to hold the device lock.

If the procedure does not include S3103 or S3104, S3105 is performed after S3102. In this case, S3105 may be replaced with the following: The first terminal queries the device lock of the second terminal from the container (for example, the map) based on the type of the task instruction, and tries to hold the device lock of the second terminal.

When the procedure includes S3103 and S3104, because the first terminal successfully holds the device lock of the first terminal, it is ensured that the first terminal sends the task instruction to only the second terminal at a same time point. In addition, in a process in which the first terminal and the second terminal cooperate to execute a cross-device task, the first terminal does not execute a task instruction sent by another device. In this way, it can be ensured that a task instruction sent by the first terminal to the second terminal does not conflict, to improve efficiency and a success rate of sending the task instruction. In addition, the another device is also prevented from sending a cross-device task instruction to the first terminal device in a process in which the first terminal participates in a cross-device task, to avoid a conflict between cross-device task instructions on the first terminal device.

When the procedure does not include S3103 or S3104, another instruction sent by the first terminal to the second terminal may conflict with the task instruction. In addition, the another terminal may further send a cross-device task instruction to the first terminal. Consequently, a conflict between cross-device task instructions may be generated on the first terminal, and efficiency and a success rate of sending the first terminal task instruction cannot be ensured.

The device lock of the second terminal has the following two functions:

Function 1: The device lock of the second terminal is used to ensure that the second terminal executes only a task instruction from one device at a time point or in a time period. If a device successfully holds the device lock of the second terminal, it means that the second terminal may execute a task instruction sent by the device. Another device that does not hold the device lock of the second terminal does not send a task instruction to the second terminal, or even if the device sends a task instruction to the second terminal, the second terminal does not execute the task instruction.

Function 2: The device lock of the second terminal is used to ensure that the second terminal does not send a cross-device task instruction to another device in a period in which the second terminal executes a task instruction from a terminal. In other words, the device lock of the second terminal is used to ensure that the second terminal executes or executes a cross-device task with only one device at a same time point, that is, participates in only a cross-device task between the first terminal and one device.

In this application, the device lock of the second terminal can be held by only one device at a same time point.

S3106: After successfully holding the device lock of the first terminal and the device lock of the second terminal, the first terminal sends, to the second terminal, a task instruction for clearing a video application and a lock holding timeout time period of the device lock of the second terminal.

S3107: After receiving the task instruction for clearing the video application and the lock holding timeout time period of the device lock of the second terminal, the second terminal queries, from the container based on the type of the task instruction, the device lock that is of the second terminal and that corresponds to the task instruction.

S3108: After finding the device lock of the second terminal, the second terminal determines that the device lock of the second terminal is held by the first terminal, and starts to execute the task instruction for clearing the video application.

S3109: A display interface of a third terminal displays the recently used application of the second terminal device.

S3110: The third terminal receives an operation performed by the user, where the operation is used to trigger a task instruction for running a shopping application on the second terminal.

Optionally, in some example embodiments, the procedure may further include step 53111: The third terminal queries, from the container based on a type of the task instruction, a third task lock that is of the third terminal and that corresponds to the task instruction.

Optionally, in some example embodiments, the procedure may further include step S3112: The third terminal tries to hold the third local lock.

S3113: After the third terminal successfully holds the third local lock, the third terminal tries to hold the device lock of the second terminal.

If the procedure does not include S3111 or S3112, S3113 is performed after S3110, and S3113 may be replaced with the following: The third terminal tries to hold the device lock of the second terminal.

When the procedure includes S3111 and S3112, because the third terminal successfully holds the third local lock corresponding to the task instruction, it is proved that the third terminal does not currently send another cross-device task instruction to the second terminal, that is, the task instruction may occupy the third local lock, to ensure that the task instruction sent by the third terminal to the second terminal does not conflict, and improve efficiency and a success rate of sending the task instruction.

When the procedure does not include S3111 or S3112, another instruction sent by the third terminal to the second terminal may conflict with the task instruction. Efficiency and a success rate of sending the task instruction cannot be ensured. The third terminal may unsuccessfully send the task instruction to the second terminal.

S3114: If the third terminal unsuccessfully tries to hold the device lock of the second terminal, the third terminal determines not to send, to the second terminal, the task instruction for running the shopping application.

For example, when determining that the device lock of the second terminal is held by the another device, the third terminal may display information to the user in the display interface, to notify the user that sending or execution of the task instruction fails.

For specific descriptions of S3109 to S3114, refer to descriptions of S2709 to S2714 in the foregoing procedure. For brevity, details are not described herein again.

S3115: A fourth terminal receives an operation performed by the user, where the operation is used to trigger sending of a task instruction (a cross-device task instruction) to the first terminal device.

S3116: The fourth terminal queries, from the container based on a type of the task instruction, a device lock that is of the first terminal and that corresponds to the task instruction.

S3117: The fourth terminal tries to hold the device lock of the first terminal.

Because the device lock of the first terminal is held by the first terminal, that is, the first terminal participates in a cross-device task with the second terminal, the fourth terminal cannot hold the device lock of the first terminal, that is, the fourth terminal does not send the task instruction to the first terminal. After the device lock of the first terminal is released by the first terminal, that is, the first terminal does not participate in a cross-device task with any other device, the fourth terminal may hold the device lock of the first terminal. In this case, the fourth terminal may send a task instruction to the first terminal.

For example, the fourth terminal may try to hold the device lock of the first terminal in a trylock (trylock) or blocking waiting lock (lock) manner.

S3118: If the fourth terminal unsuccessfully tries to hold the device lock of the first terminal, the fourth terminal determines not to send the task instruction to the first terminal.

Optionally, after the fourth terminal tries to hold the device lock of the first terminal, in a possible implementation, the fourth terminal always waits, until the fourth terminal successfully holds the device lock of the first terminal. After the fourth terminal successfully holds the device lock of the first terminal, the fourth terminal may send a cross-device task instruction to the first terminal.

For example, a task instruction sent by the first terminal to the second terminal is: migrating a data stream of a video application on the first terminal to the second terminal. In addition, a task instruction that needs to be sent by the fourth terminal to the first terminal device is stopping running the video application on the first terminal. In this case, because the fourth terminal unsuccessfully tries to hold a device lock of the first terminal, the fourth terminal does not send a task instruction to the first terminal, or even if the fourth terminal sends a task instruction to the first terminal, the first terminal finds that the fourth terminal does not hold the device lock of the first terminal, and does not execute the task instruction.

For example, when the fourth terminal holds the device lock of the first terminal, the fourth terminal may display information to the user in the display interface, to notify the user that sending or execution of the task instruction fails. For a specific interface, refer to the interfaces shown in FIG. 28 and FIG. 29. Details are not described herein again.

Optionally, a waiting time length may be further set. If the waiting time length expires and the fourth terminal does not successfully hold the device lock of the first terminal, the fourth terminal gives up holding the device lock of the first terminal, and stops or gives up the cross-device task.

Optionally, in some example embodiments, the procedure may further include step S3119: The second terminal sends feedback information to the first terminal after the second terminal executes the task instruction for clearing the video application, where the feedback information indicates that the video application of the second terminal is cleared. In this way, the first terminal device may determine that the second terminal has executed a corresponding task instruction, to ensure that execution of the task instruction is completed.

Optionally, in some example embodiments, the procedure may further include step S3120: After receiving the feedback information, the first terminal releases the device lock of the second terminal and the device lock of the first terminal.

After the first terminal releases the device lock of the second terminal, another device may hold the device lock of the second terminal. After the another device holds the device lock of the second terminal, a task instruction may be sent to the second terminal. After receiving the task instruction, the second terminal may execute the task instruction.

When the first terminal releases the device lock of the first terminal, that is, the first terminal does not participate in a cross-device task with any other device, the another terminal may hold the device lock of the first terminal. When the another device holds the device lock of the first terminal, the another terminal may send a task instruction to the first terminal.

Optionally, after receiving the feedback information, the first terminal sends a notification to a global task center of the first terminal, to indicate the global task center to refresh the recent task interface. The video application is not displayed in the refreshed recent task interface, or is not displayed in a recent task list corresponding to the second terminal in the recent task interface.

According to this embodiment provided in this application, a device lock is created on a target device, and the device lock can be held by only one another device at a same time point. When a device successfully holds the device lock, the target device can execute a task from the device. In addition, in a period in which the device holds the device lock of the target device, the target device cannot send a remote task instruction to another device, to ensure that the target device executes or executes a cross-device task with only one device at a same time point, that is, participates in a cross-device task between the target device and only one device. In addition, a device lock is further set on a device that cooperates with a target device to execute a cross-device task. The device lock can be held by only one device at a same time point. In a period in which the device and the target device cooperate to execute a cross-device task, the device holds the device lock, to ensure that the device does not participate in or does not execute a cross-device task between the device and another device, that is, ensure that the device participates in only a cross-device task between the device and one device at a same time point, avoid a conflict between a plurality of cross-device tasks, resolve a problem of instability in a cross-device task scenario, and improve user experience.

It should be further understood that, in this application, the first terminal is used as an example. If the first terminal receives a cross-device task instruction (for example, the first task instruction) from another terminal, and the first terminal further needs to execute an instruction (for example, the second task instruction) inside the first terminal, a possible implementation is as follows: When an instruction in the first task instruction and the second task instruction first arrives at an execution unit (for example, a kernel layer or a chip) of the task instruction, the first terminal preferentially executes the task instruction, and then executes a subsequent instruction after the task instruction is executed. Alternatively, in another possible implementation, the task instruction inside the first terminal may be preferentially executed, and a task instruction from another terminal is executed after the task instruction inside the first terminal is executed.

In some example embodiments, FIG. 32 is a schematic flowchart of an example embodiment according to this application. As shown in FIG. 32, the procedure includes the following steps.

S3201: A first terminal receives task information from a second terminal, where the task information includes information about an application run by the second terminal in the background.

S3202: The first terminal receives a first operation from a user.

S3203: The first terminal opens a recent task interface based on the first operation, where the recent task interface includes a control, and the control includes an identifier of the second terminal.

Optionally, the control includes the identifier of the second terminal and an identifier of the first terminal, the recent task interface includes a task card, the task card includes task cards respectively corresponding to applications run by the first terminal and the second terminal in the background, and the task card corresponds to an application run by the first terminal or the second terminal in the background.

S3204: The first terminal displays, in a recent task interface in response to a second operation performed by the user on the identifier of the second terminal, at least one task card corresponding to the application run by the second terminal in the background, where the at least one task card includes a first task card corresponding to a first application run by the second terminal in the background.

S3205: In response to a third operation performed by the user on the first task card, the first terminal runs the first application, and displays a first user interface of the first application.

S3206: The first terminal displays a second user interface in response to a fourth operation performed by the user in the first user interface, where the fourth operation is a back operation, and the second user interface is a parent user interface of the first user interface.

In this embodiment provided in this application, after the first terminal displays the first user interface, and receives an operation performed by the user in the first user interface, the first terminal displays a parent interface or a sub-interface of the first user interface instead of displaying a home screen of the first terminal device. This conforms to a use habit of the user, is friendly to the user, helps the user perform a subsequent operation, and improves user experience.

In some example embodiments, the method further includes: displaying, in the recent task interface, a second task card corresponding to a recently run application of the first terminal.

In some example embodiments, the control further includes the identifier of the first terminal, and the method further includes: Before displaying the second task card in the recent task interface, the first terminal receives an operation performed by the user on the identifier of the first terminal.

In some example embodiments, the method further includes: Before the second operation, the first terminal displays, in the recent task interface, the second task card corresponding to the recently run application of the first terminal; and after the second operation, the first terminal stops displaying the second task card corresponding to the recently run application of the first terminal.

Optionally, in some example embodiments, before the first terminal device displays the first user interface, this embodiment may further include a step: The first terminal receives a task stack sent by the second terminal device. The task stack includes a first activity record and a second activity record, the first activity record includes interface data of the first user interface and user data of the first user interface, and the second activity record includes interface data of the second user interface and user data of the second user interface.

In some example embodiments, the first activity record and the second activity record are stored next to each other in the task stack, the first activity record is read by the first terminal device before the second activity record, and before the first terminal device displays the first user interface, this embodiment may further include steps: The first terminal generates the first user interface based on the interface data of the first user interface, and stores a state of the first user interface based on the user data of the first user interface. Before the first terminal device displays the second user interface, this embodiment may further include steps: The first terminal generates the second user interface based on the interface data of the second user interface, and stores a state of the second user interface based on the user data of the second user interface.

In some example embodiments, this embodiment may further include steps: The first terminal receives, in a multi-thread parallel receiving manner, a plurality of pieces of segment data sent by the second terminal, where the plurality of pieces of segment data are obtained by segmenting an application data stream of the first application; the first terminal receives an index table sent by the second terminal, where the index table indicates storage paths and a sequence relationship of the plurality of pieces of segment data in a distributed file system of the second terminal; the first terminal restores the application data stream of the first application based on the plurality of pieces of segment data and the index table that are received; and after the third operation is detected, the first terminal runs the first application based on the third operation and the application data stream of the first application. In this implementation, a migration of recent task information or an application data stream that is at least 200 KB can be supported, data migration efficiency is improved, and user experience is improved.

In some example embodiments, a data amount of each of the plurality of pieces of segment data is fixed, and/or the index table includes message header information corresponding to each of the plurality of pieces of segment data; and the message header information corresponding to each piece of segment data includes a correspondence between a segment number and a segment data path of each piece of segment data, and length information, start identifier information, and end identifier information that are of each piece of segment data.

In some example embodiments, this embodiment may further include steps: The first terminal receives a fifth operation performed by the user, where the fifth operation is used to trigger sending of a first task instruction to the second terminal, and the first task instruction instructs the second terminal to clear the first application; the first terminal sends first information to the second terminal, where the first information includes information about the first task instruction; and the first terminal tries to hold a second local lock based on the first task instruction, where the second local lock is used to ensure that the first application on the second terminal executes a task instruction from only one device at a same time point, and the second local lock can be held by only one device at a same time point. In this implementation, a conflict between a plurality of cross-device tasks can be avoided, a problem of instability in a cross-device task scenario can be resolved, and user experience can be improved.

In some example embodiments, this embodiment may further include step: The first terminal tries to hold the first local lock of the first terminal based on the first task instruction. The first local lock is used to ensure that the first terminal can send one task instruction to only one device at a same time point, and the first local lock can be held by only one device at a same time point. The first terminal successfully holds the first local lock. In this implementation, because the first terminal successfully holds the first local lock corresponding to the task instruction, it is proved that the first terminal does not currently send another cross-device task instruction to the second terminal, that is, the task instruction may occupy the first local lock, to ensure that task instructions sent by the first terminal to the second terminal do not conflict, and improve efficiency and a success rate of sending the task instruction.

In some example embodiments, the at least one task card further includes a third task card corresponding to a first-screen snapshot of a home screen of the second terminal, at least one of a feature ability FA card, a floating window, and a floating bubble exists on the third task card, and the method further includes: When the at least one task card is displayed in the recent task interface of the first terminal, the first terminal displays the at least one task card in a single row or a plurality of rows in the recent task interface of the first terminal based on any one of landscape-mode use, portrait-mode use, unfolded-state portrait-mode use of a foldable screen, unfolded-state landscape-mode use of the foldable screen, folded-state landscape-mode use of the foldable screen, and folded-state portrait-mode use of the foldable screen of the second terminal. In this implementation, the task card of the second terminal is displayed in a single row or a plurality of rows in the recent task interface of the first terminal based on a state of using the second terminal by the user, a state of using the first terminal by the user, and a screen size of the first terminal. This can improve task card display efficiency of the second terminal, help the user view and manage a historical task of another device on a device, and improve user experience.

In some example embodiments, this embodiment may further include steps: The first terminal runs the first application based on a hardware capability of the first terminal; or the first terminal runs the first application based on a hardware capability of the second terminal; or the first terminal runs the first application based on a hardware capability of the first terminal and a hardware capability of the second terminal.

In some example embodiments, FIG. 33 is a schematic flowchart of an example embodiment according to this application. As shown in FIG. 33, the procedure includes the following steps.

S3301: A first terminal receives a sixth operation from a user.

S3302: The first terminal displays a third user interface based on the sixth operation, where the third user interface includes a control, and the control includes an identifier of a second terminal.

S3303: The first terminal displays a fourth user interface in response to a seventh operation performed by the user on the identifier of the second terminal, where the fourth user interface includes a home screen application identifier of the second terminal.

For example, the control may further include an identifier of the first terminal, and the third user interface may further include the home screen application identifier of the second terminal and a home screen application identifier of the first terminal. In this embodiment of this application, an identifier of an application on a home screen application identifier of a terminal device may also be referred to as a home screen application identifier of the terminal device.

S3304: The first terminal runs and displays a first application corresponding to an identifier of the first application in response to an eighth operation performed by the user on the identifier of the first application in the home screen application identifier of the second terminal.

In this implementation, a super home screen function may be implemented on the first terminal, so that the user operates a home screen application of another terminal on the first terminal. This is friendly to the user, and improves user experience.

In some example embodiments, before S3301, this embodiment may further include a step: The first terminal receives information that is about the home screen application identifier of the second terminal and that is sent by the second terminal.

In some example embodiments, this embodiment may further include steps: The first terminal receives a ninth operation performed by the user on the home screen application identifier of the second terminal, where the ninth operation includes at least one of sorting a home screen application, creating a folder, and deleting the home screen application. The first terminal displays the home screen application identifier of the second terminal after the ninth operation. In this implementation, the user can manage a home screen application of the second terminal on the first terminal. This facilitates an operation of the user, is friendly to the user, and improves user experience.

In some example embodiments, this embodiment may further include a step: The first terminal displays the second application in a floating window, in split screen, or in full screen. In this implementation, flexibility of displaying the second application by the first terminal is improved, and user experience is improved.

In some example embodiments, this embodiment may further include steps: The first terminal displays the home screen application identifier of the second terminal in a home screen application layout form of the second terminal; or the first terminal displays the home screen application identifier of the second terminal in a home screen application layout form of the first terminal.

It should be further understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing procedures (method embodiments) may not be required, or some steps may be added. Alternatively, any two or more of the foregoing embodiments are combined. A modified, changed, or combined solution also falls within the scope of embodiments of this application.

It should be further understood that division into the manners, cases, categories, and embodiments in embodiments of this application is merely intended for ease of description, and should not constitute a particular limitation. The features in the manners, categories, cases, and embodiments may be combined without contradiction.

It should be further understood that numerals used in embodiments of this application are differentiated merely for ease of description, but are not used to limit the scope of embodiments of this application. The sequence numbers of the foregoing processes do not mean execution sequences. The execution sequences of the processes should be determined according to functions and internal logic of the processes, and should not be construed as any limitation on the implementation processes of embodiments of this application.

It should be further understood that the foregoing descriptions of embodiments of this application emphasize differences between embodiments. For same or similar parts that are not mentioned, refer to each other. For brevity, details are not described herein again.

In embodiments, each device (including the foregoing terminal devices) may be divided into functional modules according to the method embodiments. For example, each functional module may be obtained through division for each corresponding function, or two or more functions may be integrated into one processing module. The integrated module may be implemented in a form of hardware. It should be noted that, in embodiments, division into the modules is an example, is merely logical function division, and may be other division in an actual implementation.

It should be noted that related content of the steps in the method embodiments may be cited in function description of corresponding functional modules. Details are not described herein again.

The terminal device provided in embodiments of this application is configured to execute the procedure provided in any one of the foregoing embodiments, and therefore, can achieve same effects as the foregoing implementation methods. When an integrated unit is used, the terminal device may include a processing module, a storage module, and a communication module. The processing module may be configured to control and manage an action of the terminal device. For example, the processing module may be configured to support the terminal device to perform steps performed by the processing unit. The storage module may be configured to support storage of program code, data, and the like. The communication module may be configured to support communication between the terminal device and another device.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another terminal device.

FIG. 34 is a block diagram of a software structure of a terminal device according to an embodiment of this application.

In the layered architecture, software is divided into several layers, and each layer has a clear role and task. The layers communicate with each other through a software interface. In some embodiments, an Android system is divided into five layers: an application layer, an application framework layer, an Android runtime (Android runtime, ART) and a native C/C++ library, a hardware abstraction layer (Hardware Abstraction Layer, HAL), and a kernel layer from top to bottom.

The application layer may include a series of application packages.

As shown in FIG. 34, the application package may include applications such as Gallery, Calendar, Phone, Maps, Navigation, WLAN, Bluetooth, Music, and Messaging. In addition, the application layer further includes a global task center.

The application framework layer provides an application programming interface (application programming interface, API) and a programming framework for an application at the application layer. The application framework layer includes some predefined functions.

As shown in FIG. 34, the application framework layer may include a window manager, a content provider, a view system, a resource manager, a notification manager, an activity manager, an input manager, and the like.

The window manager provides a window manager service (Window Manager Service, WMS), and the WMS may be used for window management, window animation management, surface management, and a relay station of an input system.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The resource manager provides various resources for an application such as a localized character string, an icon, a picture, a layout file, and a video file.

The notification manager enables an application to display notification information in a status bar, and may be configured to convey a notification message. The notification manager may automatically disappear after a short pause without requiring a user interaction. For example, the notification manager is configured to: notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, a prompt tone is produced, the terminal device vibrates, or an indicator blinks.

The activity manager may provide an activity manager service (Activity Manager Service, AMS), and the AMS may be used to start, switch, and schedule a system component (for example, an activity, a service, a content provider, and a broadcast receiver), and manage and schedule an application process.

The input manager may provide an input management service (Input Manager Service, IMS), and the IMS may be used to manage system input, for example, touchscreen input, key input, and sensor input. The IMS takes out an event from an input device node, and assigns the event to a proper window through interaction with the WMS.

The runtime module is an object-oriented programming language (object-oriented programming) running environment. A corresponding runtime module is required for running, on hardware, code written in any language. In other words, if a program needs to run on hardware or a platform, an intermediate layer is required to convert or interpret a program language into a machine language that can be recognized by a machine. The intermediate layer may be understood as a run-time module.

The runtime module usually includes a corresponding engine as an interpreter, and the engine provides platform capabilities such as a network, a process, and a file system of an operating system for the runtime module.

The runtime module in this embodiment may include a core library, an FA runtime module, and an Android runtime module.

The FA runtime module may convert source code into a user interface. For example, the FA runtime module in this embodiment may include a JavaScript (JS) engine, and the JS engine may run a program file written in a JavaScript language. An example of the JS assets file in this embodiment is a program file written in a JavaScript language.

The Android runtime is responsible for converting source code into machine code. The Android runtime mainly includes an ahead of time (ahead of time, AOT) compilation technology and a just in time (just in time, JIT) compilation technology.

The core library is mainly used to provide basic Java class library functions, for example, a basic data structure, mathematics, I/O, a tool, a database, and a network. The core library provides an API for a user to develop an Android application.

The native C/C++ library may include a plurality of functional modules, for example, a surface manager (surface manager), a media framework (Media Framework), libc, OpenGL ES, SQLite, and Webkit.

The surface manager is configured to manage a display subsystem and provide fusion of 2D and 3D layers for a plurality of applications. The media framework supports playback and recording of a plurality of commonly used audio and video formats, a static image file, and the like. The media library may support a plurality of audio and video encoding formats, for example, MPEG-4, H.264, MP3, AAC, AMR, JPG, and PNG. The OpenGL ES provides drawing and operation of 2D and 3D graphics in an application. The SQLite provides a lightweight relational database for an application of a terminal.

The hardware abstraction layer runs in user space (user space), encapsulates a kernel layer driver, and provides an invoking interface for an upper layer.

The kernel layer is a layer between hardware and software. The kernel layer includes at least a display driver, a camera driver, an audio driver, and a Bluetooth driver.

In the software structure shown in FIG. 34, a system service layer (not shown in the figure) may further exist. The system service layer may include a distributed scheduling subsystem and a local task management module. A location of the system service layer in the software structure is not limited, and may be between the application layer and the application framework layer, or may be between the application framework layer and the native C/C++ library.

FIG. 35 is a block diagram of another software structure of a terminal device according to an embodiment of this application. As shown in FIG. 35, a software architecture of a terminal includes a kernel and hardware platform layer, a system service layer, an application framework layer, and an application layer. Layers communicate through a software interface.

As shown in FIG. 35, the kernel and hardware platform layer includes an HAL, and a kernel and a driver that supports a multi-form device. The hardware abstraction layer runs in user space (user space), encapsulates a kernel layer driver, and provides an invoking interface for an upper layer. The kernel layer is a layer between hardware and software. The kernel layer includes at least a display driver, a camera driver, an audio driver, and a sensor driver. For example, the kernel and hardware platform layer may include a kernel abstraction layer (kernel abstract layer, KAL) and a driver subsystem. The KAL includes a plurality of kernels such as a kernel Linux Kernel of a Linux system and a kernel LiteOS of a lightweight internet of things system. The driver subsystem may include a hardware driver foundation (Hardware Driver Foundation, HDF). The hardware driver foundation can provide a unified peripheral access capability and a driver development and management framework. The multi-kernel kernel layer may select a corresponding kernel for processing based on a system requirement.

The system service layer is a core capability set of the system. The system service layer provides a service for the application through the framework layer. As shown in FIG. 35, the system service layer includes a distributed scheduling subsystem, a local task management module, another subsystem, and the like. Optionally, the distributed scheduling subsystem is configured to: obtain information about a recently used application of the terminal device, and exchange recent task information with another terminal device. The local task management module is configured to maintain recent task information (the information about the recently used application) of the terminal device. Other subsystems include a communication subsystem, a distributed data management, a distributed profile, and the like.

The application framework layer provides a user program framework and an ability (Ability) framework in a plurality of languages such as Java, C, C++, and JS for system application development, a user interface (user interface, UI) framework (including a Java UI framework applicable to a Java language, a JS UI framework applicable to a JS language), and an open multi-language application programming interface (application programming interface, API) for various software and hardware services. An API supported by an operating system device varies based on a degree of componentization of the system.

The application layer includes various applications, for example, may include applications such as Camera, Gallery, Calendar, Phone, Maps, Navigation, WLAN, Bluetooth, Music, Video, and Messaging. In addition, the application layer further includes a global task center and a data task management tool (DTaskManagerKit). The global task center runs, to manage and display a recently used application of a terminal device in a network. Applications at the application layer include a system application and a third-party non-system application. The system application may include an application installed by default on the terminal device, for example, a home screen, a control bar, Settings, Phone. An extended application may be a non-essential application developed and designed by a manufacturer of the terminal device, for example, an application such as terminal device manager, device switch/migration, Notepad, and Weather. The third-party non-system application may be an application that is developed by another manufacturer and that may be run in the system, for example, a game, navigation, social, or shopping application.

It should be understood that, FIG. 34 and FIG. 35 are merely examples, and constitute no limitation on a software architecture of the terminal device in this application. For example, in some other embodiments of this application, a system architecture of the terminal device may also be of a layered structure different from that in the examples shown in FIG. 34 and FIG. 35, or each layer may further include more or fewer modules, or a combination of a plurality of different module manners. This is not limited in embodiments of this application. The terminal device may further include all or some modules shown in FIG. 34 and all or some modules shown in FIG. 35. This is not limited in this application.

FIG. 36 is a schematic diagram of a structure of a terminal device 3600 according to this application. The terminal device may be any terminal (for example, a mobile phone, a large-screen device, a tablet computer, a PC, a foldable-screen mobile phone, an in-vehicle infotainment system, or a lightweight device) in the foregoing embodiments. As shown in FIG. 36, the terminal 3600 may include a processor 3610, an external memory interface 3620, an internal memory 3621, a universal serial bus (universal serial bus, USB) port 3630, an antenna 1, an antenna 2, a mobile communication module 3650, a wireless communication module 3660, an audio module 3670, a speaker 3670A, a receiver 3670B, a microphone 3670C, a headset jack 3670D, a sensor module 3680, and the like. The terminal device is configured to perform any step performed by any terminal in the foregoing task examples or any displayed interface.

It can be understood that the structure shown in this embodiment of this application does not constitute a specific limitation on the terminal device 3600. In some other embodiments of this application, the terminal device 3600 may include more or fewer components than those shown in the figure, or some components may be combined, or some components may be split, or different component arrangements may be used. The components shown in the figure may be implemented by hardware, software, or a combination of software and hardware.

The processor 3610 may include one or more processing units. For example, the processor 3610 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

A memory may be further disposed in the processor 3610, and is configured to store instructions and data. In some embodiments, the memory in the processor 3610 is a cache memory. The memory may store an instruction or data that has been used or cyclically used by the processor 3610. If the processor 3610 needs to use the instructions or the data again, the processor may directly invoke the instructions or the data from the memory. This avoids repeated access, reduces waiting time of the processor 3610, and improves system efficiency.

A wireless communication function of the terminal device 3600 may be implemented through the antenna 1, the antenna 2, the mobile communication module 3650, the wireless communication module 3660, the modem processor, the baseband processor, and the like.

The antenna 1 and the antenna 2 are configured to transmit and receive an electromagnetic wave signal. Each antenna in the terminal device 3600 may be configured to cover one or more communication frequency bands. Different antennas may be multiplexed, to improve antenna utilization. For example, the antenna 1 may be multiplexed as a diversity antenna in a wireless local area network. In some other embodiments, the antenna may be used in combination with a tuning switch.

The mobile communication module 3650 may provide a wireless communication solution that is applied to the terminal device 3600 and that includes 2G/3G/4G/5G. The mobile communication module 3650 may include at least one filter, a switch, a power amplifier, a low noise amplifier (low noise amplifier, LNA), and the like. The mobile communication module 3650 may receive an electromagnetic wave through the antenna 1, perform processing such as filtering or amplification on the received electromagnetic wave, and transmit the electromagnetic wave to the modem processor for demodulation. The mobile communication module 3650 may further amplify a signal modulated by the modem processor, and convert the signal into an electromagnetic wave for radiation through the antenna 1. In some embodiments, at least some functional modules in the mobile communication module 3650 may be disposed in the processor 3610. In some embodiments, at least some functional modules of the mobile communication module 3650 may be disposed in a same device as at least some modules of the processor 3610.

The wireless communication module 3660 may provide a wireless communication solution that is applied to the terminal device 3600 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 3660 may be one or more components integrating at least one communication processing module. The wireless communication module 3660 receives an electromagnetic wave through the antenna 2, performs modulation and filtering processing on an electromagnetic wave signal, and sends the processed signal to the processor 3610. The wireless communication module 3660 may further receive a to-be-sent signal from the processor 3610, perform frequency modulation and amplification on the signal, and convert the signal into an electromagnetic wave for radiation through the antenna 2.

In some embodiments, the antenna 1 and the mobile communication module 3650 in the terminal device 3600 are coupled, and the antenna 2 and the wireless communication module 3660 in the terminal device 3600 are coupled, so that the terminal device 3600 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), LTE, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The terminal device 3600 implements a display function by using the GPU, the display 3694, the application processor, and the like. The GPU is a microprocessor for image processing, and is connected to the display 3694 and the application processor. The GPU is configured to: perform mathematical and geometric computation, and render an image. The processor 3610 may include one or more GPUs, and execute a program instruction to generate or change display information.

The display 3694 is configured to display an image, a video, and the like. The display 3694 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal device 3600 may include 1 or N displays 3694, where N is a positive integer greater than 1.

The terminal device 3600 may implement a photographing function by using the ISP, the camera 3693, the video codec, the GPU, the display 3694, the application processor, and the like.

The ISP may be configured to process data fed back by the camera 3693. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 3693.

The camera 3693 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the terminal device 3600 may include one or N cameras 3693, where N is a positive integer greater than 1.

The digital signal processor is configured to process a digital signal, and may process another digital signal in addition to the digital image signal. For example, when the terminal device 3600 selects a frequency, the digital signal processor is configured to perform Fourier transformation on frequency energy.

The video codec is configured to compress or decompress a digital video. The terminal device 3600 may support one or more video codecs. Therefore, the terminal device 3600 may play or record videos in a plurality of coding formats, for example, moving picture experts group (moving picture experts group, MPEG)-1, MPEG-2, MPEG-3, and MPEG-4.

The external memory interface 3620 may be configured to be connected to an external storage card, for example, a micro SD card, to extend a storage capability of the terminal device 3600. The external memory card communicates with the processor 3610 through the external memory interface 3620, to implement a data storage function. For example, files such as music and videos are stored in the external storage card.

The internal memory 3621 may be configured to store computer-executable program code. The executable program code includes instructions. The processor 3610 runs the instructions stored in the internal memory 3621, to perform various function applications and data processing of the terminal device 3600. The internal memory 3621 may include a program storage area and a data storage area. The program storage area may store an operating system, an application required by at least one function (for example, a sound playing function or an image playing function), and the like. The data storage area may store data (for example, audio data or an address book) created in a process of using the terminal device 3600, and the like. In addition, the internal memory 3621 may include a high-speed random access memory, and may further include a nonvolatile memory, for example, at least one magnetic disk storage device, a flash memory device, or a universal flash storage (universal flash storage, UFS).

The terminal device 3600 may implement an audio function, for example, music playing or recording, by using the audio module 3670, the speaker 3670A, the receiver 3670B, the microphone 3670C, the headset jack 3670D, the application processor, and the like.

The audio module 3670 is configured to convert digital audio information into an analog audio signal for output, and is also configured to convert analog audio input into a digital audio signal. The audio module 3670 may be further configured to code and decode an audio signal. In some embodiments, the audio module 3670 may be disposed in the processor 3610, or some functional modules in the audio module 3670 are disposed in the processor 3610.

The speaker 3670A, also referred to as a "horn", is configured to convert an audio electrical signal into a sound signal. The terminal device 3600 may be configured to listen to music or answer a call in a hands-free mode by using the speaker 3670A.

The receiver 3670B, also referred to as an "earpiece", is configured to convert an audio electrical signal into a sound signal. When a call is answered or voice information is received by using the terminal device 3600, the receiver 3670B may be put close to a human ear to listen to a voice.

The microphone 3670C, also referred to as a "mike" or "mic", is configured to convert a sound signal into an electrical signal. When making a call or sending voice information, a user may make a sound near the microphone 3670C through the mouth of the user, to input a sound signal into the microphone 3670C. At least one microphone 3670C may be disposed in the terminal device 3600. In some other embodiments, two microphones 3670C may be disposed in the terminal device 3600, to implement a noise reduction function in addition to collecting a sound signal. In some other embodiments, three, four, or more microphones 3670C may alternatively be disposed in the terminal device 3600, to collect a sound signal, implement noise reduction, and identify a sound source, to implement a directional recording function, and the like.

The headset jack 3670D is configured to be connected to a wired headset. The headset jack 3670D may be a USB port 3630, or may be a 3.5 mm open mobile terminal platform (open mobile terminal platform, OMTP) standard interface, or a cellular telecommunications industry association of the USA (cellular telecommunications industry association of the USA, CTIA) standard interface.

The sensor module 3680 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

Certainly, the terminal device 3600 may further include a charging management module, a power management module, a battery, a button, an indicator, one or more SIM card interfaces, and the like. This is not limited in this embodiment of this application.

An embodiment of this application further provides a chip system. As shown in FIG. 37, the chip system includes at least one processor 3701 and at least one interface circuit 3702. The processor 3701 and the interface circuit 3702 may be interconnected through a line. For example, the interface circuit 3702 may be configured to receive a signal from another apparatus (for example, a memory of any one of the foregoing terminal devices). For another example, the interface circuit 3702 may be configured to send a signal to another apparatus (for example, the processor 3701). For example, the interface circuit 3702 may read instructions stored in the memory, and send the instructions to the processor 3701. When the instructions are executed by the processor 3701, the terminal device may perform steps performed by any terminal device (for example, a mobile phone, a large-screen device, a tablet computer, an in-vehicle infotainment system, and a PC) in the foregoing embodiments. Certainly, the chip system may further include another discrete device. This is not specifically limited in this embodiment of this application.

An embodiment of this application further provides an apparatus. The apparatus is included in a terminal device, and the apparatus has a function of implementing a behavior of the terminal device in any one of the foregoing embodiments. The function may be implemented by hardware, or may be implemented by hardware executing corresponding software. The hardware or the software includes at least one module or unit corresponding to the foregoing function.

An embodiment of this application further provides a computer storage medium, including computer instructions. When the computer instructions run on a terminal device, the terminal device performs steps performed by the terminal device in any one of the foregoing embodiments.

An embodiment of this application further provides a computer program product. When the computer program product runs on a terminal device, the terminal device performs steps performed by the terminal device in any one of the foregoing embodiments.

An embodiment of this application further provides a graphical user interface on a terminal device. The terminal device includes a display, a camera, a memory, and one or more processors. The one or more processors are configured to execute one or more computer programs stored in the memory; and the graphical user interface includes a graphical user interface displayed when the terminal device performs steps performed by the terminal device in any one of the foregoing embodiments.

An embodiment of this application further provides a task migration system. The system includes a first terminal and a second terminal that are provided in the foregoing embodiments. Optionally, the system may further include a third terminal, a fourth terminal, and the like.

It may be understood that, to achieve the foregoing functions, the terminal device includes a corresponding hardware structure and/or software module for implementing each function. A person skilled in the art should easily be aware that, units and algorithm steps in the examples described with reference to the embodiments disclosed in this specification may be implemented by using hardware or a combination of hardware and computer software in the embodiments of this application. Whether a function is performed by hardware or hardware driven by computer software depends on particular applications and design constraints of the technical solution. A person skilled in the art may use different methods to implement the described functions for each particular application, but it should not be considered that the implementation goes beyond the scope of embodiments of this application.

In embodiments of this application, the foregoing terminal device, and the like may be divided into functional modules based on the foregoing method examples. For example, each functional module may be obtained through division for a corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation.

Based on the descriptions of the implementations, a person skilled in the art may clearly understand that for the purpose of convenient and brief descriptions, division into the functional modules is merely used as an example for description. In an actual application, the functions can be allocated to different functional modules for implementation based on a requirement. In other words, an inner structure of an apparatus is divided into different functional modules, to implement all or some of the foregoing described functions. For a specific working process of the system, apparatus, and unit, refer to a corresponding process in the method embodiments. Details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, for example, a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1.  A task migration system, wherein the system comprises a first terminal and a second terminal;

    the second terminal is configured to: run a first application; and
    when a first user interface of the first application is displayed, switch the first application to run in the background; and
    the first terminal is configured to: receive task information from the second terminal, wherein the task information comprises information about an application run by the second terminal in the background;
    receive a first operation from a user;
    open a recent task interface based on the first operation, wherein the recent task interface comprises a control, and the control comprises an identifier of the second terminal;
    display, in the recent task interface in response to a second operation performed by the user on the identifier of the second terminal, at least one task card corresponding to the application run by the second terminal in the background, wherein the at least one task card comprises a first task card corresponding to the first application;
    in response to a third operation performed by the user on the first task card, run the first application, and display the first user interface; and
    display a second user interface in response to a fourth operation performed by the user in the first user interface, wherein the fourth operation is a back operation, and the second user interface is a parent user interface of the first user interface.

2. The system according to claim 1, wherein the first terminal is further configured to: display, in the recent task interface, a second task card corresponding to a recently run application of the first terminal; and in response to the second operation, stop displaying the second task card.

3. The system according to claim 1 or 2, wherein

the second terminal is further configured to: segment an application data stream of the first application into a plurality of pieces of segment data, and determine an index table corresponding to the plurality of pieces of segment data, wherein the index table indicates storage paths and a sequence relationship of the plurality of pieces of segment data in a distributed file system of the second terminal;
send the plurality of pieces of segment data to the first terminal in a multi-thread parallel transmission manner; and
send the index table to the first terminal; and
the first terminal is further configured to: restore the application data stream of the first application based on the plurality of pieces of segment data and the index table that are received; and after receiving the third operation, run the first application based on the third operation and the application data stream of the first application.

4. The system according to any one of claims 1 to 3, wherein

the at least one task card further comprises a third task card corresponding to a first-screen snapshot of a home screen of the second terminal, and at least one of a feature ability FA card, a floating window, and a floating bubble exists on the third task card; and
the first terminal is further configured to display the at least one task card in a single row or a plurality of rows in the recent task interface of the first terminal based on any one of landscape-mode use, portrait-mode use, unfolded-state portrait-mode use of a foldable screen, unfolded-state landscape-mode use of the foldable screen, folded-state landscape-mode use of the foldable screen, and folded-state portrait-mode use of the foldable screen of the second terminal.

5. The system according to any one of claims 1 to 4, wherein the first terminal is further configured to:

run the first application based on a hardware capability of the first terminal; or
run the first application based on a hardware capability of the second terminal; or
run the first application based on a hardware capability of the first terminal and a hardware capability of the second terminal.

6. A task migration method, wherein the method is applied to a first terminal, and the method comprises:

receiving task information from a second terminal, wherein the task information comprises information about an application run by the second terminal in the background;
receiving a first operation from a user;
opening a recent task interface based on the first operation, wherein the recent task interface comprises a control, and the control comprises an identifier of the second terminal;
displaying, in the recent task interface in response to a second operation performed by the user on the identifier of the second terminal, at least one task card corresponding to the application run by the second terminal in the background, wherein the at least one task card comprises a first task card corresponding to a first application run by the second terminal in the background;
in response to a third operation performed by the user on the first task card, running the first application, and displaying a first user interface of the first application; and
displaying a second user interface in response to a fourth operation performed by the user in the first user interface, wherein the fourth operation is a back operation, and the second user interface is a parent user interface of the first user interface.

7. The method according to claim 6, wherein the method further comprises:

before the second operation, displaying, by the first terminal in the recent task interface, a second task card corresponding to a recently run application of the first terminal; and
after the second operation, stopping, by the first terminal, displaying the second task card in the recent task interface.

8. The method according to claim 6 or 7, wherein before the displaying, by the first terminal device, a first user interface, the method further comprises:

receiving a task stack sent by the second terminal device, wherein the task stack comprises a first activity record and a second activity record, wherein

the first activity record comprises interface data of the first user interface and user data of the first user interface, and the second activity record comprises interface data of the second user interface and user data of the second user interface.

9. The method according to claim 8, wherein the first activity record and the second activity record are stored next to each other in the task stack, the first activity record is read by the first terminal device before the second activity record, and before the displaying, by the first terminal device, a first user interface, the method further comprises:

generating the first user interface based on the interface data of the first user interface, and storing a state of the first user interface based on the user data of the first user interface; and before the displaying, by the first terminal device, a second user interface, the method further comprises:

generating the second user interface based on the interface data of the second user interface, and storing a state of the second user interface based on the user data of the second user interface.

10. The method according to any one of claims 6 to 9, wherein the method further comprises:

receiving, in a multi-thread parallel receiving manner, a plurality of pieces of segment data sent by the second terminal, wherein the plurality of pieces of segment data are obtained by segmenting an application data stream of the first application;
receiving an index table sent by the second terminal, wherein the index table indicates storage paths and a sequence relationship of the plurality of pieces of segment data in a distributed file system of the second terminal;
restoring the application data stream of the first application based on the plurality of pieces of segment data and the index table that are received; and
after the third operation is detected, running the first application based on the third operation and the application data stream of the first application.

11. The method according to claim 10, wherein a data amount of each of the plurality of pieces of segment data is fixed, and/or the index table comprises message header information corresponding to each of the plurality of pieces of segment data; and the message header information corresponding to each piece of segment data comprises a correspondence between a segment number and a segment data path of each piece of segment data, and length information, start identifier information, and end identifier information that are of each piece of segment data.

12. The method according to any one of claims 6 to 11, wherein the method further comprises:

receiving a fifth operation performed by the user, wherein the fifth operation is used to trigger sending of a first task instruction to the second terminal, and the first task instruction instructs the second terminal to clear the first application;
sending first information to the second terminal, wherein the first information comprises information about the first task instruction; and
trying to hold a second local lock based on the first task instruction, wherein the second local lock is used to ensure that the first application on the second terminal executes a task instruction from only one device at a same time point, and the second local lock can be held by only one device at a same time point.

13. The method according to claim 12, wherein the method further comprises:
trying to hold a first local lock of the first terminal based on the first task instruction, wherein the first local lock is used to ensure that the first terminal can send one task instruction to only one device at a same time point, the first local lock can be held by only one device at a same time point, and the first terminal successfully holds the first local lock.

14. The method according to any one of claims 6 to 13, wherein the at least one task card further comprises a third task card corresponding to a first-screen snapshot of a home screen of the second terminal, at least one of a feature ability FA card, a floating window, and a floating bubble exists on the third task card, and the method further comprises:
when the at least one task card is displayed in the recent task interface of the first terminal, displaying, by the first terminal, the at least one task card in a single row or a plurality of rows in the recent task interface of the first terminal based on any one of landscape-mode use, portrait-mode use, unfolded-state portrait-mode use of a foldable screen, unfolded-state landscape-mode use of the foldable screen, folded-state landscape-mode use of the foldable screen, and folded-state portrait-mode use of the foldable screen of the second terminal.

15. The method according to any one of claims 6 to 14, wherein the method further comprises:

running, by the first terminal, the first application based on a hardware capability of the first terminal; or

running, by the first terminal, the first application based on a hardware capability of the second terminal; or

running, by the first terminal, the first application based on a hardware capability of the first terminal and a hardware capability of the second terminal.

16. A task migration system, wherein the system comprises a first terminal and a second terminal;

the second terminal is configured to run a first application; and

the first terminal is configured to: receive a sixth operation from a user;

display a third user interface based on the sixth operation, wherein the third user interface comprises a control, and the control comprises an identifier of the second terminal;

display a fourth user interface in response to a seventh operation performed by the user on the identifier of the second terminal, wherein the fourth user interface comprises a home screen application identifier of the second terminal; and

run the first application in response to an eighth operation performed by the user on an identifier of the first application in the home screen application identifier of the second terminal.

17. The system according to claim 16, wherein

the first terminal is further configured to: receive a ninth operation performed by the user on the home screen application identifier of the second terminal, wherein the ninth operation comprises at least one of sorting a home screen application, creating a folder, and deleting the home screen application; and

display the home screen application identifier of the second terminal after the ninth operation; and

the second terminal is further configured to display the home screen application identifier of the second terminal after the ninth operation.

18. The system according to claim 16 or 17, wherein the first terminal is further configured to display the first application in a floating window, in split screen, or in full screen.

19. A task migration method, wherein the method is applied to a first terminal, and the method comprises:

receiving a sixth operation from a user;
displaying a third user interface based on the sixth operation, wherein the third user interface comprises a control, and the control comprises an identifier of a second terminal;

displaying a fourth user interface in response to a seventh operation performed by the user on the identifier of the second terminal, wherein the fourth user interface comprises a home screen application identifier of the second terminal; and

running a first application in response to an eighth operation performed by the user on an identifier of the first application in the home screen application identifier of the second terminal.

20. The method according to claim 19, wherein the method further comprises:

receiving a ninth operation performed by the user on the home screen application identifier of the second terminal, wherein the ninth operation comprises at least one of sorting a home screen application, creating a folder, and deleting the home screen application; and

displaying the home screen application identifier of the second terminal after the ninth operation.

21. The method according to claim 19 or 20, wherein the method further comprises:

displaying the first application in a floating window, in split screen, or in full screen.

22. The method according to any one of claims 19 to 21, wherein the method further comprises:

displaying the home screen application identifier of the second terminal in a home screen application layout form of the second terminal; or

displaying the home screen application identifier of the second terminal in a home screen application layout form of the first terminal.

23. A terminal device, wherein the terminal device comprises a processor and a memory, the memory is configured to store instructions, and the processor is configured to read the instructions, to perform the method according to any one of claims 6 to 15 or the method according to any one of claims 19 to 22.

24. A computer-readable storage medium, wherein the computer-readable storage medium stores a computer program, the computer program comprises program instructions, and when the program instructions are executed by a processor, the processor is enabled to perform the method according to any one of claims 6 to 15 or the method according to any one of claims 19 to 22.

25. A chip, comprising a processor, configured to invoke and run a computer program from a memory, so that a communication device in which a chip is installed performs the method according to any one of claims 6 to 15 or the method according to any one of claims 19 to 22.

Communication system 10

Communication
network

101  102  103  104  105

FIG. 1

FIG. 2(a)

FIG. 2(b)

FIG. 2(c)

FIG. 3(a)

FIG. 3(b)

FIG. 3(c)

FIG. 3(d)

FIG. 3(e)

FIG. 3(f)

| First terminal 1010 | Global task center 1011 | | Global task center 1021 | Second terminal 1020 |
|---|---|---|---|---|
| Local task management module 1013 | Distributed scheduling subsystem 1012 | | Distributed scheduling subsystem 1022 | Local task management module 1023 |

FIG. 3(g)

| First terminal 1010 | Global task center 1011 | | Global task center 1021 | Second terminal 1020 |
|---|---|---|---|---|
| Local task management module 1013 | Distributed scheduling subsystem 1012 | | Distributed scheduling subsystem 1022 | Local task management module 1023 |

FIG. 3(h)

| First terminal 1010 | Global task center 1011 | | Global task center 1021 | Second terminal 1020 |
|---|---|---|---|---|
| Local task management module 1013 | Distributed scheduling subsystem 1012 | | Distributed scheduling subsystem 1022 | Local task management module 1023 |

FIG. 3(i)

Mobile phone A

Intelligent collaboration

701

Automatically discover a surrounding device with a same account and a surrounding manually bound device, to provide full-scene intelligent collaboration experience

My devices

| | Current terminal Huawei account: 158174xxxxx | > |
| | kiki's Matepad | > |
| | kiki's Matebook pro | > |

702

Bind another device

FIG. 3(j)

Mobile phone A

5G 5G 📶 🔋 8:00

← Add a device

Scanning
Make sure that a device to be added is
enabled and located near the mobile phone

Room television          ( Bind )

brian's Matepad          ( Bind )

703                       704
Tap to add              Scan to add

FIG. 3(k)

Mobile phone A

5G | 5G | 📶 🔋 8:00

← Tap to add 705

Scanning
Make sure that a device to be added is
enabled and located near the mobile phone

706

Tap to add
After NFC of the mobile phone is
enabled, use the back to tap an ontag
label on a device

OK

FIG. 3(1)

Mobile phone A

Scan to add

707

Scan a two-dimensional code
on a device or a package

Powered by
HarmonyOS

Tap to light

FIG. 3(m)

FIG. 3(n)

Mobile phone A

← Intelligent collaboration

701

Automatically discover a surrounding device with a same account and a surrounding manually bound device, to provide full-scene intelligent collaboration experience

Bind a new device
Make sure that the device is enabled and located near the mobile phone

Room television                    Bind

708

709

HUAWEI P30                    Bind

Matebook X pro                    Bind

Cancel

FIG. 3(o)

Mobile phone A

701

Mobile phone A

712

Bind a new device

Scan a two-dimensional code
displayed on a peer end

Tap to light

FIG. 3(q)

Mobile phone A

← Intelligent collaboration

701

Automatically discover a surrounding device
with a same account and a surrounding
manually bound device, to provide full-scene
intelligent collaboration experience

My devices

| | Current terminal<br>Huawei account: 158174xxxxx | > |

| | kiki's Matepad | > |

| | kiki's Matebook pro | > |

721

Device authentication fails

OK    722

FIG. 3(r)

723

A peer end is busy. Please initiate binding later

OK 724

FIG. 3(s)

725

A peer end refuses to trust this device,
and binding fails

OK 726

FIG. 3(t)

Mobile phone A

712

5G 5G 8:00

← Bind a new device

Scan a two-dimensional code displayed
on a peer end

Tap to light

727

A two-dimensional code of a peer end is
disabled, device authentication cannot be
completed, and binding fails

OK 728

FIG. 3(u)

Mobile phone B

731

732

HUAWEI MATE30 requests to be bound to the current terminal. Are you sure you want to trust this device?

Distrust (14s) 733

Trust 734

AI life    Settings    Recorder    AppGa

Camera    Contacts    Phone    Messaging

FIG. 3(v)

Mobile phone B

08:00

Thursday, January 1

735

736

Intelligent collaboration, 7:30 a.m.

**Device binding**

HUAWEI Mate30 requests to be bound to the current terminal. Are you sure you want to trust this device?

FIG. 3(w)

740

742

741

Intelligent collaboration, Device binding, HUAWEI MATE30 requests to be bound to the current terminal. Are you sure you want to trust this device?

Mobile phone B

FIG. 3(x)

Mobile phone B

Intelligent collaboration, just now

**Device binding**

HUAWEI MATE30 requests to be bound to the current terminal. Are you sure you want to trust this device?

Distrust (14s)

Trust

FIG. 3(y)

FIG. 3(z)

FIG. 4(a)

FIG. 4(b)

FIG. 4(c)

FIG. 4(d)

FIG. 4(e)

FIG. 4(f)

Current terminal    P30

Usage time of applications
in a recent week

App 1 Usage time: 1 hour

App 2 Usage time: 5 minutes

App 3 Usage time: 3 hours

App 4 Usage time: 2 hours

App 5 Usage time: 8 minutes

FIG. 4(g)

Current terminal     P30

Applications with longest
usage time in a recent week

App 3 Usage time: 3 hours

App 4 Usage time: 2 hours

App 1 Usage time: 1 hour

FIG. 4(h)

S1401: Receive recent task information from a second terminal

↓

S1402: Receive a first instruction from a user

↓

S1403: Display an identifier of a first application in a recent task interface

FIG. 4(i)

S1501: Receive a first request from a first terminal

↓

S1502: Send recent task information to the first terminal

FIG. 4(j)

EP 4 321 999 A1

```
                    ┌─────────────────────┐
                    │  Device A (foldable-│
                    │   screen device)    │
                    └──────────┬──────────┘
                               ▼
```

Whether a frequently used state of use in a period of time is an unfolded state

No →

Whether the frequently used state of use in the period of time is folded-state portrait-mode use

No →

Yes ↓

Whether the frequently used state of use in the period of time is unfolded-state portrait-mode use

No →

Yes ↓

Display a historical task card of the device A in a recent task interface of another device based on a folded-state portrait-mode manner of the device A

Display a historical task card of the device A in a recent task interface of another device based on an unfolded-state landscape-mode manner of the device A

Display a historical task card of the device A in a recent task interface of another device based on a folded-state landscape-mode manner of the device A

Display a historical task card of the device A in a recent task interface of another device based on an unfolded-state portrait-mode manner of the device A

FIG. 4(k)

Device A (non-foldable-screen device)

Whether a frequently used state of use in a period of time is portrait-mode use

No

Yes

Display a historical task card of the device A in a recent task interface of another device based on a portrait-mode manner of the device A

Display a historical task card of the device A in a recent task interface of another device based on a landscape-mode manner of the device A

FIG. 4(l)

Current terminal    MatePad    P40    Mate X2

App 1

App 2

App 3

App 4

FIG. 5(a)

Current terminal  MatePad  P40  Mate X2

App 1  App 2  App 3  App 4

App 5  App 6  App 7  App 8

FIG. 5(b)

Current terminal    MatePad         P40          Mate X2

App 1       App 2        App 3        App 4        App 5      App 6

FIG. 5(c)

FIG. 5(d)

EP 4 321 999 A1

FIG. 6(a)

FIG. 6(b)

FIG. 6(c)

FIG. 6(d)

FIG. 6(e)

FIG. 7(a)

FIG. 7(b)

Current terminal    MatePad    P40    Mate X2

App 1    App 2    App 3    App 4

Second-screen snapshot of a home screen

5G 5G    8:00

| | | | |
|---|---|---|---|
| Clock | January 15 Calendar | Gallery | Notepad |
| Files | Email | Music | Calculator |
| Huawei video | Health | Weather | Browser |
| AI life | | Recorder | |
| Camera | Contacts | Phone | Messaging |

FIG. 7(c)

EP 4 321 999 A1

Current terminal  MatePad  P40  Mate X2

App 1  App 2  App 3  App 4

Home screen snapshot  Floating window

FIG. 7(d)

Floating bubble

Home screen snapshot

Mate X2

P40

MatePad

Current terminal

App 4

App 3

App 2

App 1

FIG. 7(e)

Current terminal    MatePad    P40    Mate X2    HUAWEI TV

Huawei video

Satellite channel

Snapshot of a remote control of HUAWEI TV

NFC

FIG. 7(f)

FIG. 7(g)

FIG. 7(h)

5G 5G 8:00

Current terminal
MatePad
Mate X2
Lightweight device

Portable device

HUAWEI WATCH GT2

Song A

CONT. FROM FIG. 7(h)

Smart washing machine

Drying
30 minutes left

FIG. 7(i)

EP 4 321 999 A1

TO
FIG. 7(k)

FIG. 7(j)

154

FIG. 7(k)

FIG. 7(l)

CONT.
FROM
FIG. 7(l)

FIG. 7(m)

FIG. 7(n)

FIG. 7(o)

~
TO
FIG. 7(q)

FIG. 7(p)

CONT.
FROM
FIG. 7(p)

P40

| | | | |
|---|---|---|---|
| Clock | Calendar | Gallery | Notepad |
| Files | Email | Music | Calculator |
| Huawei video | Health | Weather | Browser |
| AI life | Settings | Recorder | AppGallery |
| Camera | Contacts | Phone | Messaging |

FIG. 7(q)

Lightweight
device

Smart wok

Beef stir-fry
10 minutes
left

Smart washing machine

Drying
30 minutes left

FIG. 7(r)

FIG. 7(s)

EP 4 321 999 A1

Migrate an application of a
remote device to a first terminal
(a current terminal)

Whether
a mode is a replication
mode

No → Whether
a mode is a migration
mode based on a
window projection
technology

No → Migration mode based on an FA
technology

Yes

The two devices can
simultaneously display the
application, where data is
synchronized, and states of the
application are synchronized, and
adaptively display the application
based on physical features of
respective screens

Yes

Whether
the application
supports a plurality of
instances

No

The two devices can
simultaneously display the
application, where data is
synchronized, and states of the
application are not
synchronized, and adaptively
display the application based on
physical features of respective
screens

Yes

TO
FIG. 8(a)-2

TO
FIG. 8(a)-2

TO
FIG. 8(a)-2

TO
FIG. 8(a)-2

FIG. 8(a)-1

CONT.
FROM
FIG. 8(a)-1

The application is not pulled back when an icon of the application is tapped on the remote device or a task card corresponding to the application is tapped in a recent task interface

CONT.
FROM
FIG. 8(a)-1

The two devices can simultaneously display the application, where data is synchronized, and states of the application are not synchronized, and adaptively display the application based on physical features of respective screens

The application is not pulled back when an icon of the application is tapped on the remote device or a task card corresponding to the application is tapped in a recent task interface

CONT.
FROM
FIG. 8(a)-1

The two devices cannot simultaneously display the application. If the application is a foreground application, the application is displayed on the first terminal after being migrated. The remote device automatically exits a task and displays a home screen

The application is pulled back when an icon of the application is tapped on the remote device or a task card corresponding to the application is tapped in a recent task interface

CONT.
FROM
FIG. 8(a)-1

The application is not pulled back when an icon of the application is tapped on the remote device or a task card corresponding to the application is tapped in a recent task interface

FIG. 8(a)-2

5G .ııl 5G .ııl 📶      ▬ 8:00

Magazine lock screen     :: 1 ×

Start   Insert   Play   Design   Switch   Animation

Picture 3

Picture 2         Picture 3

P40 (remote device)

FIG. 8(b)-1

Current terminal  MatePad  P40  Mate X2

App 1  App 2  App 3  App 4  Magazine lock screen

Magazine lock screen

Start Insert Play Design Switch Animation

Picture 3

Picture 2  Picture 3

First terminal (current terminal)

FIG. 8(b)-2

Magazine lock screen   :: 1 ×

Start    Insert    Play    Design    Switch    Animation

Picture 3

Picture 2         Picture 3

P40 (remote device)

FIG. 8(c)-1

Magazine lock screen

From P40

:: 1 ✕

Start       Insert       Play       Design       Switch       Animation

Picture 1

Magazine
lock screen

Picture 3

Picture 2

Picture 3

+

First terminal (current terminal)

FIG. 8(c)-2

FIG. 8(d)-1

Current terminal  MatePad  P40  Mate X2

App 1  App 2  App 3  App 4  Magazine lock screen

Magazine lock screen
Start Insert Play Design Switch Animation

Picture 3

Picture 2  Picture 3

First terminal (current terminal)

FIG. 8(d)-2

P40 (remote device)

FIG. 8(e)-1

Magazine lock screen    From P40    :: 1 ☒

Start    Insert    Play    Design    Switch    Animation

Picture 1

Picture 2

Picture 3

Picture 2

First terminal (local device)

FIG. 8(e)-2

173

First terminal (local device)

FIG. 8(f)-1

P40 (remote device)

FIG. 8(f)-2

First terminal (local device)

FIG. 8(g)-1

P40 (remote device)

FIG. 8(g)-2

FIG. 8(h)-1

P40 (remote device)

FIG. 8(h)-2

FIG. 8(i)-1

P40 (remote device)

FIG. 8(i)-2

Magazine lock screen  :: ☐1 ✕

Start      Insert    Play    Design    Switch    Animation

Picture 1

Picture 2

Picture 3

＋

Picture 3

~
TO
FIG. 8(j)-2

Remote device (adaptive display in full screen)

FIG. 8(j)-1

Magazine lock screen　　 ⸬ 1 ×

Start　Insert　Play　Design　Switch　Animation

Picture 3

CONT.
FROM
FIG. 8(j)-1

Picture 2　　　　Picture 3

P40 (local device, adaptive display in full screen)

FIG. 8(j)-2

5G 5G 8:00

Home screen of a news browsing app (interface 1)

P40 (remote device, display in non-parallel horizon)

Sub-menu interface on the home screen of the news browsing app (interface 2)

Home screen of a news browsing app (interface 1)

Local device (display in parallel horizon)

FIG. 8(k)

P40 (local device, display in landscape mode)

Remote device (display in landscape mode)

FIG. 8(l)

EP 4 321 999 A1

Current terminal
MatePad
P40
Mate X2

App 1
App 2
App 3
App 4

App 2

Portrait or narrow floating window

App 2

FIG. 8(m)   Landscape or wide floating window

Current terminal | MatePad | P40 | Mate X2

App 1   App 2   App 3   App 4

Display in a floating window

Display in full screen

App 2

Display in a floating window

App 2

Display in full screen

FIG. 8(n)

Current terminal  MatePad1  MatePad2

App 3

App 1

App 2

~
TO
FIG. 8(o)-2

FIG. 8(o)-1

Current terminal    MatePad1    MatePad2

App 3    App 1

App 2

CONT.
FROM
FIG. 8(o)-1

Download to a
current terminal

Open in a
floating window

Open in split
screen

FIG. 8(o)-2

Current terminal    MatePad2    P40    Mate X2

App 1    App 2    App 3    App 4

TO FIG. 8(p)-2    FIG. 8(p)-1

Current terminal    MatePad2    P40    Mate X2

App 1    App 2    App 3    App 4

Download to
Mate x2

Open in a
floating window

Open in split
screen

Open in full
screen

FIG. 8(p)-2

Current terminal    MatePad1    MatePad2

App 1

App 3

App 2

TO
FIG. 8(q)-2

Location
at which
a finger
touches
a screen

FIG. 8(q)-1

CONT.
FROM
FIG. 8(q)-1
~

TO
FIG. 8(q)-3
~

FIG. 8(q)-2

App 2

CONT.
FROM
FIG. 8(q)-2

App 5

FIG. 8(q)-3

FIG. 8(r)-1

FIG. 8(r)-2

FIG. 8(r)-3

CONT.
FROM
FIG. 8(r)-3

App 2

App 4

FIG. 8(r)-4

Current terminal    MatePad1    P30

App 1

App 3

App 2

~
TO
FIG. 8(s)-2

Location
at which
a finger
touches
a screen

FIG. 8(s)-1

5G · 5G · 8:00

Current terminal    MatePad    P30

App 3    App 4

CONT.
FROM
FIG. 8(s)-1
~

~
TO
FIG. 8(s)-3

App 2

FIG. 8(s)-2

FIG. 8(s)-3

P30

App 2

App 4

Display in full screen

P30

App 2

App 4

The app 2 is displayed in full screen, and the app 4 is displayed in a floating window

FIG. 8(t)

P30

App 2

App 4

The app 2 is displayed in a floating window, and the app 4 is displayed in a floating window

EP 4 321 999 A1

Current terminal    MatePad1    P30

App 1    App 3

App 2

~
TO
FIG. 8(u)-2

Location
at which
a finger
touches
a screen

FIG. 8(u)-1

Current terminal    MatePad    P30

App 3                              App 4

CONT.
FROM
FIG. 8(u)-1
~

~
TO
FIG. 8(u)-3

App 2

FIG. 8(u)-2

204

CONT.
FROM
FIG. 8(u)-2

~
TO
FIG. 8(u)-4

FIG. 8(u)-3

FIG. 8(u)-4

First terminal (local device)

FIG. 8(v)

EP 4 321 999 A1

Displayed with a mask

From P40

Magazine lock screen

1  ✕

Start          Insert          Play          Design          Switch          Animation

Picture 1

Magazine lock screen

Picture 2

Picture 2

Picture 3

A distance is too far, and a connection is disconnected

Exit the application

Reconnect

+

First terminal (local device)

FIG. 8(w)

EP 4 321 999 A1

Current terminal  MatePad1  MatePad2

App 3

App 1

App 2

~
TO
FIG. 9(a)-2

FIG. 9(a)-1

Current terminal    MatePad

App 2

CONT.
FROM
FIG. 9(a)-1

FIG. 9(a)-2

FIG. 9(b)-1

FIG. 9(b)-2

Current terminal    MatePad1    MatePad2

App 3

App 1

App 2

TO
FIG. 9(c)-2

Location at which a
finger touches a screen

FIG. 9(c)-1

5G 5G 8:00

Current terminal    MatePad1    MatePad2

App 2

CONT.
FROM
FIG. 9(c)-1

App 3

App 1

FIG. 9(c)-2

FIG. 9(d)-1

EP 4 321 999 A1

CONT.
FROM
FIG. 9(d)-1

FIG. 9(d)-2

FIG. 9(e)

FIG. 9(f)

Current terminal  MatePad1  MatePad2

App 3

App 1

App 2

Location at which a finger touches a screen

FIG. 9(g)

Preset distance value

Current terminal  MatePad1  MatePad2

App 2

App 3

App 1

FIG. 9(h)

EP 4 321 999 A1

FIG. 9(j)

FIG. 9(i)

EP 4 321 999 A1

FIG. 9(k)

FIG. 9(l)

FIG. 9(n)

FIG. 9(m)

EP 4 321 999 A1

FIG. 9(o)

FIG. 9(p)

FIG. 9(q)

FIG. 9(r)

EP 4 321 999 A1

EP 4 321 999 A1

FIG. 9(t)

FIG. 9(s)

224

EP 4 321 999 A1

5G 5G 📶  ▬ 8:00

Current terminal    MatePad1    MatePad2

App 3      App 2

Location at which a finger touches a screen

FIG. 9(u)

5G 5G 📶  ▬ 8:00

MatePad2    MatePad3    Mate X2

App 2

App 1

FIG. 9(v)

Screen off → Automatically turn on a screen → Trigger a user to perform manual unlocking → Display or run the app 2

FIG. 10(a)

Enter a password

○ ○ ○ ○ ○ ○

| 1 | 2<br>ABC | 3<br>DEF |
|---|---|---|
| 4<br>GHI | 5<br>JKL | 6<br>MNO |
| 7<br>PQRS | 8<br>TUV | 9<br>WXYZ |
| Emergency | 0<br>+ | Back |

App 2

Screen off

Automatically turn on a screen, and trigger
a user to perform manual unlocking

Display or run the app 2

FIG. 10(b)

Screen off

Automatically turn on a screen,
and perform automatic unlocking

Display or run the app 2

FIG. 10(c)

FIG. 11(a)-1

Camera of a tablet computer

CONT. FROM
FIG. 11(a)-1

Switch a camera     Decline     More

FIG. 11(a)-2

EP 4 321 999 A1

First terminal (target device)

Current terminal    MatePad2    P40    Mate X2

App 2    App 3    Video call

Peer party
of the call

Switch a   Decline  More
camera

EP 4 321 999 A1

TO
FIG. 11(b)-2

FIG. 11(b)-1

Image captured by a camera of a tablet computer

CONT. FROM
FIG. 11(b)-1
~

Image captured by a camera of P40

Peer party of the call

Switch a camera        Decline        More

FIG. 11(b)-2

EP 4 321 999 A1

First terminal (target device)

Current terminal    MatePad2    P40    Mate X2

App 2                App 3              Video call

Switch a    Decline    More
camera

TO
FIG. 11(c)-2

FIG. 11(c)-1

P40 (source device)

5G 5G 📶 🔋 8:00

Switch a camera    Decline    More

Video call task 1

FIG. 11(c)-2

Switch a
camera    Decline    More

Video call task 2

EP 4 321 999 A1

P40 (source device)

~
TO
FIG. 11(d)-2

FIG. 11(d)-1

MatePad (target device)

CONT.
FROM
FIG. 11(d)-1

From P40

Video call notification

FIG. 11(d)-2

FIG. 11(e)

P40 (source device)

FIG. 11(f)-1

TO
FIG. 11(f)-2

MatePad (target device)

CONT.
FROM
FIG. 11(f)-1

From P40

Video call notification

FIG. 11(f)-2

From
P40

Switch a camera    Decline    More

FIG. 11(g)

P40 (source device)

TO
FIG. 11(h)-2

TO
FIG. 11(h)-3

FIG. 11(h)-1

MatePad (target device)

From P40

CONT.
FROM
FIG. 11(h)-1
~

FIG. 11(h)-2

CONT.
FROM
FIG. 11(h)-1

8:00

XXXXX

January 15

Clock    Calendar    Gallery

Files    Email    Music    Calculator

Huawei video    Health    Weather    Browser

AI life    Settings    Recorder    AppGallery

Camera    Contacts    Phone    Messaging

TO
FIG. 11(h)-4

FIG. 11(h)-3

CONT.
FROM
FIG. 11(h)-3

FIG. 11(h)-4

P40 (source device)

| | | | |
|---|---|---|---|
| Clock | Calendar | Gallery | Notepad |
| Files | Email | Music | Calculator |
| Huawei video | Health | Weather | Browser |
| AI life | Settings | Recorder | AppGallery |
| Camera | Contacts | Phone | Messaging |

8:00

TO
FIG. 11(i)-2

TO
FIG. 11(i)-3

FIG. 11(i)-1

MatePad (target device)

From P40

CONT.
FROM
FIG. 11(i)-1
~

FIG. 11(i)-2

CONT.
FROM
FIG. 11(i)-1
~

XXX-XXXXXXXX

Shenzhen, Guangdong

~
TO
FIG. 11(i)-4

Messaging          Reminder

Decline    ○ ○ ○        ○ ○ ○    Answer

FIG. 11(i)-3

From P40

CONT.
FROM
FIG. 11(i)-3

FIG. 11(i)-4

P40 (source device)

XXX-XXXXXXXX

Shenzhen, Guangdong

TO
FIG. 11(j)-2

Messaging          Reminder

Decline                    Answer

TO
FIG. 11(j)-3

FIG. 11(j)-1

MatePad (target device)

From P40

CONT.
FROM
FIG. 11(j)-1
~

FIG. 11(j)-2

CONT.
FROM
FIG. 11(j)-1

FIG. 11(j)-3

MatePad (target device)

From P40

CONT.
FROM
FIG. 11(j)-3

FIG. 11(j)-4

P40 (source device)

XXX-XXXXXXXX

Shenzhen, Guangdong

→ ~
TO
FIG. 11(k)-2

Messaging

Reminder

Decline

Answer

↓
~
TO
FIG. 11(k)-3

FIG. 11(k)-1

MatePad (target device)

From P40

CONT.
FROM
FIG. 11(k)-1
~

FIG. 11(k)-2

CONT.
FROM
FIG. 11(k)-1
~

~
TO
FIG. 11(k)-4

FIG. 11(k)-3

From P40

CONT.
FROM
FIG. 11(k)-3
~

FIG. 11(k)-4

EP 4 321 999 A1

P40 (source device)

FIG. 12(a)-1

~
TO
FIG. 12(a)-2

257

In-vehicle infotainment system (target device)

App 1  App 2  App 3  App 4

CONT.
FROM
FIG. 12(a)-1

Wednesday 12:30
From P40

24°  24°

FIG. 12(a)-2

FIG. 12(b)

P40 (source device)

FIG. 12(c)-1

→ ~TO
FIG. 12(c)-2

PC (target device)

FIG. 12(c)-2

First terminal (MatePad1)

| | | | |
|---|---|---|---|
| Clock | Calendar | Gallery | Notepad |
| Files | Email | Music | Calculator |
| Huawei video | Health | Weather | Browser |
| AI life | Settings | Recorder | AppGallery |

~
TO
FIG. 13B

FIG. 13A

Second terminal (P40)

CONT.
FROM
FIG. 13A

TO
FIG. 13C

FIG. 13B

CONT.
FROM
FIG. 13B

From
MatePad1

App 2

Third terminal (Mate X2)

FIG. 13C

~
TO
FIG. 14(a)-2

~
TO
FIG. 14(a)-3

Large-screen device
with a super home screen

Tablet computer
with a super
home screen

FIG. 14(a)-1

CONT.
FROM
FIG. 14(a)-1

TO
FIG. 14(a)-3

5G 5G ⬚ 8:00

| | | | |
|---|---|---|---|
| Clock | January 15 Calendar | Gallery | Notepad |
| Files | Email | Music | Calculator |
| Huawei video | Health | Weather | Browser |
| AI life | Settings | Recorder | AppGallery |

| Camera | Contacts | Phone | Messaging |

CONT.
FROM
FIG. 14(a)-1

Mobile phone without a super
home screen

TO
FIG. 14(a)-3

FIG. 14(a)-2

CONT.
FROM
FIG. 14(a)-2

CONT.
FROM
FIG. 14(a)-1

In-vehicle infotainment system
with a super home screen

PC
with a super home
screen

FIG. 14(a)-3

In-vehicle infotainment system

FIG. 14(b)

Large-screen device

FIG. 14(c)

Tablet computer

FIG. 14(d)

Tablet computer

FIG. 14(e)

FIG. 14(f)

PC

FIG. 14(g)

EP 4 321 999 A1

Tablet computer

Clock  Calendar  Gallery  Notepad  Browser

January 15

Files  Music  Messaging  Phone  Contacts

AI life  Settings  AppGallery  Health  Weather

FIG. 14(h)

Tablet computer

P40  Mate 40  MatePad2

Search for an application

Application icon on a first screen of the home screen of P40

Application icon on a second screen of the home screen of P40

Application icon on a third screen of the home screen of P40

A C D R H I L M N O P X Y Z

FIG. 14(i)

FIG. 14(k)

FIG. 14(j)

FIG. 14(m)

FIG. 14(l)

In-vehicle infotainment system

In-vehicle infotainment system

Wednesday 12:40

Service center    In-vehicle application

Settings  All apps        ...

24° 24°

FIG. 14(n)

Wednesday 12:40

Service center   In-vehicle application   P40

January
15

Clock     Calendar     Gallery     Notepad     Browser

Files      Music     Messaging    Phone     Contacts

24° 24°

FIG. 14(o)

EP 4 321 999 A1

Tablet computer

Clock  Calendar  Gallery  Notepad  Browser

January 15

Files  Music  Messaging  Phone  Contacts

AI life  Settings  AppGallery  Health  Weather

FIG. 14(p)

Tablet computer

Search for an application

P40  Mate 40  MatePad2

Application icon on a first screen of the home screen of P40

Application icon on a second screen of the home screen of P40

Application icon on a third screen of the home screen of P40

A C D R H I L M N O P X Y Z

FIG. 14(q)

FIG. 14(r)

FIG. 14(s)

EP 4 321 999 A1

In-vehicle infotainment system

In-vehicle infotainment system

Wednesday 12:40

Service center    In-vehicle application

Home screen of the in-vehicle
infotainment system

...

24°  24°

FIG. 15(a)

Wednesday 12:40

Service center    In-vehicle application

Home screen of the in-vehicle
infotainment system

P40  ttings  Service apps  ...

24°  24°

FIG. 15(b)

~
TO
FIG. 15(c)

EP 4 321 999 A1

CONT.
FROM
FIG. 15(b)
~

In-vehicle infotainment system

| Service center | In-vehicle application | P40 |
|---|---|---|
| Application icon on a first screen of the home screen of P40 | Application icon on a second screen of the home screen of P40 | Application icon on a third screen of the home screen of P40 |

Wednesday 12:40

24° 24°

FIG. 15(c)

EP 4 321 999 A1

In-vehicle infotainment system

Wednesday 12:40

App 1
(displayed in
a floating
window）

Home screen of the in-vehicle
infotainment system

24°    24°

FIG. 15(d)

In-vehicle infotainment system

Wednesday 12:40

From P40

App 1 (displayed in full screen)

24°    24°

FIG. 15(e)

EP 4 321 999 A1

In-vehicle infotainment system

Wednesday 12:40

P40

App 1
(displayed in full screen)

Home screen of the in-
vehicle infotainment system

24°          24°

FIG. 15(f)

In-vehicle infotainment system

FIG. 15(g)

In-vehicle infotainment system

Wednesday 12:40

Service center     Application center     P40

Clock     Calendar     Gallery     Notepad     Browser

Files     Music     Messaging     Phone     Contacts

24°     24°

FIG. 16(a)

FIG.16(c)

FIG.16(b)

Mobile phone P40

← All photos

Photo 1

Bluetooth        Connect
Not connected    Bluetooth

Super home screen    Start
Not connected        sharing

FIG. 16(d)

In-vehicle infotainment system

Wednesday 12:40

Service center        Application center        P40

Clock        January 15 / Calendar        Gallery        Notepad        Browser

Files        Music        Messaging        Phone        Contacts

24°        24°

FIG. 16(e)

285

Mobile phone

5G 5G 📶 ⬛ 8:00

← Super home screen

After this feature is enabled, a home screen application of the mobile phone may be used on a corresponding device with a same account

Super home screen of Huawei smart screen  >

Super home screen of HUAWEI HiCar

~
TO
FIG. 16(g)

FIG. 16(f)

Mobile phone

← ———— Super home screen of HUAWEI HiCar

Q Search for an application

After the mobile phone is synchronized with
HUAWEI HiCar, a super home screen is
automatically set up for the mobile phone and
HUAWEI HiCar with a same account when
you get on the car. The super home screen is
automatically exited when you get off the car.
After the super home screen is set up, you can
use the following applications of the mobile
phone that are allowed to be displayed on
HUAWEI HiCar.

Super home screen of
HUAWEI HiCar

Displayed in HUAWEI HiCar

App 1

App 2

App 3

Not displayed in HUAWEI HiCar

App 4

#
A
B
C
D
E
F
G
H
I
J
K
L
M
N
O
P
Q
R
S
T
U
V
W
X
Y
Z

~
CONT.
FROM
FIG. 16(f)

FIG. 16(g)

Mobile phone

FIG. 16(h)

S1710: A first terminal displays a recent task interface, where the recent task interface includes a control, the control includes identifiers of N devices, the recent task interface includes at least one task card, the at least one task card includes a first task card and/or a second task card, the first task card corresponds to an application run by a second terminal in the background or an ongoing application, and the second task card displays a home screen application identifier of the second terminal

S1720: Receive a first operation performed by a user on the first task card of the second terminal and/or a second operation performed on the second task card of the second terminal

S1730: Based on the first operation and/or the second operation, the first terminal displays or runs the application corresponding to the first task card, and/or displays the home screen application identifier of the second terminal

FIG. 17

FIG. 18

First terminal

Second terminal

S1901: Serialize document data into a byte stream

S1902: Determine a corresponding transmission manner based on a size of the byte stream

S1903: Determine a quantity of segments of the byte stream (the quantity of segments)

S1904: Segment the byte stream based on the quantity of segments, store segment data in a distributed file system, and establish an index table including a segment number and a segment data path of each piece of segment data

S1905: Send the segment data in a manner of transmitting segment data in parallel through a plurality of threads

S1906: Send the index table by writing the index table into a parcel for RPC transmission

S1907: Start a document editing application after receiving a command for starting the document editing application

S1908: Restore the document data based on the index table after receiving all segment data

FIG. 19

First terminal

Second terminal

S2001: Serialize data of an audio or video application into a byte stream

S2002: Determine a corresponding transmission manner based on a size of the byte stream

S2003: Determine a quantity of segments of the byte stream (the quantity of segments)

S2004: Segment the byte stream based on the quantity of segments, store segment data in a distributed file system, and establish an index table including a segment number and a segment data path of each piece of segment data

S2005: Send the segment data in a manner of transmitting segment data in parallel through a plurality of threads

S2006: Send the index table by writing the index table into a parcel for RPC transmission

S2007: Start an audio or video player application after receiving a command for starting the audio or video player application

S2008: Restore audio or video data based on the received index table after successively receiving segment data

FIG. 20

Terminal device 100

Terminal device 200

◦ ⟨▭▭▭⟩

▭ 08:08

Nothing is impossible

Played for
X million
times

Docum
-entary

Abstract >

Episodes

| 1 | ▶ | 3 | 4 | ... |

Ⓠ ( Comments! )

FIG. 21A

Projection

⟨

FIG. 21B

Terminal device 100

210

Animation     Popular    Episode

211

Homepage     Zone      My

FIG. 22A

Terminal device 100

220

221

Nothing is impossible

Played for X million times    Docum-entary     Abstract >

Episodes

1    ▶    3    4    ...

Comments!

FIG. 22B

EP 4 321 999 A1

Terminal device 100

FIG. 22C

Terminal device 200

FIG. 22D

FIG. 22E

FIG. 23A

FIG. 23B

Terminal device 100

FIG. 23C

Terminal device 200

Video

Current terminal    Terminal device 100

730

Nothing is impossible

Played for X million times   Documentary    Abstract >

Episodes

| 1 | ▶ | 3 | 4 | ... |

Comments!

FIG. 23D

EP 4 321 999 A1

Terminal device 200

742

740

741

Nothing is impossible

Played for X million times   Documentary   Abstract >

Episodes

| 1 | ► | 3 | 4 | ... |

Comments!

EP 4 321 999 A1

FIG.23E

Terminal device 200

FIG. 23F

Terminal device 200

Animation    Popular    Episode

760

Homepage    Zone    My

FIG. 23G

EP 4 321 999 A1

Terminal device 100

810

811

Search

Lily

File transfer assistant

Henry

Lucy

David

Homepage   Contacts   Discovery   Local

08:08

FIG. 24A

303

Terminal device 100

FIG. 24B

Terminal device 100

830

FIG. 24C

Terminal device 300

Chat | Current terminal | Terminal device 100

< Lily ...

:) { Hi

830

🎤 [_____] 😄 ⊕

🗑

FIG. 24D

Terminal device 300

842 — <  Lily  ···  — 841

:) { Hi

840

🎤 [_____] 😄 ⊕

FIG. 24E

306

EP 4 321 999 A1

Terminal device 300

08:08

< Chatting information

Search for a chatting record >

850

Do not disturb

Top chat

Reminder

Set a current chatting background >

Clear chatting records >

Complaint >

FIG. 24F

08:08

860

Search

Lily

File transfer assistant

Henry

Lucy

David

Homepage   Contacts   Discovery   Local

FIG. 24G

EP 4 321 999 A1

**Local terminal device**

Application
layer

Global task center 901

System
service
layer

Activity manager service module 902

Recent tasks of
the local terminal device

Task record 1

Activity record 1

Activity record 2

...

Task record 2

Activity record 1'

Activity record 2'

...

...

Distributed manager service module 903

FIG. 25A

**Target terminal device**

Application
layer

Global task center 1001

System
service
layer

Activity manager service module 1002

Recent tasks of a
local terminal device

**Task record 1**

Activity
record 1

Activity
record 2

...

Task record 2

Activity
record 1'

Activity
record 2'

...

...

Recent tasks of the
target terminal device

**Task record
migration**

Activity record 1

Activity record 2

...

Task record ①

Activity record I

Activity record II

...

Task record ②

Activity record I'

Activity record II'

...

...

Distributed manager service module 1003

FIG. 25B

S2601: A first terminal device receives a user interface option that is of a first user interface and that is sent by a second terminal device

S2602: The first terminal device detects a first operation performed by a user on the user interface option of the first user interface

S2603: The first terminal device displays the first user interface

S2604: The first terminal device detects a second operation performed by the user on the first user interface

S2605: The first terminal device displays a second user interface

FIG. 26

| First terminal | Second terminal | Third terminal |

S2701: Display a recently used application of the second terminal device

S2702: Receive an operation performed by a user, where the operation is used to trigger a task instruction for clearing a video application on the second terminal

S2703: Query, from a container based on a type of the task instruction, a first local lock that is of a first terminal and that corresponds to the task instruction

S2704: Try to hold the first local lock

S2705: After the first local lock is successfully held, query a second local lock on the second terminal from the container based on the type of the task instruction, and try to hold the second local lock

S2706: After the first local lock and the second local lock are successfully held, send the task instruction for clearing the video application and a lock holding timeout time period of the second local lock

S2707: After receiving the task instruction for clearing the video application and the lock holding timeout time period, query a second local lock corresponding to the task instruction from the container based on the type of the task instruction

TO FIG. 27B          TO FIG. 27B          TO FIG. 27B

FIG. 27A

311

CONT.
FROM
FIG. 27A

CONT.
FROM
FIG. 27A

CONT.
FROM
FIG. 27A

S2708: After the second local lock is found, determine that the second local lock is held by the first terminal, and start to execute the task instruction for clearing the video application

S2709: Receive an operation performed by the user, where the operation is used to trigger a task instruction for running the video application on the second terminal

S2710: Display a recently used application of the second terminal device

S2711: Query a third local lock corresponding to the task instruction from the container based on the type of the task instruction

S2712: Try to hold the third local lock

S2715: Send feedback information after the task instruction for clearing the video application is executed, where the feedback information indicates that the video application of the second terminal is cleared

S2713: After the third local lock is successfully held, try to hold the second local lock

S2714: If the second local lock is unsuccessfully held, determine not to send, to the second terminal, the task instruction for running the video application

S2716: Release the second local lock and the first local lock after receiving the feedback information

FIG. 27B

FIG. 28

FIG. 29

| First terminal | Second terminal | Third terminal |

S3001: Display a recently used application of the second terminal device

S3002: Receive a first operation performed by a user, where the operation is used to trigger a first task instruction for clearing a video application on the second terminal

S3003: Receive the first operation performed by the user, where the operation is used to trigger a task instruction for running a music application on the second terminal

S3004: Create a task queue, where the task queue includes the first task instruction and a second task instruction, and a sequence of the first task instruction and the second task instruction in the task queue is a sequence of corresponding operations

S3005: Query a second local lock on the second terminal from a container based on a task type included in the task queue, and try to hold the second local lock

S3006: Try to hold the second local lock

S3007: Send the task queue and a lock holding timeout time period of the second local lock after the second local lock is successfully held

S3008: Receive the task queue, and query the second local lock corresponding to the task instruction from the container based on a type of the task instruction included in the task queue

TO
FIG. 30B

TO
FIG. 30B

TO
FIG. 30B

FIG. 30A

315

CONT.
FROM
FIG. 30A

CONT.
FROM
FIG. 30A

CONT.
FROM
FIG. 30A

S3009: After the second local lock is found, determine that the second local lock is held by the first terminal, and sequentially execute a plurality of task instructions in the task queue in a sequence of the plurality of task instructions

S3010: Display the recently used application of the second terminal device

S3011: Receive an operation performed by the user, where the operation is used to trigger a task instruction for running a document editing application of the second terminal

S3012: Query a third local lock corresponding to the task instruction from the container based on a type of the task instruction

S3013: Try to hold the third local lock

S3014: After the third local lock is successfully held, try to hold the second local lock

S3016: Send feedback information after executing the plurality of task instructions in the task queue, where the feedback information indicates that the plurality of task instructions in the task queue are executed

S3015: If the second local lock is unsuccessfully held, determine not to send, to the second terminal, the task instruction for running the document editing application

S3017: Release the second local lock after receiving the feedback information

FIG. 30B

| Fourth terminal | First terminal | Second terminal | Third terminal |
|---|---|---|---|

S3101: Display a recently used application of the second terminal device

S3102: Receive an operation performed by a user, where the operation is used to trigger a task instruction for clearing a video application on the second terminal

S3103: Query, from a container based on a type of the task instruction, a device lock that is of the first terminal and that corresponds to the first terminal

S3104: Try to hold the device lock of the first terminal

S3105: When the device lock of the first terminal is successfully held, query a device lock of the second terminal from the container based on the type of the task instruction, and try to hold the device lock

S3106: After the device lock of the first terminal and the device lock of the second terminal are successfully held, send the task instruction for clearing a video application and a lock holding timeout time period of the device lock of the second terminal

S3107: After receiving the task instruction for clearing the video application and the lock holding timeout time period, query, from the container based on the type of the task instruction, a device lock that is of the second terminal and that corresponds to the task instruction

TO FIG. 31B     TO FIG. 31B     TO FIG. 31B     TO FIG. 31B

FIG. 31A

CONT.
FROM
FIG. 31A

CONT.
FROM
FIG. 31A

CONT.
FROM
FIG. 31A

CONT.
FROM
FIG. 31A

S3108: After the device lock of the second terminal is found, determine that the device lock of the second terminal is held by the first terminal, and start to execute the task instruction for clearing the video application

S3109: Display a recently used application of the second terminal device

S3110: Receive an operation performed by the user, where the operation is used to trigger a task instruction for running a shopping application on the second terminal

S3111: Query a third local lock corresponding to the task instruction from the container based on a type of the task instruction

S3112: Try to hold the third local lock

S3113: After the third local lock is successfully held, try to hold the device lock of the second terminal

S3114: If the device lock of the second terminal is unsuccessfully held, determine not to send, to the second terminal, the task instruction for running the shopping application

TO
FIG. 31C

TO
FIG. 31C

TO
FIG. 31C

TO
FIG. 31C

FIG. 31B

318

EP 4 321 999 A1



| CONT.<br>FROM<br>FIG. 31B | CONT.<br>FROM<br>FIG. 31B | CONT.<br>FROM<br>FIG. 31B | CONT.<br>FROM<br>FIG. 31B |

S3115: Receive an operation performed by the user, where the operation is used to trigger sending of the task instruction to the first terminal device

S3116: Query, from the container based on a type of the task instruction, a device lock that is of the first terminal and that corresponds to the task instruction

S3117: Try to hold the device lock of the first terminal

S3118: If the device lock of the first terminal is unsuccessfully held, determine not to send the task instruction to the first terminal

S3119: Send feedback information after the task instruction for clearing the video application is executed, where the feedback information indicates that the video application of the second terminal is cleared

S3120: Release the device lock of the second terminal and the device lock of the first terminal after receiving the feedback information

FIG. 31C

S3201: A first terminal receives task information from a second terminal, where the task information includes information about an application run by the second terminal in the background

S3202: The first terminal receives a first operation from a user

S3203: The first terminal opens a recent task interface based on the first operation, where the recent task interface includes a control, and the control includes an identifier of the second terminal

S3204: The first terminal displays, in a recent task interface in response to a second operation performed by the user on the identifier of the second terminal, at least one task card corresponding to the application run by the second terminal in the background, where the at least one task card includes a first task card corresponding to a first application run by the second terminal in the background

S3205: In response to a third operation performed by the user on the first task card, the first terminal runs the first application, and displays a first user interface of the first application

S3206: The first terminal displays a second user interface in response to a fourth operation performed by the user in the first user interface, where the fourth operation is a back operation, and the second user interface is a parent user interface of the first user interface

FIG. 32

S3301: A first terminal receives a sixth operation from a user

S3302: The first terminal displays a third user interface based on the sixth operation, where the third user interface includes a control, and the control includes an identifier of a second terminal

S3303: The first terminal displays a fourth user interface in response to a seventh operation performed by the user on the identifier of the second terminal, where the fourth user interface includes a home screen application identifier of the second terminal

S3304: The first terminal runs a first application in response to an eighth operation performed by the user on an identifier of the first application in the home screen application identifier of the second terminal

FIG. 33

| Application layer | Gallery | Calendar | Maps | WLAN | Music | Messaging |
|---|---|---|---|---|---|---|
| | Phone | Navigation | Bluetooth | Global task center | | ... |

| Application framework layer | Window manager | Activity manager | Input manager | Resource manager |
|---|---|---|---|---|
| | Notification manager | View system | Content provider | ... |

| Native C/C++ library | Surface manager | Media framework | libc | Runtime |
|---|---|---|---|---|
| | | | | Android runtime |
| | OpenGL ES | SQLite | Webkit | ... | FA runtime |
| | | | | | Core library |

| Hardware abstraction layer | Display module | Audio module | Camera module | Bluetooth module | ... |
|---|---|---|---|---|---|

| Kernel layer | Display driver | Audio driver | Camera driver | Bluetooth driver | ... |
|---|---|---|---|---|---|

FIG. 34

Application layer

Global task center
(displaying a task interface)

Data task management tool
(DTaskManagerKit)

Application framework layer

UI framework

User program framework

Ability framework

System service layer

Distributed scheduling subsystem

Local task management module

Other dependencies

Communication subsystem

Distributed data management

Distributed profile

Kernel and hardware platform

HAL (unified multi-form service call interface)

Kernel (supporting a kernel and a driver of a multi-form device)

FIG. 35

Terminal device 3600

Antenna 1                    Antenna 2

| Mobile communication module 2G/3G/4G/5G 3650 | Wireless communication module BT/WLAN/GNSS/NFC/IR/FM 3660 |

| Speaker 3670A |
| Receiver 3670B |
| Audio module 3670 |
| Microphone 3670C |
| Headset jack 3670D |

Processor 3610

| Sensor module 3680 |
| Displays 1—N 3694 |
| Cameras 1—N 3693 |
| USB port 3630 |

| Internal memory 3621 |

| External memory interface 3620 |

FIG. 36

| Processor 3701 |

| Interface circuit 3702 |

FIG. 37

**EP 4 321 999 A1**

# INTERNATIONAL SEARCH REPORT

| International application No. |
| --- |
| **PCT/CN2022/093367** |

### A. CLASSIFICATION OF SUBJECT MATTER

G06F 9/48(2006.01)i; G06F 9/54(2006.01)i

According to International Patent Classification (IPC) or to both national classification and IPC

### B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 任务, 程序, 应用, 软件, 界面, 迁移, 转移, 同步, 传输, task, program, application, software, interface, migration, synchronization, transfer

### C. DOCUMENTS CONSIDERED TO BE RELEVANT

| Category* | Citation of document, with indication, where appropriate, of the relevant passages | Relevant to claim No. |
| --- | --- | --- |
| A | CN 104115157 A (INTEL CORP.) 22 October 2014 (2014-10-22) description, paragraphs [0011]-[0048] | 1-25 |
| A | CN 106021018 A (SAMSUNG ELECTRONICS SUZHOU COMPUTER CO., LTD. et al.) 12 October 2016 (2016-10-12) entire document | 1-25 |
| A | CN 104782220 A (INTEL CORP.) 15 July 2015 (2015-07-15) entire document | 1-25 |
| A | CN 102298537 A (YULONG COMPUTER TELECOMMUNICATION SCIENTIFIC (SHENZHEN) CO., LTD.) 28 December 2011 (2011-12-28) entire document | 1-25 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 July 2022** | **26 July 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/093367**

| Patent document cited in search report | | | Publication date (day/month/year) | Patent family member(s) | | | Publication date (day/month/year) |
|---|---|---|---|---|---|---|---|
| CN | 104115157 | A | 22 October 2014 | TW | 201346634 | A | 16 November 2013 |
| | | | | WO | 2013101154 | A1 | 04 July 2013 |
| | | | | US | 2013318577 | A1 | 28 November 2013 |
| | | | | TW | 201530347 | A | 01 August 2015 |
| | | | | TW | 201619865 | A | 01 June 2016 |
| | | | | BR | 112014015792 | A2 | 13 June 2017 |
| | | | | EP | 2798562 | A1 | 05 November 2014 |
| | | | | US | 2016065573 | A1 | 03 March 2016 |
| | | | | EP | 3404947 | A1 | 21 November 2018 |
| | | | | TW | I476630 | B | 11 March 2015 |
| | | | | EP | 2798562 | A4 | 26 August 2015 |
| | | | | US | 9210148 | B2 | 08 December 2015 |
| | | | | TW | I515602 | B | 01 January 2016 |
| | | | | CN | 104115157 | B | 08 March 2017 |
| | | | | US | 9686281 | B2 | 20 June 2017 |
| | | | | TW | I599908 | B | 21 September 2017 |
| | | | | EP | 2798562 | B1 | 19 September 2018 |
| CN | 106021018 | A | 12 October 2016 | CN | 106021018 | B | 29 March 2019 |
| CN | 104782220 | A | 15 July 2015 | WO | 2014077900 | A1 | 22 May 2014 |
| | | | | US | 2014141714 | A1 | 22 May 2014 |
| | | | | EP | 2921029 | A1 | 23 September 2015 |
| | | | | US | 2015172866 | A1 | 18 June 2015 |
| | | | | US | 2016192173 | A1 | 30 June 2016 |
| | | | | US | 8880051 | B2 | 04 November 2014 |
| | | | | US | 9219987 | B2 | 22 December 2015 |
| | | | | EP | 2921029 | A4 | 26 October 2016 |
| | | | | US | 10021556 | B2 | 10 July 2018 |
| | | | | CN | 104782220 | B | 19 March 2019 |
| CN | 102298537 | A | 28 December 2011 | None | | | |

Form PCT/ISA/210 (patent family annex) (January 2015)

**EP 4 321 999 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111396815
- CN 202110614232
- CN 202110583391
- CN 202111057294
- CN 202110611184
- CN 202110616969
- CN 202110615954